Europäisches Patentamt

(19) European Patent Office

Office européen des brevets

(11) EP 0 961 233 A2

(12) EUROPEAN PATENT APPLICATION

(43) Date of publication:
01.12.1999 Bulletin 1999/48

(51) Int. Cl.⁶: **G06T 15/10**

(21) Application number: 99116109.2

(22) Date of filing: 02.12.1992

(84) Designated Contracting States:
AT BE CH DE DK ES FR GB GR IE IT LI LU MC NL PT SE

(30) Priority: 02.12.1991 US 801332
02.12.1991 US 801144

(62) Document number(s) of the earlier application(s) in accordance with Art. 76 EPC:
92311000.1 / 0 545 684

(71) Applicant:
**TEXAS INSTRUMENTS INCORPORATED**
**Dallas Texas 75265 (US)**

(72) Inventors:
- **Crane, Christopher A.**
  **Washington, Missouri 63090 (US)**
- **Bannon, Tom J.**
  **Dallas, Texas 75287 (US)**

- **Donahue, Daniel M.**
  **Dallas, Texas 75287 (US)**
- **Heape, Judd E.**
  **Dallas, Texas 75229 (US)**
- **Smith, Andrew K.**
  **Boston, Massachusetts 02108 (US)**
- **Siep, Thomas M.**
  **Garland, Texas 75040 (US)**
- **Adkins, Donald W.**
  **Oak Leaf, Texas 75154 (US)**

(74) Representative:
**Darby, David Thomas et al**
**Abel & Imray,**
**20 Red Lion Street**
**London WC1R 4PQ (GB)**

Remarks:
This application was filed on 17 - 08 - 1999 as a divisional application to the application mentioned under INID code 62.

(54) **Virtual reality system modelling player position and movement**

(57)    A system and method for modelling the relative position and movement of objects in a virtual reality world (74) includes the graphical representation of a first and a second object in the virtual reality world (74) on a graphical display (60, 68), the determination of a first partitioning plane between the first and second objects and the determination of a second partitioning plane between the objects in response to either object moving across the first partitioning plane. The method and system graphically represent, on the display (60, 68), movement of the first and second objects within the virtual reality world (74) by selectively obscuring the objects according to their positions relative to a predetermined observation point.

FIG. 1

EP 0 961 233 A2

## Description

TECHNICAL FIELD OF THE INVENTION

The present invention generally relates to the applications of computer science to the generation of artificial environments, and more particularly to a low-cost virtual reality system and method for allowing a user to explore environments that exist as models in the memory of a computer.

BACKGROUND OF THE INVENTION

The design and use of virtual reality systems is a new and largely unexplored field of computer science. The object of a "virtual reality system" is to give users the ability to explore environments that exist only as models in the memory of a computer. These environments may be models of the real world (e.g., streets of Las Vegas or the interior of a building), or they may be representations of purely imaginary worlds, or worlds inaccessible by human beings (e.g., the interiors of molecules or the center of our galaxy).

A typical virtual reality system consists of a computer, input devices, and an output device. The computer maintains the model of the virtual world and calculates its appearance from the view point of the user. The output device is often a apparatus that mounts on the user's head and may be either a display or screen mounted to a helmet or a pair of goggles. By wearing the helmet, the user visually immerses himself or herself in the virtual world. Also, attached to the helmet are tracking devices that enable the computer to know about the position of the user's head and in what direction the user is looking. The input devices found on a typical system range from simple joysticks to gloves or other body wear that may monitor a user's movements and gestures.

A major problem with virtual reality systems is that they are expensive and usually beyond the entertainment dollar range of a typical individual consumer. Most systems use powerful computers that render two-dimensional views of three-dimensional world models. Most systems include one or more expensive graphics generator machines and one or more expensive sets of goggles. Additionally, the known body wear devices that are available also are more expensive than the average consumer can afford. Since known virtual reality systems are expensive, only companies, universities or government agencies are likely to be able to afford to buy them. Consequently, the availability of virtual reality systems for the average consumer is practically non-existent today.

As a result of the above, there is a need for a virtual reality system capable of manufacture and pricing within the entertainment budget of the typical consumer.

There is a need for a virtual reality system capable of costing an order or magnitude less than the present-day least expensive virtual reality system, but which has most of the virtual reality capabilities of today's more expensive systems.

Further, there is a need for a virtual reality system that, by having a lower cost, makes available to the average consumer the educational and entertainment opportunities realizable through virtual reality system games and educational application programs.

Additionally, a significant limitation that must be overcome to yield a workable virtual reality system is to provide a method and system that gives the player the impression that he is moving in a three-dimensional world. This requires, first of all, a method to generate and change three-dimensional perspective images on a display as a function of inputs from the player. Secondly, this requires a way for the player to "move himself" within the image display. A viable virtual reality system must perform these operations in real-time. Moreover, for the purpose of providing an economical virtual reality system, these operations must be capable of performance with easily available and low cost microprocessing components.

Thus, there is a need for an economical method and system to implement player movement in a three-dimensional virtual reality world.

There is a need for a method and system that generate, for a low-cost virtual reality system, three-dimensional perspective images that change perspective according to player inputs.

There is a need for a method and system that permit the player to "move himself" within the three-dimensional image display of a low-cost virtual reality system.

Further, there is a need for a method and system can achieve the above objectives in readily available, low cost microprocessing components.

SUMMARY OF THE INVENTION

The present invention, accordingly, provides a virtual reality system and method that overcomes or reduces disadvantages and limitations associated with prior virtual reality systems and methods.

One aspect of the invention is a virtual reality system wherein an operator perceives being in a computer-generated world. The system comprises a display subsystem that renders image data as a virtual reality image. Memory associated with the display circuit contains image data. A helmet device worn by the operator contains the display subsystem. In response to operator movement of the helmet device, a microprocessor determines the new field of view in the virtual environment that is displayed to the operator. The microprocessor extracts data representing the virtual world from memory and controls the display of the virtual reality image as though the operator were within and associated with the virtual reality image. In the preferred embodiment of the present invention, the virtual reality system further comprises image data input circuitry for manipulating the virtual environment in response to a prescribed set of operator controlled inputs.

Another aspect of the invention is a method of modeling the relative position and movement of objects in a virtual reality environment. The method includes the steps of representing graphically a first and second object in a virtual reality environment on a graphical display. The graphical representation obscures the first and second objects according to the relative position of the first and second objects to a predetermined observation point within the virtual reality environment. The method includes determining a first partitioning plane between the first and second objects. Then, a second partitioning plane between the first and second objects is determined in response to the first or second object moving across the partitioning plane. The method then involves representing graphically on the graphical display the first and second objects within the virtual reality environment. This is done by selectively obscuring the first and second objects according to the relative position of each of these objects from the predetermined observation point in the virtual reality environment. This is done according to the positions of the objects relative to the second partitioning plane.

The method of the present invention may generate numerous partitioning planes depending on the number of objects and their relative positions to the predetermined observation point. The effect of the method the present invention is to create and permit a player to operate within a virtual reality world, but combines a three-dimensional partition database with a moving objects algorithm. The binary partition database of the present invention solves the problem of selecting which things to render and when to render them in the virtual reality system display.

A technical advantage of the present invention is that it provides an economical method and system to implement player movement in a three-dimensional virtual reality world that not only has application for user entertainment and games, but also may be used in many other fields. In education, for example, an architectural student may use the system of the present invention to enter a virtual reality world model of a building or structure he is designing. Similarly, using the present invention a medical student may use the virtual reality system to "tour" a model of the brain, or a chemist may "walk around" and "inside" a three-dimensional model of the complex molecule. Because the present invention provides a low-cost virtual reality system, many more individual applications may be realized than have heretofore been possible.

Another technical advantage of the present invention is that it permits multiple operators to co-exist in a single virtual reality environment. As a result, a student and a teacher maybe in the same virtual reality world at the same time. Similarly, in the travel/tourist industry, for example, a potential traveler and the travel agent may take a guided tour of a model of Disney World to plan a vacation.

A further and significant technical advantage of the present invention is that it opens to the typical consumer virtual reality system capabilities. By providing a virtual reality system that costs an order of magnitude less than the least expensive presently known virtual reality system, the present invention addresses the budgetary needs of the average consumer. At the same time, however, the low-cost virtual reality system of the present invention still provides to the consumer most of the same capabilities available with more expensive virtual reality systems. For example, the present invention can combine effectively with a known moving object algorithm, such as a flight simulator algorithm to yield a low-cost way of generating three-dimensional images that change their perspective according to player inputs to a virtual reality system.

BRIEF DESCRIPTION OF THE DRAWINGS

The invention and its modes of use and advantages are best understood by reference to the following description of illustrative embodiments when read in conjunction with the accompanying drawings, wherein:

FIGURE 1 provides a conceptual illustration of two players using the preferred embodiment of the present invention;
FIGURE 2 provides a schematic block diagram of the overall architecture of the virtual reality system of the preferred embodiment;
FIGURE 3 provides a schematic block diagram of the helmet board architecture of the preferred embodiment;
FIGURE 4 provides a schematic block diagram of the virtual reality system of the preferred embodiment;
FIGUREs 5-7 provide detailed schematic diagrams for the preferred embodiment;
FIGURE 8 provides a basic software flow chart for the main processor of the preferred embodiment;

FIGURE 9 provides a basic software flow chart for the helmet processor of the preferred embodiment;

FIGUREs 10-13 illustrate moving objects and object database of the preferred embodiment;

FIGUREs 14 through 18 illustrate the fields for the longwords that the preferred embodiment used to implement moving object algorithm and 3-D binary partitioned database; and

FIGUREs 19 and 20 provide an illustrative example of an application using the system and method of the preferred embodiment.

## DETAILED DESCRIPTION OF THE INVENTION

The preferred embodiment of the present invention is best understood by referring to the FIGUREs wherein like numerals are used for like and corresponding parts of the various drawings.

### System Overview

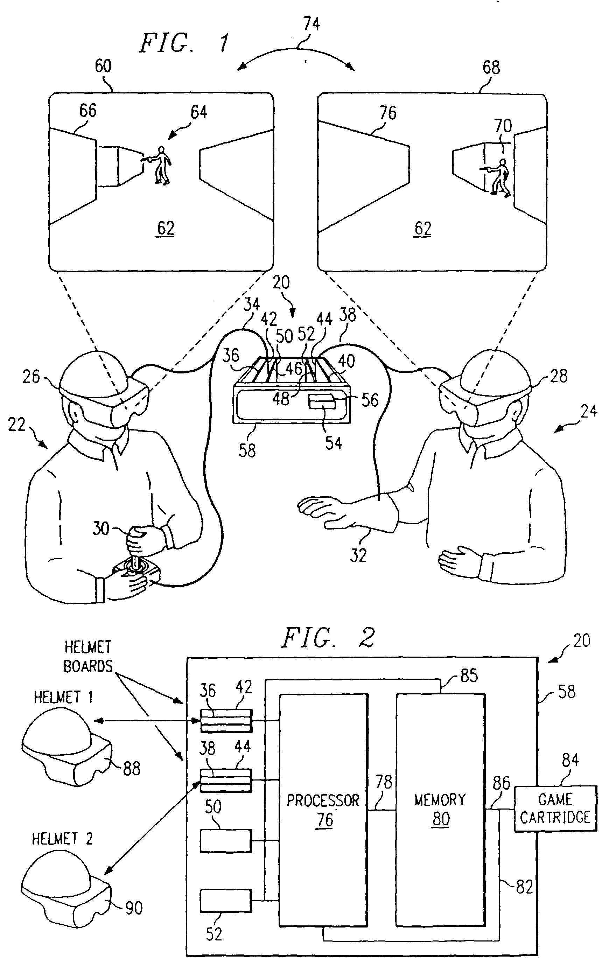

FIGURE 1 shows the preferred embodiment of the virtual reality system 20 being used by two players 22 and 24. Each player wears a helmet or goggles 26 and 28, respectively, and uses an input device. For example, player 22 controls his movements in the virtually reality world via joystick 30, while player 24 controls his movements by power hand attachment 32. Goggles 26 and joystick 30 connect via cable 34 to helmet card 36. Similarly, goggles 28 and power hand attachment 32 connect via cable 38 to helmet card 40. Helmet cards 36 and 40 fit within chassis 58 at slots 42 and 44, respectively, while additional cards 46 and 48 for additional users, if desired, fit within slots 50 and 52.

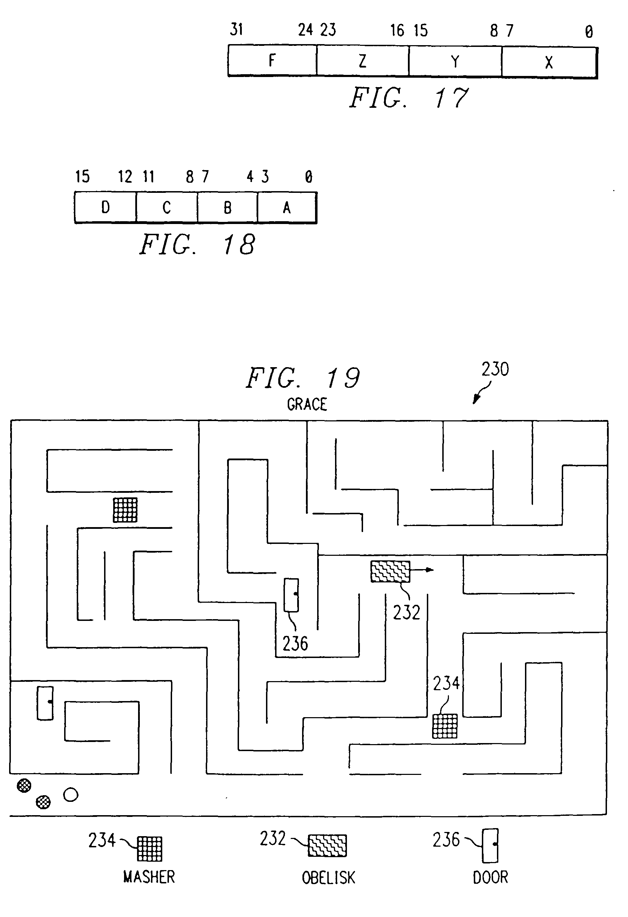

In the example that FIGURE 1 shows, cartridge 54 fits within slot 56 of chassis 58 for providing the game that players 22 and 24 are playing. In the preferred embodiment, cartridge 54 may be one any number of games that the players may select. For example, FIGUREs 19 and 20, below, describe a game called "GRACE" that may be used with the preferred embodiment. In the particular example of FIGURE 1, player 22 through goggles 26 views display 60 containing environment 62. Within environment 62, surrogate player 64 takes actions according to the commands that player 22 issues through joystick 30. For example, within environment 62, player 22 directs surrogate player 64 to pass through maze barriers 66.

At the same time player 22 views environment 62 on display 60 of goggles 26, player 24 views display 68 within goggles 28. Player 24 views the same environment 62 that player 22 views. However, player 24 controls surrogate player 70 through barriers 72 in pursuit, for example, of surrogate player 66. Player 24 issues commands for control of surrogate player 70 through power hand attachment 32 and movement of goggles 28. The result is that players 22 and 24 operate within the virtual reality world 74 that the virtual reality system 20 of the preferred embodiment creates.

### System Hardware

FIGURE 2 provides a conceptual block diagram of the overall architecture of the virtual reality system of the preferred embodiment. According to FIGURE 2, the preferred embodiment consists of processor 76 which communicates via bus 78 to memory circuit 80 and through bus 82 to ROM card reader 84. Memory circuit 80 also communicates through bus 86 with ROM card reader 84. Helmet boards 36 and 38 connect to helmet 1 circuit 88 and helmet 2 circuit 90, respectively. Helmet 1 circuitry, for example, may comprise circuitry for goggles 26 and joystick 30 of FIGURE 1, while helmet 2 circuitry 90 may include goggles 28 and power hand attachment 32. The architecture of the preferred embodiment accommodates four helmet cards, such as helmet card 36 and 38 within slots 42, 44, 50 and 52.

According to the system architecture, a player uses the virtual reality system by inserting a game cartridge 54, for example, through slot 56 and into ROM card reader 84. Processor 76 directs ROM card reader to automatically read game cartridge 54 and download game software and a representation of the virtual world into system memory 80. Processor 76 then examines helmet board slots 42, 44, 50 and 52 to determine how many players will participate in the game. In the preferred embodiment, each helmet is used by only one player. As the game program proceeds, processor 76 reads input from helmet boards 36 and 38, for example. The input describes the current status of the player, including the player's head position and any data from the input devices attached (e.g., joystick 30 or power hand attachment 32). Processor 76 analyzes the input and updates the status of the game appropriately. This involves updating the state of a database that represents the model of the virtual reality world 74. During the read/update process, helmet boards 36 and 38 are prohibited from reading the world database. After the database is updated, processor 76 instructs each helmet board 36 and 38 to begin drawing the view of the virtual reality world 74 as seen from each player's point of view.

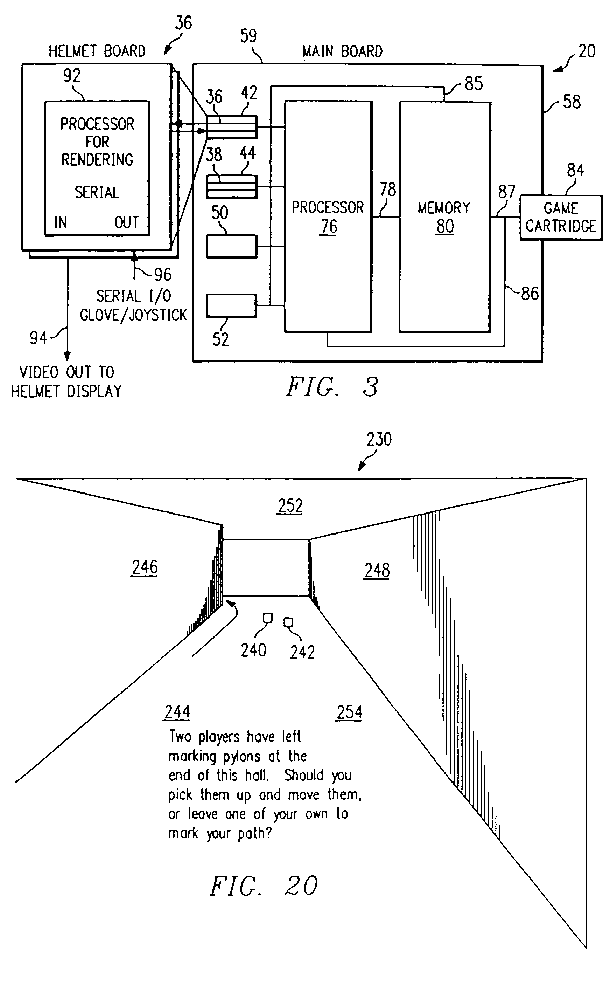

Helmet boards 36 and 38 insert into main chassis 58 with one helmet board per player in a game. FIGURE 3 shows that helmet board 36 consists of helmet board processor 92 that reads a virtual world database from memory 80 of main board 59 via parallel bus 85. Main board 59 files within chassis 58 of FIGURE 1. Helmet board processor 92 renders the view of the virtual world from the player's standpoint via video connection 94 to the player's helmet display. Bus 85 also connects processor 76 to helmet board 36. Connecting helmet board 36 to processor 76 of main board 59

4

allows helmet board 36 to direct input data from the helmet or goggles 26 and joystick 30 or another input device via serial I/O 96 directly into main board memory 80. The helmet or goggles 26 attaches to helmet board 36 via a simple data strip connection. Helmet board processor 92 outputs a rendered scene to the video display 60 in helmet 26. Helmet board processor 92 also generates any audio signals that may be sent to speakers or earphones that may be mounted on the player's helmet or goggles 26. In the preferred embodiment, helmet board processor 92 renders the scene via connection 94 only when directed to do so by processor 76.

FIGURE 3 also shows ROM card reader 84 for receiving and reading game cartridge 54. Game cartridges 54 may contain game mechanics, helmet board 36 and 38 output interpretation, and one or more virtual reality worlds in the form of databases. Cartridges 54 are inserted in the main chassis 58 at slot 56 (See FIGURE 1), at which point their contents are directly loaded into main board processor 76 and memory 80.

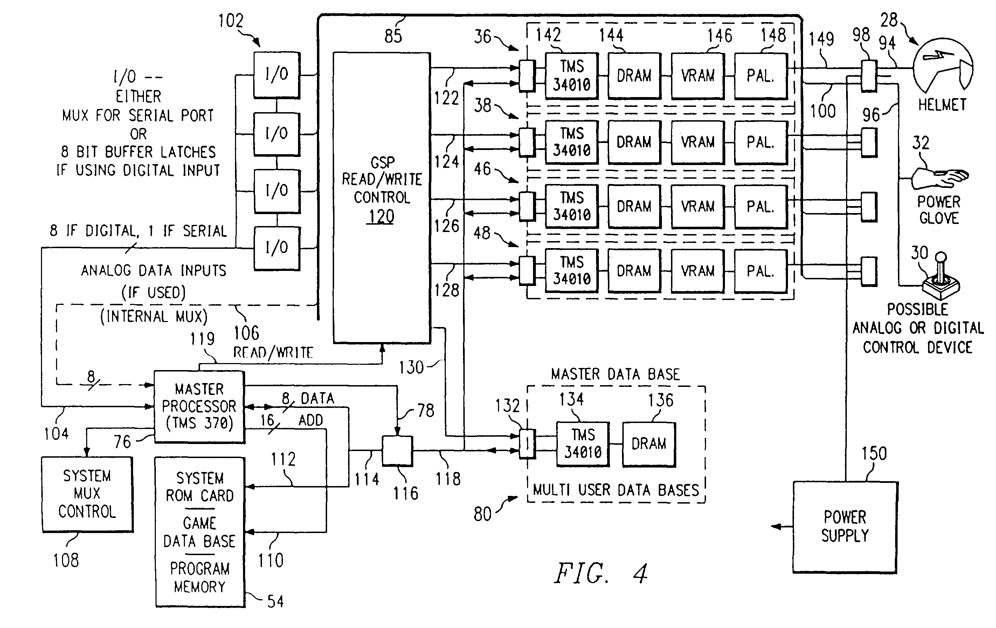

FIGURE 4 shows a schematic block diagram of the circuitry of the preferred embodiment. Beginning at power glove 32, serial I/0 connection 96 goes to interconnection 98 for sending input signals via bus 100 to main board bus 85. Main board input bus 85 directs input data via I/O latches 102 to bus 104. Bus 104 sends input signals to master processor 76. Input bus 85 may be either digital or analog for providing digital or analog inputs. If an analog input is used, I/O latches 102 may be either a multiplexer (MUX) for a serial port or 8-bit buffer latches, for digital input to master processor 76. Similarly, input bus 104 may be either a single bit if serial data is used or an 8-bit bus if parallel input is used. Additionally, if analog data inputs are used, bus 106 may serve as an input bus for an internal multiplexer. Master processor 76 provides input to system multiplexer controller 108, 16-bit address input to system ROM card 54 through address bus 110 and 8-bit data, through input data bus 112, Data bus 112 provides data input by way of bus 114 to switch 116 into memory 80. Switch 116 is controlled by master processor 76 by control signals from bus 78 and sends data from bus 114 along bus 118 to memory 80.

Master processor 76 also sends read/write control signals to GSP read/write controller 120. GSP read/write controller 120 provides control inputs to helmet cards 36, 38, 46 and 48 by way of respective buses 122, 124, 126, and 128. Additionally, bus 130 from GSP read/write controller 120 provides inputs to memory 80. At connection 132, memory 80 receives control signals on bus 130 and data input and processor control input bus 118 from switch 116.

Memory 80 contains processor 134 and DRAM 136. In the preferred embodiment, processor 134 comprises a Texas Instruments TMS 34010 processor. Memory 80 also communicates master database signals to helmet cards 36, 38, 46 and 48 though bus 138.

Each of the helmet cards 36, 38, 46 and 48 connects to the circuitry of the preferred embodiment at connection 140 and contains processor 142 which directs data signals to DRAM 144. DRAM 144 provides data input to video RAM (VRAM) 146, which directs video data to palette 148. Palette 148 sends color palette data through output bus 98 to interconnection and along video connection 94 to helmet 28.

Each of the helmet cards 36, 38, 46 and 48 are controlled by GSP read/write controller 120 to send rendering data to an associated helmet 28 in response to read/write control signals from bus 119. Signals on bus 119 come from master processor 76 to control each of the individual helmet cards 36, 38, 46 and 48. Output from processor 142 of helmet card 36, for example, is temporarily stored in DRAM 144 which outputs to the video RAM ("VRAM") 146. VRAM 146 is the RAM that the scene is rendered onto and provides the data from which pallet 148 may render the video image to the display within helmet 28.

In the preferred embodiment, power supply 150 provides conditioned power to all of the system circuitry as well as to the input and output devices connected to interconnection 98. Additionally, an alternative embodiment may include a possible analog or digital control device such as joystick 30. Helmet 28 may also provide an input to the virtual reality system that describes the helmet orientation. For example, helmet 28 may provide tracking devices that use ultrasound or other recognized methods to track a player's movement of the helmet. The data that helmet 28 communicates to the virtual reality system of the preferred embodiment, whether orientation information as to the player's head position or simply display data to the display circuit of helmet 28, all data is treated as serial input and output data.

For the preferred embodiment, four players may use the virtual reality system by connecting to each one of the interconnections 98 an input for a respective helmet cards 36, 38, 46 and 48. In such case, through interconnections 98 and bus 85, master processor 76 reads input from one to four players and decides what needs to be done with regard to the master database of memory 80. In response to signals from master processor 76, microprocessor 134 of memory 80 makes any changes necessary to make objects move or otherwise respond to commands from the players. Once the database is changed according to the inputs from master processor 76, the signals go to helmet card 36, 38, 46 and 48 for ultimate display at each of the helmets 28 that may connect to one of the connections 98. Thus, in response to inputs from power glove 32 or joystick 30 for example, an infinite loop is established in the system that continues to render to the connected helmet cards to update visual information at the display of helmet 28.

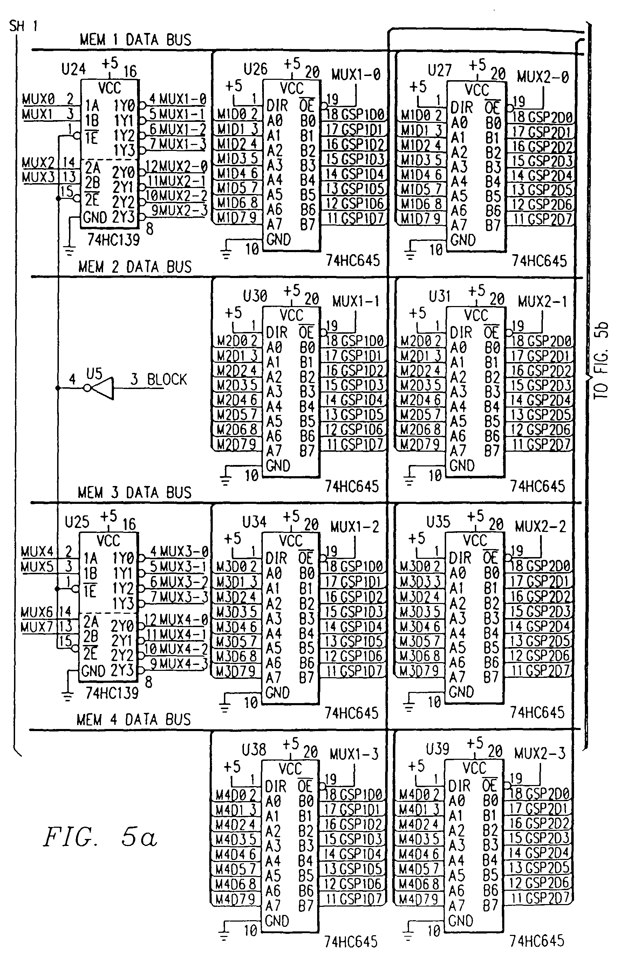

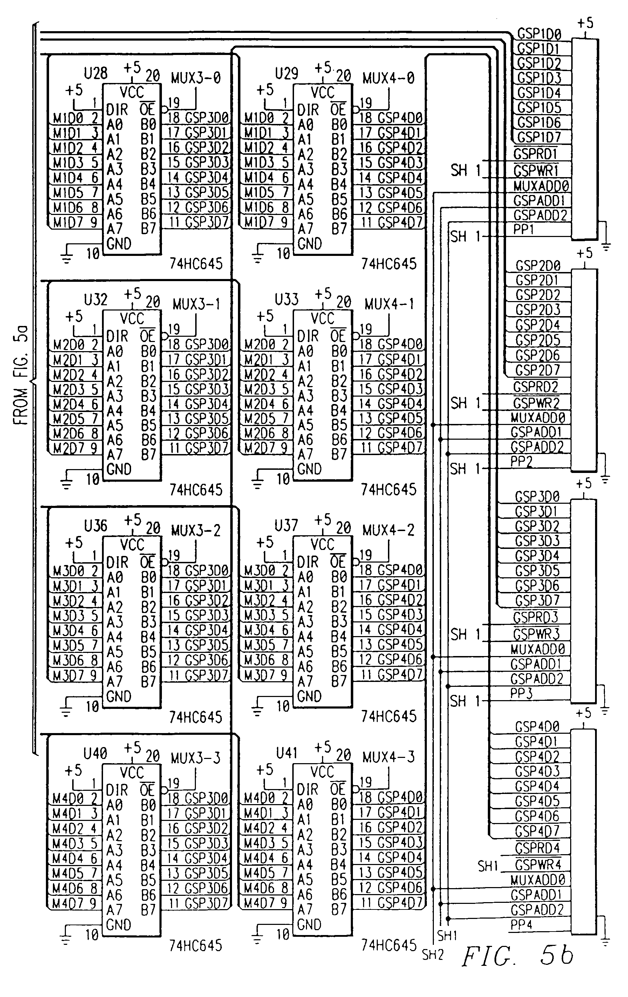

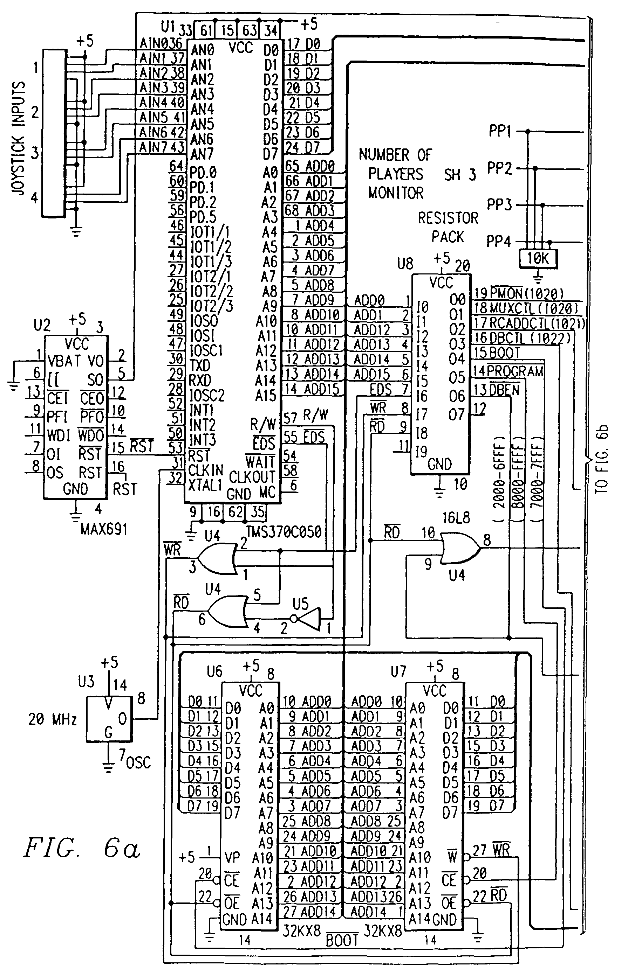

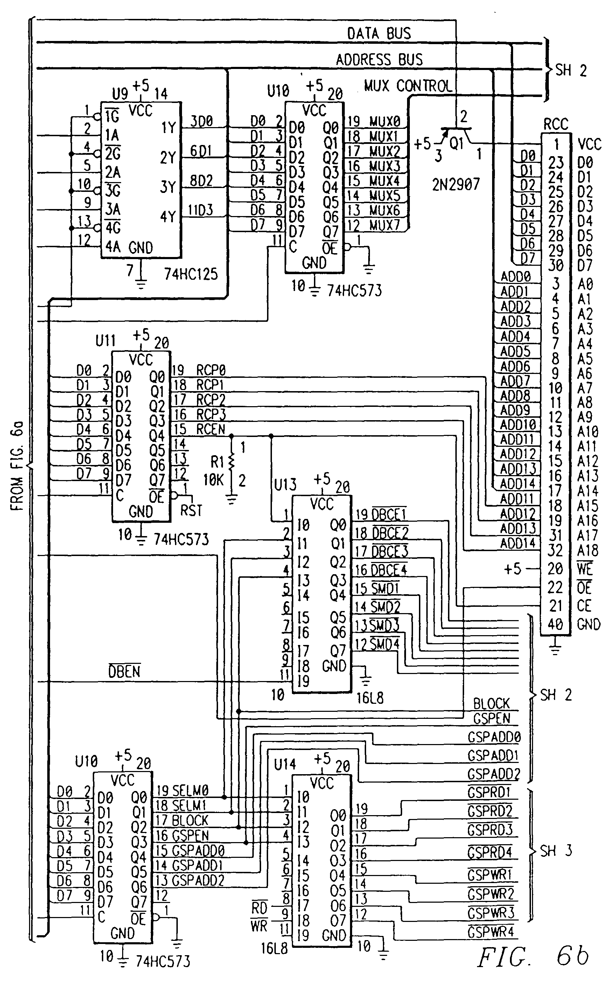

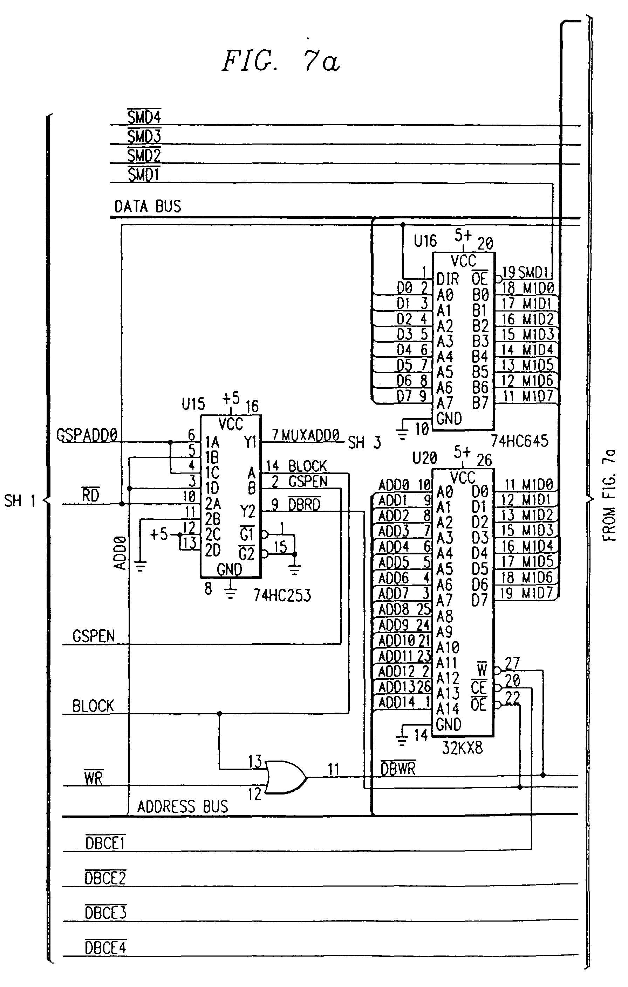

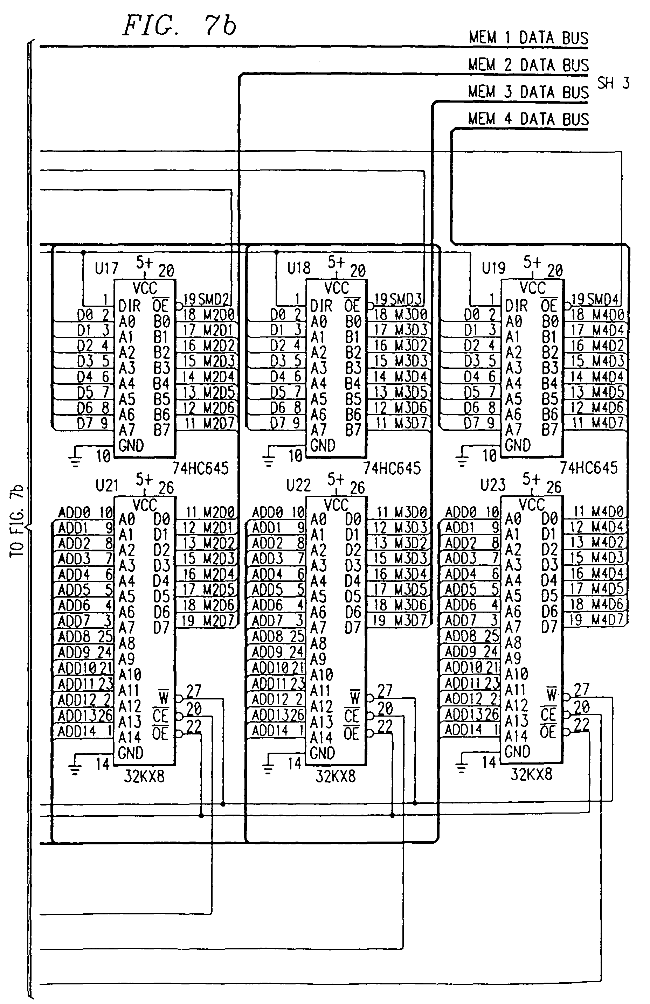

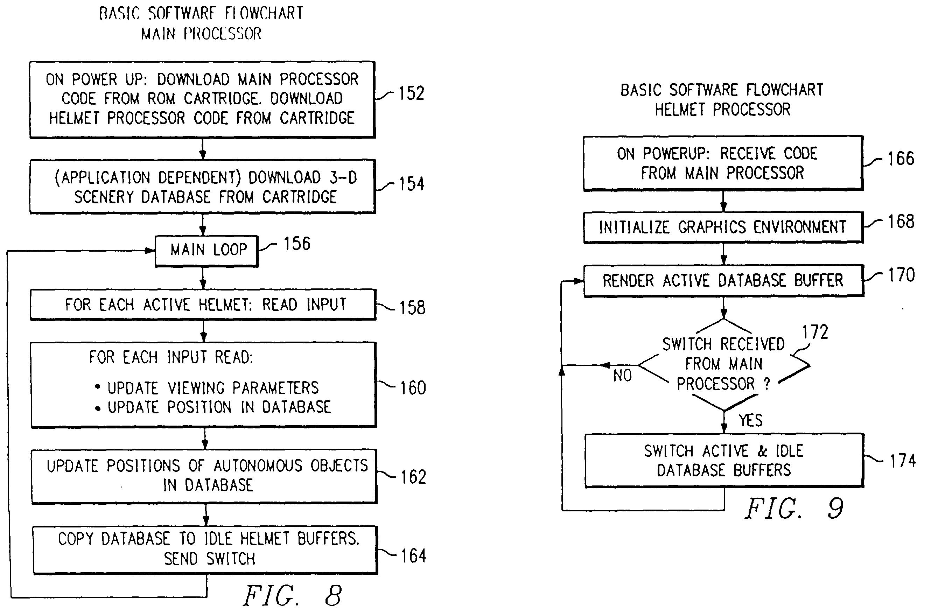

FIGUREs 5, 6, and 7 provide detailed schematic diagrams that illustrate the implementation of the preferred embodiment using commercially available components.

System Software

A. Overall Control Flow. FIGURE 8 shows the basic software flow chart for the main processor 76 of the preferred embodiment. Beginning at the ON POWER UP step 152, the virtual reality system downloads the main processor code and helmet 26 processor code from ROM cartridge 54. Then, at step 152 the main processor downloads the three-dimensional (3-D) scenery database from cartridge 54. The purpose of these steps is to read the game mechanics into memory 80, read the world database into the shared memory, and initialize the virtual world parameters.

Once these initial steps take place, the preferred embodiment begins a loop at step 156. The loop begins for each active helmet 28. That is, for each helmet for which a helmet card 36, for example, is connected at slot 42 each active helmet step 158 reads the input. If the helmet is detected, the program sets the render bit for that helmet to false. If the helmet is detected for the first time, then the basic software of the preferred embodiment inserts the player into the game. Otherwise, the software gets the latest output from the helmet card 36, for example. If no helmet is detected in the loop, then the slot which would otherwise contain a helmet card is skipped. For each input read at step 160, the preferred embodiment updates the viewing parameters and updates the position of the viewer and the database. In essence, this step interprets all inputs from the helmet and updates the master database in memory 80 accordingly.

Next, at step 162 the basic software for main processor 76 updates the positions of the autonomous objects in the database. Then, at step 164, the control program copies the database to all the idle helmet buffers and directs the information to be sent to each of the helmets 26. This, essentially, comprises the step of setting a render bit in the rendering processor 92 of the helmet board 36 for rendering the new image on the helmet 28 display.

FIGURE 9 shows the basic software flow chart for helmet processor 92 of the preferred embodiment. As in the case of processor 76 for main board 59, processor 92 for the helmet board 36, for example, begins with step 166 for ON POWER UP at which point processor 142 receives code from main processor 76. With this code, at step 168, helmet processor 142 initializes the graphics environment for the particular application of the preferred embodiment. Next, at step 170, a loop begins for rendering the active database buffer to the helmet 28 display. Query 172 takes place next to determine if a switch signal (i.e., the previously identified render bit) has been received from main processor 76. If the bit has been set to "true", then at step 174 helmet board 136 renders the current scene. Then the loop continues back to step 170 to render the active database buffer. If the bit has not been set to true by the main processor 76, then at step 172 the loop returns to step 170 to render the active database buffer. This process is commonly known as "double buffering".

B. Data Structures. This section of the Detailed Description provides an in-depth explanation of the BSP database structure, with emphasis on extensions that allow objects to move through the database.

1. BSP, Moving Object Extensions Overview. The method that the present invention employs to create and permit a player to operate within a virtual reality world combines a 3-D binary partitioned database with a moving object algorithm. The 3-D binary partitioned database solves the problem of selecting which things to render and when to render them on the helmet 28 display. The moving object algorithm includes an adaptation of an existing flight simulator algorithm for the purpose of simulating the movement of objects in a 3-D virtual reality environment. By combining the 3-D binary partitioned data base solution with the moving object algorithm a master database is created from which all players may receive information of the virtual reality environment in which they play.

The 3-D binary partitioned database and moving object algorithm will be discussed generally. Thereafter, they will each be discussed in more detail. The moving object algorithm is a modified version of an algorithm developed for flight simulators in the late 1960s the chief advantage of which is that it makes possible a real-time solution to the hidden surface problem without expensive z-buffer hardware. The prototype moving object algorithm is an example of a real-time 3-D application running on the Texas Instruments TMS 34010 or TMS 34020 graphics processors. The 3-D binary partitioned database is constructed based on the designer's a prior knowledge of object placement. While satisfactory for small static worlds the approach for a virtual realty environment with a large number of objects that move relative to each other is not a trivial extension.

In writing the moving object algorithm, the bulk of the effort has been directed toward achieving real-time animation given a reasonably complex 3-D scene. The Graphics Signal Processor (GSP) 120 does most of the calculations and all of the drawing. The majority of the GSP's 120 time is spent executing the hand-tuned assembly code of the 3-D pipeline that interprets the database, transforms the coordinates, and draws the polygons. The 3-D database (currently about 7K bytes) is downloaded to the GSP 120 so that the GSP 120 does not incur the overhead of accessing the database through the GSP's 120 host interface registers. Each new frame requires that only a small amount of information be exchanged between the PC host processor 76 and GSP 120. The host gives the GSP 120 the current position and orientation of the simulated player. The GSP 120 responds by telling the host whether the player has run into any of the objects in the 3-D scene.

The movement characteristics of each player are simulated on host processor 76. The current model is intended to be easy for the novice to control, and gives the user the freedom of movement to explore the 3-D scene at will. For ease of access, the behavior model for the moving object algorithm is written in C, and is contained in the host processor-resident portion of the moving object algorithm. The software has been structured to largely isolate the changes required to improve the model to a single module--the function "cmd_interpret" contained in source file "interp.c." Given that the GSP 120 does almost all the work, the moving object behavior model on the host processor has room to expand before real-time performance will suffer.

The 3-D binary partitioned database, which will be described in detail later, is structured as a binary tree. Each terminal (or leaf) node in the tree represents a single object; an intermediate (or nonleaf) node represents a group of objects. During the development and testing phase, each leaf node in the tree can be designated in turn as the root node, and displayed by the moving object algorithm. This isolates the data in one node from possible errors elsewhere in the database, and facilitates orderly testing of individual 3-D objects in the database. When several nodes have been verified, they can be linked into small subtrees for further testing.

The current implementation has been tested at 1, 4 and 8 bits per pixel. At pixel depths of 4 and 8 bits, the color selection is limited to 16. In the case of a monochrome display, a 4x8 dither pattern is substituted for each of the 16 colors. Careful selection of colors and placement of objects in the 3-D scenery database are necessary due to the limited number of colors available.

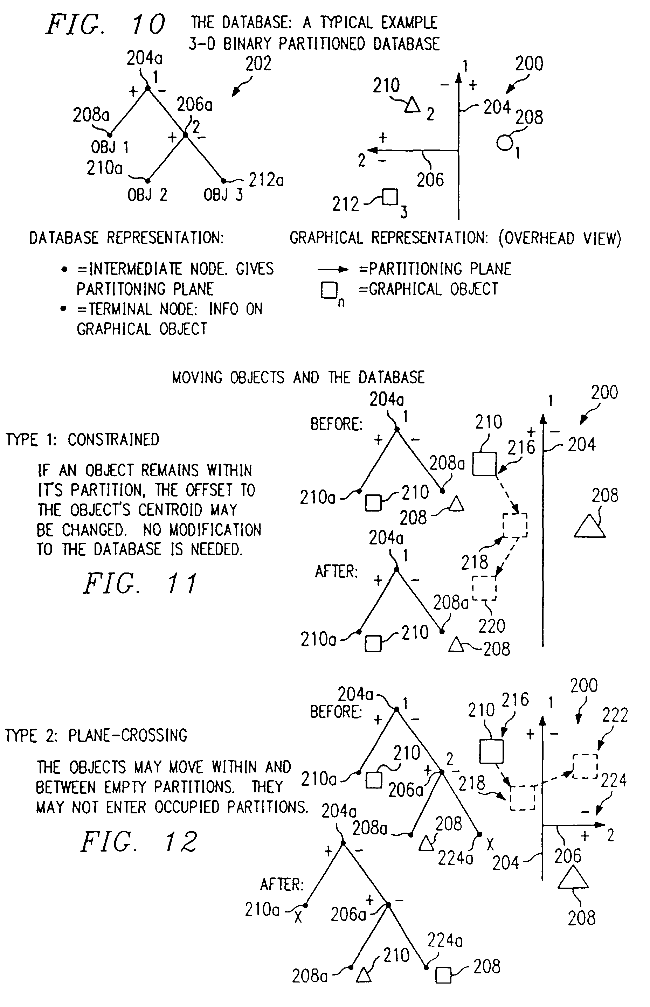

2. <u>Graphical Description of Moving An Object Through A BSP.</u> Referring to FIGURE 11, there is shown a graphical representation 200 alongside a database representation 202 that together conceptually illustrate the operation of the 3-D binary partitioned database of the preferred embodiment. In graphical representation 200, partitioning planes 204 and 206 illustrate that the database uses to deal with after the objects 208, 210 and 212. Graphical representation 200 may be thought of as an overhead view of the three objects 208, 210 and 212 positioned on a flat surface having 204 and 206. Partitioning planes 204 and 206 are established according to the relative position for the objects on the flat surface. Partitioning plane 204 has a + side and a - side and partitioning plane 206 has a + side and a - side. Partitioning planes 204 and 206 establish relative positions of the objects appearing in graphical representation 200. In the example, object 208 is on the + side of partitioning plane 204. Objects 210 and 212 are on the - side of the partitioning plane 204. Object 210 is on the + side of partitioning plane 206 and object 212 is on the - side of partition plane 206.

Database representation 202 shows how the graphical representation 200 may be viewed according to the 3-D binary partition database of the preferred embodiment. Beginning at node 204a, the database can construct a partitioning tree such that object 208 is on the + side of node 204a and objects 210 and 212 are on the - side of node 204a. Furthermore, on the + side of node 206a, object 2 appears and on the - side of node 206a object 3 appears. In the database representation 202, nodes 204a and 204b are considered intermediate nodes that relate to the partitioning plane that the 3-D binary database that the preferred embodiment database uses. Node 208a, 210a and 212a provide information on the graphical object to be rendered to the helmet 28 display.

FIGUREs 11 through 13 illustrate how the 3-D binary partitioned database of the preferred embodiment deals with the relative positions and obscuring of objects that occur as a result of operation of the moving object algorithm in the preferred embodiment. As graphical representation 200 illustrates, object 210 moves from position 216 through position 218 to ultimate position 220. Object 208 remains in its initial position during this movement Partitioning plane 204 throughout this movement, continues to separate object 210 from object 208. As a result, although the offset in the graphical representation to the object 210 centroid may be changed as object 210 moves finally to position 220, no modification of the 3-D binary partitioned database, is necessary. Since object 210 does not move through plane 204, the database nodes 204 having a + side and a - side with object positions 208a and 210a permit the continued description the relative position of objects 208 and 210 to be the same after the movement is before the movement. This is not the case in the movement that FIGURE 12 describes.

In FIGURE 12, object 210 moves from position 216 to position 218 and ultimately to position 222. Object 208 remains in its original position. Notice that as object 210 moves to through position 218 and position 220, it crosses partitioning plane 204. Once object 210 crosses partitioning plane 204, it is necessary to establish partitioning plane 206. Partitioning plan 206 has a + side and a - side to maintain the relative position of object 210 to object 208. The 3-D binary partitioned database of the preferred embodiment of the preferred embodiment achieves this result by establishing node 206A as database representation 202 of FIGURE 12 illustrates. Note that node 206A a + side and - side exists where at node 208A object 208 is identified. The binary partition database of the preferred embodiment solves the problem that arises when object 210 crosses partitioning plane 204 in the instance that an unoccupied or empty partition. For example, in graphical representation 200 of FIGURE 12, object 210 moves through position 218 to position 222 within unoccupied partition 224. Since partition 224 is already established, an existing, but empty, node 224a exists in database representation 202. As object 210 moves to position 222, in the database 210 simply moves from node 210a to node 224a. In this type of movement, objects may move within and into partitions. They may not, however, enter occupied partitions. Thus, if in the virtual world a wall or some other structure exists that would prohibit an object's moving into a partition, the software prohibits movement of the object into the partition. The graphical representation 200 that results is one where the object simply stops or is deflected by the prohibiting structure.

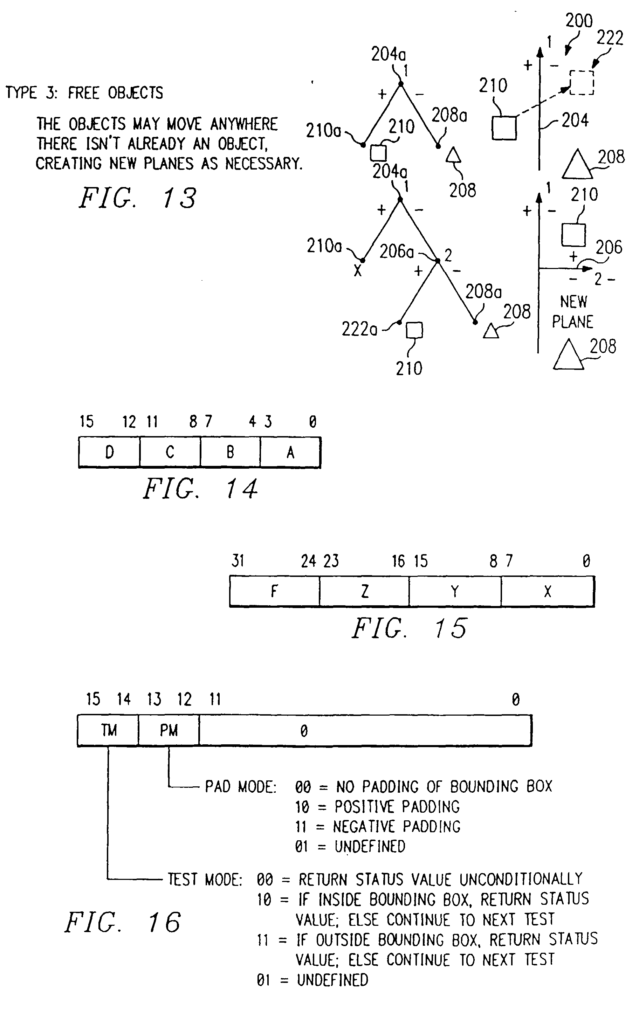

FIGURE 13 illustrates what occurs when an object attempts to move into an existing partition occupied by another object but for which space exists for movement into the partition. Graphical representation 200 shows object 210 moving to space 222 where there is no pre-existing partition. In response to this movement, the 3-D binary partitioned database of the preferred embodiment creates partitioning plane 206 having a + side and a - side. The database representation 202 first shows that object 208 be represented by node 208a and object 210a by node 210a, After constructing partitioning plane 206, however, the database representation shows that node 206a representing the partitioning plane is constructed having the object nodes 208a and 222a. Object 208 associates with object node 208a and object 210 now associates with node 222a. As a result, for the objects 208 and 210, the binary partition database of the preferred embodiment permits movement anywhere that there isn't already an object or obstruction. In so doing, the 3-D binary partitioned database creates new partitioning planes as necessary.

In addition to the 3-D binary partition database, the preferred embodiment uses a moving object algorithm to illustrate the use of the device. Appendix A provides a listing of the source code for the 3-D binary partition database and the moving object algorithm in connection with the moving object algorithm of the preferred embodiment.

The moving object algorithm is split into two main modules, one of which executes on the host processor 76, and the other of which executes on GSP 120.

3. Coordinate Systems. Several coordinate systems are used by the 3-D moving object algorithm. These coordinate systems are used to describe positions in the object space, in the virtual world space, in the player's viewing space, and on the viewport surface.

The object coordinate system is the 3-D coordinate system in which a graphics object is described. The convention used is that the x, y and z axes in the object coordinate system are parallel to the corresponding axes in the virtual world coordinate system (described below), This simplifies the calculations performed by the software since the transformation from object space to world space (described below) requires translation, but no rotation or scaling. A more general 3-D system would support rotation and scaling as well, but at the cost of additional calculations.

The virtual world coordinate system is the 3-D coordinate system in which the graphics objects are represented in relation to one another. It is the coordinate system of the simulated world. The xyz origin is located at 0 altitude, with the x and y axes aligned with the major compass directions. The +x direction is east, and the +y direction is north. The +z direction is up.

The player's viewing coordinate system is the 3-D coordinate system relative to the player. The viewpoint (the assumed position of the player's eye) is at the xyz origin. The +x direction is toward the right, the +y direction is down, and the +z direction is into the screen (and away from the player). The convention used in the moving object algorithm is that the z axis passes through the center of the viewport. The visible objects in viewing space are those contained in the viewing pyramid whose apex is formed by four lines drawn from the viewpoint (player's eye) through the four corners of the viewport. The pyramid is truncated by a "near" (or "higher') clipping plane parallel to the surface of the viewport.

The viewport coordinate space is the 2-D coordinate system relative to the viewport. The viewport is a rectangular viewing surface on the screen. The convention used in the moving object algorithm is that the xy origin is located in the center of the viewport. The +x direction is toward the right, and the +y direction is down. Visible objects in viewing space are perspective projected onto the viewport.

As mentioned above, the transformation of a graphics object from object space to world space involves only translation. The transformation of an object from world space to viewing space involves a translation followed by a rotation. The final stage in the transformation process is to calculate the perspective projection of the 3-D object in viewing space onto the 2D viewport surface.

The object, world and viewing spaces are all described by right-handed coordinate systems.

4. Detailed Description of BSP Data Structures. The method of solving the hidden surface problem is usually referred to as the Painter's Algorithm. FIGUREs 10 through 13 illustrate the use of the 3-D binary sectioned or partitioned database of the preferred embodiment to presort objects before rendering occurs. By presorting, the 3-D binary partitioned database permits the helmet cards to draw or render objects that are further away from the player first and then draw objects that are closer to the player. The result is that objects that are closer to the players appear to obscure the ones that are further away. FIGURE 10 illustrates how the 3-D binary partition database of the preferred embodiment achieves this objective. A binary sectioning plane (BSP) is specified between the right and left sons of each intermediate node having two sons. The viewpoint coordinates are plugged into the equation for the BPP to determine on which side of the BPP the viewpoint lies.

The moving object algorithm's scenery is stored in a hierarchical 3-D database. The database is organized in the form of a binary tree. A pointer to the root node of the database is passed as an argument to the 3-D database interpreter function, dbinterp.

Each terminal (or leaf) node in the tree specifies an object (typically an convex polyhedron) composed of some number of polygons. The polygons in this object can be drawn in the order in which they are listed, and only back face removal is required to eliminate hidden surfaces. To be drawn correctly, polygons must be planar and convex, and their vertices must be listed in the clockwise direction.

Each intermediate (or nonleaf) node has one or two sons (or descendants). By convention, if a node has only one son, that son is the left son.

If an intermediate node has two sons, the objects in the son which is more distant from the viewpoint are drawn first, and the objects in the closer son are drawn second. The sign of the result if used to determine the order in which the two sons are drawn.

Specified for each node (terminal or intermediate) in the database is a bounding sphere that encloses all objects in the node. This bounding sphere is used to trivially reject nodes that are entirely invisible in the viewport. The real-time update rate of the moving object algorithm depends on being able to reject a number of objects at an early stage of the calculations, before much work has been invested in transforming them. If the bounding sphere lies entirely behind the "near" (or "hither") clipping plane, all objects within the sphere can be rejected as invisible. The objects can also be rejected if the sphere lies entirely above, below, to the right of, or to the left of the viewport. If the sphere is so distant from the viewpoint that it approaches the size of a single pixel on the screen, it can be represented as a single dot. If the sphere is smaller than a pixel, it is rejected as invisible, For the sake of efficient software execution, the bounding sphere specified for a node should be no larger than is necessary to enclose all objects contained in the node.

Each node has its own coordinate system, translated from that of the world coordinate system. The positions of objects within a node are described relative to the node's coordinate origin. The node's bounding sphere is centered at this origin as well. Each intermediate node specifies the position of the origins of its left and right sons as x, y and z displacements from its own origin. By altering these displacements within the database, the left and right sons can be moved from one position to another relative to the node without requiring changes to the portions of the database describing the left and right sons themselves.

A terminal node representing an object such as a house or a tree can be pointed to by more than one intermediate node, in which case identical copies of the object appear at more than one position in the 3-D scene. The root node's origin lies at the origin of the world coordinate system.

The database is preceded by a header that contains key parameters such as the location of the root node, the total size of the database, initial position of the player, and color palette. The palette currently supports only 16 colors. In the case of 1-bit-per-pixel displays, a table of 16 dither patterns is substituted for the color palette. The structure of the database header is as follows:

---

## TABLE 4

---

```
typedef struct {          /* header information for 3-D
                          object database
*/long dbsize;            /* length of database in bytes
                                    */
long rootnode;            /* bit offset to root node of
                          binary tree*/
POINT3-D start;           /* starting FIX8 xyz coordinates
                          in worldspace  */
    PALET palet[16];      /* palette of 16 colors (see
                          typedefs.h)    */
    PALET bwpatn[16];     /* 16 4x8 intensity patterns for
                          1bit/pixel        */
    long bcdata;          /* bit offset to object data for
                          bouncing cube  */
    long bcbbox;          /* bit offset to bounding box
                          for bouncing cube*/
```

---

The dbsize field contains the length of the database in bytes. This information is necessary in order to know how much storage to dynamically allocate for the database in GSP 120 memory.

The rootnode field is the bit address offset to the root node of the binary tree. the offset is specified from memory address of the rootnode field. If the rootnode field begins at GSP address A, and the rootnode field contains an offset value V, the address of the root node is calculated as (A + V).

The start field contains the starting x, y and z coordinates, i.e., the initial position of the player in world coordinates. Each coordinate value is expressed as a 32-bit fixed-point number with 8 bits of fraction. (Currently, the starting orientation if fixed--facing "north" or in the +y direction in world coordinates.)

The palet field contains a 16-color palette specified according to the TIGA color-palette format. The bwpatn field specifies the 16 4x8 patters to be used in place of color in 1-bit-per-pixel displays.

The structure of an intermediate (or nonleaf) node in the binary tree for the 3-D being partitioned database is as follows:

TABLE 5

| field description | field size |
|---|---|
| bounding sphere radius R | 8 |
| log2 (scaling factor) F for radius R | 5 |
| node type N = 0 (intermediate node) | 3 |
| color of distant, dot-sized node | 16 |
| bit offset to leftson node | 32 |
| xyz displacements to leftson's centroid | 4*8 |
| bit offset to rightson node | 32 |
| xyz displacement to rightson's centroid | 4*8 |
| partitioning plane coeff's A,B,C,D | 4*4 |

The structure is a total of 176 bits or 22 bytes in length. The first 16 bits in the node structure contain an 8-bit unsigned bounding sphere radius R, a 5-bit log2 (scaling factor) F, and a 3-bit node type specifier, N. An intermediate node is identified by N = 0. The radius of the bounding sphere is calculated as $r = R << F$, where "<<" is the C left-shift operator.

The second 16 bits specify the color of the node when it is so distant that it occupies only a single pixel (a dot) on the screen.

Offsets LSON and RSON contain the bit offsets to the left son and right son, respectively, of the node. The offsets are specified from the bit addresses of the LSON and RSON values in the GSP memory. For example, if the LSON field is stored at memory address A, and the LSON field contains the offset value V, the left son's address is calculated as (A + V).

Specified along with the bit address offsets of the two descendant nodes, LSON and RSON, are the xyz displacements of the centers (i.e., origins) of these nodes from the center (or origin) of the current node. These displacements are stored as 8-bit signed X, Y and Z fields, followed by an 8-bit F field that specifies scaling factor for X, Y and Z. These four 8-bit values are packed into a single 32-bit long word. If the current node is centered at coordinates (Xc, Yc, Zc), the descendant's center coordinates (Xc', Yc', Zc') are calculated as follows:

$$Xc = Xc + (X < F), \ Yc' = Yc + (Y < F), \ and \qquad (1)$$
$$Zc = Zc + (Z < F)$$

The last word in the structure contains binary partitioning plane coefficients A, B, C and D. Each coefficient is 4 bits. The objects or composite objects represented by the left and right sons are separated by a plane whose equation if $f(x,y,z) = A*x + B*y + C*z + D$, where x, y and z are the coordinates of the parent node's centroid in world space relative to the viewpoint. The plane equation is evaluated to determine the proper order in which to draw the left and right sons, based on the Painter's Algorithm. If $f(x,y,z) < 0$, the viewpoint is located on the left son's side of the partitioning plane; the right son is drawn first, and the left son second. Otherwise, the left son is drawn first. The plane equation coefficients are stored in a 16-bit word containing 4-bit A, B, C and D fields, each of which specifies a value in the range -8 to +7. FIGURE 14 illustrates the appropriate 16-bitword. The plane equation is specified relative to the node's center (i.e., origin). If the plane intersects the center of the node then D=0.

For example, assume that the right son's center is located at xyz displacements (100,0,0), the left son is at (-100,0,0), and the partitioning plane has the equation x = 0. The BPP coefficients can be selected as A = 1 and B = C = D = 0 . If x > 0, the left son is drawn first, and the right son second; if x <= 0, the right son is drawn first.

The structure of a terminal (or leaf) node in the binary tree database is as follows:

TABLE 6

| field description | field size |
|---|---|
| bounding sphere radius (unsigned) | 8 |
| log2 (scaling factor) for b.s. radius | 5 |
| node type = -1 (terminal node) | 3 |
| color of distant, dot-sized node | 16 |
| word displacement to bounding box data | 16 |
| 〈3-D object model〉 | (variable) |
| 〈bounding box information〉 | (variable) |

The first 32 bits of the data structure are similar to that for the intermediate node, except that the 3-bit node type field N is set to -1 (signifying a terminal node) rather than to 0.

Offset 32 bits from the base of node structure is a 16-bit field specifying a word offset (bit offset divided by 16) to the bounding box information (to be described). Assuming that the node structure begins at symbolic address NODE, and the bounding box specification begins at address BBOX, the word offset is specified as (BBOX-NODE-32)/16. The bounding box information is optional, and can be omitted if desired. If no bounding box is specified, the offset has a null (0) value.

Offset 48 bits from the base of the node structure is the beginning of the 3-D object model (to be described), which is a description of an object composed of some number of convex polygons. The bounding box information follows the object model.

Each terminal (or leaf) node contains the description of a 3-D object. 3-D object model information is divided into two parts. The first part is a list of all 3-D points in the object. The second part is a list of all polygons in the object, specified in terms of the 3-D points given in the first part. The general format for the object model data is as follows:

TABLE 7

| field description | field size |
|---|---|
| (1st part) | |
| number n of 3-D points in list | 16 bits |
| list of n points in 3-D object space | n*32 |
| (2nd part) | |
| list of faces terminated by null (0) | (see below) |

The 3-D points listed in the first part are specified in terms of their x, y and z coordinates relative to the center of the object. Each 3-D point in the list is represented as a 32-bit value containing an 8-bit X field, 8-bit Y field, 8-bit Z field, and 8-bit F (scaling factor) field as FIGURE 15 shows. The x, y and z coordinates of the 3-D point relative to the centroid of the object are calculated from these four fields as follows;

$$x = X \ll F, \quad y = Y \ll F, \quad and \qquad\qquad (2)$$
$$z = Z \ll F$$

The X, Y and Z fields are integers in the range -128 to +127. Field F is restricted to values in the range 0 to 7.

Following the list of 3-D points is a list of the faces of the object. Each face is a convex polygon specified as a sequence of vertices. The list of faces is terminated by a 16-bit null (0) value. Each individual face in the list is specified according to the format below:

TABLE 8

| field description | field size |
|---|---|
| number n of vertices defining polygon | 16 bits |
| polygon color | 16 |
| list of vertices v[0],v[1],...,v[n-1] | n*16 |

Each vertex v[.] above is a 16-bit value specified as an index into the list of 3-D points specified in the first part of the object model database. Given a list of n 3-D points, vertices are specified as indices in the range 0 to n-1. Vertices must be listed in clockwise order; that is, the vertices are given in the order n which they are visited when the boundary of the forward-facing polygon in object space is traversed in the clockwise direction.

Some 3-D applications require detection of collisions of a specified moving object with the static objects in the scenery. In the current moving object algorithm, the moving object is the "player" which is assumed to enclose the viewpoint. As currently implemented, collision detection is based on bounding boxes in world space.

The newinbbox function determines whether a point, specified in terms of its xyz coordinates in world space, has collided with any of the bounding boxes specified in the database. In the event of a collision, newinbbox returns the particular status value assigned within the database to the violated bounding box. (The status value is presumably assigned some meaning within the application.) If no collision is detected, a null (0) value is returned.

One or more bounding boxes is optionally specified for each terminal node in the tree. The bounding box information follows the object model data in the terminal node structure. Offset 32 bits into the terminal node structure is the word offset to the start of the bounding box information. If a null (0) value is given for the offset, no bounding box information is specified for the node.

To simplify comparisons with bounding box limits, box edges are constrained to be parallel to the x, y and z axes in world space. The dimensions of each bounding box are specified by six coordinates: the minimum x, y and z coordinates, xmin, ymin and zmin, and the maximum x, y and z coordinates, smax, ymax and zmax. These coordinates are specified relative to the center of the node containing the bounding box.

The list of one or more bounding boxes is terminated by a null (0) value. Each bounding box in the list is specified according to the following format:

TABLE 9

| field description | field size |
|---|---|
| bounding box type B | 16 |
| return status value S | 16 |
| minimum x, y and z values | 32 |
| maximum x, y and z values | 32 |

The bounding box type code, B, specifies the characteristics of the bounding box test to be performed. Three collision test modes can be specified by the B value. Namely, a collision is detected if the specified point in 3-D world space is (1) inside the bounding box, (2) outside the box, or (3) either inside or outside the box (unconditional).

When a collision is detected, the 16-bit status value S (whose meaning is assigned by the database author) is returned. If no collision is detected with any of the bounding boxes listed, a null (0) value is returned.

The bounding box type code, B, also specifies whether the bounding box is "padded" to make the bounding box thicker (positive paddling) or thinner (negative padding). If padding is used, the thickness of the padding is automatically taken to be one greater than the distance from the viewpoint to the "near" (or "hither") clipping plane. This padding value is useful in preventing the viewpoint from "penetrating" a polygon coincident with one of the sides of the bounding box. Without padding, the viewpoint could poke through to the other side of the polygon by cutting the polygon with the near z clipping plane. Objects that should be occluded by the polygon would then become visible, spoiling the illusion of a solid 3-D object. The padding can be specified as positive or negative, depending on whether the viewpoint is constrained to be outside or inside the bounding box. Positive padding may be used to detect when a moving object (whose center coordinates are specified for the bounding box test) approaches within a certain critical distance of the outside of the bounding box. Negative padding may be used to detect when a moving object approaches within a certain distance of the inner walls of a bounding box. Zero padding may be specified if desired.

The format of the bounding box type code, B, is specified in FIGURE 16. As FIGURE 16 indicates, the test mode is specified by the TM field in bits 14-15 of the status word, and the pad mode is selected by the PM field in bits 12-13.

Both the minimum and maximum xyz coordinates in the bounding box are represented as 32-bit values. Each value is a point in 3-D object space specified by four 8-bit fields: an 8-bit X field, 8-bit Y field, 8-bit Z field, and 8-bit F (scaling factor) field. The 32-bit representation for the 3-D point is shown in FIGURE 17. The x, y and z coordinates of the 3-D point relative t the centroid of the object are calculated from these four fields as follows:

$$x = X \ll F, y = Y \ll F, and \qquad (3)$$
$$z = Z \ll F$$

The X, Y and Z fields are integers in the range -128 to +127. Field F is restricted to values in the range 0 to 7.

C. The Rendering Process of the Preferred Embodiments

1. Overview of the Rendering Process including the Painter's Algorithm. With the BSP database structure, the rendering process employs the Painter's Algorithm to remove hidden surfaces. The following explains the rendering process of the preferred embodiment.

The moving object algorithm software builds the 3-D scene visible on the screen in three stages. These stages are

    (1) interpretation of the scenery database,
    (2) 3-D transformation, and
    (3) drawing the polygons to the screen.

These tasks are performed by three software modules. This section describes the role of each module in converting the 3-D database and viewpoint information to the real time image on the screen.

The dbinterp function is the database interpreter. It accepts as inputs the database containing the 3-D scene description, and the viewpoint position and orientation. The interpreter's chief task is to trivially reject as many invisible objects (objects not visible on the screen) as possible in order to avoid the unnecessary work of transforming them. The interpreter also determines the order in which to draw the objects: nearer objects are drawn on top of objects that are farther away; this is the Painter's Algorithm. The output of the database interpreter is a list of objects to be transformed, along with their positions in the 3-D viewing space.

The xfrmlist function is the 3-D transformer. It accepts as input the list of objects to be transformed from the dbinterp function. The transformer rotates and translates the objects, clips them if necessary, and projects them onto the viewport. In the process, each 3-D object is broken into its constituent polygons, and a list of polygons to be drawn is output from the 3-D transformer.

The displist (that is, the displist_color or displist_mono) function is the polygon drawer. It interprets the list of polygons generated by the 3-D transformer function, xfrmlist, and draws them to the screen in the order in which they appear in the list. Each polygon is specified in terms of its color, and a list of vertices. The topmost vertex is always specified first in the list.

The dbinterp, xfrmlist and displist functions are written in assembly code appearing at Appendix A due to their critical roles in achieving real time performance. The displist module is small enough that its main loop can entirely reside in the TMS 34010's 256-byte instruction cache. (The TMS 34020's cache is twice as large.) The main loops of the dbinterp and xfrmlist modules are too large to fit entirely in cache, but the code for these functions has been carefully arranged to improve the likelihood that the instructions being executed remain cache-resident from one loop to the next.

2. Transforming Between Coordinate Systems. The transformation from world space to viewing space is based on the player's assumed position and orientation in the world. The moving object algorithm uses a total of 12 parameters to represent the player's position and orientation in world space, corresponding to the 12 coefficients of a 4-by-3 3-D transformation matrix. These parameters are the player's x, y and z coordinates in world space, and the x, y and z components of three orthogonal unit vectors, u, v and w, that describe the player's orientation relative to the world. The u vector points to the player's right, the v vector points downward relative to the player, and the w vector points in the player's forward direction. In other words, the u, v and w vectors are aligned with the x, y and z axes in the viewing coordinate system.

Strictly speaking, only two unit vectors are required to completely specify the player's orientation -- the third unit vector can always be calculated as the cross product of the first two, but at the cost of six multiplies. Maintaining all three unit vectors results in some conveniences in calculating the rotation matrix used in transforming graphics objects from world space to viewing space, as will be shown.

The transformation of a point from world coordinates (x,y,z) to viewing space coordinates (x',y',z') involves a translation followed by a rotation.

To visualize the two-step transformation process, think of the world x, y and z coordinate axes as pointing east, north, and up, respectively. Assume that initially the player is located at the world coordinate origin, facing up, with his right side facing east. In other words, the x, y and z axes of the world and viewing coordinate systems are aligned. Also assume that the u, v and w vectors emanate from a point located at coordinates (xt,yt,zt) in world space, and are at an arbitrary orientation represented by the following x, y and z components in world space:

$$x \begin{vmatrix} u \\ v \\ w \end{vmatrix} = \begin{vmatrix} Ux & Uy & Uz \\ Vx & Vy & Vz \\ Wx & Wy & Wz \end{vmatrix} \qquad (4)$$

The goal is to transform the u, v and w vectors so that they are aligned with the x, y and z axes of the viewing coordinate system. This transformation is the same one that will be used to transform 3-D objects from world to viewing coordinates.

The first step is to translate all objects in world space (including the three unit vectors) by (-xt,-yt,-zt). This translation places the u, v and w vectors at the viewing coordinate origin. (Following this step, the world origin no longer coincides with the viewing origin.)

Having translated all the objects, the second step is to rotate them. The rotation should leave the u, v and w vectors aligned with the x, y and z axes in the viewing coordinate system. The rotation matrix is on the right side of the transformation below, which is applied to the coordinates translated as described in the preceding paragraph:

$$[ x' \ y' \ z' ] = [ x-xt \ z-zt \ y-yt ] \begin{vmatrix} Ux & Vx & Wx \\ Uy & Vy & Wy \\ Uz & Vz & Wz \end{vmatrix} \qquad (5)$$

The nine rotation matrix coefficients above are simply the x, y and z components in world coordinate space of unit vectors u, v and w. Let's prove that this really works. If this is indeed the correct rotation matrix, it should leave the u, v and w vectors aligned with the x, y and z axes in the viewing coordinate system. This is easily demonstrated to be the case:

$$\begin{vmatrix} Ux & Uy & Uz \\ Vx & Vy & Vz \\ Wx & Wy & Wz \end{vmatrix} \begin{vmatrix} Ux & Vx & Wx \\ Uy & Vy & Wy \\ Uz & Vz & Wz \end{vmatrix} = \begin{vmatrix} 1 & 0 & 0 \\ 0 & 1 & 0 \\ 0 & 0 & 1 \end{vmatrix} \qquad (6)$$

Note that each 1 in the matrix at the right is the result of taking the dot product of a unit vector with itself, and each 0 results from taking the dot product of two orthogonal vectors.

The perspective projection of a point in viewing space onto the surface of the viewport is based on the proportions of similar triangles, and is described in both the Foley & van Dam and the Newman & Sproull texts. Assuming that the player (the eye) is positioned at a distance d from the screen, and given a point located at viewing coordinates (x,y,z), the point is projected onto the surface of the viewport at coordinates (x',y'), where x' = x* d/z and y' = y * d/z .

The player's orientation relative to the world coordinate system is changed by rotating the three orthogonal unit vectors, u, v and w.

The moving object algorithm calls the function "rotvec" contained in the source file "flysim.c" to rotate about the viewpoint. The rotations can either be relative to the world coordinates (e.g., rotate in a plane level to the ground), or relative to the viewing coordinates (yaw, pitch and roll).

The player can pan the scenery by rotating the three orthogonal unit vectors about a pivot vector that is parallel to the world z axis, and passes through the player's position. (In other words, the rotation is in a plane parallel with the ground.) Assume that the player's orientation relative to the world coordinate system is initially represented by the three unit vectors $u = (Ux, Uy, Uz)$, $v = (Vx, Vy, Vz)$ and $w = (Wx, Wy, Wz)$. The pan is accomplished by means of the following matrix calculation:

$$\begin{vmatrix} Ux' & Uy' \\ Vx' & Vy' \\ Wx' & Wy' \end{vmatrix} = \begin{vmatrix} Ux & Uy \\ Vx & Vy \\ Wx & Wy \end{vmatrix} \begin{vmatrix} \cos(t) & \sin(t) \\ -\sin(t) & \cos(t) \end{vmatrix} \qquad (7)$$

Positive angle t above corresponds to a pan to the left. Note that only the x and y components of the unit vectors are affected. The z components remain unchanged by the rotation. The moving object algorithm calls the uvturn function a library function to perform this type of rotation.

Another type of rotation allows the player to yaw, pitch or roll relative to his own frame of reference, regardless of how he may be oriented with respect to the world coordinate system. During this type of rotation, one of the three unit vectors (u, v or w) remains fixed in world space, and serves as the pivot vector about which the other two unit vectors rotate. The following six rotations are possible:

    1) yaw to left: rotate u toward w about pivot vector v
    2) yaw to right: rotate w toward u about pivot vector v
    3) pitch upwards: rotate v toward w about pivot vector u
    4) pitch downwards:rotate w toward v about pivot vector u
    5) roll to left: rotate u toward v about pivot vector w
    6) roll to right: rotate v toward u about pivot vector w

For example, the following matrix calculation performs the yaw to the left by rotating the u vector toward the w vector by angle t:

$$\begin{vmatrix} Ux' & Wx' \\ Uy' & Wy' \\ Uz' & Wz' \end{vmatrix} = \begin{vmatrix} Ux & Wx \\ Uy & Wy \\ Uz & Wz \end{vmatrix} \begin{vmatrix} \cos(t) & \sin(t) \\ -\sin(t) & \cos(t) \end{vmatrix} \qquad (8)$$

This type of rotation is performed by calling the uvturn function If the two vectors are orthogonal prior to the rotation, they remain orthogonal afterwards. If the rotation angle is negative, the player yaws to the right rather than to the left. The other five player-relative rotations are similar to the one above.

The moving object algorithm currently uses a simplistic model for player movements, but this model may be improved in the future. A more accurate model could be based on the player's movement characteristics or aerodynamics, calculating the yaw, pitch and roll movements based on physical forces. Once the yaw, pitch and roll angles are determined, the u, v and w vectors can be rotated by three calls to the rotvec function: yaw first, pitch second, and roll third.

The yaw, pitch and roll angles used to calculate the position of the horizon and the setting of the player's position sensing or flight instruments are specified relative to the world coordinate system. The sines and cosines of the yaw, pitch and roll angles can be calculated from the u, v and w unit vectors, expressed in terms of their x, y and z projections in world space. Calculating the yaw, pitch and roll angles themselves turns out to be unnecessary since we will need only the sine and cosine values corresponding to these angles.

The yaw (or heading) angle is specified relative to the world x axis; if the player is pointing in the +x direction, its yaw angle is 0 degrees. The convention used for the simulator is that a positive yaw angle corresponds to rotating u toward w (right wing toward nose). Let r represent the projection of unit vector w onto the world xy plane:

$$r = sqrt\ (Wx*Wx+Wy*Wy) \qquad\qquad (9)$$

The sine of the yaw angle is calculated as Wx/r, and the cosine as Wy/r.

The pitch angle is the angle between the unit vector w and the world xy plane. The convention used for the simulator is that a positive pitch angle corresponds to rotating v toward w (pulling the nose up). The sine of the pitch angle is Wz, and the cosine is r.

The roll (or bank) angle is the angle between the unit vector u and the world xy plane. The convention used for the simulator is that a positive roll angle corresponds to rotating u toward v (banking to the right). Let s represent the quantity s = sqrt (Uz*Uz+Vz*Vz) . The sine of the roll angle is calculated as -Uz/s, and the cosine as -Vz/s.

3. Drawing the Horizon. Assuming the player remains fairly close to the surface of the earth, the horizon can be modeled satisfactorily as being at infinity. In other words, the earth is assumed to be flat and infinite. Given that the features of the horizon are the same in any direction, the model need not take the player heading into account. Only the player's pitch and roll need to be considered in properly positioning the horizon. Note that the pitch angle represents the orientation of the nose with respect to the ground, and is not affected if the player is permitted to roll while this orientation is maintained.

As the player's orientation pitches up and down, the horizon should appear to move accordingly. Assuming zero roll for the moment, the level (height on the screen) of the horizon seen through the cockpit window depends solely on the pitch. The player's height or altitude is assumed to be zero. Because the horizon lies at infinity, any finite altitude the player may have can be neglected.

To take into account the effect of the roll angle, consider first a point at infinity on the z axis in the viewing coordinate system. This point will always lie at the same position on the screen--the center of the viewport, according to our conventions. Referring to the center of the viewport as the reference point, a positive pitch angle (nose up) places the reference point above the horizon (in the blue of the sky), and a negative pitch angle places it below the horizon (in the dirt).

Now imagine a normal vector drawn from the horizon line to the reference point. The intersection of this vector with the horizon occurs at a point to be referred to as the horizon point. As the roll angle is permitted to change, the horizon point appears to rotate about the reference point.

If the pitch is held constant while the roll angle changes, the horizon point races a circle about the reference pint. The angle the horizon makes with the player's horizontal is the negative of the player's roll angle with respect to the world. The radius of the circle is a function of the pitch angle alone. If the player's assumed distance from the screen is d, and the pitch angle is a, the radius r of the circle is calculated as r = d*tan(a) . (A negative r means that the reference point lies "in the dirt" rather than "in the blue".)

To summarize, the steps followed in constructing the horizon line are as follows:

(1) Calculate the distance r of the reference point (center of viewport) to the horizon point (nearest point on horizon) from pitch angle a, and the player's distance d from the screen:

$$r = d * \tan(a)$$

(2) Rotate the horizon point about the reference point by the negative of the roll angle.
(3) The horizon line passes through the horizon point, and is normal to the line from the reference point to the horizon point.

Given that the reference point lies at the center of the viewport, and that the horizon point lies outside the circle that encloses the viewport, the horizon line is not visible.

4. Interpreting the Database. The dbinterp function interprets a hierarchical database containing the 3-D scenery in world space. The database is organized as a binary tree whose terminal (or leaf) nodes are the individual objects to be drawn. The output form the dbinterp function is a list of polygons and dots to be transformed, clipped, and projected onto the screen. This function is designed to trivially reject 3-D objects which are not visible on the screen. To this end, the function performs clipping based on bounding spheres, and elimination of unnecessary detail from distant objects.

The two arguments are pointers rootnode and q. Argument rootnode points to the rootnode of the hierarchical 3-D database. Argument q points to the output array, in which the function stores a list of the objects in 3-D space that need to be transformed, projected, and drawn to the screen. The sequence in which objects appear in the output list determines the order in which they will be drawn.

Each iteration if the main loop in the dbinterp routine considers one node in the binary tree, beginning with the rootnode. Each node represents an atomic object (if terminal node) or composite object (if intermediate node). A composite object is composed of some number of atomic objects. An atomic object is composed of a number of polygons (typically composing a polyhedron) that can be drawn in the order in which they are listed n the terminal node structure. Only back face elimination is necessary for the polygons comprising the object to be drawn in the correct sequence (according to the Painter's Algorithm). The 3-D coordinates of each vertex in the object are specified relative to the center of the node. This allows the node to be translated in 3-D virtual world space without affecting the description of the object contained in the node.

The current moving object algorithm requires that a bounding sphere be specified for each node n the database. Included in the data structure for each node (terminal and intermediate) is the radius of the bounding sphere that encloses all objects contained int he node. The center of the sphere is assumed to coincide with the center coordinates of the node.

The left and right sons of an intermediate node represent the division of the group of objects comprising that node into two subgroups. By convention, if an intermediate node has only one descendant, that descendant is the left son; the pointer to the fight son is a null (0) pointer.

When an intermediate node has two sons, the more distant son (or rather, the objects contained in the son) is drawn first, after which the nearer son can be drawn. Each son is in turn a node which may also have two sons which are drawn in back-to-front order.

A node having two sons contains the description of a binary partitioning plane (BPP) that cleanly separates the two sons (and the objects they contain). The BPP is used to determine the order in which to draw the two sons, according to the Painter's Algorithm, If the viewpoint lies on the left son's side of the BPP, the right son is drawn first, and the left son second; otherwise, the left son is drawn first. The BPP is specified in terms of the A, B, C and D coefficients of its plane equation,

$$f(x,y,z) \; = \; Ax+By+Cz+D \qquad\qquad (10)$$

where the viewpoint is located at coordinates (x,y,z) relative to the center of the current node.

The dbinterp function divides the polygons in its output list into two categories: "near" and "far" polygons. The division into near and far polygons is actually based on size rather than distance. If the projection on the screen of the bounding sphere for a terminal node exceeds a certain threshold size, all the polygons comprising the object are treated as near polygons; otherwise, they are treated as far polygons.

Near polygons are be preclipped; that is, they are clipped to the viewport limits before being drawn. Far polygons, on the other hand, are postclipped; that is, they are clipped on a line-by-line basis as they are drawn. The division of polygons into near and far types are for the purpose of computational efficiency.

Postclipping is used for far (small) polygons. Because preclipping polygons involves some computational overhead, postclipping the smaller ones avoids this overhead, allowing the 340x0's built-in clipping hardware to automatically clip each horizontal fill line as it is drawn.

Near (large) polygons, however, are more efficiently dealt with by preclipping, which cuts off the portions of each polygon lying outside the viewport which would otherwise consume considerable time during the drawing phase.

A third category of object can be specified in the output list. If a node is so distant that the projection of its bounding sphere on the screen approaches the size of a pixel, it can be represented as a single dot in the output list. If a node can be rejected by any of the tests above, it requires no further processing. If another node is available for processing, that node is processed during the next iterating of the main loop of the dbinerp function. Otherwise, the output list is terminated, and the function is completed.

If a node cannot be rejected by the five tests above, a check is made to determine whether the node is terminal or intermediate.

In the case of an intermediate node, a check is made to determine whether the node has one or two sons. If the node has a single son, that son is processed during the next iteration of the main loop of the dbinterp function. If the node has two sons, the nearer son is pushed onto a stack for later processing, and the farther son is processed during the next iteration of the main loop. The data structure for an intermediate node contains pointers to its left and right sons, and the x, y and z displacements from its center to the centers of its sons. The four parameters pushed onto the stack to represent the near son are a pointer to the son's node data structure, and the x, y and z coordinates at the son's center.

5. <u>Transforming Objects.</u> The xfrmlist function transforms a list of 3-D objects into viewing space, clips them if necessary, and perspective projects them onto the screen. In the process, the objects are decomposed into their constituent polygons. Objects whose projections on the screen approach pixel size can be represented simply as dots.

The two arguments, p and q, are pointers to the start of the input and outputs lists, respectively, The input list (or transform list) specifies a number of 3-D objects to be transformed. The output list (or display list) specifies a number of polygons and dots ready to be drawn to the screen.

Each iteration of the main loop of the xfrmlist function processes a "near" object, a "far" object, or a dot from the input list. As explained in the description of the dbinerp function, objects composed of polygons are categorized as either "near" or "far", based on their approximate size as they appear on the screen.

Each entry in the input list for a near or far object contains the xyz coordinate values at the center of the object in viewing space, and also a pointer to the 3-D object model. Within the object model, the xyz coordinates of the object are specified relative to the center of the object in object space. The xfrmlist function transforms the object from object space to viewing space by first rotating it about is center, and then translating it to the specified center coordinates (xc,yc,zc) in viewing space.

The xfrmlist function is less than that required by near polygons. The portion of the xfrmlist routine that handles far polygons is small enough to fit into the 34010's cache. (The TMS34020's cache is twice as large.) Statistically, far polygons should significantly outnumber near polygons, and the likelihood of the far polygon code remaining in cache from one interaction to the next is high.

The xfrmlist function transforms each near polygon to a normalized viewing pyramid (Foley & van Dam refer to this as a "canonical clipping volume" in their text) before calling the polygon clipper function, clippgon.

The clip.object function first performs a back face test to determine whether the polygon can be rejected without further processing. If the polygon is forward facing, the function compares the polygon to the boundaries (clipping planes) of the viewing pyramid, and cuts off any portion of the polygon that lies outside the pyramid, and is not visible.

In the worst case, the polygon could violate all five clipping planes. The polygon would then be dipped in three passes through the list of verticles**. During the first pass, the clip.object function would clip the polygon to the "near" clipping plane. It would clip the polygon to the left and right planes during the second pass, and to the top and bottom planes during the third pass.

A final pass through the verte list is required for the clippgon onto the screen. The resulting polygon is output to the output list (or display list).

6. <u>Displaying The Scene.</u> The displist function (really two similar functions, displist color_color and displist_mono) draws a sequence of polygons and dots to the screen in the sequence in which they appear in the display list.

Each polygon in the display list must be convex, and is specified as a list of xy coordinate pairs representing the vertices of the polygon. The first xy coordinate pair in the list represents the position of the topmost vertex in the polygon; that is, the vertex having the minimum y value. The vertices are listed in clockwise order, assuming the convention that x coordinates on the screen increase from left to right, and y coordinates from top to bottom.

A "dot" is drawn to the screen as a single pixel.

The transform list is the list output from the dbinterp function, and input to the xfrmlist function. It specifies the 3-D objects to be transformed and perspective projected before being drawn to the screen.

The specification for each polygon or dot in the transform list begins on an even 32-bit boundary in memory, and the first item in each specification is a 16-bit function code indicating the type of graphics primitive.

Near and far polygons are designated in the transform list by function codes of 1 and 2, respectively. The transform list specification for a polygon is as follows:

TABLE 10

| field description | field size |
|---|---|
| function code (1 for near, 2 for far) | 16 bits |
| constant 0 | 16 |
| x center coordinate, xc | 32 |
| y center coordinate, yc | 32 |
| z center coordinate, zc | 32 |
| pointer p to 3-D object model | 32 |

18

Parameters xc, yc and zc are the object's center coordinates in viewing space. Each coordinate is represented as a 32-bit fixed-point number with 8 bits of fraction. (Call this the FIX8 format.) The last parameter is a 32-bit pointer to the 3-D object model. The object model specifies the vertices for all the polygons that make up the object. The xyz coordinates of the vertices are specified in object space relative to the center of the object.

A "dot" is a single pixel, and is designated in the transform list by a function code of 1. The transform list format specifying a dot is as follows:

TABLE 11

| field description | field size |
|---|---|
| function code (1 for dot) | 16 bits |
| dot color | 16 |
| x coordinate | 16 |
| y coordinate | 16 |

The second item in the specification is a 16-bit value specifying the dot color. The last two items are the x and y coordinates of the dot, specified as 16-bit integers. Note that these are the x and y coordinates of the dot on the screen; in other words they have been transformed and projected onto the screen before being placed into the transform list. These coordinate values will be copied by the xfrmlist function without change from the transform list to the display list.

The transform list is terminated by a function code of -1. The display list is the list output from the xfrmlist function, and input to the displist function. It specifies the polygons and dots to be drawn to the screen.

The specification for each polygon or dot in the display list begins on an even 32-bit boundary in memory, and the first item in each specification is an 8-bit function code indicating the type of graphics primitive to be drawn.

The function code for a polygon is 0. The display list format for a polygon is as follows:

TABLE 12

| field description | field size |
|---|---|
| function code (0 for polygon) | 8 bits |
| vertex count, n | 8 |
| polygon color | 16 |
| first x coordinate, x[0] | 16 |
| first y coordinate, y[0] | 16 |
| second x coordinate, x[1] | 16 |
| second y coordinate y[1] | 16 |
| last x coordinate, x[n-1] | 16 |
| last y coordinate, y[x-1] | 16 |

The second item in the specification is the number of vertices in the convex polygon. The third item is the polygon color. The remainder of the specification is an array of x and y coordinate pairs representing the positions of the vertices on the screen. The first xy coordinate pair specifies the position of the topmost vertex in the polygon, that is, the vertex having the minimum y value. The vertices are listed in clockwise order, assuming the convention that x coordinates on the screen increase from left to right, and y coordinates from top to bottom. Coordinates are specified as fixed point values with 2-bit fractions (Call this the FIX2 format.)

A "dot" is drawn as a single pixel, and is specified in the display list by a function code of 1. The display list format specifying a dot is as follows:

TABLE 13

| field description | field size |
|---|---|
| function code (1 for dot) | 8 bits |
| constant 0 | 8 |
| dot color | 16 |
| x coordinate | 16 |
| y coordinate | 16 |

The second item in the specification is a byte containing constant 0. The third item is the dot color. The last two items are the x and y coordinates of the dot. Coordinates are specified as integers.

The display list is terminated by a function code of -1.

As described above, the method used to solve the bidden surface problem involves organizing the 3-D database as a binary tree. Whenever an intermediate node in the tree branches to two descendant nodes, a binary partitioning plane (BPP) is specified that separates the two descendants. The database interpreter evaluates the BPP equation determine on which side of the BPP the viewpoint lies. This determines in which order the two descendants are drawn to correctly implement the Painter's Algorithm.

Exemplary Applications of The Preferred Embodiment

A. Flight Simulator Application. The following discussion describes running the moving object algorithm and 3-D binary partitioned database of the preferred embodiment. The following files for which source code appears in Appendix A implement a demonstration of these concepts that runs on prototype hardware consisting of a TMS 34010 graphics processor in conjunction with a DS5000 microcontroller. The code described here runs on the graphics processor.

The code is complied using the file makefile. The file lc.cmd links the compiled code and downloads the executable module from a PC to the TMS 34010 processor. The top-level control of the program is embodied in the file flip.c. This program uses a world database represented in world.asm, and implements a version of the maze game as described below.

The files containing the major portion of the code that runs the maze simulation are:

```
flip.c       - top-level control, initialization
interp.c     - interpret input commands from the user
move,c       - update moving objects in the world database
render.c     - render the scene for display
```

The major extensions to the original code are found primarily in the following files:

```
flip.c       - top-level control, initialization
move.c       - moving object extensions
scene.c      - moving object extension
scene0.c     - moving object extension
scene1.c     - moving object extension
bbox.c       - bounding box collision detection
bullet.c     - moving object extensions
```

B. "GRACE", a Maze Game FIGUREs 19 and 20 illustrate an example of a multi-player game application that the virtual reality system of the preferred embodiment may use. The game is entitled "GRACE" and has as its object to compete against other players seeking to be the first in successfully navigating a maze 230 shown in FIGURE 19. Maze 230 is filled with pitfalls such as moving obelisks 232, mashers 234 and spinning doors 236. Obelisks 232 move through maze 230 randomly and run over a player, costing a player one "life." In the example, a player has 9 lives. Mashers 234 are stationary, but bounce up and down in the path of maze 230. Players must pass underneath masher 234 without getting squashed. Squashing a player costs him one "life." Spinning doors 236 are stationary, but spin around. One side is safe. If you pass through the safe side, nothing happens. The other side is dark. Passing through the dark side causes the door to transport the player into a random place in maze 230.

Each player begins with a certain number of points or lives, e.g., nine lives in the preferred embodiment. A player loses a point every time obelisk 232 runs down the player, a masher 234 catches the player, or the player fails to maneuver through any other pitfalls that may be envisioned for this easily extensible game. If there is no ceiling in a certain part of maze 230, the player may attempt to jump up in the air to catch a glimpse of the top of the maze. Players may also drop "electronic bread-crumbs" along the way through the maze. Other players, however, may move any player's markers in an attempt to foil the opponent's efforts.

FIGURE 19 illustrates the 3-D view of maze 230 that a player would see through helmet 28. While placing several mazes on a single ROM card, the players may select a favorite maze or let the game mechanics or built-in functions, choose one at random. Multi-level mazes will add another dimension (both in space and difficulty) to the game. In FIGURE 21, there is shown where two players have left marking pylons 240 and 242 within hallway 244 of maze 230. Hallway 244 has walls 246, 248 and 250 and ceiling 252. On floor 254 of hallway 244, the player travels and they turn the corner to continue down a maze. As the player continues down the maze, the view of maze 230 changes to reflect the position of the player according to the database of the game.

The GRACE game is just one simple application of the preferred embodiment. In addition to entertainment/game applications, the virtual reality system of the preferred embodiment has uses in many other fields. In education, for example, an architectural student may enter a virtual world model of a building he has designed. Likewise, a medical student may "tour" a model of the brain or a chemist may walk around and inside a 3-D model of a complex molecule. With the multi-player virtual reality system of the preferred embodiment, both a student and a teacher may be in the same virtual reality world as the same time. For example, a travel agent may provide a potential customer a guided tour of a model of a resort location such as Disney World, for example, to assist the customer in planning a vacation, Other applications using the low-cost virtual realty system of the preferred embodiment abound. These applications will be clearly within the scope of the present invention.

Preferred Embodiment Features

Various important features of the preferred embodiment are summarized below.

A virtual reality system wherein an operator perceives being in a virtual reality world of virtual reality images is shown including a display circuit for displaying image data as a virtual reality image, memory for containing the image data, a helmet device for attaching to the operator where the helmet device contains a display screen and is associated to generate image data on the display screen in response to operator movement of the helmet device, and a microprocessor associated with the memory for extracting the image data from the memory and from the image data controlling the display circuit to change the virtual reality image as though the operator were within and associated with the virtual reality image. The display circuit would include the display screen. Such system may further include a chassis for containing the memory, the microprocessor, and a predetermined portion of the display circuit. It may further include a game cartridge including circuitry to associate an application program and data for constructing a virtual reality world with the display circuitry, memory, and microprocessor. Furthermore, the chassis may be configured to permit inserting the game cartridge into the chassis, thereby connecting the game cartridge circuitry to the memory, microprocessor, and predetermined portion of the display circuit.

A method for producing a virtual reality world of virtual reality images using a virtual reality system, wherein an operator perceives being in the virtual reality world is shown, including the steps of displaying image data as a virtual reality image on a display screen associated with a display circuit, containing the image data within the memory, attaching to the operator a helmet device containing the display screen, generating image data on the display screen in response to operator movement of the helmet device, extracting the image data from the memory, and controlling the display circuit to change the virtual reality image as though the operator where within and associated with the virtual reality image. Such method may also include the step of inserting control signals to the image data input circuitry using a power hand assembly, or using a joy-stick device. Moreover the method may include the step of containing the memory, microprocessor, and a predetermined portion of the display circuit within a system chassis. The method may further include the steps of containing an application program and data for constructing a virtual reality world within a game cartridge circuitry to associate with the display circuitry, memory, and the microprocessor. The method may also include the step of inserting such game cartridge into a pre-specified opening within the chassis, thereby connecting the game cartridge circuitry to the memory, microprocessor, and the predetermined portion of the display circuit.

A method of modeling the relative position and movement of objects in a virtual reality environment is shown, including the steps of representing graphically a first and a second object in a virtual reality environment on a graphical display, determining a first partitioning plane between the first and second objects, determining a second partitioning plane between the first and second objects in response to either of the first or second objects moving across the first partitioning plane, and representing graphically on the graphical display movement of the first and second objects within the virtual reality environment by selectively obscuring the first and second objects according to the relative position of the first and second objects in the virtual reality environment to the predetermined observation point. Such method may also include the step of determining relative motion of objects from a predetermined set of viewing coordinates. In this case, such step of determining relative motion of objects may be used for measuring the yaw, the pitch, and/or the roll of a moving object.

A system for modeling the relative position and movement of objects in a virtual reality environment is shown, including a graphical display for representing graphically a first and a second object within the virtual reality environment, the representation selectively obscuring the first and second objects according to the relative position of the first and second objects to the predetermined observation point in the virtual reality environment, circuitry for determining a first partitioning plane between the first and second objects, and circuitry for determining a second partitioning plane between the first and second object in response to either of the first or second object moving across the first partitioning plane. Such system may further include circuitry for permitting a plurality of viewers to perceive being in the virtual reality environment and viewing from within the environment the relative position and movement of each other in the virtual reality environment, The system may also include a single master database, containing data describing the virtual reality environment and circuitry for updating the master database with data describing the relative movement of the objects. In connection with the system including circuitry for permitting a plurality of viewers to participate, there may also include circuitry for generating a terminal node associated with each of the objects, an intermediate node associated with the second partitioning plane, and a root node associated with the first partitioning plane. In such case, the terminal node and intermediate node generation circuitry may include circuitry for forming an intermediate node in response to at least one object crossing the first partition plane and associating the intermediate node with the second partitioning plane. Furthermore, the system may include circuitry for determining relative motion of objects from a rotating point of view in a single plane, or may include circuitry for determining relative motion of objects from a predetermined set of viewing coordinates. In the latter case, the system may also include circuitry for determining the relative motion of objects for measuring the yaw, the pitch, and/or the roll of a moving object. The system may also include circuitry for determining the hidden surface removal effect, a relative motion between objects and/or circuitry for determining clipping based on distant objects during relative motion between objects. Additionally, the circuit may also include circuitry for determining the elimination of distant objects for performing perspective approximations.

Although the invention has been described with reference to the above specified embodiments, this description is not meant to be construed in a limiting sense. Various modifications of the disclosed embodiment, as well as alternative embodiments of the invention will become apparent to person skilled in the art upon reference to the above description. It is therefore contemplated that the appended claims will cover such modifications that fall within the true scope of the invention.

```
Nov 14 09:31 1991  flip.c Page 1
  (

/*            (c) Copyright 1991, Texas Instruments Incorporated
 *-----------------------------------------------------------------
 *
 *
 *                        3D VRSys software
 *
 *
 *
 *
 *
 *
 *
 *
 */
#include "vupoint.h"        /* VIEWPOINT orientation and position */
#include "move.h"
#include "define.h"         /* define misc. constants */
#include "glove.h"                  /* GLOVE data structure and PG_* definitions.


extern double sqrt();

/* Other global parameters defined in this module */
VIEWPOINT view;          /* viewpoint orientation and position */

/* Define if input from keyboard or glove: 1-keybd, 0-glove : CAC */
#define KEYBD_INPUT 1




/*-----------------------------------------------------------------
 *       Parameters used by multiple functions within this module
 *-----------------------------------------------------------------
 */

int testval0 = 0 ;
int testval1 = 0 ;
int testval2 = 0 ;

/*-----------------------------------------------------------------
 *
 *                        main program
 *
 *-----------------------------------------------------------------
 */
main()

        long trigvals[6];               /* cos and sin of yaw, pitch, roll angles

        int cmd ;
        int collision=0 ;
        int countframes=0 ;

#if !KEYBD_INPUT
        GLOVE glove ;                   /* data structure to hold glove data: CAC */
#endif
```

APPENDIX A

```
Nov 14 09:31 1991   flip.c Page 2


        /*
         *  Forward declarations..
         */
        void printsd() ;                        /* in file print.c   */
        void init_command() ;           /* in file command.c */
        int get_command() ;             /* in file command.c */
        int get_glove() ;               /* in file command.c */
        int cmd_interpret() ;           /* in file interp.c  */
        void init_graphics() ;          /* in file render.c  */
        void render() ;                 /* in file render.c  */
        void init_scenes() ;            /* in file scene.c   */


        /*
         *  Initialization..
         */
        init_system(&view) ;
        init_graphics(trigvals) ;
        init_command() ;
        init_scenes();


        /*
         *  Infinite loop:
         *    perform the following steps:
         *      - read input from input device(s)
         *      - interpret input (one or more of following)
         *          - change viewpoint and orientation
         *          - modify database
         *      - move autonomous objects
         *          - modify database
         *      - render scene
         */
        while(1) {


                /*
                 *  Read in a command from the appropriate input
                 *   device.
                 *  FILE: command.c
                 */
#if KEYBD_INPUT
                cmd = get_command() ;
#else
                /*
                 *  ** NOTE **
                 *   The glove routines HAVE NOT BEEN TESTED with
                 *   this version of the software!  (But I don't
                 *   see any reason they shouldn't work..)
                 */
                cmd = get_glove(&glove) ;
#endif


                /*
                 *  Using the inputted command(s), modify the yaw, pitch,
                 *   and roll angles.
                 *  Using the new yaw, pitch, roll, and dxy values,
                 *   change the physical location in world-space
```

APPENDIX A

24

```
Nov 14 09:31 1991  flip.c Page 3

                  *    and the orientation of the view (eye) vector.
                  *  The trigvals array will be filled out.
                  *  FILE: interp.c
                  */
                collision - cmd_interpret(cmd, &view, trigvals) ;

                /*
                *  Update moving objects in the database.
                *  FILES: scene.c, move.c
                */
                move_scenes() ;

                /*-------------------------------------------------
                        Everything above (input, interpretation, database
                        modification) should run on the main processor.

                        Graphics environment initialization and the render
                        step below should run on the individual player
                        processors (i.e., the helmet cards), using each
                        player's unique viewpoint.
                --------------------------------------------------------*/

                /*
                *  Render the objects in the database according to the
                *   current view.
                *  FILE: render.c
                */
                render(trigvals, collision) ;

                testval0 - (++countframes)/5; /* approx. seconds of time */

                if (countframes -- NUMFRAMES) countframes=0 ;*/

                /* Lastly, if we are on frame 1, then initialize
                    the random number generator with a seed dependent
                    on some semi-random number, like head position. */

                if (countframes -- 1)
                        srand(view.xyz[0] + view.u[0] + view.u[1]);
        }



        *------------------------------------------------------------------
        *
        *                        initialization
        *
        *------------------------------------------------------------------
        */
        it_system(viewp)
                VIEWPOINT *viewp ;

                extern long shift ;

                /* Initialize position coordinates and air speed. */
                viewp->xyz[0] - -440 << 8;  /*((1 << shift) - 400) << 8 ;  starting x co
                viewp->xyz[1] - 227 << 8; /*  (1 << shift) + 400) << 8 ; starting y coor
```

APPENDIX A

```
Nov 14 09:31 1991   flip.c Page 4

        viewp->xyz[2] = -16 << 8 ;
        viewp->dxyz[0] = 0 ;
        viewp->dxyz[1] = 0 ;
        viewp->dxyz[2] = 0 ;

}


/*---------------------------------------------------------
 *
 *                 get viewpoint orientation parameters
 *
 *---------------------------------------------------------
 */

view_params(vupt, outparams)
        VIEWPOINT *vupt;     /* unit vectors representing viewpoint */
        long *outparams;     /* yaw, pitch and roll cosines and sines */
{
        double s, t;
        long r, u0, u1, u2, v2, w2;

        u0 = vupt->w[0] >> 15;
        u1 = vupt->w[1] >> 15;
        u2 = vupt->w[2] >> 15;
        v2 = vupt->u[2] >> 15;
        w2 = vupt->v[2] >> 15;

        s = u0;
        t = u1;
        r = sqrt(s * s + t * t);
        if (r > 128) {
                /* Format:  32-bit fixed-point with 30-bit fraction */
                *outparams++ = (u0 << 15) / r << 15;     /*   cos(yaw)   */
                *outparams++ = (u1 << 15) / r << 15;     /*   sin(yaw)   */
                *outparams++ = r              << 15;     /*   cos(pitch) */
                *outparams++ = u2             << 15;     /*   sin(pitch) */
        }
        s = w2;
        t = v2;
        r = sqrt(s * s + t * t);
        if (r > 128) {
                *outparams++ = (-w2 << 15) / r << 15;     /*   cos(roll)  */
                *outparams++ = (-v2 << 15) / r << 15;     /*   sin(roll)  */
        }

}
```

APPENDIX A

26

```
Nov 14 09:31 1991   makefile Page 1


displist.obj: displist.asm
   gspa -l displist

xfrmlist.obj: xfrmlist.asm
   gspa -l xfrmlist

flip.obj: flip.c
        gspc flip

print.obj: print.c
        gspc print

command.obj: command.c
        gspc command

glove.obj: glove.c
        gspc glove

command2.obj: command2.c
        gspc command2

interp.obj: interp.c
        gspc interp

interp2.obj: interp2.c
        gspc interp2

render.obj: render.c
        gspc render

scene.obj: scene.c
        gspc scene

scene0.obj: scene0.c
        gspc scene0

scenel.obj: scenel.c
        gspc scenel

bullet.obj: bullet.c
        gspc bullet

xform.obj: xform.c
        gspc xform

bbox.obj: bbox.c
        gspc bbox

move.obj: move.c move.h
        gspc move

world.obj: world.asm nodes.asm objects.asm thinobj.asm maze.asm \
        maze.i maze.ii maze.iii maze.iv
        gspa world
```

APPENDIX A

Nov14 09:31 1991    lc.bat Page 1

```
gsplnk -c -m tl.map -o tl.out tl.obj lc.cmd
copy tl.out b:\
```

APPENDIX A

28

```
NOV 14 09:31 1991   lc.cmd Page 1

print.obj
command.obj
glove.obj
interp.obj
render.obj
scene.obj
scene0.obj
scene1.obj
bullet.obj
xform.obj
bbox.obj
move.obj
world.obj
init_vid.obj

xfrmlist.obj
displist.obj

fly3d.lib
consumer.lib
memory.obj
\flippy\gsplib\grafix.lib
\flippy\gsplib\text.lib
\flippy\gsplib\math.lib
\flippy\gsplib\vuport.lib
\flippy\gsplib\globals.obj
\flippy\gsptools\rts.lib
\flippy\gsptools\flib.lib
MEMORY
{
    program: origin = 0xFFD00000 length = 0x300000
}
```

APPENDIX A

```
Nov '4 09:32 1991  world.asm Page 1




*
*
*
*                  SCENERY DATABASE FOR 3D FLY-THROUGH DEMO
*
*.
*
*
*

* Declare global variables defined in this module.
            .globl     _rootnode           ;
            .globl     _map_palet          ;16 colors in palette
       .globl   _testpal
            .globl   _cacpal
       .globl   _vegaspal
            .globl     _earthcolor         ;earth color for horizon
            .globl     _skycolor           ;sky color for horizon
            .globl     _suncolor           ;color of sun in sky
            .globl     _shift
            .globl     _redcube
            .globl     _bluecube
            .globl     _bullet
            .globl     _explosion
            .globl     _stobj
            .globl     _pyramid
            .globl     _pyrnode
            .global    _pyrnode2
            .globl     _emptynode
            .globl     _fullroof
            .globl     _halfroof
            .globl     _quadroof
            .globl     _roof16th
            .globl     _rooftip

    Identifiers for leaf (terminal) and nonleaf (intermediate) nodes
    SLEAF  .set      (7<<5)               ;leaf node
    OTLEAF .set      0                    ;nonleaf node

    Define log2 scaling factors for database coordinates.
    0         .set     0                      ;
    1         .set     1                      ;
    2         .set     2                      ;
    3         .set     3                      ;
    4         .set     4                      ;
    5         .set     5                      ;
    6         .set     6                      ;
    7         .set     7                      ;
    8         .set     8                      ;
    9         .set     9                      ;

    HFT    .set    9
```

APPENDIX A

```
Nov 14 09:32 1991   world.asm Page 2


PLANEEW .set        00001h
PLANENS .set        00010h
PLANEUD .set       ·00100h


; Define bounding box test mode parameters.
POSPAD  .set        (2<<12)                 ;pad bd box by positive amount
NEGPAD  .set        (3<<12)                 ;pad bd box by negative amount
INBOX   .set        (2<<14)                 ;return status if INside bd box
OUTBOX  .set        (3<<14)                 ;return status if OUTside bd box


; Define size of terrain features.
HW      .set        2                       ;half of road width
VL      .set        2                       ;overlap where road sections meet


* Define drawcode control fields.
NIL     .set        0                       ;nil pointer value
EOD     .set        0                       ;end-of-data terminator code


* Define 16 colors in scenery palette.
EARTHGREEN .set     0                       ;earth color
SKYBLUE .set        01111h                  ;sky color
SUNYELLOW .set      02222h                  ;sun color
RED1    .set        03333h                  ;light red
RED2    .set        04444h                  ;
RED3    .set        05555h                  ;dark red
BLUGRN1 .set        06666h                  ;light blue-green
BLUGRN2 .set        07777h                  ;dark blue-green
BLACK   .set        08888h                  ;beige
GRAY6   .set        09999h                  ;
BROWN3  .set        0AAAAh                  ;dark brown
GRAY1   .set        0BBBBh                  ;light gray
GRAY2   .set        0CCCCh                  ;
GRAY3   .set        0DDDDh                  ;
GRAY4   .set        0EEEEh                  ;
GRAY5   .set        0FFFFh                  ;dark gray


* Define 16 colors
INVISIBLE           .set        0FFFh
COL0    .set        00000h
COL1    .set        01111h
COL2    .set        02222h
COL3    .set        03333h
COL4    .set        04444h
COL5    .set        05555h
COL6    .set        06666h
COL7    .set        07777h
COL8    .set        08888h
COL9    .set        09999h
COLA    .set        0AAAAh
COLB    .set        0BBBBh
COLC    .set        0CCCCh
COLD    .set        0DDDDh
COLE    .set        0EEEEh
COLF    .set        0FFFFh

*------------------------------------------------------------------------
```

APPENDIX A

```
Nov 14 09:32 1991  world.asm Page 3

*
*   Define global variables
*
*------------------------------------------------------------------

_rootnode       .long   NODE0                   ;root node of 3D object tree
_shift          .long   SHIFT
_earthcolor     .word   COLB
_skycolor       .word   COLA
_suncolor       .word   COLC
_redcube                .long   REDCUBE
_bluecube               .long   BLUECUBE
_bullet                 .long   BULLET
_explosion              .long   EXPLOSION
_stobj                  .long   STOBJ
_pyramid                .long   PYRAMID
_pyrnode                .long   T1_COL59
_pyrnode2               .long   T1_COL9C
_emptynode      .long   EMPTY
_fullroof       .long   FULLROOF
_halfroof       .long   HALFROOF
_quadroof       .long   QUADROOF
_roof16th       .long   ROOF16TH


*------------------------------------------------------------------
*
*
*           Define 16 colors in color palette
*
*------------------------------------------------------------------
_map_palet:
        .word   03640h                  ;EARTH GREEN
        .word   0F640h                  ;SKY BLUE
        .word   04DF0h                  ;SUN YELLOW
        .word   000F0h                  ;RED1
        .word   000A0h                  ;RED2
        .word   00050h                  ;RED3
        .word   06940h                  ;BLUGRN1
        .word   05820h                  ;BLUGRN2

        .word   00000h                  ;BLACK
        .word   03330h                  ;GRAY6
        .word   03570h                  ;BROWN3
        .word   08880h                  ;GRAY1
        .word   07770h                  ;GRAY2
        .word   06660h                  ;GRAY3
        .word   05550h                  ;GRAY4
        .word   04440h                  ;GRAY5


_vegaspal:
    .word   00000h,0F000h,000F0h,0F0C0h,09050h,09A00h,07FF0h,0FFF0h
    .word   0EE00h,08880h,07AF0h,04940h,0F960h,0ACF0h,010A0h,0DEE0h

_testpal:
    .word   00000h,0F000h,000F0h,0F0C0h,09050h,09A00h,07FF0h,0FFF0h
    .word   0EE00h,08880h,07AF0h,04940h,0F960h,0ACF0h,010A0h,0DEE0h
```

APPENDIX A

```
Nov 14 09:32 1991  world.asm Page 4

_cacpal:
        .word  00000h,04440h,06660h,08880h,0FFF0h,00040h,000A0h,000F0h
        .word  06000h,0F000h,0F640h,03640h,04DF0h,07AF0h,00FF0h,09050h

*-----------------------------------------------------------------------
*
*-----------------------------------------------------------------------


NODE0:

*---- bounding sphere radius and log2(scale factor)
        .byte    127,15
*---- color of node when it is far away and appears as a single dot
        .word    EARTHGREEN
*---- left son:  pointer and xyz displacements from father's centroid
        .long    CEILING
        .byte    -28,28,0,0
*---- right son:  pointer and xyz displacements from father's centroid
        .long    T1_DIV1
        .byte    0,0,-16,0
*---- coefficients of equation of plane separating left and right sons
        .word    PLANEUD


*-----------------------------------------------------------------------
*
*-----------------------------------------------------------------------


CEILING:
        .byte 15,6
        .word EARTHGREEN
        .long EMPTY ;HALFROOF
        .byte 0,0,1,0
        .long FULLROOF ;HALFROOF
        .byte 0,0,0,0
        .word PLANENS

NODE1:

*---- bounding sphere radius and log2(scale factor)
        .byte    127,1
*---- color of node when it is far away and appears as a single dot
        .word    EARTHGREEN
*---- left son:  pointer and xyz displacements from father's centroid
        .long    EMPTY
        .byte    0,10,0,0
*---- right son:  pointer and xyz displacements from father's centroid
        .long    EMPTY
        .byte    0,-10,0,0
*---- coefficients of equation of plane separating left and right sons
        .word    PLANEEW


*-----------------------------------------------------------------------
```

APPENDIX A

```
Nov 14 09:32 1991  world.asm Page 5

        .include "thinobj.asm"
        .include "maze.asm"
*-----------------------------------------------------------
```

APPENDIX A

```
Nov 14 09:32 1991   objects.asm Page 1
```

```
*----------------------------------------------------------------
*        Graphics Object Model:  Empty node
*----------------------------------------------------------------


EMPTY:
*----- size of bounding sphere in object space
        .byte    0,0|ISLEAF          ;radius R of bounding sphere

*----- color of object at maximum distance at which it is visible
        .word    0                   ;dot color

*----- word displacement to bounding box parameters for object
        .word    NIL                 ;word displacement

*----- number of xyz-coordinate triples used to describe object
        .word    0                   ;no. of xyz coordinate triples

*----- signed 8-bit xyz object coordinates relative to centroid

        .word    EOD                 ;end of object model data




*----------------------------------------------------------------
*        Graphics Object Model:  Cube
*----------------------------------------------------------------


REDCUBE:

*----- size of bounding sphere in object space
        .byte    28,F0|ISLEAF        ;radius R of bounding sphere

*----- color of object at maximum distance at which it is visible
        .word    GRAY3               ;dot color

*----- word displacement to bounding box parameters for object
        .word    (REDCUBEBB-$)/16            ;word displacement

*----- number of xyz-coordinate triples used to describe object
        .word    8                   ;no. of xyz coordinate triples

*----- signed 8-bit xyz object coordinates relative to centroid
        .byte    -16,-16,-16,F0      ;0 : LLB
        .byte    -16,16,-16,F0       ;1 : ULB
        .byte    16,16,-16,F0        ;2 : URB
        .byte    16,-16,-16,F0       ;3 : LRB
        .byte    -16,-16,16,F0       ;4 : LLT
        .byte    -16,16,16,F0        ;5 : ULT
        .byte    16,16,16,F0         ;6 : URT
        .byte    16,-16,16,F0        ;7 : LRT

*----- face 0 of object                 South side
```

APPENDIX A

```
NOV14 09:32 1991   objects.asm Page 2

        .word    4                      ;drawing primitive code
        .word    RED3                   ;face color
        .word    0,4,7,3                ;vertex list

*—— face 1 of object                    North side
        .word    4                     ;drawing primitive code
        .word    RED3                  ;face color
        .word    2,6,5,1                ;vertex list

*—— face 2 of object                    West side
        .word    4                     ;drawing primitive code
        .word    RED2                  ;face color
        .word    1,5,4,0                ;vertex list

*—— face 3 of object                    East side
        .word    4                     ;drawing primitive code
        .word    RED2                  ;face color
        .word    3,7,6,2                ;vertex list

*—— face 4 of object                    Bottom
        .word    4                     ;drawing primitive code
        .word    RED1                  ;face color
        .word    0,3,2,1                ;vertex list

*—— face 5 of object                    Top
        .word    4                     ;drawing primitive code
        .word    RED1                  ;face color
        .word    4,5,6,7                ;vertex list

        .word    EOD                   ;end of object model data

REDCUBEBB:
        .word    INBOX | POSPAD, 3
        .byte    -16,-16,-16,F0
        .byte    16,16,16,F0

        .word    EOD


*————————————————————————————————————————————————
*       Graphics Object Model:   Cube
*————————————————————————————————————————————————


BLUECUBE:

*—— size of bounding sphere in object space
        .byte    28,F0|ISLEAF          ;radius R of bounding sphere

*—— color of object at maximum distance at which it is visible
        .word    GRAY3                 ;dot color

*—— word displacement to bounding box parameters for object
        .word    (BLUECUBEBB-$)/16             ;word displacement

*—— number of xyz-coordinate triples used to describe object
        .word    8                     ;no. of xyz coordinate triples
```

APPENDIX A

```
;--- signed 8-bit xyz object coordinates relative to centroid
        .byte   -16,-16,-16,F0          ;0 : LLB
        .byte   -16,16,-16,F0           ;1 : ULB
        .byte   16,16,-16,F0            ;2 : URB
        .byte   16,-16,-16,F0           ;3 : LRB
        .byte   -16,-16,16,F0           ;4 : LLT
        .byte   -16,16,16,F0            ;5 : ULT
        .byte   16,16,16,F0             ;6 : URT
        .byte   16,-16,16,F0            ;7 : LRT

;--- face 0 of object                    South side
        .word   4                      ;drawing primitive code
        .word   BLACK                  ;face color
        .word   0,4,7,3                ;vertex list

;--- face 1 of object                    North side
        .word   4                      ;drawing primitive code
        .word   BLACK                  ;face color
        .word   2,6,5,1                ;vertex list

;--- face 2 of object                    West side
        .word   4                      ;drawing primitive code
        .word   BLUGRN2                ;face color
        .word   1,5,4,0                ;vertex list

;--- face 3 of object                    East side
        .word   4                      ;drawing primitive code
        .word   BLUGRN2                ;face color
        .word   3,7,6,2                ;vertex list

;--- face 4 of object                    Bottom
        .word   4                      ;drawing primitive code
        .word   BLUGRN1                ;face color
        .word   0,3,2,1                ;vertex list

;--- face 5 of object                    Top
        .word   4                      ;drawing primitive code
        .word   BLUGRN1                ;face color
        .word   4,5,6,7                ;vertex list

        .word   EOD                    ;end of object model data
UBCUBEBB:
        .word   INBOX | POSPAD, 3
        .byte   -16,-16,-16,F0
        .byte   16,16,16,F0

        .word   EOD
```

---

Graphics Object Model:  Bullet

---

LET:

APPENDIX A

```
14 09:32 1991   objects.asm  Page 4


*---- size of bounding sphere in object space
        .byte    28,F0|ISLEAF         ;radius R of bounding sphere

*---- color of object at maximum distance at which it is visible
        .word    GRAY3               ;dot color

*---- word displacement to bounding box parameters for object
        .word    (BULLETBB-$)/16             ;word displacement

*---- number of xyz-coordinate triples used to describe object
        .word    8                   ;no. of xyz coordinate triples

*---- signed 8-bit xyz object coordinates relative to centroid
        .byte    -1,-1,-1,F0         ;0 : LLB
        .byte    -1,1,-1,F0                       ;1 : ULB
        .byte    1,1,-1,F0                        ;2 : URB
        .byte    1,-1,-1,F0                       ;3 : LRB
        .byte    -1,-1,1,F0                       ;4 : LLT
        .byte    -1,1,1,F0                        ;5 : ULT
        .byte    1,1,1,F0                         ;6 : URT
        .byte    1,-1,1,F0                        ;7 : LRT

*---- face 0 of object                    South side
        .word    4                   ;drawing primitive code
        .word    BLACK               ;face color
        .word    0,4,7,3             ;vertex list

*---- face 1 of object                    North side
        .word    4                   ;drawing primitive code
        .word    BLACK               ;face color
        .word    2,6,5,1             ;vertex list

*---- face 2 of object                    West side
        .word    4                   ;drawing primitive code
        .word    BLUGRN2             ;face color
        .word    1,5,4,0             ;vertex list

*---- face 3 of object                    East side
        .word    4                   ;drawing primitive code
        .word    BLUGRN2             ;face color
        .word    3,7,6,2             ;vertex list

*---- face 4 of object                    Bottom
        .word    4                   ;drawing primitive code
        .word    BLUGRN1             ;face color
        .word    0,3,2,1             ;vertex list

*---- face 5 of object                    Top
        .word    4                   ;drawing primitive code
        .word    BLUGRN1             ;face color
        .word    4,5,6,7             ;vertex list

        .word    EOD                 ;end of object model data

BULLETBB:
```

APPENDIX A

```
14 09:32 1991  objects.asm Page 5

        .word   INBOX | POSPAD, 4
        .byte   -1,-1,-1,F0
        .byte   1,1,1,F0

        .word   EOD

*------------------------------------------------
*   1 x 1
*------------------------------------------------


C1X1:

*---- size of bounding sphere in object space
        .byte   64,F0|ISLEAF        ;radius R of bounding sphere

*---- color of object at maximum distance at which it is visible    .
        .word   BLUGRN1                 ;dot color

*---- word displacement to bounding box parameters for object
        .word   (CBB1X1-$)/16       ;word displacement

*---- number of xyz-coordinate triples used to describe object
        .word   8                       ;no. of xyz coordinate triples

*---- signed 8-bit xyz object coordinates relative to centroid
        .byte   -32,-32,-32,F0  ;0 : LLB
        .byte   -32,32,-32,F0   ;1 : ULB
        .byte   32,32,-32,F0    ;2 : URB
        .byte   32,-32,-32,F0   ;3 : LRB
        .byte   -32,-32,32,F0   ;4 : LLT
        .byte   -32,32,32,F0    ;5 : ULT
        .byte   32,32,32,F0             ;6 : URT
        .byte   32,-32,32,F0    ;7 : LRT

*---- face 0 of object               South side
        .word   4               ;drawing primitive code
        .word   GRAY3           ;face color
        .word   0,4,7,3         ;vertex list

'---- face 1 of object               North side
        .word   4               ;drawing primitive code
        .word   GRAY3           ;face color
        .word   2,6,5,1         ;vertex list

---- face 2 of object                West side
        .word   4               ;drawing primitive code
        .word   GRAY2           ;face color
        .word   1,5,4,0         ;vertex list

---- face 3 of object                East side
        .word   4               ;drawing primitive code
        .word   GRAY2           ;face color
        .word   3,7,6,2         ;vertex list

---- face 4 of object                Bottom
```

APPENDIX A

```
Nov 14 09:32 1991   objects.asm Page 6


        .word    4                      ;drawing primitive code
        .word    GRAY1                  ;face color
        .word    0,3,2,1                ;vertex list

*---- face 5 of object                  Top
        .word    4                      ;drawing primitive code
        .word    GRAY1                  ;face color
        .word    4,5,6,7                ;vertex list

        .word    EOD                    ;end of object model data

CBB1X1:
        .word    INBOX | POSPAD, 2
        .byte    -32,-32,-32,F0
        .byte    32,32,32,F0

        .word    EOD


*------------------------------------------------------------
*    1 x 1
*------------------------------------------------------------


P1X1:

*---- size of bounding sphere in object space
        .byte    64,F0|ISLEAF           ;radius R of bounding sphere

*---- color of object at maximum distance at which it is visible
        .word    BLUGRN1                   ;dot color

*---- word displacement to bounding box parameters for object
        .word    (BB1X1-$)/16           ;word displacement

*---- number of xyz-coordinate triples used to describe object
        .word    8                         ;no. of xyz coordinate triples

*---- signed 8-bit xyz object coordinates relative to centroid
        .byte    -32,-32,-4,F0     ;0 : LLB
        .byte    -32,32,-4,F0      ;1 : ULB
        .byte    32,32,-4,F0             ;2 : URB
        .byte    32,-32,-4,F0      ;3 : LRB
        .byte    -32,-32,4,F0      ;4 : LLT
        .byte    -32,32,4,F0             ;5 : ULT
        .byte    32,32,4,F0              ;6 : URT
        .byte    32,-32,4,F0             ;7 : LRT

*---- face 0 of object                   South side
        .word    4                      ;drawing primitive code
        .word    GRAY3                  ;face color
        .word    0,4,7,3                ;vertex list

*---- face 1 of object                   North side
        .word    4                      ;drawing primitive code
        .word    GRAY3                  ;face color
        .word    2,6,5,1                ;vertex list
```

APPENDIX A

```
Nov 14 09:32 1991  objects.asm Page 7


*——— face 2 of object              West side
        .word    4                 ;drawing primitive code
        .word    GRAY2             ;face color
        .word    1,5,4,0           ;vertex list

*——— face 3 of object              East side
        .word    4                 ;drawing primitive code
        .word    GRAY2             ;face color
        .word    3,7,6,2           ;vertex list

*——— face 4 of object              Bottom
        .word    4                 ;drawing primitive code
        .word    GRAY1             ;face color
        .word    0,3,2,1           ;vertex list

*——— face 5 of object              Top
        .word    4                 ;drawing primitive code
        .word    GRAY1             ;face color
        .word    4,5,6,7           ;vertex list

        .word    EOD               ;end of object model data

BB1X1:
        .word    INBOX | POSPAD, 2
        .byte    -32,-32,-4,F0
        .byte    32,32,4,F0

        .word    EOD


*       - - - -------------------------------------------------
*       1 x 1
*       - - -------------------------------------------------


'1X1:

 ---- size of bounding sphere in object space
        .byte    120,F0|ISLEAF        ;radius R of bounding sphere

 ——— color of object at maximum distance at which it is visible
        .word    BLUGRN1             ;dot color

 ——— word displacement to bounding box parameters for object
        .word    (BB1X3-$)/16        ;word displacement

 ——— number of xyz-coordinate triples used to describe object
        .word    8                   ;no. of xyz coordinate triples

 ——— signed 8-bit xyz object coordinates relative to centroid
        .byte    -32,-96,-4,F0    ;0 : LLB
        .byte    -32,96,-4,F0     ;1 : ULB
        .byte    32,96,-4,F0          ;2 : URB
        .byte    32,-96,-4,F0     ;3 : LRB
        .byte    -32,-96,4,F0     ;4 : LLT
        .byte    -32,96,4,F0          ;5 : ULT
```

APPENDIX A

```
     14 09:32 1991   objects.asm Page 8

        .byte   32,96,4,F0              ;6 : URT
        .byte   32,-96,4,F0            ;7 : LRT

*---- face 0 of object               South side
        .word   4                     ;drawing primitive code
        .word   GRAY3                 ;face color
        .word   0,4,7,3               ;vertex list

*---- face 1 of object               North side
        .word   4                     ;drawing primitive code
        .word   GRAY3                 ;face color
        .word   2,6,5,1               ;vertex list

*---- face 2 of object               West side
        .word   4                     ;drawing primitive code
        .word   GRAY2                 ;face color
        .word   1,5,4,0               ;vertex list

*---- face 3 of object               East side
        .word   4                     ;drawing primitive code
        .word   GRAY2                 ;face color
        .word   3,7,6,2               ;vertex list

*---- face 4 of object               Bottom
        .word   4                     ;drawing primitive code
        .word   GRAY1                 ;face color
        .word   0,3,2,1               ;vertex list

*---- face 5 of object               Top
        .word   4                     ;drawing primitive code
        .word   GRAY1                 ;face color
        .word   4,5,6,7               ;vertex list

        .word   EOD                   ;end of object model data

BB1X3:
        .word   INBOX | POSPAD, 2
        .byte   -32,-96,-4,F0
        .byte   32,96,4,F0

        .word   EOD

*-------------------------------------------------------------
*    3 x 1
*-------------------------------------------------------------


P3X1:

*---- size of bounding sphere in object space
        .byte   120,F0|ISLEAF         ;radius R of bounding sphere

*---- color of object at maximum distance at which it is visible
        .word   BLUGRN1               ;dot color

*---- word displacement to bounding box parameters for object
```

APPENDIX A

```
Nov 14 09:32 1991  objects.asm Page 9

        .word    (BB3X1-$)/16         ;word displacement

*---- number of xyz-coordinate triples used to describe object
        .word    8                    ;no. of xyz coordinate triples

*---- signed 8-bit xyz object coordinates relative to centroid
        .byte    -96,-32,-4,F0    ;0 : LLB
        .byte    -96,32,-4,F0     ;1 : ULB
        .byte    96,32,-4,F0          ;2 : URB
        .byte    96,-32,-4,F0     ;3 : LRB
        .byte    -96,-32,4,F0     ;4 : LLT
        .byte    -96,32,4,F0          ;5 : ULT
        .byte    96,32,4,F0           ;6 : URT
        .byte    96,-32,4,F0          ;7 : LRT

*---- face 0 of object              South side
        .word    4                  ;drawing primitive code
        .word    GRAY3              ;face color
        .word    0,4,7,3            ;vertex list

*---- face 1 of object              North side
        .word    4                  ;drawing primitive code
        .word    GRAY3              ;face color
        .word    2,6,5,1            ;vertex list

*---- face 2 of object              West side
        .word    4                  ;drawing primitive code
        .word    GRAY2              ;face color
        .word    1,5,4,0            ;vertex list

*---- face 3 of object              East side
        .word    4                  ;drawing primitive code
        .word    GRAY2              ;face color
        .word    3,7,6,2            ;vertex list

*---- face 4 of object              Bottom
        .word    4                  ;drawing primitive code
        .word    GRAY1              ;face color
        .word    0,3,2,1            ;vertex list

*---- face 5 of object              Top
        .word    4                  ;drawing primitive code
        .word    GRAY1              ;face color
        .word    4,5,6,7            ;vertex list

        .word    EOD                ;end of object model data

BB3X1:
        .word    INBOX | POSPAD, 2
        .byte    -96,-32,-4,F0
        .byte    96,32,4,F0

        .word    EOD
```

APPENDIX A

```
Nov14 09:32 1991  objects.asm Page 10


*   NSWALL
*------------------------------------------------------------------


NSWALL:

*---- size of bounding sphere in object space
        .byte    1,F9|ISLEAP         ;radius R of bounding sphere

*---- color of object at maximum distance at which it is visible
        .word    BLUGRN1             ;dot color

*---- word displacement to bounding box parameters for object
        .word    (NSBB-$)/16         ;word displacement

*---- number of xyz-coordinate triples used to describe object
        .word    8                   ;no. of xyz coordinate triples

*---- signed 8-bit xyz object coordinates relative to centroid
        .byte    -1,-8,-8,F5         ;0 : LLB
        .byte    -1,8,-8,F5          ;1 : ULB
        .byte    1,8,-8,F5           ;2 : URB
        .byte    1,-8,-8,F5          ;3 : LRB
        .byte    -1,-8,8,F5          ;4 : LLT
        .byte    -1,8,8,F5           ;5 : ULT
        .byte    1,8,8,F5            ;6 : URT
        .byte    1,-8,8,F5           ;7 : LRT

*---- face 0 of object              South side
        .word    4                  ;drawing primitive code
        .word    GRAY5              ;face color
        .word    0,4,7,3            ;vertex list

*---- face 1 of object              North side
        .word    4                  ;drawing primitive code
        .word    GRAY5              ;face color
        .word    2,6,5,1            ;vertex list

*---- face 2 of object              West side
        .word    4                  ;drawing primitive code
        .word    GRAY4              ;face color
        .word    1,5,4,0            ;vertex list

*---- face 3 of object              East side
        .word    4                  ;drawing primitive code
        .word    GRAY4              ;face color
        .word    3,7,6,2            ;vertex list

*---- face 4 of object              Bottom
        .word    4                  ;drawing primitive code
        .word    GRAY3              ;face color
        .word    0,3,2,1            ;vertex list

*---- face 5 of object              Top
        .word    4                  ;drawing primitive code
        .word    GRAY3              ;face color
```

APPENDIX A

```
Nov 14 09:32 1991  objects.asm Page 11

        .word     4,5,6,7              ;vertex list

        .word     EOD                 ;end of object model data

NSBB:
        .word     INBOX | POSPAD, 2
        .byte     -1,-8,-8,F5
        .byte     1,8,8,F5

        .word     EOD

*---------------------------------------------------------------
*   EWWALL
*---------------------------------------------------------------


EWWALL:

*---- size of bounding sphere in object space
        .byte     1,F9|ISLEAF         ;radius R of bounding sphere

*---- color of object at maximum distance at which it is visible
        .word     BLUGRN1             ;dot color

*---- word displacement to bounding box parameters for object
        .word     (EWBB-$)/16         ;word displacement

*---- number of xyz-coordinate triples used to describe object
        .word     8                   ;no. of xyz coordinate triples

*---- signed 8-bit xyz object coordinates relative to centroid
        .byte     -8,-1,-8,F5         ;0 : LLB
        .byte     -8,1,-8,F5          ;1 : ULB
        .byte     8,1,-8,F5           ;2 : URB
        .byte     8,-1,-8,F5          ;3 : LRB
        .byte     -8,-1,8,F5          ;4 : LLT
        .byte     -8,1,8,F5           ;5 : ULT
        .byte     8,1,8,F5            ;6 : URT
        .byte     8,-1,8,F5           ;7 : LRT

*---- face 0 of object                South side
        .word     4                   ;drawing primitive code
        .word     GRAY5               ;face color
        .word     0,4,7,3             ;vertex list

*---- face 1 of object                North side
        .word     4                   ;drawing primitive code
        .word     GRAY5               ;face color
        .word     2,6,5,1             ;vertex list

*---- face 2 of object                West side
        .word     4                   ;drawing primitive code
        .word     GRAY4               ;face color
        .word     1,5,4,0             ;vertex list

*---- face 3 of object                East side
```

APPENDIX A

```
Nov 14 09:32 1991  objects.asm Page 1


        .word    4                       ;drawing primitive code
        .word    GRAY4                   ;face color
        .word    3,7,6,2                 ;vertex list

*----- face 4 of object              Bottom
        .word    4                       ;drawing primitive code
        .word    GRAY3                   ;face color
        .word    0,3,2,1                 ;vertex list

*----- face 5 of object              Top
        .word    4                       ;drawing primitive code
        .word    GRAY3                   ;face color
        .word    4,5,6,7                 ;vertex list

        .word    EOD                     ;end of object model data

EWBB:
        .word    INBOX | POSPAD, 2
        .byte    -8,-1,-8,F5
        .byte    8,1,8,F5

        .word    EOD
```

APPENDIX A

```
Nov 14 09:32 1991   nodes.asm Page 1


*------------------------------------------------------------------
*
*------------------------------------------------------------------

G1_DIV1:

*----- bounding sphere radius and log2(scale factor)
        .byte    15,F6
*----- color of node when it is far away and appears as a single dot
        .word    EARTHGREEN
*----- left son:  pointer and xyz displacements from father's centroid
        .long    G1_DIV2
        .byte    1,0,0,F7
*----- right son:  pointer and xyz displacements from father's centroid
        .long    G1_DIV3
        .byte    -1,0,0,F7
*----- coefficients of equation of plane separating left and right sons
        .word    00001h


*------------------------------------------------------------------
*
*------------------------------------------------------------------


G1_DIV2:

*----- bounding sphere radius and log2(scale factor)
        .byte    15,F6
*----- color of node when it is far away and appears as a single dot
        .word    EARTHGREEN
*----- left son:  pointer and xyz displacements from father's centroid
        .long    G1_DIV4
        .byte    64,0;0,F0
*----- right son:  pointer and xyz displacements from father's centroid
        .long    G1_DIV5
        .byte    -64,0,0,F0
*----- coefficients of equation of plane separating left and right sons
        .word    00001h


*------------------------------------------------------------------
*
*------------------------------------------------------------------


G1_DIV3:

*----- bounding sphere radius and log2(scale factor)
        .byte    15,F6
*----- color of node when it is far away and appears as a single dot
        .word    EARTHGREEN
*----- left son:  pointer and xyz displacements from father's centroid
        .long    G1_DIV6
        .byte    64,0,0,F0
*----- right son:  pointer and xyz displacements from father's centroid
        .long    G1_DIV7
        .byte    -64,0,0,F0
*----- coefficients of equation of plane separating left and right sons
        .word    00001h
```

APPENDIX A

```
9cV14 09:32 1991  nodes.asm Page 2


*----------------------------------------------------------------------
*
*----------------------------------------------------------------------

G1_DIV4:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    G1_COL71
        .byte    32,0,0,F0
*---- right son: pointer and xyz displacements from father's centroid
        .long    G1_COL61
        .byte    -32,0,0,F0
*---- coefficients of equation of plane separating left and right sons
        .word    00001h


*----------------------------------------------------------------------
*
*----------------------------------------------------------------------


G1_DIV5:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    G1_COL51
        .byte    32,0,0,F0
*---- right son: pointer and xyz displacements from father's centroid
        .long    G1_COL41
        .byte    -32,0,0,F0
*---- coefficients of equation of plane separating left and right sons
        .word    00001h


*----------------------------------------------------------------------
*
*----------------------------------------------------------------------


G1_DIV6:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    G1_COL31
        .byte    32,0,0,F0
*---- right son: pointer and xyz displacements from father's centroid
        .long    G1_COL21
        .byte    -32,0,0,F0
*---- coefficients of equation of plane separating left and right sons
```

APPENDIX A

```
Nov 14 09:32 1991   nodes.asm Page 3

        .word     00001h

*-----------------------------------------------------------------
*
*-----------------------------------------------------------------

G1_DIV7:

*----- bounding sphere radius and log2(scale factor)
        .byte     15,F6
*----- color of node when it is far away and appears as a single dot
        .word     EARTHGREEN
*----- left son:  pointer and xyz displacements from father's centroid
        .long     G1_COL11
        .byte     32,0,0,F0
*----- right son:  pointer and xyz displacements from father's centroid
        .long     G1_COL01
        .byte     -32,0,0,F0
*----- coefficients of equation of plane separating left and right sons
        .word     00001h




*----------------------------------------------------------------
*  Column 0
*----------------------------------------------------------------

G1_COL01:

*      bounding sphere radius and log2(scale factor)
        .byte     120,F2
*-    color of node when it is far away and appears as a single dot
        .word     EARTHGREEN
*----- left son:  pointer and xyz displacements from father's centroid
        .long     G1_COL02
        .byte     0,1,0,F7
*----- right son:  pointer and xyz displacements from father's centroid
        .long     G1_COL03
        .byte     0,-1,0,F7
*----- coefficients of equation of plane separating left and right sons
        .word     00010h

*----------------------------------------------------------------
*
*----------------------------------------------------------------

G1_COL02:

*----- bounding sphere radius and log2(scale factor)
        .byte     120,F1
*----- color of node when it is far away and appears as a single dot
        .word     EARTHGREEN
```

APPENDIX A

49

```
Nov 14 09:32 1991   nodes.asm Page 4

*——— left son:  pointer and xyz displacements from father's centroid
        .long     G1_COL04
        .byte     0,64,0,F0
*——— right son:  pointer and xyz displacements from father's centroid
        .long     G1_COL05
        .byte     0,-64,0,F0
*——— coefficients of equation of plane separating left and right sons
        .word     00010h


*—————————————————————————————————————————————————————
*
*—————————————————————————————————————————————————————

G1_COL03:

*——— bounding sphere radius and log2(scale factor)
        .byte     120,F1
*——— color of node when it is far away and appears as a single dot
        .word     EARTHGREEN
*——— left son:  pointer and xyz displacements from father's centroid
        .long     G1_COL06
        .byte     0,64,0,F0
*——— right son:  pointer and xyz displacements from father's centroid
        .long     G1_COL07
        .byte     0,-64,0,F0
*——— coefficients of equation of plane separating left and right sons
        .word     00010h


*—————————————————————————————————————————————————————
*
*—————————————————————————————————————————————————————

G1_COL04:

*——— bounding sphere radius and log2(scale factor)
        .byte     120,F0
*——— color of node when it is far away and appears as a single dot
        .word     EARTHGREEN
*——— left son:  pointer and xyz displacements from father's centroid
* G 0,0
        .long     C1X1
        .byte     0,32,0,F0
*——— right son:  pointer and xyz displacements from father's centroid
* G 0,1
        .long     C1X1
        .byte     0,-32,0,F0
*——— coefficients of equation of plane separating left and right sons
        .word     00010h


*—————————————————————————————————————————————————————
*
*—————————————————————————————————————————————————————

G1_COL05:

*——— bounding sphere radius and log2(scale factor)
```

APPENDIX A

```
Nov 14 09:32 1991  nodes.asm Page 5

          .byte      120,F0
*———— color of node when it is far away and appears as a single dot
          .word      EARTHGREEN
*———— left son:  pointer and xyz displacements from father's centroid
* G 0,2
          .long      ClX1
          .byte      0,32,0,F0
*———— right son:  pointer and xyz displacements from father's centroid
* G 0,3
          .long      ClX1
          .byte      0,-32,0,F0
*———— coefficients of equation of plane separating left and right sons
          .word      00010h

*————————————————————————————————————————————————————————————————————
*
*————————————————————————————————————————————————————————————————————


G1_COL06:

*———— bounding sphere radius and log2(scale factor)
          .byte      120,F0
*———— color of node when it is far away and appears as a single dot
          .word      EARTHGREEN
*———— left son:  pointer and xyz displacements from father's centroid
* G 0,4
          .long      ClX1
          .byte      0,32,0,F0
*———— right son:  pointer and xyz displacements from father's centroid
* G 0,5
          .long      ClX1
          .byte      0,-32,0,F0
*———— coefficients of equation of plane separating left and right sons
          .word      00010h


*————————————————————————————————————————————————————————————————————
*
*————————————————————————————————————————————————————————————————————


G1_COL07:

———— bounding sphere radius and log2(scale factor)
          .byte      120,F0
———— color of node when it is far away and appears as a single dot
          .word      EARTHGREEN
———— left son:  pointer and xyz displacements from father's centroid
  G 0,6
          .long      ClX1
          .byte      0,32,0,F0
———— right son:  pointer and xyz displacements from father's centroid
  G 0,7
          .long      ClX1
          .byte      0,-32,0,F0
———— coefficients of equation of plane separating left and right sons
          .word      00010h
```

APPENDIX A

```
Nov 14 09:32 1991   nodes.asm Page 6



*------------------------------------------------------------------
*  Column 1
*------------------------------------------------------------------

G1_COL11:

*---- bounding sphere radius and log2(scale factor)
       .byte      120,F2
*---- color of node when it is far away and appears as a single dot
       .word      EARTHGREEN
*---- left son:  pointer and xyz displacements from father's centroid
       .long      G1_COL12
       .byte      0,1,0,F7
*---- right son:  pointer and xyz displacements from father's centroid
       .long      G1_COL13
       .byte      0,-1,0,F7
*---- coefficients of equation of plane separating left and right sons
       .word      00010h


*------------------------------------------------------------------
*
*------------------------------------------------------------------


G1_COL12:

*---- bounding sphere radius and log2(scale factor)
       .byte      120,F1
*---- color of node when it is far away and appears as a single dot
       .word      EARTHGREEN
*---- left son:  pointer and xyz displacements from father's centroid
       .long      G1_COL14
       .byte      0,64,0,F0
*---- right son:  pointer and xyz displacements from father's centroid
       .long      G1_COL15
       .byte      0,-64,0,F0
*---- coefficients of equation of plane separating left and right sons
       .word      00010h


*------------------------------------------------------------------
*
*------------------------------------------------------------------


G1_COL13:

*---- bounding sphere radius and log2(scale factor)
       .byte      120,F1
*---- color of node when it is far away and appears as a single dot
       .word      EARTHGREEN
*---- left son:  pointer and xyz displacements from father's centroid
       .long      G1_COL16
       .byte      0,64,0,F0
*---- right son:  pointer and xyz displacements from father's centroid
       .long      G1_COL17
       .byte      0,-64,0,F0
```

APPENDIX A

```
Nov 14 09:32 1991   nodes.asm Page 7

*----- coefficients of equation of plane separating left and right sons
         .word      00010h

*------------------------------------------------------------
*
*------------------------------------------------------------

G1_COL14:

*----- bounding sphere radius and log2(scale factor)
         .byte     120,F0
*----- color of node when it is far away and appears as a single dot
         .word      EARTHGREEN
*----- left son:  pointer and xyz displacements from father's centroid
* G 1,0
         .long     C1X1
         .byte     0,32,0,F0
*----- right son:  pointer and xyz displacements from father's centroid
* G 1,1
         .long     EMPTY
         .byte     0,-32,0,F0
*----- coefficients of equation of plane separating left and right sons
         .word      00010h

*------------------------------------------------------------
*
*------------------------------------------------------------

G1_COL15:

*---- bounding sphere radius and log2(scale factor)
         .byte     120,F0
*---- color of node when it is far away and appears as a single dot
         .word      EARTHGREEN
*---- left son:  pointer and xyz displacements from father's centroid
* G 1,2
         .long     EMPTY
         .byte     0,32,0,F0
*----- right son:  pointer and xyz displacements from father's centroid
* G 1,3
         .long     EMPTY
         .byte     0,-32,0,F0
*----- coefficients of equation of plane separating left and right sons
         .word      00010h

*------------------------------------------------------------
*
*------------------------------------------------------------

G1_COL16:

*----- bounding sphere radius and log2(scale factor)
         .byte     120,F0
*----- color of node when it is far away and appears as a single dot
         .word      EARTHGREEN
*----- left son:  pointer and xyz displacements from father's centroid
```

APPENDIX A

```
Nov 14 09:32 1991   nodes.asm Page 8


* G 1,4
        .long     EMPTY
        .byte     0,32,0,F0
*---- right son:  pointer and xyz displacements from father's centroid
* G 1,5
        .long     EMPTY
        .byte     0,-32,0,F0
*---- coefficients of equation of plane separating left and right sons
        .word     00010h


*--------------------------------------------------------------------
*
*--------------------------------------------------------------------


G1_COL17:

*---- bounding sphere radius and log2(scale factor)
        .byte     120,F0
*---- color of node when it is far away and appears as a single dot
        .word     EARTHGREEN
*---- left son:  pointer and xyz displacements from father's centroid
* G 1,6
        .long     EMPTY
        .byte     0,32,0,F0
*---- right son:  pointer and xyz displacements from father's centroid
* G 1,7
        .long     C1X1
        .byte     0,-32,0,F0
*---- coefficients of equation of plane separating left and right sons
        .word     00010h



*--------------------------------------------------------------------
*  Column 2
*--------------------------------------------------------------------


G1_COL21:

*---- bounding sphere radius and log2(scale factor)
        .byte     120,F2
*---- color of node when it is far away and appears as a single dot
        .word     EARTHGREEN
*---- left son:  pointer and xyz displacements from father's centroid
        .long     G1_COL22
        .byte     0,1,0,F7
*---- right son:  pointer and xyz displacements from father's centroid
        .long     G1_COL23
        .byte     0,-1,0,F7
*---- coefficients of equation of plane separating left and right sons
        .word     00010h


*--------------------------------------------------------------------
*
*--------------------------------------------------------------------
```

APPENDIX A

54

```
Nov 14 09:32 1991  nodes.asm Page 9

G1_COL22:

*——— bounding sphere radius and log2(scale factor)
        .byte     120,F1
*——— color of node when it is far away and appears as a single dot
        .word     EARTHGREEN
*——— left son:  pointer and xyz displacements from father's centroid
        .long     G1_COL24
        .byte     0,64,0,F0
*——— right son:  pointer and xyz displacements from father's centroid
        .long     G1_COL25
        .byte     0,-64,0,F0
*——— coefficients of equation of plane separating left and right sons
        .word     00010h

*————————————————————————————————————————————————————————————————
*
*————————————————————————————————————————————————————————————————


G1_COL23:

*——— bounding sphere radius and log2(scale factor)
        .byte     120,F1
*——— color of node when it is far away and appears as a single dot
        .word     EARTHGREEN
*——— left son:  pointer and xyz displacements from father's centroid
        .long     G1_COL26
        .byte     0,64,0,F0
*——— right son:  pointer and xyz displacements from father's centroid
        .long     G1_COL27
        .byte     0,-64,0,F0
*——— coefficients of equation of plane separating left and right sons
        .word     00010h

*————————————————————————————————————————————————————————————————
*
*————————————————————————————————————————————————————————————————


G1_COL24:

*——— bounding sphere radius and log2(scale factor)
        .byte     120,F0
*——— color of node when it is far away and appears as a single dot
        .word     EARTHGREEN
*——— left son:  pointer and xyz displacements from father's centroid
  G 2,0
        .long     C1X1
        .byte     0,32,0,F0
*——— right son:  pointer and xyz displacements from father's centroid
  G 2,1
        .long     EMPTY
        .byte     0,-32,0,F0
*——— coefficients of equation of plane separating left and right sons
        .word     00010h

————————————————————————————————————————————————————————————————
```

APPENDIX A

```
Nov 14 09:32 1991   nodes.asm Page 10


*
*------------------------------------------------------------------

G1_COL25:

*----- bounding sphere radius and log2(scale factor)
        .byte     120,F0
*----- color of node when it is far away and appears as a single dot
        .word     EARTHGREEN
*----- left son:  pointer and xyz displacements from father's centroid
* G 2,2
        .long     EMPTY
        .byte     0,32,0,F0
*----- right son:  pointer and xyz displacements from father's centroid
* G 2,3
        .long     EMPTY
        .byte     0,-32,0,F0
*----- coefficients of equation of plane separating left and right sons
        .word     00010h


*------------------------------------------------------------------
*
*------------------------------------------------------------------

G1_COL26:

*----- bounding sphere radius and log2(scale factor)
        .byte     120,F0
*----- color of node when it is far away and appears as a single dot
        .word     EARTHGREEN
*----- left son:  pointer and xyz displacements from father's centroid
* G 2,4
        .long     EMPTY
        .byte     0,32,0,F0
*----- right son:  pointer and xyz displacements from father's centroid
* G 2,5
        .long     EMPTY
        .byte     0,-32,0,F0
*----- coefficients of equation of plane separating left and right sons
        .word     00010h


*------------------------------------------------------------------
*
*------------------------------------------------------------------

G1_COL27:

*----- bounding sphere radius and log2(scale factor)
        .byte     120,F0
*----- color of node when it is far away and appears as a single dot
        .word     EARTHGREEN
*----- left son:  pointer and xyz displacements from father's centroid
* G 2,6
        .long     EMPTY
        .byte     0,32,0,F0
*----- right son:  pointer and xyz displacements from father's centroid
```

APPENDIX A

```
14 09:32 1991  nodes.asm Page 11


* G 2,7
        .long    ClXl
        .byte    0,-32,0,F0
*---- coefficients of equation of plane separating left and right sons
        .word    00010h



*----------------------------------------------------------------
*  Column 3
*----------------------------------------------------------------


G1_COL31:

*---- bounding sphere radius and log2(scale factor)
        .byte    120,F2
*---- color of node when it is far away and appears as a single dot   .
        .word    EARTHGREEN
*---- left son:  pointer and xyz displacements from father's centroid
        .long    G1_COL32
        .byte    0,1,0,F7
*---- right son:  pointer and xyz displacements from father's centroid
        .long    G1_COL33
        .byte    0,-1,0,F7
*---- coefficients of equation of plane separating left and right sons
        .word    00010h


*----------------------------------------------------------------
*
*----------------------------------------------------------------


G1_COL32:

*---- bounding sphere radius and log2(scale factor)
        .byte    120,F1
*---- color of node when it is far away and appears as a single dot
        .word    EARTHGREEN
*---- left son:  pointer and xyz displacements from father's centroid
        .long    G1_COL34
        .byte    0,64,0,F0
*---- right son:  pointer and xyz displacements from father's centroid
        .long    G1_COL35
        .byte    0,-64,0,F0
*---- coefficients of equation of plane separating left and right sons
        .word    00010h


*----------------------------------------------------------------

*----------------------------------------------------------------


1_COL33:

*---- bounding sphere radius and log2(scale factor)
        .byte    120,F1
*---- color of node when it is far away and appears as a single dot
        .word    EARTHGREEN
```

APPENDIX A

```
.ov 14 09:32 1991   nodes.asm Page 12


*—— left son:   pointer and xyz displacements from father's centroid
        .long    Gl_COL36
        .byte    0,64,0,F0
*—— right son:  pointer and xyz displacements from father's centroid
        .long    Gl_COL37
        .byte    0,-64,0,F0
*—— coefficients of equation of plane separating left and right sons
        .word    00010h


*————————————————————————————————————————————————————
*
*————————————————————————————————————————————————————


Gl_COL34:

*—— bounding sphere radius and log2(scale factor)
        .byte    120,F0
*—— color of node when it is far away and appears as a single dot
        .word    EARTHGREEN
*—— left son:  pointer and xyz displacements from father's centroid
* G 3,0
        .long    C1X1
        .byte    0,32,0,F0
*—— right son:  pointer and xyz displacements from father's centroid
* G 3,1
        .long    EMPTY
        .byte    0,-32,0,F0
*—— coefficients of equation of plane separating left and right sons
        .word    00010h


*————————————————————————————————————————————————————
*
*————————————————————————————————————————————————————


Gl_COL35:

*—— bounding sphere radius and log2(scale factor)
        .byte    120,F0
*—— color of node when it is far away and appears as a single dot
        .word    EARTHGREEN
*—— left son:  pointer and xyz displacements from father's centroid
* G 3,2
        .long    EMPTY
        .byte    0,32,0,F0
*—— right son:  pointer and xyz displacements from father's centroid
* G 3,3
        .long    EMPTY
        .byte    0,-32,0,F0
*—— coefficients of equation of plane separating left and right sons
        .word    00010h


*————————————————————————————————————————————————————
*
*————————————————————————————————————————————————————


Gl_COL36:
```

APPENDIX A

```
v 14 09:32 1991   nodes.asm Page 13


*---- bounding sphere radius and log2(scale factor)
        .byte    120,F0
*---- color of node when it is far away and appears as a single dot
        .word    EARTHGREEN
*---- left son:  pointer and xyz displacements from father's centroid
* G 3,4
        .long    C1X1
        .byte    0,32,0,F0
*---- right son:  pointer and xyz displacements from father's centroid
* G 3,5
        .long    EMPTY
        .byte    0,-32,0,F0
*---- coefficients of equation of plane separating left and right sons
        .word    00010h


*----------------------------------------------------------------
*
*----------------------------------------------------------------


G1_COL37:


*---- bounding sphere radius and log2(scale factor)
        .byte    120,F0
*---- color of node when it is far away and appears as a single dot
        .word    EARTHGREEN
*---- left son:  pointer and xyz displacements from father's centroid
* G 3,6
        .long    EMPTY
        .byte    0,32,0,F0
*     right son:  pointer and xyz displacements from father's centroid
* G 3,7
        .long    C1X1
        .byte    0,-32,0,F0
*     coefficients of equation of plane separating left and right sons
        .word    00010h




*----------------------------------------------------------------
*  Column 4
*----------------------------------------------------------------


G1_COL41:


*---- bounding sphere radius and log2(scale factor)
        .byte    120,F2
*---- color of node when it is far away and appears as a single dot
        .word    EARTHGREEN
*---- left son:  pointer and xyz displacements from father's centroid
        .long    G1_COL42
        .byte    0,1,0,F7
*---- right son:  pointer and xyz displacements from father's centroid
        .long    G1_COL43
        .byte    0,-1,0,F7
*---- coefficients of equation of plane separating left and right sons
```

APPENDIX A

```
  / 14 09:32 1991   nodes.asm Page 14


        .word     00010h

*-----------------------------------------------------------------
*
*-----------------------------------------------------------------

G1_COL42:

*---- bounding sphere radius and log2(scale factor)
        .byte     120,F1
*---- color of node when it is far away and appears as a single dot
        .word     EARTHGREEN
*---- left son:  pointer and xyz displacements from father's centroid
        .long     G1_COL44
        .byte     0,64,0,F0
*---- right son:  pointer and xyz displacements from father's centroid
        .long     G1_COL45
        .byte     0,-64,0,F0
*---- coefficients of equation of plane separating left and right sons
        .word     00010h


*-----------------------------------------------------------------
*
*-----------------------------------------------------------------


G1_COL43:

*---- bounding sphere radius and log2(scale factor)
        .byte     120,F1
*---- color of node when it is far away and appears as a single dot
        .word     EARTHGREEN
*---- left son:  pointer and xyz displacements from father's centroid
        .long     G1_COL46
        .byte     0,64,0,F0
*---- right son:  pointer and xyz displacements from father's centroid
        .long     G1_COL47
        .byte     0,-64,0,F0
*---- coefficients of equation of plane separating left and right sons
        .word     00010h


*-----------------------------------------------------------------
*
*-----------------------------------------------------------------


G1_COL44:

*---- bounding sphere radius and log2(scale factor)
        .byte     120,F0
*---- color of node when it is far away and appears as a single dot
        .word     EARTHGREEN
*---- left son:  pointer and xyz displacements from father's centroid
* G 4,0
        .long     C1X1
        .byte     0,32,0,F0
*---- right son:  pointer and xyz displacements from father's centroid
* G 4,1
```

APPENDIX A

```
    14 09:32 1991  nodes.asm Page 15

        .long     EMPTY
        .byte     0,-32,0,F0
*---- coefficients of equation of plane separating left and right sons
        .word     00010h


*----------------------------------------------------------------------
*
*----------------------------------------------------------------------

G1_COL45:

*---- bounding sphere radius and log2(scale factor)
        .byte     120,F0
*---- color of node when it is far away and appears as a single dot
        .word     EARTHGREEN
*---- left son:  pointer and xyz displacements from father's centroid
* G 4,2
        .long     EMPTY
        .byte     0,32,0,F0
*---- right son:  pointer and xyz displacements from father's centroid
* G 4,3
        .long     EMPTY
        .byte     0,-32,0,F0
*---- coefficients of equation of plane separating left and right sons
        .word     00010h


*----------------------------------------------------------------------
*
*----------------------------------------------------------------------

G1_COL46:

*---- bounding sphere radius and log2(scale factor)
        .byte     120,F0
*---- color of node when it is far away and appears as a single dot
        .word     EARTHGREEN
*---- left son:  pointer and xyz displacements from father's centroid
* G 4,4
        .long     EMPTY
        .byte     0,32,0,F0
*---- right son:  pointer and xyz displacements from father's centroid
* G 4,5
        .long     EMPTY
        .byte     0,-32,0,F0
*---- coefficients of equation of plane separating left and right sons
        .word     00010h


*----------------------------------------------------------------------
*
*----------------------------------------------------------------------

G1_COL47:

*---- bounding sphere radius and log2(scale factor)
        .byte     120,F0
*---- color of node when it is far away and appears as a single dot
```

APPENDIX A

```
v 14 09:32 1991   nodes.asm Page 16

        .word    EARTHGREEN
*---- left son:  pointer and xyz displacements from father's centroid
* G 4,6
        .long    EMPTY
        .byte    0,32,0,F0
*---- right son:  pointer and xyz displacements from father's centroid
* G 4,7
        .long    C1X1
        .byte    0,-32,0,F0
*---- coefficients of equation of plane separating left and right sons
        .word    00010h



*-----------------------------------------------------------------
*  Column 5
*-----------------------------------------------------------------

G1_COL51:

*---- bounding sphere radius and log2(scale factor)
        .byte    120,F2
*---- color of node when it is far away and appears as a single dot
        .word    EARTHGREEN
*---- left son:  pointer and xyz displacements from father's centroid
        .long    G1_COL52
        .byte    0,1,0,F7
*---- right son:  pointer and xyz displacements from father's centroid
        .long    G1_COL53
        .byte    0,-1,0,F7
*---- coefficients of equation of plane separating left and right sons
        .word    00010h



*-----------------------------------------------------------------
*
*-----------------------------------------------------------------

G1_COL52:

*---- bounding sphere radius and log2(scale factor)
        .byte    120,F1
*---- color of node when it is far away and appears as a single dot
        .word    EARTHGREEN
*---- left son:  pointer and xyz displacements from father's centroid
        .long    G1_COL54
        .byte    0,64,0,F0
*---- right son:  pointer and xyz displacements from father's centroid
        .long    G1_COL55
        .byte    0,-64,0,F0
*---- coefficients of equation of plane separating left and right sons
        .word    00010h



*-----------------------------------------------------------------
*
*-----------------------------------------------------------------
```

APPENDIX A

```
kur  14 09:32 1991  nodes.asm Page 17


G1_COL53:

*──── bounding sphere radius and log2(scale factor)
        .byte    120,F1
*──── color of node when it is far away and appears as a single dot
        .word    EARTHGREEN
*──── left son:  pointer and xyz displacements from father's centroid
        .long    G1_COL56
        .byte    0,64,0,F0
*──── right son:  pointer and xyz displacements from father's centroid
        .long    G1_COL57
        .byte    0,-64,0,F0
*──── coefficients of equation of plane separating left and right sons
        .word    00010h

*─────────────────────────────────────────────
*
*─────────────────────────────────────────────


G1_COL54:

*──── bounding sphere radius and log2(scale factor)
        .byte    120,F0
*──── color of node when it is far away and appears as a single dot
        .word    EARTHGREEN
*──── left son:  pointer and xyz displacements from father's centroid
* G 5,0
        .long    C1X1
        .byte    0,32,0,F0
*──── right son:  pointer and xyz displacements from father's centroid
* G 5,1
        .long    EMPTY
        .byte    0,-32,0,F0
*──── coefficients of equation of plane separating left and right sons
        .word    00010h

*─────────────────────────────────────────────
*
'─────────────────────────────────────────────


;1_COL55:

'──── bounding sphere radius and log2(scale factor)
        .byte    120,F0
──── color of node when it is far away and appears as a single dot
        .word    EARTHGREEN
──── left son:  pointer and xyz displacements from father's centroid
  G 5,2
        .long    EMPTY
        .byte    0,32,0,F0
──── right son:  pointer and xyz displacements from father's centroid
  G 5,3
        .long    EMPTY
        .byte    0,-32,0,F0
──── coefficients of equation of plane separating left and right sons
        .word    00010h
```

APPENDIX A

```
Nov 14 09:32 1991   nodes.asm Page 18


*----------------------------------------------------------------------------
*
*----------------------------------------------------------------------------

Gl_COL56:

*---- bounding sphere radius and log2(scale factor)
        .byte    120,F0
*---- color of node when it is far away and appears as a single dot
        .word    EARTHGREEN
*---- left son:  pointer and xyz displacements from father's centroid
* G 5,4
        .long    ClX1
        .byte    0,32,0,F0
*---- right son:  pointer and xyz displacements from father's centroid
* G 5,5
        .long    EMPTY
        .byte    0,-32,0,F0
*--- coefficients of equation of plane separating left and right sons
        .word    00010h


*----------------------------------------------------------------------------
*
*----------------------------------------------------------------------------

Gl_COL57:

*---- bounding sphere radius and log2(scale factor)
        .byte    120,F0
*---- color of node when it is far away and appears as a single dot
        .word    EARTHGREEN
*---- left son:  pointer and xyz displacements from father's centroid
* G 5,6
        .long    EMPTY
        .byte    0,32,0,F0
*---- right son:  pointer and xyz displacements from father's centroid
* G 5,7
        .long    ClX1
        .byte    0,-32,0,F0
*--- coefficients of equation of plane separating left and right sons
        .word    00010h



*----------------------------------------------------------------------------
*  Column 6
*----------------------------------------------------------------------------

Gl_COL61:

*--- bounding sphere radius and log2(scale factor)
        .byte    120,F2
*---- color of node when it is far away and appears as a single dot
        .word    EARTHGREEN
*--- left son:  pointer and xyz displacements from father's centroid
```

APPENDIX A

64

```
  · 14 09:32 1991   nodes.asm Page 19

        .long     G1_COL62
        .byte     0,1,0,F7
*---- right son:  pointer and xyz displacements from father's centroid
        .long     G1_COL63
        .byte     0,-1,0,F7
*---- coefficients of equation of plane separating left and right sons
        .word     00010h


*-----------------------------------------------------------------
*
*-----------------------------------------------------------------


G1_COL62:

*---- bounding sphere radius and log2(scale factor)
        .byte     120,F1
*---- color of node when it is far away and appears as a single dot
        .word     EARTHGREEN
*---- left son:  pointer and xyz displacements from father's centroid
        .long     G1_COL64
        .byte     0,64,0,F0
*---- right son:  pointer and xyz displacements from father's centroid
        .long     G1_COL65
        .byte     0,-64,0,F0
*---- coefficients of equation of plane separating left and right sons
        .word     00010h


*-----------------------------------------------------------------
*
*-----------------------------------------------------------------


G1_COL63:

*---- bounding sphere radius and log2(scale factor)
        .byte     120,F1
*---- color of node when it is far away and appears as a single dot
        .word     EARTHGREEN
*---- left son:  pointer and xyz displacements from father's centroid
        .long     G1_COL66
        .byte     0,64,0,F0
*---- right son:  pointer and xyz displacements from father's centroid
        .long     G1_COL67
        .byte     0,-64,0,F0
*---- coefficients of equation of plane separating left and right sons
        .word     00010h


*-----------------------------------------------------------------
*
*-----------------------------------------------------------------


G1_COL64:

*---- bounding sphere radius and log2(scale factor)
        .byte     120,F0
*---- color of node when it is far away and appears as a single dot
        .word     EARTHGREEN




                        APPENDIX A
```

65

```
Nov 14 09:32 1991   nodes.asm Page 20


*----- left son:  pointer and xyz displacements from father's centroid
* G 6,0
        .long    C1X1
        .byte    0,32,0,F0
*----- right son:  pointer and xyz displacements from father's centroid
* G 6,1
        .long    EMPTY
        .byte    0,-32,0,F0
*----- coefficients of equation of plane separating left and right sons
        .word    00010h


*-------------------------------------------------------------------
*
*-------------------------------------------------------------------


G1_COL65:

*----- bounding sphere radius and log2(scale factor)
        .byte    120,F0
*---- color of node when it is far away and appears as a single dot
        .word    EARTHGREEN
*----- left son:  pointer and xyz displacements from father's centroid
* G 6,2
        .long    EMPTY
        .byte    0,32,0,F0
*----- right son:  pointer and xyz displacements from father's centroid
* G 6,3
        .long    EMPTY
        .byte    0,-32,0,F0
*----- coefficients of equation of plane separating left and right sons
        .word    00010h


*-------------------------------------------------------------------
*
*-------------------------------------------------------------------


G1_COL66:

*----- bounding sphere radius and log2(scale factor)
        .byte    120,F0
*----- color of node when it is far away and appears as a single dot
        .word    EARTHGREEN
*---- left son:  pointer and xyz displacements from father's centroid
* G 6,4
        .long    EMPTY
        .byte    0,32,0,F0
*----- right son:  pointer and xyz displacements from father's centroid
* G 6,5
        .long    EMPTY
        .byte    0,-32,0,F0
*----- coefficients of equation of plane separating left and right sons
        .word    00010h


*-------------------------------------------------------------------
*
*-------------------------------------------------------------------
```

APPENDIX A

```
( ,  14 09:32 1991  nodes.asm Page 21


G1_COL67:

*---- bounding sphere radius and log2(scale factor)
        .byte    120,F0
*---- color of node when it is far away and appears as a single dot
        .word    EARTHGREEN
*---- left son:  pointer and xyz displacements from father's centroid
* G 6,6
        .long    EMPTY
        .byte    0,32,0,F0
*---- right son:  pointer and xyz displacements from father's centroid
* G 6,7
        .long    C1X1
        .byte    0,-32,0,F0
*---- coefficients of equation of plane separating left and right sons
        .word    00010h



*----------------------------------------------------------------
*
*  Column 7
*
*----------------------------------------------------------------

G1_COL71:

*---- bounding sphere radius and log2(scale factor)
        .byte    120,F2
*---- color of node when it is far away and appears as a single dot
        .word    EARTHGREEN
*---- left son:  pointer and xyz displacements from father's centroid
        .long    G1_COL72
        .byte    0,1,0,F7
*---- right son:  pointer and xyz displacements from father's centroid
        .long    G1_COL73
        .byte    0,-1,0,F7
*---- coefficients of equation of plane separating left and right sons
        .word    00010h



*----------------------------------------------------------------
*
*----------------------------------------------------------------


G1_COL72:

*---- bounding sphere radius and log2(scale factor)
        .byte    120,F1
*---- color of node when it is far away and appears as a single dot
        .word    EARTHGREEN
*---- left son:  pointer and xyz displacements from father's centroid
        .long    G1_COL74
        .byte    0,64,0,F0
*---- right son:  pointer and xyz displacements from father's centroid
        .long    G1_COL75
        .byte    0,-64,0,F0
*---- coefficients of equation of plane separating left and right sons
```

APPENDIX A

```
Nov 14 09:32 1991   nodes.asm Page 22


        .word    00010h

*------------------------------------------------------------------
*
*------------------------------------------------------------------

G1_COL73:

*---- bounding sphere radius and log2(scale factor)
        .byte    120,F1
*---- color of node when it is far away and appears as a single dot
        .word    EARTHGREEN
*---- left son:  pointer and xyz displacements from father's centroid
        .long    G1_COL76
        .byte    0,64,0,F0
*---- right son:  pointer and xyz displacements from father's centroid
        .long    G1_COL77
        .byte    0,-64,0,F0
*---- coefficients of equation of plane separating left and right sons
        .word    00010h

*------------------------------------------------------------------
*
*------------------------------------------------------------------

G1_COL74:

*---- bounding sphere radius and log2(scale factor)
        .byte    120,F0
*---- color of node when it is far away and appears as a single dot
        .word    EARTHGREEN
*---- left son:  pointer and xyz displacements from father's centroid
* G 7,0
        .long    C1X1
        .byte    0,32,0,F0
*---- right son:  pointer and xyz displacements from father's centroid
* G 7,1
        .long    C1X1
        .byte    0,-32,0,F0
*---- coefficients of equation of plane separating left and right sons
        .word    00010h

*------------------------------------------------------------------
*
*------------------------------------------------------------------

G1_COL75:

*---- bounding sphere radius and log2(scale factor)
        .byte    120,F0
*---- color of node when it is far away and appears as a single dot
        .word    EARTHGREEN
*---- left son:  pointer and xyz displacements from father's centroid
* G 7,2
        .long    C1X1
        .byte    0,32,0,F0
```

APPENDIX A

```
   14 09:32 1991  nodes.asm Page 23

*——— right son:  pointer and xyz displacements from father's centroid
* G 7,3
          .long    C1X1
          .byte    0,-32,0,F0
*——— coefficients of equation of plane separating left and right sons
          .word    00010h


*————————————————————————————————————————————————————————————
*
*————————————————————————————————————————————————————————————


G1_COL76:

*——— bounding sphere radius and log2(scale factor)
          .byte    120,F0
*——— color of node when it is far away and appears as a single dot
          .word    EARTHGREEN
*——— left son:  pointer and xyz displacements from father's centroid
* G 7,4
          .long    C1X1
          .byte    0,32,0,F0
*——— right son:  pointer and xyz displacements from father's centroid
* G 7,5
          .long    C1X1
          .byte    0,-32,0,F0
*——— coefficients of equation of plane separating left and right sons
          .word    00010h


*————————————————————————————————————————————————————————————
*
*         ——————————————————————————————————————————————————————————


G1 COL77:

*     · bounding sphere radius and log2(scale factor)
          .byte    120,F0
*———— color of node when it is far away and appears as a single dot
          .word    EARTHGREEN
*———— left son:  pointer and xyz displacements from father's centroid
* G 7,6
          .long    C1X1
          .byte    0,32,0,F0
*——— right son:  pointer and xyz displacements from father's centroid
* G 7,7
          .long    C1X1
          .byte    0,-32,0,F0
*——— coefficients of equation of plane separating left and right sons
          .word    00010h
```

APPENDIX A

```
*-------------------------------------------------------------------
*
*-------------------------------------------------------------------

T1_DIV1:

*---- bounding sphere radius and log2(scale factor)
        .byte     15,F6
*---- color of node when it is far away and appears as a single dot
        .word     EARTHGREEN
*---- left son:  pointer and xyz displacements from father's centroid
        .long     T1_DIV2
        .byte     1,0,0,F7
*---- right son:  pointer and xyz displacements from father's centroid
        .long     T1_DIV3
        .byte     -1,0,0,F7
*---- coefficients of equation of plane separating left and right sons
        .word     PLANEEW


*-------------------------------------------------------------------
*
*-------------------------------------------------------------------

T1_DIV2:

*---- bounding sphere radius and log2(scale factor)
        .byte     15,F6
*---- color of node when it is far away and appears as a single dot
        .word     EARTHGREEN
*---- left son:  pointer and xyz displacements from father's centroid
        .long     T1_DIV4
        .byte     64,0,0,F0
*---- right son:  pointer and xyz displacements from father's centroid
        .long     T1_DIV5
        .byte     -64,0,0,F0
*---- coefficients of equation of plane separating left and right sons
        .word     PLANEEW


*-------------------------------------------------------------------
*
*-------------------------------------------------------------------

T1_DIV3:

*---- bounding sphere radius and log2(scale factor)
        .byte     15,F6
*---- color of node when it is far away and appears as a single dot
        .word     EARTHGREEN
*---- left son:  pointer and xyz displacements from father's centroid
        .long     T1_DIV6
        .byte     64,0,0,F0
*---- right son:  pointer and xyz displacements from father's centroid
        .long     T1_DIV7
        .byte     -64,0,0,F0
*---- coefficients of equation of plane separating left and right sons
        .word     PLANEEW
```

APPENDIX A

```
Nov 14 09:32 1991  maze.i Page 2


*----------------------------------------------------------------------
*
*----------------------------------------------------------------------

T1_DIV4:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_DIV8
        .byte    8,0,0,F0
*---- right son:  pointer and xyz displacements from father's centroid
        .long    T1_DIV9
        .byte    -56,0,0,F0
*---- coefficients of equation of plane separating left and right sons
        .word    PLANEEW

*----------------------------------------------------------------------
*
*----------------------------------------------------------------------

T1_DIV5:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_DIVA
        .byte    8,0,0,F0
*---- right son:  pointer and xyz displacements from father's centroid
        .long    T1_DIVB
        .byte    -56,0,0,F0
*---- coefficients of equation of plane separating left and right sons
        .word    PLANEEW

*----------------------------------------------------------------------
*
*----------------------------------------------------------------------

T1_DIV6:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_DIVC
        .byte    8,0,0,F0
*---- right son:  pointer and xyz displacements from father's centroid
        .long    T1_DIVD
        .byte    -56,0,0,F0
*---- coefficients of equation of plane separating left and right sons
```

APPENDIX A

```
        .word    PLANEEW

*----------------------------------------------------------------
*
*----------------------------------------------------------------


T1_DIV7:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_DIVE
        .byte    8,0,0,F0
*---- right son:  pointer and xyz displacements from father's centroid
        .long    T1_DIVF
        .byte    -56,0,0,F0
*---- coefficients of equation of plane separating left and right sons
        .word    PLANEEW


*----------------------------------------------------------------
*
*----------------------------------------------------------------


T1_DIV8:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COLF1
        .byte    28,0,0,F0
*---- right son:  pointer and xyz displacements from father's centroid
        .long    T1_COLE1
        .byte    -4,0,0,F0
*---- coefficients of equation of plane separating left and right sons
        .word    PLANEEW


*----------------------------------------------------------------
*
*----------------------------------------------------------------


T1_DIV9:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COLD1
        .byte    28,0,0,F0
*---- right son:  pointer and xyz displacements from father's centroid
        .long    T1_COLC1
        .byte    -4,0,0,F0
```

APPENDIX A

```
( .v 14 09:32 1991  maze.i Page 4

*---- coefficients of equation of plane separating left and right sons
        .word    PLANEEW

*----------------------------------------------------------------------
*
*----------------------------------------------------------------------


T1_DIVA:

*---- bounding sphere radius and log2(scale factor)
        .byte    15,F6
*--- color of node when it is far away and appears as a single dot
        .word    EARTHGREEN
*---- left son:  pointer and xyz displacements from father's centroid
        .long    T1_COLB1
        .byte    28,0,0,F0
*---- right son:  pointer and xyz displacements from father's centroid
        .long    T1_COLA1
        .byte    -4,0,0,F0
*---- coefficients of equation of plane separating left and right sons
        .word    PLANEEW

*----------------------------------------------------------------------
*
*----------------------------------------------------------------------


T1_DIVB:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COL91
        .byte    28,0,0,F0
*---- right son:  pointer and xyz displacements from father's centroid
        .long    T1_COL81
        .byte    -4,0,0,F0
*---- coefficients of equation of plane separating left and right sons
        .word    PLANEEW

*----------------------------------------------------------------------
*
*----------------------------------------------------------------------


T1_DIVC:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COL71
        .byte    28,0,0,F0
*---- right son:  pointer and xyz displacements from father's centroid
        .long    T1_COL61
```

APPENDIX A

```
Nov 14 09:32 1991   maze.1 Page 5

        .byte    -4,0,0,F0
*---- coefficients of equation of plane separating left and right sons
        .word    PLANEEW

*----------------------------------------------------------------------
*
*----------------------------------------------------------------------

T1_DIVD:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COL51
        .byte    28,0,0,F0
*---- right son:  pointer and xyz displacements from father's centroid
        .long    T1_COL41
        .byte    -4,0,0,F0
*---- coefficients of equation of plane separating left and right sons
        .word    PLANEEW

*----------------------------------------------------------------------
*
*----------------------------------------------------------------------

T1_DIVE:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COL31
        .byte    28,0,0,F0
*---- right son:  pointer and xyz displacements from father's centroid
        .long    T1_COL21
        .byte    -4,0,0,F0
*---- coefficients of equation of plane separating left and right sons
        .word    PLANEEW

*----------------------------------------------------------------------
*
*----------------------------------------------------------------------

T1_DIVF:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COL11
        .byte    28,0,0,F0
*---- right son:  pointer and xyz displacements from father's centroid
```

APPENDIX A

```
,v 14 09:32 1991  maze.i Page 6

        .long    T1_COL01
        .byte   -4,0,0,F0
*---- coefficients of equation of plane separating left and right sons
        .word    PLANEEW



*--------------------------------------------------------------------
*
*--------------------------------------------------------------------

T1_COL01:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COL02
        .byte    0,1,0,F7
*---- right son:  pointer and xyz displacements from father's centroid
        .long    T1_COL03
        .byte    0,-1,0,F7
*---- coefficients of equation of plane separating left and right sons
        .word    PLANENS


*--------------------------------------------------------------------
*
*--------------------------------------------------------------------

T1_COL02:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COL04
        .byte    0,64,0,F0
*---- right son:  pointer and xyz displacements from father's centroid
        .long    T1_COL05
        .byte    0,-64,0,F0
*---- coefficients of equation of plane separating left and right sons
        .word    PLANENS


*--------------------------------------------------------------------
*
*--------------------------------------------------------------------

T1_COL03:

*---- bounding sphere radius and log2(scale factor)
        .byte    15,F6
*---- color of node when it is far away and appears as a single dot
```

APPENDIX A

```
7   14 09:32 1991   maze.i Page 7

         .word     EARTHGREEN
*—— left son:  pointer and xyz displacements from father's centroid
         .long     Tl_COL06
         .byte     0,64,0,F0
*—— right son:  pointer and xyz displacements from father's centroid
         .long     Tl_COL07
         .byte     0,-64,0,F0
*—— coefficients of equation of plane separating left and right sons
         .word     PLANENS


*——————————————————————————————————————————————————————
*
*——————————————————————————————————————————————————————


Tl_COL04:

*—— bounding sphere radius and log2(scale factor)
         .byte     15,F6
*—— color of node when it is far away and appears as a single dot
         .word     EARTHGREEN
*—— left son:  pointer and xyz displacements from father's centroid
         .long     Tl_COL08
         .byte     0,56,0,F0
*—— right son:  pointer and xyz displacements from father's centroid
         .long     Tl_COL09
         .byte     0,-8,0,F0
*—— coefficients of equation of plane separating left and right sons
         .word     PLANENS


*— ———————————————————————————————————————————————————
*
*       ——————————————————————————————————————————————


Tl_COL05:

*       bounding sphere radius and log2(scale factor)
         .byte     15,F6
*—— color of node when it is far away and appears as a single dot
         .word     EARTHGREEN
*—— left son:  pointer and xyz displacements from father's centroid
         .long     Tl_COL0A
         .byte     0,56,0,F0
*—— right son:  pointer and xyz displacements from father's centroid
         .long     Tl_COL0B
         .byte     0,-8,0,F0
*—— coefficients of equation of plane separating left and right sons
         .word     PLANENS


*——————————————————————————————————————————————————————
*
*——————————————————————————————————————————————————————


Tl_COL06:

*—— bounding sphere radius and log2(scale factor)
         .byte     15,F6
```

APPENDIX A

```
.ov 14 09:32 1991   maze.i Page 8


*——— color of node when it is far away and appears as a single dot
        .word     EARTHGREEN
*——— left son:   pointer and xyz displacements from father's centroid
        .long     T1_COLOC
        .byte     0,56,0,F0
*——— right son:  pointer and xyz displacements from father's centroid
        .long     T1_COLOD
        .byte     0,-8,0,F0
*——— coefficients of equation of plane separating left and right sons
        .word     PLANENS


*—————————————————————————————————————————————————————
*
*—————————————————————————————————————————————————————


T1_COL07:

*——— bounding sphere radius and log2(scale factor)
        .byte     15,F6
*——— color of node when it is far away and appears as a single dot
        .word     EARTHGREEN
*——— left son:   pointer and xyz displacements from father's centroid
        .long     T1_COL0E
        .byte     0,56,0,F0
*——— right son:  pointer and xyz displacements from father's centroid
        .long     T1_COL0F
        .byte     0,-8,0,F0
*——— coefficients of equation of plane separating left and right sons
        .word     PLANENS


*—————————————————————————————————————————————————————
*
*—————————————————————————————————————————————————————


T1_COL08:

*——— bounding sphere radius and log2(scale factor)
        .byte     15,F6
*——— color of node when it is far away and appears as a single dot
        .word     EARTHGREEN
*——— left son:   pointer and xyz displacements from father's centroid
* NO,0
        .long     TOOL
        .byte     0,4,0,F0
*——— right son:  pointer and xyz displacements from father's centroid
* NO,1
        .long     EMPTY
        .byte     0,-28,0,F0
*——— coefficients of equation of plane separating left and right sons
        .word     PLANENS


*—————————————————————————————————————————————————————
*
*—————————————————————————————————————————————————————


T1_COL09:
```

APPENDIX A

```
┌─────────────────────────────────────────────────────────────┐
│ ┌─  4 09:32 1991  maze.i Page 9
│
│ *──── bounding sphere radius and log2(scale factor)
│          .byte    15,F6
│ *──── color of node when it is far away and appears as a single dot
│          .word    EARTHGREEN
│ *──── left son:  pointer and xyz displacements from father's centroid
│ * NO,2
│          .long    TCOL
│          .byte    0,4,0,F0
│ *──── right son:  pointer and xyz displacements from father's centroid
│ * NO,3
│          .long    TWNS
│          .byte    0,-28,0,F0
│ *──── coefficients of equation of plane separating left and right sons
│          .word    PLANENS
│
│
│ *─────────────────────────────────────────────────────────────
│ *
│ *─────────────────────────────────────────────────────────────
│
│
│ T1_COLOA:
│
│ *──── bounding sphere radius and log2(scale factor)
│          .byte    15,F6
│ *──── color of node when it is far away and appears as a single dot
│          .word    EARTHGREEN
│ *──── left son:  pointer and xyz displacements from father's centroid
│ * NO,4
│          .long    TCOL
│          .byte    0,4,0,F0
│ *──── right son:  pointer and xyz displacements from father's centroid
│ * NO,5
│          .long    TWNS
│          .byte    0,-28,0,F0
│ *──── coefficients of equation of plane separating left and right sons
│          .word    PLANENS
│
│ ─────────────────────────────────────────────
│
│
│ ─────────────────────────────────────────────
│
│
│ 1_COLOB:
│
│ ──── bounding sphere radius and log2(scale factor)
│          .byte    15,F6
│ ──── color of node when it is far away and appears as a single dot
│          .word    EARTHGREEN
│ ──── left son:  pointer and xyz displacements from father's centroid
│ NO,6
│          .long    TCOL
│          .byte    0,4,0,F0
│ ──── right son:  pointer and xyz displacements from father's centroid
│ NO,7
│          .long    TWNS
│          .byte    0,-28,0,F0
│ ──── coefficients of equation of plane separating left and right sons
│
│
│
│                         APPENDIX A
│
│
│  . . .. ─────────────────────────────────────────
└─────────────────────────────────────────────────────────────┘
```

```
( 
,. 14 09:32 1991   maze.i Page 10

            .word    PLANENS

*--------------------------------------------------
*
*--------------------------------------------------

T1_COL0C:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
* N0,8
        .long    TOOL
        .byte    0,4,0,F0
*---- right son:  pointer and xyz displacements from father's centroid
* N0,9
        .long    TWNS
        .byte    0,-28,0,F0
*---- coefficients of equation of plane separating left and right sons
        .word    PLANENS

*--------------------------------------------------
*
*--------------------------------------------------

T1_COL0D:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
* N0,A
        .long    TOOL
        .byte    0,4,0,F0
*---- right son:  pointer and xyz displacements from father's centroid
* N0,B
        .long    TWNS
        .byte    0,-28,0,F0
*---- coefficients of equation of plane separating left and right sons
        .word    PLANENS

*--------------------------------------------------
*
*--------------------------------------------------

T1_COL0E:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
* N0,C
```

APPENDIX A
```

```
     14 09:32 1991   maze.i Page 11


            .long     TCOL
            .byte     0,4,0,F0
*──── right son:  pointer and xyz displacements from father's centroid
* NO,D
            .long     TWNS
            .byte     0,-28,0,F0
*──── coefficients of equation of plane separating left and right sons
            .word     PLANENS


*─────────────────────────────────────────────────────────
*
*─────────────────────────────────────────────────────────


T1_COL0F:

*──── bounding sphere radius and log2(scale factor)
            .byte     15,F6
*──── color of node when it is far away and appears as a single dot
            .word     EARTHGREEN
*──── left son:  pointer and xyz displacements from father's centroid
* NO,E
            .long     TCOL
            .byte     0,4,0,F0
*──── right son:  pointer and xyz displacements from father's centroid
* NO,F
            .long     EMPTY
            .byte     0,-28,0,F0
*──── coefficients of equation of plane separating left and right sons
            .word     PLANENS




*─────────────────────────────────────────────────────────
*
*─────────────────────────────────────────────────────────


T1_COL11:

*──── bounding sphere radius and log2(scale factor)
            .byte     15,F6
*──── color of node when it is far away and appears as a single dot
            .word     EARTHGREEN
*──── left son:  pointer and xyz displacements from father's centroid
            .long     T1_COL12
            .byte     0,1,0,F7
*──── right son:  pointer and xyz displacements from father's centroid
            .long     T1_COL13
            .byte     0,-1,0,F7
*──── coefficients of equation of plane separating left and right sons
            .word     PLANENS


*─────────────────────────────────────────────────────────
*
*─────────────────────────────────────────────────────────




                              APPENDIX A
```

```
( v 14 09:32 1991  maze.i Page 12


T1_COL12:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COL14
        .byte    0,64,0,F0
*---- right son:  pointer and xyz displacements from father's centroid
        .long    T1_COL15
        .byte    0,-64,0,F0
*---- coefficients of equation of plane separating left and right sons
        .word    PLANENS


*----------------------------------------------------------------
*
*----------------------------------------------------------------


T1_COL13:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COL16
        .byte    0,64,0,F0
*---- right son:  pointer and xyz displacements from father's centroid
        .long    T1_COL17
        .byte    0,-64,0,F0
*---- coefficients of equation of plane separating left and right sons
        .word    PLANENS


*----------------------------------------------------------------
*
*----------------------------------------------------------------


T1_COL14:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COL18
        .byte    0,56,0,F0
*---- right son:  pointer and xyz displacements from father's centroid
        .long    T1_COL19
        .byte    0,-8,0,F0
*---- coefficients of equation of plane separating left and right sons
        .word    PLANENS


*----------------------------------------------------------------
*
```

APPENDIX A

```
* · 14 09:32 1991  maze.i Page 13

*---------------------------------------------------------------

T1_COL15:

*----- bounding sphere radius and log2(scale factor)
        .byte    15,F6
*----- color of node when it is far away and appears as a single dot
        .word    EARTHGREEN
*----- left son:  pointer and xyz displacements from father's centroid
        .long    T1_COL1A
        .byte    0,56,0,F0
*----- right son:  pointer and xyz displacements from father's centroid
        .long    T1_COL1B
        .byte    0,-8,0,F0
*----- coefficients of equation of plane separating left and right sons
        .word    PLANENS


*---------------------------------------------------------------
*
*---------------------------------------------------------------


T1_COL16:

*----- bounding sphere radius and log2(scale factor)
        .byte    15,F6
*----- color of node when it is far away and appears as a single dot
        .word    EARTHGREEN
*----- left son:  pointer and xyz displacements from father's centroid
        .long    T1_COL1C
        .byte    0,56,0,F0
*----- right son:  pointer and xyz displacements from father's centroid
        .long    T1_COL1D
        .byte    0,-8,0,F0
*----- coefficients of equation of plane separating left and right sons
        .word    PLANENS


*---------------------------------------------------------------
*
*---------------------------------------------------------------


T1_COL17:

*----- bounding sphere radius and log2(scale factor)
        .byte    15,F6
*----- color of node when it is far away and appears as a single dot
        .word    EARTHGREEN
*----- left son:  pointer and xyz displacements from father's centroid
        .long    T1_COL1E
        .byte    0,56,0,F0
*----- right son:  pointer and xyz displacements from father's centroid
        .long    T1_COL1F
        .byte    0,-8,0,F0
*----- coefficients of equation of plane separating left and right sons
        .word    PLANENS


*---------------------------------------------------------------
```

APPENDIX A

```
(  ,v 14 09:32 1991  maze.i Page 14

*
*—————————————————————————————————————————————————————————————

T1_COL18:

*———— bounding sphere radius and log2(scale factor)
        .byte    15,F6
*———— color of node when it is far away and appears as a single dot
        .word    EARTHGREEN
*———— left son:  pointer and xyz displacements from father's centroid
* N1,0
        .long    TWEW
        .byte    0,4,0,F0
*———— right son:  pointer and xyz displacements from father's centroid
* N1,1
        .long    EMPTY
        .byte    0,-28,0,F0
*———— coefficients of equation of plane separating left and right sons
        .word    PLANENS


*——————————————————————————————————————————————————————————————
*
*——————————————————————————————————————————————————————————————


T1_COL19:

*———— bounding sphere radius and log2(scale factor)
        .byte    15,F6
*———— color of node when it is far away and appears as a single dot
        .word    EARTHGREEN
*———— left son:  pointer and xyz displacements from father's centroid
* N1,2
        .long    EMPTY
        .byte    0,4,0,F0
*———— right son:  pointer and xyz displacements from father's centroid
* N1,3
        .long    EMPTY
        .byte    0,-28,0,F0
*———— coefficients of equation of plane separating left and right sons
        .word    PLANENS


*——————————————————————————————————————————————————————————————
*
*——————————————————————————————————————————————————————————————


T1_COL1A:

*———— bounding sphere radius and log2(scale factor)
        .byte    15,F6
*———— color of node when it is far away and appears as a single dot
        .word    EARTHGREEN
*———— left son:  pointer and xyz displacements from father's centroid
* N1,4
        .long    EMPTY
        .byte    0,4,0,F0
*———— right son:  pointer and xyz displacements from father's centroid
```

APPENDIX A

```
No; 14 09:32 1991   maze.i Page 15

* N1,5
        .long     EMPTY
        .byte     0,-28,0,F0
*---- coefficients of equation of plane separating left and right sons
        .word     PLANENS

*------------------------------------------------------------------
*
*------------------------------------------------------------------

T1_COL1B:

*---- bounding sphere radius and log2(scale factor)
        .byte     15,F6
*---- color of node when it is far away and appears as a single dot
        .word     EARTHGREEN
*---- left son:  pointer and xyz displacements from father's centroid
* N1,6
        .long     TWEW
        .byte     0,4,0,F0
*---- right son:  pointer and xyz displacements from father's centroid
* N1,7
        .long     EMPTY
        .byte     0,-28,0,F0
*---- coefficients of equation of plane separating left and right sons
        .word     PLANENS

*------------------------------------------------------------------
*
*------------------------------------------------------------------

T1_COL1C:

*---- bounding sphere radius and log2(scale factor)
        .byte     15,F6
*---- color of node when it is far away and appears as a single dot
        .word     EARTHGREEN
*---- left son:  pointer and xyz displacements from father's centroid
* N1,8
        .long     EMPTY
        .byte     0,4,0,F0
*---- right son:  pointer and xyz displacements from father's centroid
* N1,9
        .long     EMPTY
        .byte     0,-28,0,F0
---- coefficients of equation of plane separating left and right sons
        .word     PLANENS

_____

_____


1_COL1D:

---- bounding sphere radius and log2(scale factor)
        .byte     15,F6
```

APPENDIX A

```
v 14 09:32 1991  maze.i Page 16


*---- color of node when it is far away and appears as a single dot
        .word    EARTHGREEN
*---- left son:  pointer and xyz displacements from father's centroid
* N1,A
        .long    EMPTY
        .byte    0,4,0,F0
*---- right son:  pointer and xyz displacements from father's centroid
* N1,B
        .long    EMPTY
        .byte    0,-28,0,F0
*---- coefficients of equation of plane separating left and right sons
        .word    PLANENS


*-----------------------------------------------------------------
*
*-----------------------------------------------------------------


T1_COL1E:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
* N1,C
        .long    TWEW
        .byte    0,4,0,F0
*---- right son:  pointer and xyz displacements from father's centroid
* N1,D
        .long    EMPTY
        .byte    0,-28,0,F0
*---- coefficients of equation of plane separating left and right sons
        .word    PLANENS


*-----------------------------------------------------------------
*
*-----------------------------------------------------------------


T1_COL1F:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
* N1,E
        .long    TWEW
        .byte    0,4,0,F0
*---- right son:  pointer and xyz displacements from father's centroid
* N1,F
        .long    EMPTY
        .byte    0,-28,0,F0
*---- coefficients of equation of plane separating left and right sons
        .word    PLANENS
```

APPENDIX A

```
Nov 14 09:32 1991   maze.i Page 17




*-------------------------------------------------------------------
*
*-------------------------------------------------------------------

T1_COL21:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COL22
        .byte    0,1,0,F7
*---- right son:  pointer and xyz displacements from father's centroid
        .long    T1_COL23
        .byte    0,-1,0,F7
*---- coefficients of equation of plane separating left and right sons
        .word    PLANENS


*-------------------------------------------------------------------
*
*-------------------------------------------------------------------

T1_COL22:

*---- bounding sphere radius and log2(scale factor)
        .byte    15,F6
*     color of node when it is far away and appears as a single dot
        word     EARTHGREEN
*     left son:  pointer and xyz displacements from father's centroid
        .long    T1_COL24
        .byte    0,64,0,F0
*     right son:  pointer and xyz displacements from father's centroid
        .long    T1_COL25
        .byte    0,-64,0,F0
*---- coefficients of equation of plane separating left and right sons
        .word    PLANENS


*-------------------------------------------------------------------
*
*-------------------------------------------------------------------

T1_COL23:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
        .long    T1_COL26
        .byte    0,64,0,F0
*---- right son:  pointer and xyz displacements from father's centroid
        .long    T1_COL27
```

APPENDIX A

```
  14 09:32 1991  maze.i Page 18


        .byte     0,-64,0,F0
*---- coefficients of equation of plane separating left and right sons
        .word    PLANENS


*--------------------------------------------------------------------
*
*--------------------------------------------------------------------


T1_COL24:

*---- bounding sphere radius and log2(scale factor)
        .byte     15,F6
*---- color of node when it is far away and appears as a single dot
        .word    EARTHGREEN
*---- left son:  pointer and xyz displacements from father's centroid
        .long    T1_COL28
        .byte    0,56,0,F0
*---- right son:  pointer and xyz displacements from father's centroid
        .long    T1_COL29
        .byte    0,-8,0,F0
*---- coefficients of equation of plane separating left and right sons
        .word    PLANENS


*--------------------------------------------------------------------
*
*--------------------------------------------------------------------


T1_COL25:

*---- bounding sphere radius and log2(scale factor)
        .byte     15,F6
*---- color of node when it is far away and appears as a single dot
        .word    EARTHGREEN
*---- left son:  pointer and xyz displacements from father's centroid
        .long    T1_COL2A
        .byte    0,56,0,F0
*---- right son:  pointer and xyz displacements from father's centroid
        .long    T1_COL2B
        .byte    0,-8,0,F0
*---- coefficients of equation of plane separating left and right sons
        .word    PLANENS


*--------------------------------------------------------------------
*
*--------------------------------------------------------------------


T1_COL26:

*---- bounding sphere radius and log2(scale factor)
        .byte     15,F6
*---- color of node when it is far away and appears as a single dot
        .word    EARTHGREEN
*---- left son:  pointer and xyz displacements from father's centroid
        .long    T1_COL2C
        .byte    0,56,0,F0
*---- right son:  pointer and xyz displacements from father's centroid
```

APPENDIX A

```
Nov 14 09:32 1991   maze.i Page 19

                .long     T1_COL2D
                .byte     0,-8,0,F0
        *—— coefficients of equation of plane separating left and right sons
                .word     PLANENS


        *————————————————————————————————————————————————————
        *
        *————————————————————————————————————————————————————


        T1_COL27:

        *—— bounding sphere radius and log2(scale factor)
                .byte     15,F6
        *—— color of node when it is far away and appears as a single dot
                .word     EARTHGREEN
        *—— left son:  pointer and xyz displacements from father's centroid
                .long     T1_COL2E
                .byte     0,56,0,F0
        *—— right son:  pointer and xyz displacements from father's centroid
                .long     T1_COL2F
                .byte     0,-8,0,F0
        *—— coefficients of equation of plane separating left and right sons
                .word     PLANENS


        *————————————————————————————————————————————————————
        *
        *————————————————————————————————————————————————————


        T1_COL28:

        *—— bounding sphere radius and log2(scale factor)
                .byte     15,F6
        *—— color of node when it is far away and appears as a single dot
                .word     EARTHGREEN
        *—— left son:  pointer and xyz displacements from father's centroid
        * N2,0
                .long     TCOL
                .byte     0,4,0,F0
        *—— right son:  pointer and xyz displacements from father's centroid
        * N2,1
                .long     EMPTY
                .byte     0,-28,0,F0
        *—— coefficients of equation of plane separating left and right sons
                .word     PLANENS


        |————————————————————————————————————————————————————
        ,
        |————————————————————————————————————————————————————


        T1_COL29:

        —— bounding sphere radius and log2(scale factor)
                .byte     15,F6
        —— color of node when it is far away and appears as a single dot
                .word     EARTHGREEN
        —— left son:  pointer and xyz displacements from father's centroid
```

APPENDIX A

```
Nov 14 09:32 1991  maze.i Page 20


* N2,2
        .long    REDCOL
        .byte    0,4,0,F0
*---- right son:  pointer and xyz displacements from father's centroid
* N2,3
        .long    TWNS
        .byte    0,-28,0,F0
*---- coefficients of equation of plane separating left and right sons
        .word    PLANENS


*------------------------------------------------------------------
*
*------------------------------------------------------------------


T1_COL2A:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
* N2,4
        .long    REDCOL
        .byte    0,4,0,F0
*---- right son:  pointer and xyz displacements from father's centroid
* N2,5
        .long    EMPTY
        .byte    0,-28,0,F0
*---- coefficients of equation of plane separating left and right sons
        .word    PLANENS


*------------------------------------------------------------------
*
*------------------------------------------------------------------


T1_COL2B:

*---- bounding sphere radius and log2(scale factor)
        .byte    15,F6
*---- color of node when it is far away and appears as a single dot
        .word    EARTHGREEN
*---- left son:  pointer and xyz displacements from father's centroid
* N2,6
        .long    REDCOL
        .byte    0,4,0,F0
*---- right son:  pointer and xyz displacements from father's centroid
* N2,7
        .long    EMPTY
        .byte    0,-28,0,F0
*---- coefficients of equation of plane separating left and right sons
        .word    PLANENS


*------------------------------------------------------------------
*
*------------------------------------------------------------------
```

APPENDIX A

```
T1_COL2C:

*——— bounding sphere radius and log2(scale factor)
        .byte    15,F6
*——– color of node when it is far away and appears as a single dot
        .word    EARTHGREEN
*——— left son:   pointer and xyz displacements from father's centroid
* N2,8
        .long    REDCOL
        .byte    0,4,0,F0
*——— right son:  pointer and xyz displacements from father's centroid
* N2,9
        .long    EMPTY
        .byte    0,-28,0,F0
*——— coefficients of equation of plane separating left and right sons
        .word    PLANENS


*———————————————————————————————————————————————
*
*———————————————————————————————————————————————


T1_COL2D:

*——— bounding sphere radius and log2(scale factor)
        .byte    15,F6
*——— color of node when it is far away and appears as a single dot
        .word    EARTHGREEN
*——— left son:   pointer and xyz displacements from father's centroid
* N2,A
        .long    REDCOL
        .byte    0,4,0,F0
*——– right son:  pointer and xyz displacements from father's centroid
* N2,B
        .long    EMPTY
        .byte    0,-28,0,F0
*——– coefficients of equation of plane separating left and right sons
        .word    PLANENS


*———————————————————————————————————————————————
*
*———————————————————————————————————————————————


T1_COL2E:

*——— bounding sphere radius and log2(scale factor)
        .byte    15,F6
*——— color of node when it is far away and appears as a single dot
        .word    EARTHGREEN
*——— left son:   pointer and xyz displacements from father's centroid
* N2,C
        .long    REDCOL
        .byte    0,4,0,F0
*——— right son:  pointer and xyz displacements from father's centroid
* N2,D
        .long    EMPTY
        .byte    0,-28,0,F0
```

APPENDIX A

```
Nov 14 09:32 1991  maze.i Page 22


*---- coefficients of equation of plane separating left and right sons
        .word     PLANENS

*-------------------------------------------------------------------
*
*-------------------------------------------------------------------

T1_COL2F:

*---- bounding sphere radius and log2(scale factor)
        .byte     15,F6
*---- color of node when it is far away and appears as a single dot
        .word     EARTHGREEN
*---- left son:  pointer and xyz displacements from father's centroid
* N2,E
        .long     TOOL
        .byte     0,4,0,F0
*---- right son:  pointer and xyz displacements from father's centroid
* N2,F
        .long     EMPTY
        .byte     0,-28,0,F0
*---- coefficients of equation of plane separating left and right sons
        .word     PLANENS




*-------------------------------------------------------------------
*
*-------------------------------------------------------------------


T1_COL31:

*---- bounding sphere radius and log2(scale factor)
        .byte     15,F6
*---- color of node when it is far away and appears as a single dot
        .word     EARTHGREEN
*---- left son:  pointer and xyz displacements from father's centroid
        .long     T1_COL32
        .byte     0,1,0,F7
*---- right son:  pointer and xyz displacements from father's centroid
        .long     T1_COL33
        .byte     0,-1,0,F7
*---- coefficients of equation of plane separating left and right sons
        .word     PLANENS

*-------------------------------------------------------------------
*
*-------------------------------------------------------------------


T1_COL32:

*---- bounding sphere radius and log2(scale factor)
        .byte     15,F6
*---- color of node when it is far away and appears as a single dot
```

APPENDIX A

```
Nov 14 09:32 1991  maze.i Page 23


        .word     EARTHGREEN
*—— left son:  pointer and xyz displacements from father's centroid
        .long     T1_COL34
        .byte     0,64,0,F0
*—— right son:  pointer and xyz displacements from father's centroid
        .long     T1_COL35
        .byte     0,-64,0,F0
*—— coefficients of equation of plane separating left and right sons
        .word     PLANENS


*————————————————————————————————————————
*
*————————————————————————————————————————


T1_COL33:

*—— bounding sphere radius and log2(scale factor)
        .byte     15,F6
*—— color of node when it is far away and appears as a single dot
        .word     EARTHGREEN
*—— left son:  pointer and xyz displacements from father's centroid
        .long     T1_COL36
        .byte     0,64,0,F0
*—— right son:  pointer and xyz displacements from father's centroid
        .long     T1_COL37
        .byte     0,-64,0,F0
*—— coefficients of equation of plane separating left and right sons
        .word     PLANENS


*————————————————————————————————————————
*
*————————————————————————————————————————


T1_COL34:

*—— bounding sphere radius and log2(scale factor)
        .byte     15,F6
*—— color of node when it is far away and appears as a single dot
        .word     EARTHGREEN
*—— left son:  pointer and xyz displacements from father's centroid
        .long     T1_COL38
        .byte     0,56,0,F0
*—— right son:  pointer and xyz displacements from father's centroid
        .long     T1_COL39
        .byte     0,-8,0,F0
*—— coefficients of equation of plane separating left and right sons
        .word     PLANENS


*————————————————————————————————————————
*
*————————————————————————————————————————


T1_COL35:

*—— bounding sphere radius and log2(scale factor)
        .byte     15,F6
```

APPENDIX A

```
Nov 14 09:32 1991  maze.i Page 24

*----- color of node when it is far away and appears as a single dot
        .word    . EARTHGREEN
*----- left son:  pointer and xyz displacements from father's centroid
        .long     T1_COL3A
        .byte     0,56,0,F0
*----- right son:  pointer and xyz displacements from father's centroid
        .long     T1_COL3B
        .byte     0,-8,0,F0
*----- coefficients of equation of plane separating left and right sons
        .word     PLANENS


*---------------------------------------------------------------------
*
*---------------------------------------------------------------------


T1_COL36:

*----- bounding sphere radius and log2(scale factor)
        .byte     15,F6
*----- color of node when it is far away and appears as a single dot
        .word     EARTHGREEN
*----- left son:  pointer and xyz displacements from father's centroid
        .long     T1_COL3C
        .byte     0,56,0,F0
*----- right son:  pointer and xyz displacements from father's centroid
        .long     T1_COL3D
        .byte     0,-8,0,F0
*----- coefficients of equation of plane separating left and right sons
        .word     PLANENS


*---------------------------------------------------------------------
*
*---------------------------------------------------------------------


T1_COL37:

*----- bounding sphere radius and log2(scale factor)
        .byte     15,F6
*----- color of node when it is far away and appears as a single dot
        .word     EARTHGREEN
*----- left son:  pointer and xyz displacements from father's centroid
        .long     T1_COL3E
        .byte     0,56,0,F0
*----- right son:  pointer and xyz displacements from father's centroid
        .long     T1_COL3F
        .byte     0,-8,0,F0
*----- coefficients of equation of plane separating left and right sons
        .word     PLANENS


*---------------------------------------------------------------------
*
*---------------------------------------------------------------------


T1_COL38:

*----- bounding sphere radius and log2(scale factor)
```

APPENDIX A

```
Nov 14 09:32 1991  maze.i Page 25


        .byte     15,F6
*——— color of node when it is far away and appears as a single dot
        .word     EARTHGREEN
*——— left son:  pointer and xyz displacements from father's centroid
* N3,0
        .long     TWEW
        .byte     0,4,0,F0
*——— right son:  pointer and xyz displacements from father's centroid
* N3,1
        .long     EMPTY
        .byte     0,-28,0,F0
*——— coefficients of equation of plane separating left and right sons
        .word     PLANENS

*————————————————————————————————————————————
*
*————————————————————————————————————————————


T1_COL39:

*——— bounding sphere radius and log2(scale factor)
        .byte     15,F6
*——— color of node when it is far away and appears as a single dot
        .word     EARTHGREEN
*——— left son:  pointer and xyz displacements from father's centroid
* N3,2
        .long     TWEW
        .byte     0,4,0,F0
*——— right son:  pointer and xyz displacements from father's centroid
* N3,3
        .long     EMPTY
        .byte     0,-28,0,F0
*——— coefficients of equation of plane separating left and right sons
        .word     PLANENS

*————————————————————————————————————————————
*
*————————————————————————————————————————————


'1_COL3A:

*——— bounding sphere radius and log2(scale factor)
        .byte     15,F6
*——— color of node when it is far away and appears as a single dot
        .word     EARTHGREEN
*——— left son:  pointer and xyz displacements from father's centroid
  N3,4
        .long     EMPTY
        .byte     0,4,0,F0
*——— right son:  pointer and xyz displacements from father's centroid
  N3,5
        .long     EMPTY
        .byte     0,-28,0,F0
*——— coefficients of equation of plane separating left and right sons
        .word     PLANENS
```

APPENDIX A

```
Nov 14 09:32 1991  maze.i Page 26

*———————————————————————————————
*
*———————————————————————————————

T1_COL3B:

*——— bounding sphere radius and log2(scale factor)
        .byte    15,F6
*——— color of node when it is far away and appears as a single dot
        .word    EARTHGREEN
*——— left son:  pointer and xyz displacements from father's centroid
* N3,6
        .long    EMPTY
        .byte    0,4,0,F0
*——— right son:  pointer and xyz displacements from father's centroid
* N3,7
        .long    EMPTY
        .byte    0,-28,0,F0
*——— coefficients of equation of plane separating left and right sons
        .word    PLANENS


*———————————————————————————————
*
*———————————————————————————————

T1_COL3C:

*——— bounding sphere radius and log2(scale factor)
        .byte    15,F6
*——— color of node when it is far away and appears as a single dot
        .word    EARTHGREEN
*——— left son:  pointer and xyz displacements from father's centroid
* N3,8
        .long    TWEW
        .byte    0,4,0,F0
*——— right son:  pointer and xyz displacements from father's centroid
* N3,9
        .long    EMPTY
        .byte    0,-28,0,F0
*——— coefficients of equation of plane separating left and right sons
        .word    PLANENS


*———————————————————————————————
*
*———————————————————————————————

T1_COL3D:

*——— bounding sphere radius and log2(scale factor)
        .byte    15,F6
*——— color of node when it is far away and appears as a single dot
        .word    EARTHGREEN
*——— left son:  pointer and xyz displacements from father's centroid
* N3,A
        .long    TWEW
        .byte    0,4,0,F0
```

APPENDIX A

```
Nov 14 09:32 1991  maze.i Page 27


*—— right son:  pointer and xyz displacements from father's centroid
* N3,B
        .long     EMPTY
        .byte     0,-28,0,F0
*—— coefficients of equation of plane separating left and right sons
        .word     PLANENS


*————————————————————————————————————————————————————
*
*————————————————————————————————————————————————————


T1_COL3E:

*—— bounding sphere radius and log2(scale factor)
        .byte     15,F6
*—— color of node when it is far away and appears as a single dot
        .word     EARTHGREEN
*—— left son:  pointer and xyz displacements from father's centroid
* N3,C
        .long     TWEW
        .byte     0,4,0,F0
*—— right son:  pointer and xyz displacements from father's centroid
* N3,D
        .long     EMPTY
        .byte     0,-28,0,F0
*—— coefficients of equation of plane separating left and right sons
        .word     PLANENS


*————————————————————————————————————————————————————
*
*————————————————————————————————————————————————————


T1_COL3F:

*···· bounding sphere radius and log2(scale factor)
        .byte     15,F6
*——- color of node when it is far away and appears as a single dot
        .word     EARTHGREEN
*——- left son:  pointer and xyz displacements from father's centroid
* N3,E
        .long     TWEW
        .byte     0,4,0,F0
*—— right son:  pointer and xyz displacements from father's centroid
* N3,F
        .long     EMPTY
        .byte     0,-28,0,F0
*—— coefficients of equation of plane separating left and right sons
        .word     PLANENS
```

APPENDIX A

96

```
ov 14 09:31 1991   bbox.c Page 1


#include "clipvals.h"
#include "move.h"

typedef long FIX8;


/* Newinbbox() :  Routine to replace the inbbox() .  This new routine allows
                  for bounding boxes coincident with BPP's.
*/
short newinbbox(xyz, node)
        FIX8 xyz[];
        Node *node;
{
        short inbbox2();
        long ox, oy, oz;
        long i;

        if (!node)
                return(0);

        /* Convert view location from FIX8 notation to long */
        ox = (xyz[0] >> 8);
        oy = (xyz[1] >> 8);
        oz = (xyz[2] >> 8);

        return(inbbox2(ox, oy, oz, node));
}


/* Inbbox2() :  The guts of Newinbbox() .
*/
static short inbbox2(ox, oy, oz, node)
        long ox, oy, oz;
        Node *node;
{
        extern Node *emptynode;
        extern CLIPVALS vpclip;
        long distance_from_plane();          /* File: move.c */
        FIX8 xyz[3];
        Node *child ;
        long out[3];
        long x, y, z;
        short a, b, c, d;
        long dist;
        short status;


        /* We've found a object.  Call inbbox to check the bounding box. */
        if (node->type) {
                xyz[0] = (long)ox << 8;
                xyz[1] = (long)oy << 8;   /* Convert back to FIX8 notation */
                xyz[2] = (long)oz << 8;

                return(inbbox(xyz, node));
        }
```

APPENDIX A

97

```
Nov 14 09:31 1991  bbox.c Page 2

        /* Otherwise, get the plane coefficients for this node */
        a = make_signed(node->plane_a, 4);
        b = make_signed(node->plane_b, 4);
        c = make_signed(node->plane_c, 1);
        d = make_signed(node->plane_d, 4);

        /* Find the distance of the viewpoint to the plane */
        dist = distance_from_plane(ox, oy, oz, a, b, c, d);

        /* If viewpoint is closer to BPP that it is to the near clip plane... */
        if (abs(dist) <= vpclip.znear) {    /* ... then check both children */
                child = node->leftchild ;

                /* If we have a real node... */
                if (child && (child != emptynode)) {
                        scale2long(&x, &y, &z, node->lx, node->ly, node->lz, nod

                        /* Recursively check for a bounding box violation */
                        status = inbbox2(ox-x, oy-y, oz-z, child);

                        /* Return the first value found */
                        if (status)
                                return(status);
                }

                /* Now, check the right child */
                child = node->rightchild ;

                if (child && (child != emptynode)) {
                        scale2long(&x, &y, &z, node->rx, node->ry, node->rz, nod

                        return(inbbox2(ox-x, oy-y, oz-z, child));
                }
                else
                return(0);  /* Nothing found */
        }
        else {   /* The near clip plane cannot touch the BPP... */

                /* Choose which trail to follow */
                if (dist >= 0)
                        child = node->leftchild ;
                else
                        child = node->rightchild ;

                /* Look for a bounding box violation */
                if (child && (child != emptynode)) {
                        if (dist >= 0) {
                                scale2long(&x, &y, &z, node->lx, node->ly, node
                                return(inbbox2(ox-x, oy-y, oz-z, child));
                        }
                        else {
                                scale2long(&x, &y, &z, node->rx, node->ry, node
                                return(inbbox2(ox-x, oy-y, oz-z, child));
                        }
                }
                else
```

APPENDIX A

```
Nov 14 09:31 1991   bbox.c Page 3

                        return(0);
        }
}
```

APPENDIX A

```
Nov 14 09:31 1991  bullet.c Page 1


#include <stdlib.h>
#include "move.h"

#include "vupoint.h"        /* VIEWPOINT orientation and position */
extern VIEWPOINT view ;
extern Addition sceneaddl ; /* declared in scene.c */
extern Addition sceneadd2 ; /* declared in scene.c */

typedef struct Bullet_struct {
        long bx, by, bz ;
        long dbx, dby, dbz ;
        short life ;
        struct Bullet_struct *next ;
} Bullet ;

static Bullet *bullist ;

extern int testval0, testvall, testval2 ;

void init_bullet()
{
        bullist = NULL ;
}

void new_bullet()
{
        Bullet *newbul ;

        if (!(newbul = (Bullet *) malloc(sizeof(Bullet)))) {
                printsd(1, 14, "Out of memory in new_bullet()", 0) ;
                exit(-1) ;
        }

        newbul->bx = view.xyz[0] >> 8 ;
        newbul->by = view.xyz[1] >> 8 ;
        newbul->bz = view.xyz[2] >> 8 ;

        newbul->dbx = (view.w[0] >> 27) ;
        newbul->dby = (view.w[1] >> 27) ;
        newbul->dbz = (20 >> 27) ;

        newbul->life = 500 ;

        newbul->next = bullist ;
        bullist = newbul ;
}

void move_bullet()
{
        extern Node *rootnode ;
        extern Object *bullet ;
        extern Object *explosion ;

        Bullet *current = bullist ;
        Bullet *prev = bullist ;
```

APPENDIX A

```
,v 14 09:31 1991  bullet.c Page 2


      for (current-bullist, prev-bullist ;
              current ;
              prev-current, current-current->next)
      {
              current->life— ;

              current->bx += current->dbx ;
              current->by += current->dby ;
              current->bz += current->dbz ;

              if ((!AdditionInsert(&sceneadd2, rootnode, bullet,
                      current->bx, current->by, current->bz, DOCLIP)) ||
                      (!current->life))
              {
                      /*
                       *  If we hit something, explode and terminate..
                       */

                      current->bx -= current->dbx ;
                      current->by -= current->dby ;
                      current->bz -= current->dbz ;
                      AdditionInsert(&sceneadd2, rootnode, explosion,
                              current->bx, current->by, current->bz, DOCLIP) ;

                      /*
                       *  Remove from bullist.
                       *    If current-bullist, we're at the head of the list.
                       *    Otherwise, we're somewhere in the middle..
                       */

                      if (current == bullist) bullist = current->next ;
                      else prev->next = current->next ;

                      prev = current ;
                      Free(prev) ;
              }
      }
```

APPENDIX A

101

```
Nov 14 09:31 1991   command.c Page 1


/*          (c) Copyright 1991, Texas Instruments Incorporated
 *----------------------------------------------------------------------
 *
 *                      3D VRSys software
 *
 *      This module implements various keyboard input functions, using
 *   standard DOS keyboard codes.  DOS would be used only in development
 *   versions of VRSys software.  Other inputs should include joysticks
 *   and various position sensing devices.
 *
 *      A routine for glove input has now been added. CAC
 *
 *·
 *
 *
 *-
 */

#include "scancode.h"       /* scan codes for IBM keyboard */
#include "controls.h"
#include "glove.h"

/* Assign control functions to keys. */
short scancode[128];   /* buffer for scancodes 0-127 */
short cmdkey[] = {
        SC_FSLASH, SC_COMMA, SC_DOT, SC_L, SC_X, SC_Z,
        SC_J, SC_F, SC_D, SC_P, SC_R, SC_Q, SC_W, SC_M, SC_C
};

void init_command()
{
        initkeys(scancode);             /* enable interactive keyboard input */
}

int get_command()
{
        return (getkeys(NUM_KEYS, cmdkey, scancode)) ;
}

void debounce(key)
        int key ;

        debouncekey(key, cmdkey, scancode);




 *----------------------------------------------------------------------
 *
 *                      glove input function
 *
 *----------------------------------------------------------------------
 /
```

APPENDIX A

```
Nov 14 09:31 1991   command.c Page 2


#define XTOL 30
#define YTOL 30
#define ZTOL 10

#define XMAX 120
#define YMAX 120
#define ZMAX 120

int get_glove(gptr)
        GLOVE *gptr ;
{
        int cmdbits=0 ;
        char s[20] ;

        int glovemode = 2;

        unsigned char forefinger ;
        unsigned char thumb ;

        readglove(gptr) ;

        if (gptr->swtch == 0xB) {
                cmdbits = cmdbits | (1<<PAUSE) ;
        }

        if (gptr->swtch == 0) glovemode = 0 ;
        if (gptr->swtch == 1) glovemode = 1 ;
        if (gptr->swtch == 2) glovemode = 2 ;

        switch (glovemode) {

                /*********************************************/
                case 0:

                if (gptr->x >= XTOL) {
                        cmdbits = cmdbits | (1<<TURN_RIGHT) ;
                        if (gptr->x >= XMAX) gptr->failed=1 ;
                }

                if (gptr->x <= -XTOL) {
                        cmdbits = cmdbits | (1<<TURN_LEFT) ;
                        if (gptr->x <= -XMAX) gptr->failed=1 ;
                }

                if (gptr->y >= YTOL) {
                        cmdbits = cmdbits | (1<<LOOK_UP) ;
                        if (gptr->y >= YMAX) gptr->failed=1 ;
                }

                if (gptr->y <= -YTOL) {
                        cmdbits = cmdbits | (1<<LOOK_DOWN) ;
                        if (gptr->y <= -YMAX) gptr->failed=1 ;
                }

                forefinger = (gptr->flex & 0x30) >> 4 ;
                thumb = (gptr->flex & 0xC0) >> 6 ;
```

APPENDIX A

```
Nov 14 09:31 1991  command.c Page 3


            if (forefinger >= 2) cmdbits = cmdbits | (1<<MOVE_FORWARD) ;
            if (thumb >= 1) cmdbits = cmdbits | (1<<MOVE_BACKWARD) ;

            if (gptr->swtch == 0x82)
                    cmdbits = cmdbits | (1<<RESET) ;

            break ;

            /************************************************/
            case 1:

            if (gptr->x >= XTOL) {
                    cmdbits = cmdbits | (1<<TURN_RIGHT) ;
                    if (gptr->x >= XMAX) gptr->failed=1 ;
            }

            if (gptr->x <= -XTOL) {
                    cmdbits = cmdbits | (1<<TURN_LEFT) ;
                    if (gptr->x <= -XMAX) gptr->failed=1 ;
            }

            if (gptr->z >= ZTOL) {
                    cmdbits = cmdbits | (1<<LOOK_UP) ;
                    if (gptr->z >= ZMAX) gptr->failed=1 ;
            }

            if (gptr->z <= -ZTOL) {
                    cmdbits = cmdbits | (1<<LOOK_DOWN) ;
                    if (gptr->z <= -ZMAX) gptr->failed=1 ;
            }

            forefinger = (gptr->flex & 0x30) >> 4 ;
            thumb = (gptr->flex & 0xC0) >> 6 ;

            if (forefinger >= 2) cmdbits = cmdbits | (1<<MOVE_FORWARD) ;
            if (thumb >= 1) cmdbits = cmdbits | (1<<MOVE_BACKWARD) ;

            if (gptr->swtch == 0x82)
                    cmdbits = cmdbits | (1<<RESET) ;

            break ;

            /************************************************/
            case 2:

            if (gptr->swtch == 0xF) {
                    cmdbits = cmdbits | (1<<TURN_RIGHT) ;
            }

            if (gptr->swtch == 0xC) {
                    cmdbits = cmdbits | (1<<TURN_LEFT) ;
            }

            if (gptr->swtch == 0xE) {
                    cmdbits = cmdbits | (1<<LOOK_UP) ;
```

APPENDIX A

```
Nov 14 09:31 1991   command.c Page 4

                }

                if (gptr->swtch == 0xD) {
                        cmdbits = cmdbits | (1<<LOOK_DOWN) ;
                }

                forefinger = (gptr->flex & 0x30) >> 4 ;
                thumb = (gptr->flex & 0xC0) >> 6 ;

                if (forefinger >= 2) cmdbits = cmdbits | (1<<MOVE_FORWARD) ;
                /* if (thumb >= 1) cmdbits = cmdbits | (1<<MOVE_BACKWARD) */

                if (gptr->swtch == 5)  cmdbits = cmdbits | (1<<JUMP);

                if (gptr->swtch == 0x82)
                        cmdbits = cmdbits | (1<<RESET) ;

                break ;
        }

        return cmdbits ;
}
```

APPENDIX A

```
Nov 14 09:31 1991   flip.c Page 1


/*          (c) Copyright 1991, Texas Instruments Incorporated
 *------------------------------------------------------------------
 *
 *                      3D VRSys software
 *
 *
 *
 *
 *
 *
 *-
 */
#include "vupoint.h"        /* VIEWPOINT orientation and position */
#include "move.h"
#include "define.h"         /* define misc. constants */
#include "glove.h"                  /* GLOVE data structure and PG_* definitions.


extern double sqrt();

/* Other global parameters defined in this module */
VIEWPOINT view;         /* viewpoint orientation and position */

/* Define if input from keyboard or glove: 1-keybd, 0-glove : CAC */
#define KEYBD_INPUT 1




/*------------------------------------------------------------------
 *      Parameters used by multiple functions within this module
 *------------------------------------------------------------------
 */

int testval0 - 0 ;
int testval1 - 0 ;
int testval2 - 0 ;

/*------------------------------------------------------------------
 *
 *                      main program
 *
 *------------------------------------------------------------------
 */
main()
{
        long trigvals[6];               /* cos and sin of yaw, pitch, roll angles *

        int cmd ;
        int collision-0 ;
        int countframes-0 ;

#if !KEYBD_INPUT
        GLOVE glove ;                   /* data structure to hold glove data: CAC */
#endif
```

APPENDIX A

```
Nov 14 09:31 1991  flip.c Page 2


        /*
         *  Forward declarations..
         */
        void printsd() ;                        /* in file print.c   */
        void init_command() ;           /* in file command.c */
        int get_command() ;             /* in file command.c */
        int get_glove() ;               /* in file command.c */
        int cmd_interpret() ;           /* in file interp.c  */
        void init_graphics() ;          /* in file render.c  */
        void render() ;                 /* in file render.c  */
        void init_scenes() ;            /* in file scene.c   */

        /*
         *  Initialization..
         */
        init_system(&view) ;
        init_graphics(trigvals) ;
        init_command() ;
        init_scenes();

        /*
         *  Infinite loop:
         *    perform the following steps:
         *      - read input from input device(s)
         *      - interpret input (one or more of following)
         *          - change viewpoint and orientation
         *          - modify database
         *      - move autonomous objects
         *          - modify database
         *      - render scene
         */
        while(1) {

                /*
                 *  Read in a command from the appropriate input
                 *   device.
                 *  FILE: command.c
                 */
#if KEYBD_INPUT
                cmd = get_command() ;
#else
                /*
                 *  ** NOTE **
                 *   The glove routines HAVE NOT BEEN TESTED with
                 *   this version of the software!  (But I don't
                 *   see any reason they shouldn't work..)
                 */
                cmd = get_glove(&glove) ;
#endif

                /*
                 *  Using the inputted command(s), modify the yaw, pitch,
                 *   and roll angles.
                 *  Using the new yaw, pitch, roll, and dxy values,
                 *   change the physical location in world-space
```

APPENDIX A

```
Nov 14 09:31 1991   flip.c Page 2


          /*
           *  Forward declarations..
           */
          void printsd() ;                      /* in file print.c   */
          void init_command() ;        /* in file command.c */
          int get_command() ;          /* in file command.c */
          int get_glove() ;            /* in file command.c */
          int cmd_interpret() ;        /* in file interp.c  */
          void init_graphics() ;       /* in file render.c  */
          void render() ;              /* in file render.c  */
          void init_scenes() ;         /* in file scene.c   */

          /*
           *  Initialization..
           */
          init_system(&view) ;
          init_graphics(trigvals) ;
          init_command() ;
          init_scenes();

          /*
           *  Infinite loop:
           *    perform the following steps:
           *      - read input from input device(s)
           *      - interpret input (one or more of following)
           *          - change viewpoint and orientation
           *          - modify database
           *      - move autonomous objects
           *          - modify database
           *      - render scene
           */
          while(1) {

                  /*
                   *  Read in a command from the appropriate input
                   *   device.
                   *  FILE: command.c
                   */
#if KEYBD_INPUT
                  cmd = get_command() ;
#else
                  /*
                   *  ** NOTE **
                   *   The glove routines HAVE NOT BEEN TESTED with
                   *   this version of the software!  (But I don't
                   *   see any reason they shouldn't work..)
                   */
                  cmd = get_glove(&glove) ;
#endif

                  /*
                   *  Using the inputted command(s), modify the yaw, pitch,
                   *   and roll angles.
                   *  Using the new yaw, pitch, roll, and dxy values,
                   *   change the physical location in world-space
```

APPENDIX A

108

```
Nov 14 09:31 1991   flip.c Page 3


                 *    and the orientation of the view (eye) vector.
                 *  The trigvals array will be filled out.
                 *  FILE: interp.c
                 */
                collision = cmd_interpret(cmd, &view, trigvals) ;

                /*
                 *  Update moving objects in the database.
                 *  FILES: scene.c, move.c
                 */
                move_scenes() ;

                /*----------------------------------------------
                        Everything above (input, interpretation, database
                        modification) should run on the main processor.

                        Graphics environment initialization and the render
                        step below should run on the individual player
                        processors (i.e., the helmet cards), using each
                        player's unique viewpoint.
                 ------------------------------------------------*/


                /*
                 *  Render the objects in the database according to the
                 *    current view.
                 *  FILE: render.c
                 */
                render(trigvals, collision) ;

                testval0 = (++countframes)/5; /* approx. seconds of time */

/*              if (countframes == NUMFRAMES) countframes=0 ;*/

                /* Lastly, if we are on frame 1, then initialize
                   the random number generator with a seed dependent
                   on some semi-random number, like head position. */

                if (countframes == 1)
                        srand(view.xyz[0] + view.u[0] + view.u[1]);
        }
}

/*-------------------------------------------------------------
 *
 *
 *                          initialization
 *
 *
 *-------------------------------------------------------------
 */
init_system(viewp)
        VIEWPOINT *viewp ;
{
        extern long shift ;

        /* Initialize position coordinates and air speed. */
        viewp->xyz[0] = -440 << 8;  /*((1 << shift) - 400) << 8 ;  starting x co
        viewp->xyz[1] = 227 << 8; /*  (1 << shift) + 400) << 8 ; starting y coor
```

APPENDIX A

```
Nov 14 09:31 1991   flip.c Page 4


        viewp->xyz[2] = -16 << 8 ;
        viewp->dxyz[0] = 0 ;
        viewp->dxyz[1] = 0 ;
        viewp->dxyz[2] = 0 ;

}




/*----------------------------------------------------------------
 *
 *              get viewpoint orientation parameters
 *
 *----------------------------------------------------------------
 */

view_params(vupt, outparams)
        VIEWPOINT *vupt;    /* unit vectors representing viewpoint */
        long *outparams;    /* yaw, pitch and roll cosines and sines */
{

        double s, t;
        long r, u0, u1, u2, v2, w2;

        u0 = vupt->w[0] >> 15;
        u1 = vupt->w[1] >> 15;
        u2 = vupt->w[2] >> 15;
        v2 = vupt->u[2] >> 15;
        w2 = vupt->v[2] >> 15;

        s = u0;
        t = u1;
        r = sqrt(s * s + t * t);
        if (r > 128) {
                /* Format:  32-bit fixed-point with 30-bit fraction */
                *outparams++ = (u0 << 15) / r << 15;    /*   cos(yaw)   */
                *outparams++ = (u1 << 15) / r << 15;    /*   sin(yaw)   */
                *outparams++ = r                << 15;    /*   cos(pitch) */
                *outparams++ = u2               << 15;    /*   sin(pitch) */
        }
        s = w2;
        t = v2;
        r = sqrt(s * s + t * t);
        if (r > 128) {
                *outparams++ = (-w2 << 15) / r << 15;    /*   cos(roll)  */
                *outparams++ = (-v2 << 15) / r << 15;    /*   sin(roll)  */
        }
```

APPENDIX A

```
Nov 14 09:31 1991   glove.c Page 1


/*
 *.
 *
 *               Read and interpret data from registers on the flippy board.
 *          The data has been read from the "Power Glove", and is continually
 *          placed into the following registers:
 *
 *    Poll register input to get power glove data:
 *     REGISTER0 : compass input (not used in this version)
 *     REGISTER1 : input type
 *     REGISTER2 : input data
 *    where input type is PG_X, PG_Y, PG_Z, PG_ROT, PG_FLEX, or PG_SWTCH,
 *     and input data is the value for the type.
 *
 *
 *
 *
 *
 *.
 */

#include "gspregs.h"        /* GSP register names */
#include "glove.h"

void readglove(gptr)
        GLOVE *gptr ;
{
        gptr->failed = 0 ;

        gptr->x = peek(REGISTER1) ;
        gptr->y = peek(REGISTER2) ;
        gptr->z = peek(REGISTER3) ;
        gptr->rot = peek(REGISTER4) ;
        gptr->flex = peek(REGISTER5) ;
        gptr->swtch = peek(REGISTER6) ;
}


void initglove(gptr)
        GLOVE *gptr ;
{
        gptr->x = 0 ;
        gptr->y = 0 ;
        gptr->z = 0 ;
        gptr->rot = 0 ;
        gptr->flex = 0 ;
        gptr->swtch = 0 ;
        gptr->failed = 0 ;
}
```

APPENDIX A

```
Nov 14 09:31 1991  init_vid.c Page 1


/*


*---------------------------------------------------------------------
*--------------------- TMS34010 Graphics Function Library -----------------
*---------------------------------------------------------------------
* init_video function
*
*   Initialize video timing and screen refresh registers.  Enable
*   display, load x-y offset, set pixel size, and disable external
*   video.  This version of the function is used to configure the
*   TMS34010 SDB (Software Development Board).  This function must be
*   called prior to calling any of the graphics functions, including
*   the graphics initialization function, init_grafix.  We have
*   attempted to isolate as many of the system-dependent parameters as
*   possible in this routine in order that most of the other routines
*   in the function library can be independent of hardware features
*   such as pixel size, frame buffer dimensions, monitor timing
*   requirements, and so on.
*
*   The input argument, n, selects one of several display
*   configurations:
*
*        +-----+---------------------------------------------------+
*        | n-  | display configuration                             |
*        +=====+===================================================+
*        |  1  | Sets up the SDB to drive an analog RGB monitor    |
*        |     | for 640x480 resolution.  Video crystal - 25 MHz.  |
*        |     | Monitors compatible with this configuration are:  |
*        |     |    -- Princeton Graphics SR-12P Analog RGB        |
*        |     |    -- NEC JC-1401P3A Multi-Sync Analog RGB        |
*        |     |    -- Sony CPD-1302 Multi-Scan Analog RGB         |
*        |     | Noninterlaced display with 60-Hz frame rate.      |
*        |     | Also assumes TMS34070 palette in line-load mode.  |
*        +-----+---------------------------------------------------+
*        |  2  | Sets up the SDB to drive an analog RGB monitor    |
*        |     | for 640x480 resolution.  Video crystal - 25 MHz.  |
*        |     | Monitors compatible with this configuration are:  |
*        |     |    -- IBM 5175 Professional Graphics Display      |
*        |     | Noninterlaced display with 60-Hz frame rate.      |
*        |     | Also assumes TMS34070 palette in line-load mode.  |
*        +-----+---------------------------------------------------+
*        |  3  | Sets up the SDB to drive a TTL RGB monitor for    |
*        |     | 720x300 resolution.  Video crystal - 18 MHz.      |
*        |     | Monitors compatible with this configuration are:  |
*        |     |    -- TI PC Color Display Monitor                 |
*        |     | Noninterlaced display with 60-Hz frame rate.      |
*        |     | Assumes SDB configured for TTL RGB output levels. |
*        +-----+---------------------------------------------------+
*        |  4  | Sets up the SDB to drive a TTL RGB monitor for    |
*        |     | 720x512 resolution.  Video crystal - 18 MHz.      |
*        |     | Monitors compatible with this configuration are:  |
*        |     |    -- TI PC Color Display Monitor                 |
*        |     | Interlaced display with 30-Hz frame rate.         |
*        |     | Assumes SDB configured for TTL RGB output levels. |
*        +-----+---------------------------------------------------+
*        |  5  | Sets up the SDB to drive an analog RGB monitor    |
*        |     | 448x480 resolution.  Video crystal - 25 MHz.      |
```

APPENDIX A

112

```
Nov 14 09:31 1991  init_vid.c Page 2

 *        |   |  This configuration is used to provide double
 *        |   |  buffering, and is compatible with these monitors:
 *        |   |     -- Princeton Graphics SR-12P Analog RGB
 *        |   |     -- NEC JC-1401P3A Multi-Sync Analog RGB
 *        |   |     -- Sony CPD-1302 Multi-Scan Analog RGB
 *        |   |  Noninterlaced display with 60-Hz frame rate.
 *        |   |  Assumes SDB configured for analog RGB output.
 *        |   +---------------------------------------------------
 *        | 6 |  Sets up prototype board for 320x240 resolution.
 *        |   |  Monitors compatible with this configuration are:
 *        |   |     -- NEC JC-1401P3A Multi-Sync Analog RGB
 *        |   |  Interlaced display with 30-Hz frame rate.
 *        |   |
 *        +---+-----------------------------------------------------
 *
 *   If an invalid value of n is received, the function returns a value
 *   of -1 and the function aborts.  If a valid n is received, the
 *   function returns a value of zero as confirmation.
 *
 *   This function is designed to be called from a GSP-C program.
 *----------------------------------------------------------------------
 * Usage:   init_video(n);
 *
 * Description of the arguments:
 *         short n;     ( argument n identifies type of monitor used )
 *----------------------------------------------------------------------
 * Revision history:
 *    3/18/86...Original version written...................Jerry Van Aken
 *    5/13/86...Added TI copyright notice..................JV
 *    9/15/86...Changed int's to short's and long's........Stanley Acton
 *    3/23/87...Added separate video timing for IBM 5175...JV
 *    6/24/87...Added TTL RGB interlaced 720x512 mode......JV
 *    8/14/87...Added SDB double buffered 440x480 mode.....JV
 *    -/--/90...Hacked mode 1 to support 332x218 mode......Martin and Josephson
 *----------------------------------------------------------------------
 */
/* Names of GSP I/O registers and B-file registers */
#include "gspregs.h"
/* Names of default codes for colors 0 and 1 */
#include "colors.h"
/* Definition of constants for graphics system */
#include "constant.h"

/* Declare external functions. */
  extern void poke(), sys_error(), set_color1(), set_color0(),
            poke_breg();

/* Declare global variables. */
  extern short use_palet;
  extern short psize;
  extern long scrn_offset;
  extern long scrn_pitch;
  extern long wksp_offset;
  extern long wksp_pitch;
  extern long palet_offset;
  extern short screenwide, screenhigh;
  extern long screensize;
```

APPENDIX A

```
Nov 14 09:31 1991   init_vid.c Page 3


short init_video(n)
short n;
{
    short *r;     /* pointer to GSP I/O register */
    short *p;     /* pointer to array of I/O register values */
    short i;      /* loop counter */

    /*
     * n - 1:  NEC JC-1401P3A Multi-Sync and Princeton Graphics SR-12P
     */
    static short params1[] - {
            0x001B,   /* HESYNC   register at 0xC0000000 */
            0x001C,   /* HEBLNK   register at 0xC0000010 */
            0x00CC,   /* HSBLNK   register at 0xC0000020 */
            0x00CD,   /* HTOTAL   register at 0xC0000030 */
            0x0001,   /* VESYNC   register at 0xC0000040 */
            0x0018,   /* VEBLNK   register at 0xC0000050 */
            0x01F8,   /* VSBLNK   register at 0xC0000060 */
            0x01FA,   /* VTOTAL   register at 0xC0000070 */
            0xF010,   /* DPYCTL   register at 0xC0000080 */
            0xFFFC,   /* DPYSTRT  register at 0xC0000090 */
            0xFFFF,   /* DPYINT   register at 0xC00000A0 */
            0
    };


    /*
     * n - 2:  IBM 5175 Professional Graphics Display
     */
    static short params2[] - {
            0x0010,   /* HESYNC   register at 0xC0000000 */
            0x0012,   /* HEBLNK   register at 0xC0000010 */
            0x00C2,   /* HSBLNK   register at 0xC0000020 */
            0x00CF,   /* HTOTAL   register at 0xC0000030 */
            0x0003,   /* VESYNC   register at 0xC0000040 */
            0x001B,   /* VEBLNK   register at 0xC0000050 */
            0x01FB,   /* VSBLNK   register at 0xC0000060 */
            0x01FD,   /* VTOTAL   register at 0xC0000070 */
            0xF010,   /* DPYCTL   register at 0xC0000080 */
            0xFFFC,   /* DPYSTRT  register at 0xC0000090 */
            0xFFFF,   /* DPYINT   register at 0xC00000A0 */
            0
    };

    /*
     * n - 3:  TI color monitor (TTL inputs), noninterlaced display.
     */
    static short params3[] - {
            0x0014,   /* HESYNC   register at 0xC0000000 */
            0x002E,   /* HEBLNK   register at 0xC0000010 */
            0x00E2,   /* HSBLNK   register at 0xC0000020 */
            0x00EA,   /* HTOTAL   register at 0xC0000030 */
            0x0003,   /* VESYNC   register at 0xC0000040 */
            0x0014,   /* VEBLNK   register at 0xC0000050 */
            0x0140,   /* VSBLNK   register at 0xC0000060 */
            0x0140,   /* VTOTAL   register at 0xC0000070 */
```

APPENDIX A

114

```
Nov 14 09:31 1991   init_vid.c Page 4

            0xF010,   /* DPYCTL  register at 0xC0000080 */
            0xFFFC,   /* DPYSTRT register at 0xC0000090 */
            0xFFFF,   /* DPYINT  register at 0xC00000A0 */
            0
    };


    /*
     *  n - 4:  TI color monitor (TTL inputs), interlaced display.
     */
    static short params4[] - {
            0x0014,   /* HESYNC  register at 0xC0000000 */
            0x002E,   /* HEBLNK  register at 0xC0000010 */
            0x00E2,   /* HSBLNK  register at 0xC0000020 */
            0x00EA,   /* HTOTAL  register at 0xC0000030 */
            0x0003,   /* VESYNC  register at 0xC0000040 */
            0x0020,   /* VEBLNK  register at 0xC0000050 */
            0x0120,   /* VSBLNK  register at 0xC0000060 */
            0x0140,   /* VTOTAL  register at 0xC0000070 */
            0xB020,   /* DPYCTL  register at 0xC0000080 */
            0xFFFC,   /* DPYSTRT register at 0xC0000090 */
            0xFFFF,   /* DPYINT  register at 0xC00000A0 */
            0
    };


    /*
     *  n - 5:  Split frame buffer into two screens (NEC monitor).
     */
    static short params5[] - {
            0x001B,   /* HESYNC  register at 0xC0000000 */
            0x0034,   /* HEBLNK  register at 0xC0000010 */
            0x00B4,   /* HSBLNK  register at 0xC0000020 */
            0x00CD,   /* HTOTAL  register at 0xC0000030 */
            0x0001,   /* VESYNC  register at 0xC0000040 */
            0x0018,   /* VEBLNK  register at 0xC0000050 */
            0x01F8,   /* VSBLNK  register at 0xC0000060 */
            0x01FA,   /* VTOTAL  register at 0xC0000070 */
            0xF010,   /* DPYCTL  register at 0xC0000080 */
            0xFFFC,   /* DPYSTRT register at 0xC0000090 */
            0xFFFF,   /* DPYINT  register at 0xC00000A0 */
            0
    };


    /*
     *  n - 6:  Prototype 320x256 Board
     */
    static short params6[] - {
            0x0021,   /* HESYNC  register at 0xC0000000 */
            0x018C,   /* HEBLNK  register at 0xC0000010 */
            0x017C,   /* HSBLNK  register at 0xC0000020 */
            0x018F,   /* HTOTAL  register at 0xC0000030 */
            0x0005,   /* VESYNC  register at 0xC0000040 */
            0x0018,   /* VEBLNK  register at 0xC0000050 */
            0x0108,   /* VSBLNK  register at 0xC0000060 */
            0x0116,   /* VTOTAL  register at 0xC0000070 */
            0xF010,   /* DPYCTL  register at 0xC0000080 */
            0xFFFC,   /* DPYSTRT register at 0xC0000090 */
```

APPENDIX A

```
Nov 14 09:31 1991  init_vid.c Page 5


          0xFFFF,   /* DPYINT  register at 0xC00000A0 */
          0
    );

    switch (n) {
    case 1:  /* 640x480 analog RGB monitor, noninterlaced */
             p = params1;
             screenwide = 332;
             screenhigh = 218;
             use_palet = TRUE;
             break;
    case 2:  /* 640x480 analog RGB monitor, noninterlaced */
             p = params2;
             screenwide = 332;
             screenhigh = 218;
             use_palet = TRUE;
             break;
    case 3:  /* 720x300 TTL RGB monitor, noninterlaced */
             p = params3; --
             screenwide = 720;
             screenhigh = 300;
             use_palet = FALSE;
             break;
    case 4:  /* 720x512 TTL RGB monitor, interlaced */
             p = params4;
             screenwide = 720;
             screenhigh = 512;
             use_palet = FALSE;
             break;
    case 5:  /* 448x480 analog RGB monitor */
             p = params5;
             screenwide = 448;
             screenhigh = 480;
             use_palet = TRUE;
             break;
    case 6:  /* 320x240 analog RGB monitor */
             p = params6;
             screenwide = 320;
             screenhigh = 240;
             use_palet = TRUE;
             break;
    default: /* error */
             sys_error(0);
             return SYSERR;
    }

    /* Load the first 11 I/O registers with initial values: */
    r = ( short * ) 0xC0000000;  /* Base address of I/O register file */
    for (i = 0; i <= 10; ++i)
        *r++ = *p++;

    /* Set colors 0 and 1 to default values. */
    set_color0(BLACK);
    set_color1(WHITE);

    /* Set pixel size: */
```

APPENDIX A

```
Nov 14 09:31 1991  init_vid.c Page 6


    psize = 4;
    poke(PSIZE, psize);

    /* Set DPYTAP register to all zeros: */
    poke(DPYTAP, 0);

    /* Concatenate screen width and height to form 32-bit int: */
    screensize = screenwide + (screenhigh << 16);

    /* Define base address of video RAM that appears on screen: */
    if (use_palet)
        scrn_offset = 256;   /* leave room for 16 palette registers */
    else
        scrn_offset = 0;
    poke_breg(OFFSET, scrn_offset);

    /* Define pitch of screen memory.  Pitch is defined as the
     * difference in memory addresses of two vertically adjacent pixels.
     */
    scrn_pitch = 4096;
    poke_breg(DPTCH, scrn_pitch);

    /* Set CONVDP register to correspond to contents of DPTCH. */
    asm("       LMO     B3,B0               ");
    asm("       MOVE    B0,@0C0000140h      ");
    asm("       MOVE    B0,A8               ");

    /* Define base address of workspace memory.  This is a rectangular
     * region in the frame buffer, lying to the right of the screen
     * memory.  The workspace memory is used by functions such as
     * fill_polygon.  It has the same x and y dimensions as the screen,
     * but only one bit per pixel.
     */
    wksp_offset = scrn_pitch - screenwide;

    /* Define pitch of workspace memory: */
    wksp_pitch = scrn_pitch;

    /* Define base address of color palette area.  This is a rectangular
     * strip along the left side of the frame buffer.  The SDB340
     * contains a TMS34070 palette device which is configured to load at
     * the start of each scan line.
     */
    palet_offset = 0;

    return OK;
```

APPENDIX A

```
Nov 14 09:31 1991   interp.c Page 1



/*
 *-----------------------------------------------------------------
 *
 *                      3D VRSys software
 *
 *      Command interpretation module.  The cmd_interpret() function
 *  has two results based on inputs: it modifies the viewing parameters
 *  (i.e., turns the view on various axes and changes its world position),
 *  and may make modifications to the database (i.e., introduce missiles
 *  or other objects).
 *
 *.
 *
 *
 *
 *.
 *,


#include <stdlib.h>
#include "vupoint.h"                /* VIEWPOINT orientation and position */
#include "controls.h"
#include "define.h"
#include "move.h"

extern int bx, by ;
extern short collcolor, suncolor;

extern char *rootnode;              /* root node of 3D object tree */
int inair - 0 ;                     /* 0 - feet on ground */

/*
 *         -- --- ----------------------------------------------------
 *
 *                     command interpreter
 *
 *      --- -------------------------------------------------------
 */

int cmd_interpret(cmd, viewp, trigvals)
        int cmd ;
        VIEWPOINT *viewp ;
        long *trigvals ;


        /**********************************************************************
         *
         *  Declarations.
         *
         */

        int get_command() ;                /* in command.c */
        void debounce() ;                  /* in command.c */


        void new_bullet() ;                                /* in bullet.c
```

APPENDIX A

```
Nov 14 09:31 1991   interp.c Page 2


        static long yaw= 150 << 8;
        static long pitch=0, roll=0;   /* yaw, pitch, roll angles */
        static long speed ;                          /* speed temporary variable

        static long dyaw=0, dpitch=0 ;        /* angular velocities */

        static int collision = 0 ;
        int status;             /* status of bounding box collision */
        long cs, sn ;                /* "fix8" variables..                */
        static long grav = 0 ;
        int done ;

        long tempxyz[3] ;


        /***********************************************************
         *
         *  Debugging stuff: CAC
         *
         */

        extern int testval0 ;
        extern int testval1 ;

        if (cmd & (1 << MEMORY)) {
                testval1 = (int) FreeMem() ;
        }


        if (cmd & (1 << FIRE)) {
                new_bullet() ;
        }


        /***********************************************************
         *
         *  First determine, from the given command input, the new values
         *   for yaw, pitch, and roll.
         *
         */

        if (cmd & (1 << PAUSE)) {
                debounce(PAUSE) ;
                while (get_command() == 0) ;
        }

        if (cmd & (1 << RESET)) {
                debounce(RESET) ;
                init_system(viewp) ;
                init_graphics(trigvals) ;
        }

        /*
         * -- PITCH --
         * If looking up or down, change the pitch.  There's
```

APPENDIX A

Nov 14 09:31 1991  interp.c Page 3

```
*    a limit to how far up or down on can look.  The
*    transitions from one direction to another should
*    be fairly smooth.
*/

if ((cmd & (1 << LOOK_UP)) && (pitch < 70<<8)) {
        if ((dpitch += ROTINC) > MAXDPCH)
                dpitch - MAXDPCH;
}
else if ((cmd & (1 << LOOK_DOWN)) && (pitch > -70<<8)) {
        if ((dpitch -= ROTINC) < -MAXDPCH)
                dpitch - -MAXDPCH;
}
else {
        if (dpitch > 0) {
                if ((dpitch -= 2*ROTINC) < 0) dpitch - 0;
        }
        if (dpitch < 0) {
                if ((dpitch += 2*ROTINC) > 0) dpitch - 0;
        }
}   /* end if..else */

if ((pitch += dpitch) <= (-180<<8))
        pitch += (360<<8);
else if (pitch > (180<<8))
        pitch -= (360<<8);


/*
 * -- YAW --
 *  If turning left or right, subtract or add to the yaw.
 *   Transitions should be smooth.
 */

if (cmd & (1 << TURN_RIGHT)) {
        if ((dyaw += ROTINC) > MAXDYAW)
                dyaw - MAXDYAW;
}
else if (cmd & (1 << TURN_LEFT)) {
        if ((dyaw -= ROTINC) < -MAXDYAW)
                dyaw - -MAXDYAW;
}
else {
        if (dyaw > 0) {
                if ((dyaw -= 2*ROTINC) < 0) dyaw - 0;
        }
        else if (dyaw < 0) {
                if ((dyaw += 2*ROTINC) > 0) dyaw - 0;
        }
}
yaw += dyaw;

if (yaw > 360<<8) yaw -= 360<<8 ;
if (yaw < 0) yaw += 360<<8 ;

/*
```

APPENDIX A

```
Nov 14 09:31 1991  interp.c Page 4


        * -- SPEED --
        * Calculate the speed in the world xy plane.  Flag inair must
        *   be 0 for this to have an effect.
        */

        if (!inair) {
                speed = 0 ;
                if (cmd & (1 << MOVE_FORWARD)) {
                        speed = 5 ;
                }
                else if (cmd & (1 << MOVE_BACKWARD)) {
                        speed = -5 ;
                }
        }



        /*
        * -- ALTITUDE --
        * If jump, add to z velocity.  Flag inair must be 0 for
        *   this to have an effect.
        */

        if (!inair) {
                if (cmd & (1<<JUMP)) {
                        viewp->dxyz[2] += 4 << 8 ;
                }
        }

        /*****************************************************************
        *
        * Now, given the new values for yaw, pitch, and roll, and the
        *   current velocity, move to the next position in space and
        *   update the view orientation unit vectors.
        *
        */

        /*
        * Decrement collision variable.
        */
        if (collision) collision-- ;

        /*
        * Initialize uvw unit vectors, then rotate them into
        *   the correct position before returning.
        */
        /* Viewplane "right" initially aligned with world x axis */
        viewp->u[0] = ONE;
        viewp->u[1] = 0;
        viewp->u[2] = 0;

        /* View "down" vector initially aligned with world -z axis */
        viewp->v[0] = 0;
        viewp->v[1] = 0;
        viewp->v[2] = -ONE;

        /* Viewplane normal vector initially aligned with world y axis */
```

APPENDIX A

121

```
Nov 14 09:31 1991  interp.c Page 5

        viewp->w[0] = 0;
        viewp->w[1] = ONE;
        viewp->w[2] = 0;

        /*
         * Rotate uvw unit vectors according to new yaw and pitch.
         *   Fill out the trigvals array.
         */
        panlevel(viewp, (yaw)>>6);
        uvturn(viewp->v, viewp->w, (pitch)>>6);
        view_params(viewp, trigvals);

        /*
         * Determine xyz displacement from current yaw (heading),
         *   and add to current xyz position.  Simulate gravity to
         *   determine current dz.
         * Only modify dx and dy if the we're on the ground.
         * The trigvals are in "fix30" format, or have 30 bits of
         *   fraction.  The view fields are in "fix8" format.  Place
         *   the cos and sin values into cs and sn, converting to
         *   "fix8".  The scalar speed is simply a long int.
         */

        if (!inair) {
                cs = trigvals[COSYAW] >> 22 ;
                sn = trigvals[SINYAW] >> 22 ;

                viewp->dxyz[0] = (speed)*(cs) ;
                viewp->dxyz[1] = (speed)*(sn) ;
        }

        if (grav == 0) grav = 1 ;
        else grav += 2 ;
        viewp->dxyz[2] -= grav ;

        /*
         * Add xyz displacements to current xyz positions.
         */
        viewp->xyz[0] += viewp->dxyz[0] ;
        viewp->xyz[1] += viewp->dxyz[1] ;
        viewp->xyz[2] += viewp->dxyz[2] ;

        inair = 1 ;  /* Assume we're in the air unless something is hit. */

        /*
         * Check for bounding box collisions.  Collisions may result
         *   in rebounds and therefore changes in yaw, pitch, and roll,
         *   and therefore the uvw unit vectors and the trigvals array.
         */
        if (status = newinbbox(viewp->xyz, rootnode)) {
                if ((status == 1) || (status == 2)) {

                        /*
                         * Back z up a step, and do another test to see
                         *   if we're hitting a box "from the side" or
                         *   "from the top/bottom".
```

APPENDIX A

122

```
Nov 14 09:31 1991   interp.c Page 6

                            */
                    viewp->xyz[2] -= viewp->dxyz[2] ;
                    status = newinbbox(viewp->xyz, rootnode) ;

                    if ((status == 1) || (status == 2)) {
                            /*
                             * We're hitting "from the side".  Now see if w
                             *   should change the x or y velocity direction
                             *   Back up y a step, and make 1 more check.
                             *   Back up x a step after the check so that we
                             *   in our original starting position.
                             * Set variable collision to cue the player
                             *   that something was hit.
                             */
                            collision = 10 ;

                            viewp->xyz[1] -= viewp->dxyz[1] ;
                 .-         status = newinbbox(viewp->xyz, rootnode) ;
                            viewp->xyz[0] -= viewp->dxyz[0] ;

                            if ((status == 1) || (status == 2)) {
                                    /*
                                     * Change the x direction.
                                     */
                                    viewp->dxyz[0] = - viewp->dxyz[0] / 4 ;
                            }
                            else {
                                    /*
                                     * Change the y direction.
                                     */
                                    viewp->dxyz[1] = - viewp->dxyz[1] / 4 ;
                            }
                    }
                    else {
                            /* We're hitting "from the top/bottom".  Back u
                             *   a step and change the z direction.  If hitt
                             *   the top (dz<0), set inair flag to 0.  If hi
                             *   from the bottom, set variable collision to
                             *   cue the player that something was hit.
                             */
                            if (viewp->dxyz[2] < 0) inair=0 ;
                            else collision = 10 ;

                            grav = 0 ;

                            viewp->dxyz[2] = -viewp->dxyz[2] / 4 ;
                    }
            }

            else {
                bbox_handler(viewp, status);   /* Do something "special" */
            }
        }

        if (viewp->xyz[2] < GROUNDLEVEL<<8) {
                inair = 0 ;
```

APPENDIX A

```
Nov 14 09:31 1991   interp.c Page 7

                viewp->xyz[2] = GROUNDLEVEL<<8 ;        /* On the ground */
                grav = 0 ;
                viewp->dxyz[2] = -viewp->dxyz[2] / 10 ;
        }

        return(collision) ;
}
```

APPENDIX A

```
Nov 14 09:32 1991  memory.c Page 1

/                                                                              /
/                                                                              /
/*                                                                            */
/*                                                                            */

/****************************************************************************/
/*                                                                          */
/*   This module contains the functions which implement the dynamic memory  */
/*   management routines for GSP C.  The following assumptions/rules apply:  */
/*                                                                          */
/*   1) Packets are allocated a minimum of four words (64 bits)             */
/*   2) The total size of heap is fixed, by constant MEMORY_SIZE.           */
/*   3) The heap can be reset at any time by calling the function "minit"   */
/*                                                                          */
/*   The following items are defined in this module :                       */
/*     minit()    : Function to initialize dynamic memory management         */
/*     malloc()   : Function to allocate memory from mem mgmt system.        */
/*     calloc()   : Allocate an clear memory from mem mgmt system.           */
/*     realloc()  : Reallocate a packet                                      */
/*     free()     : Function to free allocated memory.                       */
/*                                                                          */
/*     minsert()  : Insert a packet into free list, sorted by size          */
/*     mremove()  : Remove a packet from the free list.                      */
/*                                                                          */
/*     sys_memory : Array to contain all memory allocate by system.         */
/*     sys_free   : Pointer to free list                                     */
/*                                                                          */
/****************************************************************************/
#define MEMORY_SIZE 16000   /* NUMBER OF BYTES IN MANAGED MEMORY */
#define NIL          (PACKET *)0

/****************************************************************************/
/* "PACKET" is the template for a data packet.  Packet size contains        */
/* the number of long bytes allocated for the user, excluding the size      */
/* required for management of the packet (32 bits).  Packets are always      */
/* allocated memory in words.  Therefore, the lowest order bit of the size   */
/* field is used to indicate whether the packet is free(0) or used(1)        */
/****************************************************************************/
typedef struct pack {
        unsigned int packet_size;              /* in long words */
        struct pack  *size_ptr;
} PACKET;

static long    sys_memory[(MEMORY_SIZE + 3) / 4] = { MEMORY_SIZE - 4, 0 };
static PACKET *sys_free = (PACKET *)sys_memory;

unsigned FreeMem();
static void minsert();
static void mremove();
void minit(), free();
void *malloc(), *calloc(), *realloc();
```

APPENDIX A

```
Nov 14 09:32 1991   memory.c Page 2


/* return the total amount of free memory in the heap */
unsigned FreeMem()
{
        unsigned free_mem = 0;
        register PACKET *current = sys_free;

        while (current != NIL) {
                free_mem += current->packet_size;
                current = current->size_ptr;
        }

        return(free_mem);
}


/*******************************************************************************/
/*                                                                           */
/*  MINSERT - Insert a packet into the free list.  This list is sorted by    */
/*            size in increasing order.                                      */
/*                                                                           */
/*******************************************************************************/
static void minsert(ptr)
        PACKET *ptr;
{
        register PACKET *current = (PACKET *) sys_free;
        register PACKET *last    = NIL;

        /*******************************************************************/
        /* CHECK SPECIAL CASE, EMPTY FREE LIST.                          */
        /*******************************************************************/
        if (current == NIL)
        {
                sys_free = ptr;
                ptr->size_ptr = NIL;
                return;
        }

        /*******************************************************************/
        /* SCAN THROUGH LIST, LOOKING FOR A LARGER PACKET.               */
        /*******************************************************************/
        while ((current != NIL) && (current->packet_size < ptr->packet_size))
        {
                last    = current;
                current = current->size_ptr;
        }

        /*******************************************************************/
        /* LINK THE NEW PACKET INTO THE LIST. THERE ARE THREE CASES :    */
        /*       THE NEW POINTER WILL EITHER BE THE FIRST, THE LAST, OR IN THE */
        /*       MIDDLE SOMEWHERE.                                        */
        /*******************************************************************/
        if (current == NIL)       /* PTR WILL BE LAST IN LIST */
        {
                last->size_ptr = ptr;
```

APPENDIX A

```
Nov 14 09:32 1991   memory.c Page 3


            ptr->size_ptr  - NIL;
      }

    else if (last -- NIL)    /* PTR WILL BE FIRST IN THE LIST */
      {
            ptr->size_ptr  - sys_free;
            sys_free       - ptr;
      }

    else                     /* PTR IS IN THE MIDDLE OF THE LIST */
      {
            ptr->size_ptr  - current;
            last->size_ptr - ptr;
      }
}
```

APPENDIX A

```
Nov 14 09:32 1991   memory.c Page 4


/***********************************************************************/
/*                                                                     */
/* MREMOVE - REMOVE AN ITEM FROM THE FREE LIST.                        */
/*                                                                     */
/***********************************************************************/

static void mremove(ptr)
        PACKET *ptr;
{
        register PACKET *current - sys_free;
        register PACKET *last    - NIL;

        /***********************************************************/
        /* SCAN THROUGH LIST, LOOKING FOR PACKET TO REMOVE         */
        /***********************************************************/
        while ((current !- NIL) && (current !- ptr))
        {
                last    - current;
                current - current->size_ptr;
        }

        /***********************************************************/
        /* REMOVE THE PACKET FROM THE LIST.   THERE ARE TWO CASES :    */
        /*       THE OLD POINTER WILL EITHER BE THE FIRST, OR NOT THE FIRST. */
        /***********************************************************/
        if (current -- NIL)       /* POINTER NOT FOUND IN LIST        */
        sys_free - NIL;           /* FATAL ERROR                      */

        else if (last -- NIL)     /* PTR WAS BE FIRST IN THE LIST     */
        sys free - ptr->size_ptr;

        else                      /* PTR IS IN THE MIDDLE OF THE LIST */
        last->size_ptr - ptr->size_ptr;
}
```

APPENDIX A

```
Nov 14 09:32 1991   memory.c Page 5


/*****************************************************************/
/*                                                               */
/*    MINIT - This function can be called by the user to completely reset the   */
/*            memory management system.                          */
/*                                                               */
/*****************************************************************/

void minit()
{
        /******************************************************************
        /* TO INITIALIZE THE MEMORY SYSTEM, DEALLOCATE ONE PACKET WHICH USES
        /* AVAILABLE MEMORY, INITIALIZE THE FREE LIST TO POINT TO IT.     */
        /******************************************************************
        sys_free = (PACKET *) &sys_memory[0];

        sys_free->packet_size = sizeof(sys_memory) - 4;
        sys_free->size_ptr        = NIL;
}
```

APPENDIX A

```
Nov 14 09:32 1991  memory.c Page 6


/*******************************************************************/
/*                                                                 */
/* MALLOC - Allocate a packet of a given size, and return pointer to it.  */
/*          This function only allocates in multiple of long words.       */
/*                                                                 */
/*******************************************************************/
void *malloc(size)
        unsigned int  size;
{
        register unsigned int    newsize;
        register PACKET *current = sys_free;
        register unsigned int    oldsize;

        if (size <= 0) return 0;
        newsize = (size + 3);       /* ROUND SIZE UP TO NEXT LONG SIZE  */
        newsize >>= 2;
        if ((newsize <<= 2) <= 0) newsize = 4;

        /*************************************************************
        /* SCAN THROUGH FREE LIST FOR PACKET LARGE ENOUGH TO CONTAIN PACKET
        /*************************************************************
        while ((current != NIL) && (current->packet_size < newsize))
        current = current->size_ptr;

        if (current == NIL) return 0;

        else
        {
                oldsize = current->packet_size;  /* REMEMBER OLD SIZE
                mremove(current);                /* REMOVE PACKET FROM FREE LIST

                /*************************************************************
                /* IF PACKET IS LARGER THAN NEEDED, FREE EXTRA SPACE AT END
                /* BY INSERTING REMAINING SPACE INTO FREE LIST.
                /*************************************************************
                if (oldsize - newsize > 8)
                {
                        register PACKET *next;
                        next = (PACKET *) ((char *) current + 4 + newsize);
                        next->packet_size = oldsize - newsize - 4;
                        minsert(next);
                        current->packet_size = newsize + 1;
                }
                else current->packet_size = oldsize + 1;

                return &(current->size_ptr);
        }
}
```

APPENDIX A

```
Nov 14 09:32 1991   memory.c Page 7


/***********************************************************************/
/*                                                                     */
/*   CALLOC - Allocate a packet of a given size, set the data in the packet */
/*            to nulls, and return a pointer to it.                    */
/*                                                                     */
/***********************************************************************/
void *calloc(num, size)
        unsigned int num, size;
{
        register int  i      = size * num;
        register int  *current = malloc(i);
        register char *save    = (char *)current;

        if (current == 0) return 0;

        i = (i + 3) >> 2;  /* ROUND UP BYTE COUNT TO NEXT LONG BOUNDARY */

        while (i--) *current++ = 0;
        return save;
}
```

APPENDIX A

```
Nov 14 09:32 1991   memory.c Page 8


/************************************************************************/
/*                                                                      */
/*   REALLOC - Reallocate a packet to a new size.                       */
/*                                                                      */
/************************************************************************/
void *realloc(packet, size)
        char *packet;               /* POINTER TO PACKET TO REALLOCATE */
        int  size;                      /* NEW SIZE TO ALLOCATE         */
{
        register char *pptr    = packet - 4;   /* POINT TO BEGINNING OF PACKET
        register int   newsize = size + 3;         /* NEW SIZE OF PACKET
        register int   oldsize;

        if (size < 0)      return 0;
        if (packet == 0)   return(malloc(size));
        if (size == 0)    { free(packet);  return(0); }

        newsize >>= 2;
        newsize <<= 2;                          /* ROUND SIZE UP TO NEXT LONG   */
        if (newsize <= 0) newsize = 4;

        oldsize = ((PACKET *)pptr)->packet_size;
        if ((oldsize & 1) == 0)    return(0);
        if (newsize == --oldsize) return(packet);

        /*************************************************************/
        /* IF NEW SIZE IS LESS THAN CURRENT PACKET SIZE,            */
        /* TRUNCATE THE PACKET AND RETURN END TO FREE LIST          */
        /*************************************************************/
        if (newsize < oldsize)
        {
                if (oldsize - newsize < 8) return(packet);
                ((PACKET *)pptr)->packet_size = newsize + 1; /* SET NEW PACKET S
                oldsize -= newsize + 4;                      /* CALC TRAILING SIZ
                pptr    += newsize + 4;                       /* SET PTR TO NEW PA
                ((PACKET *)pptr)->packet_size = oldsize + 1; /* SET TRAILING PAC
                free(pptr + 4);                              /* FREE TRAI
                return(packet);
        }

        /*************************************************************/
        /* IF NEW SIZE IS BIGGER THAN CURRENT PACKET,               */
        /*     1) CHECK NEXT PACKET IN LIST, SEE IF PACKET CAN BE EXPANDED */
        /*     2) IF NOT, MOVE PACKET TO NEW LOCATION.              */
        /*************************************************************/
        else
        {
                PACKET *next = (PACKET *)(pptr + oldsize + 4);
                int     temp;

                if (((long *)next < &sys_memory[(MEMORY_SIZE + 3) / 4] - 1) &&
                        ((next->packet_size & 1) == 0)                  &&
                        ((temp = oldsize + next->packet_size + 4 - newsize) >= 0
                {
                        mremove(next);
```

APPENDIX A

```
Nov 14 09:32 1991   memory.c Page 9

                        if (temp < 8)
                        {
                        ((PACKET *)pptr)->packet_size = newsize + temp + 1;
                                return(packet);
                        }

                        ((PACKET *)pptr)->packet_size = newsize + 1;
                        pptr += newsize + 4;
                        ((PACKET *)pptr)->packet_size = temp - 4;
                        minsert(pptr);
                        return(packet);
                }
                else
                {
                        /**********************************************************
                        /* ALLOCATE NEW PACKET AND MOVE DATA INTO IT.           */
                        /**********************************************************
                        register char *new = malloc(size);
                        if (new == 0) return (0);
                        movmem(pptr + 4, new, oldsize);
                        free(packet);
                        return(new);
                }
        }
}
```

APPENDIX A

133

```
Nov 14 09:32 1991   memory.c Page 10


/*******************************************************************/
/*                                                                 */
/*  FREE - Return a packet allocated by malloc to free memory pool. */
/*         Return 0 if successful, -1 if not successful.           */
/*                                                                 */
/*******************************************************************/

void free(ptr)
     char *ptr;
{
     register int mask = ~1;  /* USED TO MASK OUT USED BIT */
     register PACKET *last;   /* POINT TO PREVIOUS PACKET  */
     register PACKET *current;       /* POINTER TO THIS PACKET    */
     register PACKET *next;   /* POINTER TO NEXT PACKET     */

     last = next = NIL;                /* INITIALIZE POINTERS
     ptr -= 4;                        /* ADJUST POINT TO BEGINNING OF PACKET

     current = (PACKET *) sys_memory;

     /*******************************************************************/
     /* SEARCH FOR THE POINTER IN THE PACKET POINTED TO
     /*******************************************************************/
     while (current < (PACKET *) ptr)
     {
             last = current;
             current = (PACKET *)((char *)current + (current->packet_size & m
     }

     /*******************************************************************/
     /* CHECK FOR POINTER OR PACKET ERRORS.                          */
     /*******************************************************************/
     if ((current != (PACKET *) ptr) || (!(current->packet_size & 1)))
     return;

     current->packet_size &= mask;   /* MARK PACKET AS FREE */

     /*******************************************************************/
     /* GET POINTER TO NEXT PACKET IN MEMORY, IF ANY.
     /*******************************************************************/
     next = (PACKET *) ((char *)current + 4 + current->packet_size);
     if (next > (PACKET *) &sys_memory[((MEMORY_SIZE + 3) / 4) - 1]) next = N

     /*******************************************************************/
     /* ATTEMPT TO COLLESCE THE THREE PACKETS (PREVIOUS, CURRENT, NEXT)
     /*******************************************************************/
     if ((last != NIL) && !(last->packet_size & 1))
     {
             if ((next != NIL) && !(next->packet_size & 1))
             {
                     mremove(last);
                     mremove(next);
                     last->packet_size += current->packet_size + next->packet
                     minsert(last);
                     return;
```

APPENDIX A
```

```
Nov 14 09:32 1991  memory.c Page 11


                }
                else
                {
                        mremove(last);
                        last->packet_size += current->packet_size + 4;
                        minsert(last);
                        return;
                }
        }

        /*******************************************************************/
        /* ATTEMPT TO COLLESCE THE CURRENT WITH NEXT PACKET. (CURRENT, NEXT) */
        /*******************************************************************/
        else if ((next != NIL) && !(next->packet_size & 1))
        {
                mremove(next);
                current->packet_size += next->packet_size + 4;
                minsert(current);
                return;
        }

        /*******************************************************************/
        /* NO COLLESCENCE POSSIBLE, JUST INSERT THIS PACKET INTO LIST    */
        /*******************************************************************/
        else minsert(current);
        return;
}
```

APPENDIX A

```
Nov 14 09:32 1991  move.c Page 1


/*           (c) Copyright 1991, Texas Instruments Incorporated
 *----------------------------------------------------------------
 *
 *                    3D VRSys software
 *
 *    Database manipulation support functions.  In this file are the many
 *  functions required to add and delete objects in the binary partitioned
 *  database.  Using the following paradigm:
 *           - remove old copy of object (via AdditionKill)
 *           - increment its position
 *           - reinsert it (via AdditionInsert)
 *  the 'illusion' of object movement is maintained.
 *
 *
 *
 *
 *
 *-
 */

#include <stdlib.h>
#include <string.h>
#include <math.h>
#include "move.h"

#define LEFTSIDE   0
#define RIGHTSIDE  1

#define XVAL 0
#define YVAL 1
#define ZVAL 2
#define FVAL 3


/*
 *   Function declarations.  These
 *    should normally not be called
 *    outside of move.c.  The common
 *    externally called functions
 *    have forward declarations in
 *    move.h.
 */

short place_in_tree() ;
short insert_object() ;
short generate_node() ;

Olist *OlistCreate() ;
void OlistKill() ;
void OlistPermanent() ;
void OlistAdd() ;
long OlistLength() ;

Nlist *NlistCreate() ;
void NlistKill() ;
void NlistAdd() ;
```

APPENDIX A

```
Nov 14 09:32 1991  move.c Page 2


long NlistLength() ;

extern long testval0 ;
extern long testvall ;
extern long testval2 ;

/***********************************************************************
 *
 *  AdditionInsert()
 *
 *      Makes a copy of the passed object and attempts to place it in
 *      the database.  Returns 1 if successful, 0 if not.
 *
 *      usage:  the arguments to ObjectInsert are:
 *          - addptr, a pointer to an Addition struct.  This struct
 *            contains records of added objects and nodes, so that
 *            they may be removed later
 *          - node, a pointer to a database node.  This is usually the
 *            the database rootnode
 *          - object, a pointer to the object to be inserted
 *          - x, y, z, coordinates in *world-space* where the above
 *            object is to be inserted
 *          - clipflag, tells whether the object should be 'sliced' by
 *            partitioning planes when inserted.  This should almost
 *            always be CLIP (1)
 */
short AdditionInsert(addptr, node, object, x, y, z, clipflag)
        Addition *addptr ;
        Node *node ;
        Object *object ;
        long x, y, z ;
        short clipflag ;
{
        Object *newobject ;
        short retval ;

        message(1, 14, "AdditionInsert ", 0) ;

        /*
         *  Insert a copy.  Don't mess with
         *    the original..
         */
        newobject = ObjectCopy(object) ;
        retval = place_in_tree(addptr, node, newobject, x, y, z, clipflag) ;

        /*
         *  If insertion worked, place objects and
         *    nodes in add lists in 'permanent' lists..
         */
        if (retval) AdditionSet(addptr) ;

        else AdditionClear(addptr) ;

        return retval ;
```

APPENDIX A

137

```
Nov 14 09:32 1991   move.c Page 3


/**********************************************************************
 *
 *  place_in_tree()
 *
 *  This function, along with insert_object(), moves an object down
 *    through the database to find where it should be placed.  place_
 *    in_tree() determines how much of the object lies on the left and
 *    right sides of node's partitioning plane by use of the ObjectClip
 *    procedure, and inserts the appropriate sub-objects in the sub-
 *    trees via insert_object().
 */
short place_in_tree(addptr, node, object, x, y, z, clipflag)
        Addition *addptr ;
        Node *node ;
        Object *object ;
        long x, y, z ;
        short clipflag ;
{
        extern Node *pyrnode, *pyrnode2;

        void scale2long() ;
        Object *ObjectClip() ;

        Object *leftobject, *rightobject ;

        long a, b, c, d ;
        short retval ;

        message(1, 14, "place_in_tree ", 0) ;

        if ((node == pyrnode) || (node == pyrnode2)) return 0;

        /*
         *  Get plane coefficients into
         *   a more usable form..
         */
        a = make_signed(node->plane_a, 4) ;
        b = make_signed(node->plane_b, 4) ;
        c = make_signed(node->plane_c, 4) ;
        d = make_signed(node->plane_d, 4) ;

        /*
         *  If clipflag is 0, then insert the object as a whole, ignoring
         *   whether or not it straddles partitioning planes..
         */
        if (clipflag == DONTCLIP) {
                if ((a*x + b*y + c*z + d) > 0)
                        return (insert_object(addptr, object, node, LEFTSIDE,
                                        x, y, z, clipflag)) ;
                else
                        return (insert_object(addptr, object, node, RIGHTSIDE,
                                        x, y, z, clipflag)) ;
        }

        /*
```

APPENDIX A

138

```
Nov 14 09:32 1991  move.c Page 4


        *  Put whatever's in the positive half of the plane in
        *  in leftobject.  There are then three cases:
        *
        *  1) If leftobject - object, it entirely fits in the
        *     positive half.
        *  2) If leftobject - NULL, it entirely fits in the
        *     negative half.
        *  3) Else it's split into both halves.
        */


        /*
         *  Find out how much of the
         *  object is on the positive
         *  side of the plane..
         */
        leftobject - ObjectClip(object, x, y, z, a, b, c, d) ;


        /*
         *  Object entirely in positive
         *  side case..
         */
        if (leftobject -- object) rightobject - NULL ;


        /*
         *  Object entirely in negative
         *  side case..
         */
        else if (leftobject -- NULL) rightobject - object ;


        /*
         *  Object straddles plane case..
         */
        else {
                rightobject - ObjectClip(object, x, y, z, -a, -b, -c, -d) ;
                Free(object) ;
        }


        /*
         *  Now, if there's something in the positive half of the
         *  plane, insert it in the left sub-tree.
         *  If an insertion is attempted and does not work, remove
         *  all parts of the object from the database.
         *  (Do not insert a partial object.)
         */
        if (leftobject) {
                retval - insert_object(addptr, leftobject, node, LEFTSIDE,
                        x, y, z, clipflag) ;

                if (!retval) {
                        Free(rightobject) ;
                        return 0 ;
                }
        }


        /*
         *  If there's something in the negative half of the
```

APPENDIX A

```
         *   plane, insert it in the right sub-tree.
         *  Again, if the insertion does not work, remove all parts.
         *   (And don't forget the possible partial object inserted on
         *   the left..)
         */
        if (rightobject) {
                retval - insert_object(addptr, rightobject, node, RIGHTSIDE,
                        x, y, z, clipflag) ;

                if (!retval) {
                        return 0 ;
                }
        }
        return 1 ;
}


/*********************************************************************
 *
 *   insert_object()
 *
 *  This is the 'what happens now' step in the object insertion process.
 *   insert_object() looks at the type of the current nodes and decides
 *   what is to be done from there.  (see comments below)  The return
 *   value tells whether the insertion was successful or not: 0-failed,
 *   1-success.
 *
 */
short insert_object(addptr, object, parent, side, x, y, z, clipflag)
        Addition *addptr ;
        Object *object ;
        Node *parent ;
        long side, x, y, z ;
        short clipflag ;
{
        extern Node *emptynode ;
        Node *child ;
        Node *newnode ;
        void long2scale(), scale2long() ;
        long dx, dy, dz ;
        long cx, cy, cz ;
        Olist *p ;
        short retval ;

        message(1, 14, "insert_object ", 0) ;

        /*
         *  Decide which side we're looking
         *   at, and set the child pointer
         *   and child offsets to the appropriate
         *   values..
         */
        if (side -- LEFTSIDE) {
                child - parent->leftchild ;
                cx - parent->lx << parent->lf ;
                cy - parent->ly << parent->lf ;
```

APPENDIX A

```
Nov 14 09:32 1991   move.c Page 6

                cz = parent->lz << parent->lf ;
        }
        else {
                child = parent->rightchild ;
                cx = parent->rx << parent->rf ;
                cy = parent->ry << parent->rf ;
                cz = parent->rz << parent->rf ;
        }

        /*
         * Three cases:
         *   1) child is an empty terminal node (an empty object)
         *   2) child is an intermediate node
         *   3) child is an occupied terminal node (an object)
         */

        /*
         * Case 1) child is an empty terminal node (an empty object)
         *   In this case, we want to insert the object here.  This involves
         *   simply swinging the pointer from the empty node to the object.
         */

        if (!child || (child == emptynode)) {

                if (side == LEFTSIDE) {
                        parent->leftchild = (Node *) object ;
                        long2scale(x, y, z,
                                &parent->lx, &parent->ly, &parent->lz, &parent->
                }
                else {
                        parent->rightchild = (Node *) object ;
                        long2scale(x, y, z,
                                &parent->rx, &parent->ry, &parent->rz, &parent->
                }

                /*
                 * Create an entry for this object
                 *   in the addition's temporary list,
                 *   called oadd.  This entry logs where
                 *   the object is inserted so it can
                 *   later be removed, if necessary..
                 */
                p = OlistCreate() ;
                p->parent = parent ;
                p->side = side ;
                OlistAdd(p, &addptr->oadd) ;
                return 1 ;
        }

        /*
         * Case 2) child is an intermediate node
         *   In this case we want to descend the tree.  This involves
         *   deciding which side of the partitioning plane the object
         *   should fall on (maybe both), and inserting the object in the
         *   appropriate sub-tree.  The object will have to be moved into
         *   the local coordinates of the sub-tree.
```

APPENDIX A

```
         *
         */

        if (!child->type) {
                if (side == LEFTSIDE) {
                        /*
                         * Change the coordinates from scaled
                         *   form to long int form..
                         */
                        scale2long(&dx, &dy, &dz,
                                parent->lx, parent->ly, parent->lz, parent->lf)
                        retval = place_in_tree(addptr, child, object,
                                        x-dx, y-dy, z-dz, clipflag) ;
                        return retval ;
                }
                else {
                        /*
                         * Change the coordinates from scaled
                         *.- form to long int form..
                         */
                        scale2long(&dx, &dy, &dz,
                                parent->rx, parent->ry, parent->rz, parent->rf)
                        retval = place_in_tree(addptr, child, object,
                                        x-dx, y-dy, z-dz, clipflag) ;
                        return retval ;
                }
        }

        /*
         * Case 3) child is an occupied terminal node (an object)
         *   In this case, the insertion might fail, if the volumes the
         *   two objects occupy overlap.
         */
        else {
                return(generate_node(addptr, object, x, y, z,
                                (Object *) child, cx, cy, cz, parent, side)) ;
        }
}

/*********************************************************************
 *
 * generate_node()
 *
 * usage:
 *   - addptr, a pointer to a Addition struct
 *   - object, pointer to an Object struct.  This is the "new object"
 *     which is being inserted
 *   - x, y, z, are object's coordinates in *parent's* coordinate space
 *   - child, pointer to an Object struct.  This is the "old object"
 *     caused the conflict in the first place
 *   - cx, cy, cz, child's coordinates, again in parent's coordinate space
 *   - parent, pointer to Node struct, the parent node of child, whose
 *     new child shall be the new node
 *   - side, on which the new node will be created
 *
 */
```

APPENDIX A

```
Nov 14 09:32 1991  move.c Page 8


short generate_node(addptr, object, x, y, z, child, cx, cy, cz, parent, side)
        Addition *addptr ;
        Object *object ;
        long x, y, z ;
        Object *child ;
        long cx, cy, cz ;
        Node *parent ;
        short side ;
{

        extern Node *emptynode ;
        long minx, maxx, miny, maxy, minz, maxz ;
        long cminx, cmaxx, cminy, cmaxy, cminz, cmaxz ;
        long i ;
        Node *newnode ;
        long vertices ;
        char *vertexlist ;
        Olist *p, *list, *prev ;
        Nlist *n ;

        long ox=0, oy=0, oz=0 ;
        short childside, objectside ;
        short planea=0, planeb=0, planec=0, planed=0 ;

        long testx, testy, testz ;

        message(1, 14, "generate_node ", 0) ;

        /*
         *  Allocate memory for a new node..
         */
        newnode = (Node *) malloc(sizeof(Node)) ;
        newnode->type = 0 ;
        newnode->leftchild = emptynode ;
        newnode->rightchild = emptynode ;
        newnode->sphere = parent->sphere ;
        newnode->scale = parent->scale ;
        newnode->dot_color = parent->dot_color ;

        /*
         *  Find minimum and maximum x, y, and z
         *    (relative to parent origin)
         */
        vertices = object->points ;
        vertexlist = (char *) &(object->points) + 2 ;

        /*
         *  Set mins and maxs to first vertex,
         *    then compare to rest.
         */
        maxx = minx = vertexlist[0] << vertexlist[3] ;
        maxy = miny = vertexlist[1] << vertexlist[3] ;
        maxz = minz = vertexlist[2] << vertexlist[3] ;

        for (i=1 ; i<vertices ; i++) {
                testx = vertexlist[i<<2] << vertexlist[(i<<2)+3] ;
                minx = min(minx, testx) ;
```

APPENDIX A

```
Nov 14 09:32 1991  move.c Page 9

            maxx - max(maxx, testx) ;

            testy - vertexlist[(i<<2)+1] << vertexlist[(i<<2)+3] ;
            miny - min(miny, testy) ;
            maxy - max(maxy, testy) ;

            testz - vertexlist[(i<<2)+2] << vertexlist[(i<<2)+3] ;
            minz - min(minz, testz) ;
            maxz - max(maxz, testz) ;
    }

    minx += x ; maxx += x ;
    miny += y ; maxy += y ;
    minz += z ; maxz += z ;

    /*
     * Find child minimum and maximum x, y, and z
     *    (relative to parent origin)
     */

    vertices - child->points ;
    vertexlist - (char *) &(child->points) + 2 ;

    /*
     * Set mins and maxs to first vertex,
     *    then compare to rest.
     */
    cmaxx - cminx - vertexlist[0] << vertexlist[3] ;
    cmaxy - cminy - vertexlist[1] << vertexlist[3] ;
    cmaxz - cminz - vertexlist[2] << vertexlist[3] ;

    for (i-1 ; i<vertices ; i++) {
            testx - vertexlist[i<<2] << vertexlist[(i<<2)+3] ;
            cminx - min(cminx, testx) ;
            cmaxx - max(cmaxx, testx) ;

            testy - vertexlist[(i<<2)+1] << vertexlist[(i<<2)+3] ;
            cminy - min(cminy, testy) ;
            cmaxy - max(cmaxy, testy) ;

            testz - vertexlist[(i<<2)+2] << vertexlist[(i<<2)+3] ;
            cminz - min(cminz, testz) ;
            cmaxz - max(cmaxz, testz) ;
    }

    cminx += cx ; cmaxx += cx ;
    cminy += cy ; cmaxy += cy ;
    cminz += cz ; cmaxz += cz ;

    /*
     * Now compare mins and maxs of child and
     *    object to be inserted.
     */
    if (cmaxx <- minx) {
            /*
             * Object is to east of child..
```

APPENDIX A

144

```
Nov 14 09:32 1991   move.c Page 10


                      */

              ox = cmaxx ;
              oy = y ;
              oz = z ;

              planea = 1 ;
              objectside = LEFTSIDE ;
              childside = RIGHTSIDE ;
      }
      else if (cminx >= maxx) {
              /*
               *  Object is to west of child..
               */

              ox = cminx ;
              oy = y ; .-
              oz = z ;

              planea = 1 ;
              objectside = RIGHTSIDE ;
              childside = LEFTSIDE ;
      }
      else if (cmaxy <= miny) {
              /*
               *  Object is to north of child..
               */

              ox = x ;
              oy = cmaxy ;
              oz = z ;

              planeb = 1 ;
              objectside = LEFTSIDE ;
              childside = RIGHTSIDE ;
      }
      else if (cminy >= maxy) {
              /*
               *  Object is to south of child..
               */

              ox = x ;
              oy = cminy ;
              oz = z ;

              planeb = 1 ;
              objectside = RIGHTSIDE ;
              childside = LEFTSIDE ;
      }
      else if (cmaxz <= minz) {
              /*
               *  Object is above child..
```

APPENDIX A

```
Nov 14 09:32 1991  move.c Page 11

                    */

            ox = x ;
            oy = y ;
            oz = cmaxz ;

            planec = 1 ;
            objectside = LEFTSIDE ;
            childside = RIGHTSIDE ;
    }

    else if (cminz >= maxz) {
            /*
             *  Object is below child..
             */

            ox = x ;
            oy = y ; .-
            oz = cminz ;

            planec = 1 ;
            objectside = RIGHTSIDE ;
            childside = LEFTSIDE ;
    }

    else {
            /*
             *  Object insertion fails.  (The objects overlap.)
             */

            Free(newnode) ;
            Free(object) ;
            object = NULL ;
            return 0 ;
    }

    /*
     *  If we're here, then the insertion will work.  Reset the
     *  "parent to newnode" offset to the value determined above.
     *  Then set the binary partitioning plane.
     */

    if (side == LEFTSIDE) {
            long2scale(ox, oy, oz,
                    &parent->lx, &parent->ly, &parent->lz, &parent->lf, 7) ;
            parent->leftchild = newnode ;
    }
    else {
            long2scale(ox, oy, oz,
                    &parent->rx, &parent->ry, &parent->rz, &parent->rf, 7) ;
            parent->rightchild = newnode ;
    }

    /* Construct plane.. */
    newnode->plane_a = planea ;
    newnode->plane_b = planeb ;
```

APPENDIX A

```
Nov 14 09:32 1991   move.c Page 12


        newnode->plane_c = planec ;
        newnode->plane_d = planed ;

        /*
         *  Insert objects into new places.
         *    Since we already have an entry
         *    for child in object list, we
         *    don't need to add it to oadd..
         */
        if (objectside == LEFTSIDE) {
                newnode->leftchild = (Node *) object ;
                long2scale(x-ox, y-oy, z-oz,
                        &newnode->lx, &newnode->ly, &newnode->lz, &newnode->lf,
        }
        else {
                newnode->rightchild = (Node *) object ;
                long2scale(x-ox, y-oy, z-oz,
                        &newnode->rx, &newnode->ry, &newnode->rz, &newnode->rf,
        }
        p = OlistCreate() ;
        p->parent = newnode ;
        p->side = objectside ;
        OlistAdd(p, &addptr->oadd) ;

        if (childside == LEFTSIDE) {
                newnode->leftchild = (Node *) child ;
                long2scale(cx-ox, cy-oy, cz-oz,
                        &newnode->lx, &newnode->ly, &newnode->lz, &newnode->lf,
        }
        else {
                newnode->rightchild = (Node *) child ;
                long2scale(cx-ox, cy-oy, cz-oz,
                        &newnode->rx, &newnode->ry, &newnode->rz, &newnode->rf,
        }

        /*
         *  Finally, determine if the static object that is being moved
         *    is already on addptr's olist or oadd list, and update its entry
         *    if necessary.
         */
        list = addptr->olist ;
        while (list) {
                prev = list ;
                list = list->next ;

                if ((prev->parent == parent) && (prev->side == side)) {
                        prev->parent = newnode ;
                        prev->side = childside ;
                        list = NULL ; /* break out of while */
                }
        }

        list = addptr->oadd ;
        while (list) {
                prev = list ;
                list = list->next ;
```

APPENDIX A

147

```
Nov 14 09:32 1991  move.c Page 13


                if ((prev->parent == parent) && (prev->side == side)) {
                        prev->parent = newnode ;
                        prev->side = childside ;
                        list = NULL ; /* break out of while */
                }
        }

        /*
         * Create an entry in the addition's
         * temporary node list.  This logs where
         * a new node is created so that it can
         * be removed later..
         */
        n = NlistCreate() ;
        n->parent = parent ;
        n->side = side ;
        n->childside = childside ;
        n->cx = cx ;
        n->cy = cy ;
        n->cz = cz ;
        NlistAdd(n, &addptr->nadd) ;

        /* Return successful.. */
        return 1 ;
}


/****************************************************************************
 *
 *  AdditionSet()
 *
 *  Takes the entries in oadd and adds them to olist.
 *  Takes the entries in nadd and adds them to nlist.
 *
 *  As an object is inserted, temporary entries are made in oadd
 *  and nadd.  When it is decided that the entire insertion worked,
 *  AdditionSet() is called and the temporary add entries and copies
 *  into the more permanent lists.
 */
void AdditionSet(addptr)
        Addition *addptr ;
{
        Nlist *nptr ;
        Nlist *list ;

        message(1, 14, "AdditionSet ", 0) ;

        OlistAdd(addptr->oadd, &addptr->olist) ;
        addptr->oadd = NULL ;

        NlistAdd(addptr->nadd, &addptr->nlist) ;
        addptr->nadd = NULL ;
}
```

APPENDIX A

```
Nov 14 09:32 1991   move.c Page 14


/*********************************************************************
 *
 *  AdditionClear()
 *
 *  Takes the entries in oadd and deallocates them.
 *  Takes the entries in nadd and deallocates them.
 *
 *  As an object is inserted, temporary entries are made in oadd
 *    and nadd.  When it is decided that the entire insertion did not
 *    work, AdditionClear() is called to clean out the add lists
 *    and remove the insertion from the database.
 */
void AdditionClear(addptr)
        Addition *addptr ;
{
        message(1, 14, "AdditionClear ", 0) ;

        OlistKill(&addptr->oadd) ;
        NlistKill(&addptr->nadd) ;
}



/*********************************************************************
 *
 *  AdditionKill()
 *
 *  Takes the entries in olist and deallocates them.
 *  Takes the entries in oadd and deallocates them.
 *  Takes the entries in nlist and deallocates them.
 *  Takes the entries in nadd and deallocates them.
 *
 *  When it is decided that insertions logged in an Addition struct
 *    should be removed, AdditionKill() takes them out.  Selective
 *    removal isn't currently possible; it's all or nothing.
 */
void AdditionKill(addptr)
        Addition *addptr ;
{
        message(1, 14, "AdditionKill ", 0) ;

        OlistKill(&addptr->olist) ;
        OlistKill(&addptr->oadd) ;
        NlistKill(&addptr->nlist) ;
        NlistKill(&addptr->nadd) ;
}


/*********************************************************************
 *
 *  NlistCreate()
 *
 *  Allocate memory for 1 Nlist entry, and return pointer to it.
 *    Nlists are log entries that store information about temporary
 *    nodes.
 */
Nlist *NlistCreate()
```

APPENDIX A

149

```
Nov 14 09:32 1991   move.c Page 15


{
        Nlist *n ;

        if (!(n - (Nlist *) malloc(sizeof(Nlist)))) {
                while (1) {
                        printsd(1, 8, "Out of memory, function NlistCreate ", 0)
                }
        }
        n->next - NULL ;
        return(n) ;
}


/********************************************************************
 *
 *  NlistKill()
 *
 *  Step through the passed Nlist, deleting the temporary nodes
 *    stored in the list and restoring the original node structure
 *    of the database.
 */
void NlistKill(list)
        Nlist **list ;
{
        Nlist *thisentry ;
        Node *parent, *tempnode ;
        extern Node *emptynode ;

        message(1, 14, "NlistKill ", 0) ;

        /*
         *  For each entry in the list:
         *    swing the parent pointer back to the original child
         *    set the offsets to the child back to their original values
         *    free the memory of the temporary node
         *    free the memory of the list entry
         */

        while (*list) {
                thisentry - *list ;
                *list - (*list)->next ;
                parent - thisentry->parent ;

                if (thisentry->side -- LEFTSIDE) {
                        tempnode - parent->leftchild ;

                        /* Swing the parent pointer back to the original child *
                        if (thisentry->childside -- LEFTSIDE) {
                                parent->leftchild - tempnode->leftchild ;
                        }
                        else {
                                parent->leftchild - tempnode->rightchild ;
                        }

                        /* Set the offsets to the child back to their original v
                        long2scale(thisentry->cx, thisentry->cy, thisentry->cz,
```

APPENDIX A

```
Nov 14 09:32 1991  move.c Page 16

                                        &parent->lx,
                                        &parent->ly,
                                        &parent->lz,
                                        &parent->lf, 7) ;

                        /* Free the memory of the temporary node */
                        free(tempnode) ;
                }

                else {
                        tempnode = parent->rightchild ;

                        /* Swing the parent pointer back to the original child *
                        if (thisentry->childside == LEFTSIDE) {
                                parent->rightchild = tempnode->leftchild ;
                        }
                        else {
                                parent->rightchild = tempnode->rightchild ;
                        }

                        /* Set the offsets to the child back to their original v
                        long2scale(thisentry->cx, thisentry->cy, thisentry->cz,
                                        &parent->rx,
                                        &parent->ry,
                                        &parent->rz,
                                        &parent->rf, 7) ;

                        /* Swing the parent pointer back to the original child *
                        free(tempnode) ;
                }

                /* Free the memory of the list entry */
                Free(thisentry) ;
        }
}


/*****************************************************************
 *
 * NlistAdd()
 *
 * Adds addthese to the beginning of list pointed
 *   to by listptr..
 */
void NlistAdd(addthese, listptr)
        Nlist *addthese ;
        Nlist **listptr ;
{
        Nlist *list ;
        Nlist *prev ;

        message(1, 14, "NlistAdd ", 0) ;

        if (*listptr == NULL) {
                *listptr = addthese ;
                return ;
```

APPENDIX A

```
Nov 14 09:32 1991   move.c Page 17

        }

        /*
         *  Find end of addthese node list.
         */
        list = addthese ;
        while (list) {
                prev = list ;
                list = list->next ;
        }

        /*
         *  Tack the addthese list onto the end of the tothese list.
         */
        prev->next = *listptr ;
        *listptr = addthese ;
}


/*****************************************************************
 *
 *  NlistLength()
 *
 *    returns the number of entries in an Nlist..
 */
long NlistLength(list)
        Nlist *list ;
{
        long l=0 ;

        while(list) {
                l++ ;
                list = list->next ;
        }

        return l ;
}


/*****************************************************************
 *
 *  OlistCreate()
 *
 *  Olists are log entries that store information about temporary
 *    objects.
 */
Olist *OlistCreate()
{
        Olist *p ;
        if (!(p = (Olist *) malloc(sizeof(Olist)))) {
                while (1) {
                        printsd(1, 8, "Out of memory, function OlistCreate ", 0)
                }
        }
        p->parent = NULL ;
        p->next = NULL ;
```

APPENDIX A

152

```
Nov 14 09:32 1991   move.c Page 18


        return(p) ;
}


/***********************************************************
 *
 *  OlistKill()
 *
 */
void OlistKill(list)
        Olist **list ;
{
        Olist *thisentry ;
        extern Node *emptynode ;

        message(1, 14, "OlistKill ", 0) ;

        /*
         *  For each entry in the list:
         *    free the memory of the parent's appropriate child
         *    swing that pointer to the empty node
         *    free the memory of the list entry
         */

        while (*list) {
                thisentry = *list ;
                *list = (*list)->next ;

                if (thisentry->side == LEFTSIDE) {
                        Free(thisentry->parent->leftchild) ;
                        thisentry->parent->leftchild = emptynode ;
                }
                else {
                        Free(thisentry->parent->rightchild) ;
                        thisentry->parent->rightchild = emptynode ;
                }
                Free(thisentry) ;
        }
}


/***********************************************************
 *
 *  OlistPermanent()
 *
 *  This function takes an Olist and essentially makes the temporary
 *    objects stored in the list and makes them permanent.  Once this
 *    is called, the objects may not be removed from the database..
 */
void OlistPermanent(list)
        Olist **list ;
{
        Olist *thisentry ;

        /*
         *  For each entry in the list:
```

APPENDIX A

153

```
Nov 14 09:32 1991  move.c Page 19


        *   free the memory of the list entry
        */

        while (*list) {
                thisentry = *list ;
                *list = (*list)->next ;

                Free(thisentry) ;
        }
}



/************************************************************
 *
 *   OlistAdd()
 *
 *   Adds addthese to the end of list pointed to by listptr..
 */
void OlistAdd(addthese, listptr)
        Olist *addthese ;
        Olist **listptr ;
{
        Olist *list ;
        Olist *prev ;
        Olist *original ;

        message(1, 14, "OlistAdd ", 0) ;

        if (*listptr == NULL) {
                *listptr = addthese ;
                return ;
        }

        /*
         *   Find end of listptr object list.
         */
        list = *listptr ;
        while (list) {
                prev = list ;
                list = list->next ;
        }

        /*
         *   Tack the addthese list onto the end of the tothese list.
         */
        prev->next = addthese ;



/************************************************************
 *
 *   OlistLength()
 *
 *   returns the number of entries in an Olist..
 */
long OlistLength(list)
```

APPENDIX A

154

```
Nov 14 09:32 1991  move.c Page 20

        Olist *list ;
{
        long l=0 ;

        while(list) {
                l++ ;
                list = list->next ;
        }

        return l ;
}


/*****************************************************************
 *
 *  ObjectMoveCentroid() :  Modify the relative position of the
 *    object points.  May only be used if all current object relations
 *    are maintained.  (i.e., if the object were removed and reinserted,
 *    it would end up in the same place.)  This code is basically
 *    unchanged from J. Courtney's version.
 *
 */
void ObjectMoveCentroid(object, dx, dy, dz)
        Object *object;
        long dx, dy, dz;
{
        void long2scale();
        void scale2long();
        short points;
        char *ptr;
        char *bbox;
        long i;

        /* Find the number of points in the object */
        points = object->points;

        /* For each point */
        for (i=0; i<points; i++) {
                long x, y, z;

                /* Point ptr to the current point */
                ptr = (char*)&object->points + 2 + i*4;

                /* Scale them to usable values */
                scale2long (&x, &y, &z, ptr[0], ptr[1], ptr[2], ptr[3]);
                x -= dx;
                y -= dy;  /* Move 'em */
                z -= dz;
                /* Put 'em back */
                long2scale(x, y, z, ptr+0, ptr+1, ptr+2, ptr+3, 7);
        }

        /* If bounding box data is present */
        if (object->bb_disp) {
                long x, y, z;
```

APPENDIX A

155

```
            /* Point bbox to start of data */
            bbox = (char*) ((short*)&object->bb_disp + object->bb_disp);

            /* While there is still bbox data */
            while(*(short*)bbox) {
                    ptr = bbox + 4;

                    /* Move the two points as done before */
                    for (i=0; i<2; ptr+=4, i++) {
                            scale2long (&x, &y, &z, ptr[0], ptr[1], ptr[2],
                            x -= dx;
                            y -= dy;
                            z -= dz;
                            long2scale(x, y, z, ptr+0, ptr+1, ptr+2, ptr+3,
                    }

                    bbox += 12;
            }
    }
}


/*******************************************************************
 *
 *  ObjectClip()
 *
 *   requires:
 *     That the polygons making up the object have sides parallel to
 *     the world axes.  (i.e., the object is rectilinear.)
 *     why:
 *     Calculations are almost trivial if everything is parallel and
 *     normal.  Realtime clipping and object insertion rely on this
 *     constraint.
 *
 *   modifies:
 *     nothing
 *
 *   effects:
 *     This function returns an object containing only those polygons
 *     on the positive side of the passed plane.  If the entire object
 *     is on the positive side, the original pointer is returned.  If
 *     none of the object is on the positive side, a NULL pointer is
 *     returned.
 *
 *     In any case, the original object is not changed.  If the original
 *     object does need to be clipped, only then will the necessary
 *     memory be allocated.
 *
 *     This implementation "shortens" objects so that they fit on the
 *     positive side of the passed plane.  If a cube object straddles a plane,
 *     one polygon will be completely in the positive side, one completely
 *     in the negative side, and four will pass through the plane.  This
 *     algorithm simply shortens the object so that the polygon in the
 *     negative half is moved up to the plane (at 0), and the polygons
 *     passing through the plane will be shortened.  Any "negative polygon"
 *     (i.e., one whose vertices are *all* negative) has its color set
```

APPENDIX A

```
Nov 14 09:32 1991  move.c Page 22

 *        to INVISIBLE, so that it is not drawn.
 *
 *        A more robust algorithm would get rid of the "negative polygon"
 *        entirely, but then again a more robust algorithm would also handle
 *        non-rectilinear objects.  However, the speed of this algorithm is
 *        critical.
 *
 */
Object *ObjectClip(object, x, y, z, a, b, c, d)
        Object *object ;
        long x, y, z ;
        short a, b, c, d ;
{
        Object *ObjectCopy() ;
        long vertices ;
        char *vertexlist ;
        register int i ;

        short *ptr ;
        short *color ;

        short reverseflag-0 ;
        short countclips-0 ;
        short inplane-0 ;

        short clipped[MAXVERTS] ;

        Object *cobject ;
        long offset, vertex ;

        /*
         *    vertices is the number of points in the object
         *    vertexlist is an array of those points, ordered as follows:
         *        x : vertexlist[4*n]
         *        y : vertexlist[4*n + 1]
         *        z : vertexlist[4*n + 2]
         *        f : vertexlist[4*n + 3]
         *      where n is an integer >- 0.
         *    offset if how far away from the origin the plane is
         *    vertex is which vertex, x y or z, should be clipped
         */

        cobject - ObjectCopy(object) ;

        vertices - cobject->points ;
        vertexlist - (char *) &(cobject->points) + 2 ;

        /*
         *  If there are more than MAXVERTS
         *    vertices, don't try to clip..
         */
        if (vertices>MAXVERTS) return ;

        /*
         *  Clip against the proper plane.
         *
```

APPENDIX A

```
         *
        */

        /* E/W division.  Clip object to x-offset plane. */
        if (a && !b && !c) {
                offset = -d/a - x ;
                vertex = XVAL ;
                if (a<0) reverseflag=1 ;
        }

        /* N/S division.  Clip object to y-offset plane. */
        if (!a && b && !c) {
                offset = -d/b  - y ;
                vertex = YVAL ;
                if (b<0) reverseflag=1 ;
        }

        /* Up/Down division.  Clip object to z-offset plane. */
        if (!a && !b && c) {
                offset = -d/c - z ;
                vertex = ZVAL ;
                if (c<0) reverseflag=1 ;
        }

        /*
         *  This function is set up to clip objects to
         *   the positive side of planes whose coeff's
         *   are positive.  If the plane's coeff's are
         *   negative, the positive and negative sides
         *   switch.  Hence the reverseflag case..
         */

        /*
         *  Keep track of the number of vertices which
         *   are clipped.  Vertices directly in the plane
         *   are a special case, so keep a separate count
         *   of them.  They may be counted as clipped or
         *   unclipped, as described below.
         */

        if (!reverseflag) {
                for (i=0 ; i<vertices ; i++) {
                        if (vertexlist[i*4 + vertex] < offset) {
                                vertexlist[i*4 + vertex] = offset ;
                                clipped[i] = 1 ;
                                countclips++ ;
                        }
                        else if (vertexlist[i*4 + vertex] == offset) {
                                inplane++ ;
                                clipped[i] = 0 ;
                        }
                        else clipped[i] = 0 ;
                }
        }
        else {
                for (i=0 ; i<vertices ; i++) {
```

APPENDIX A

```
Nov 14 09:32 1991  move.c Page 24

                    if (vertexlist[i*4 + vertex] > offset) {
                            vertexlist[i*4 + vertex] - offset ;
                            clipped[i] - 1 ;
                            countclips++ ;
                    }
                    else if (vertexlist[i*4 + vertex] -- offset) {
                            inplane++ ;
                            clipped[i] - 0 ;
                    }
                    else clipped[i] - 0 ;
            }
    }

    /*
     *  If all of the vertices were clipped or in
     *   the plane, then none of the object fits
     *   in the positive side of the plane.  Return
     *   NULL.
     */
    if ((countclips + inplane) -- vertices) {
            Free(cobject) ;
            return(NULL) ;
    }

    /*
     *  If nothing was clipped, then all of the original
     *   object fits in the positive side of the plane.
     *   Return the pointer to the original object..
     */
    else if (!countclips) {
            Free(cobject) ;
            return(object) ;
    }

    /*
     *  Else part of object is on either side of the plane.
     *   Return a pointer to the partial object..
     */
    else {
            /* Move the ptr to the beginning of face list.. */
            ptr - (short *) ((char*)&cobject->points + 2 + 4*vertices) ;

            /*
             *  Now step through the face list,
             *   looking for faces which had all
             *   vertices clipped.  Set the color
             *   of these faces to be INVISIBLE.
             *   (They should no longer be seen.)
             */
            while (*ptr) {
                    countclips-0 ;
                    vertices - *ptr++ ;
                    color - ptr++ ;

                    for (i-0 ; i<vertices ; i++) {
                            if (clipped[*ptr++]) countclips++ ;
```

APPENDIX A

```
Nov 14 09:32 1991  move.c Page 25

                                }

                        if (countclips -- vertices) *color - INVISIBLE ;
                }

                return(cobject) ;
        }
}


/*******************************************************************
 *
 *  ObjectCopy()
 *
 *    requires:
 *      The passed object is a legitimate object.
 *
 *    effects:
 *      Determines the size of the passed object, allocates enough
 *      memory to hold a copy of it, copies the data, and returns
 *      a pointer to the new object.
 */
Object *ObjectCopy(object)
        Object *object ;
{
        long ObjectSize() ;
        long size ;
        Object *newobject ;
        extern Node *rootnode ;
        extern Node *emptynode ;

        size - ObjectSize(object) ;
        if (!(newobject - (Object *) malloc(size))) {
                while (1) {
                        printsd(1, 7, "Out of memory, function ObjectCopy ", siz
                }
        }

        memcpy(newobject, object, size) ;

        return(newobject) ;
}


/*******************************************************************
 *
 *  ObjectSize :  Finds the size of an object, given a pointer to it.
 *    value is in bytes.
 */
long ObjectSize(ob)
        Object *ob;
{
        short points ;
        short *ptr ;
        long base ;
        long size ;
```

APPENDIX A

160

```
Nov 14 09:32 1991  move.c Page 26

        long inc ;

        /* If no bounding box data... */
        if (!ob->bb_disp) {

                /* Get the number of points in the object */
                points = ob->points ;
                /* Move the ptr to the end of the point list */
                ptr = (short*) ((char*)&ob->points + 2 + 4*points) ;
                /* Calculate the "base" size of the object */
                base = (long) ((char*)ptr - (char*)ob) ;

                /*
                 *  Now calculate the size of the polygon list.  The
                 *   list is terminated with a "short" zero
                 */
                size = 0 ;
                while (*ptr) {
                        inc = 4 + 2 * *ptr ;
                        size += inc ;
                        ptr = (short*) ((char*) ptr + inc) ;
                }

                return(base + size + 2) ;
        }
        else {
                /*
                 *  There is a bounding box.  Calculate object size using it,
                 *   assuming that the object data is contiguous; i.e., there
                 *   is no unwanted data in between the polygon data and
                 *   the bounding box.
                 */

                /* Move the ptr to the beginning of the bounding box data */
                ptr = (short*)&ob->bb_disp + ob->bb_disp ;
                /* Calculate the base size of the object. */
                base = (long) ((char*)ptr - (char*)ob) ;

                /*
                 *  Now calculate the size of the bounding box list.  Each
                 *   list is 12 bytes long, and is terminated by a "short" zero.
                 */
                size = 0 ;
                while (*ptr) {
                        size += 12 ;
                        ptr = (short*)((char*) ptr + 12) ;
                }

                return(base + size + 2) ;
        }
}

/* ......********************************************************************
 *
 * distance_from_plane :  Given x,y,z, finds distance from plane a,b,c,d
```

APPENDIX A

161

```
 *
 */
long distance_from_plane(x, y, z, a, b, c, d)
        long x, y, z ;
        short a, b, c, d ;
{
        float r ;
        float aa, bb, cc, dd ;
        long dist ;

        /*
         * Optimize for the typical case (no sqrts needed..)!
         */
        if (a && !(b | c | d))
                return(x) ;

        if (b && !(a | c | d))
                return(y) ;

        if (c && !(a | b | d))
                return(z) ;

        /*
         * Otherwise we have a kind of complicated plane, here..
         */
        r = sqrt((double)(a*a + b*b + c*c)) ;
        aa = a / r ;
        bb = b / r ;
        cc = c / r ;
        dd = d / r ;

        /* Find the distance of the point from the plane */
        dist = (long) (aa*(float)x + bb*(float)y + cc*(float)z + dd) ;

        return(dist) ;
}


/**************************************************************************
 *
 *   make_vector() :  Calculates a vector, direction <a,b,c> of length dist
 *    Not currently used in any functions..
 *
 */
void make_vector(x, y, z, a, b, c, dist)
        long *x, *y, *z ;
        short a, b, c ;
        long dist ;
{
        float r ;
        float aa, bb, cc ;

        /* Normalize the plane coefficients */
        r = sqrt((double)(a*a + b*b + c*c)) ;
        aa = a / r ;
        bb = b / r ;
```

APPENDIX A

```
nov 14 09:32 1991  move.c Page 28


        cc = c / r ;

        /* Calculate the vector */
        *x = (long) (aa * (float)dist) ;
        *y = (long) (bb * (float)dist) ;
        *z = (long) (cc * (float)dist) ;
}


/***********************************************************************
 *
 *  scale2long() :  Takes values with scaling factors and expands them
 *
 */
void scale2long(xx, yy, zz, x, y, z, f)
        long *xx, *yy, *zz ;
        char x, y, z, f ;
{

        *xx = abs(x) << f ;
        *yy = abs(y) << f ;
        *zz = abs(z) << f ;

        *xx = (x < 0) ? -*xx : *xx ;
        *yy = (y < 0) ? -*yy : *yy ;
        *zz = (z < 0) ? -*zz : *zz ;
}


/***********************************************************************
 *
 *  long2scale :  Scales down the x,y,z to fit their bit fields
 *
 */
void long2scale(ox, oy, oz, x, y, z, f, size)
        long ox, oy, oz ;
        char *x, *y, *z, *f ;
        long size ;
{

        long val ;
        long highbit ;

        val = abs(ox) | abs(oy) | abs(oz) ;

        /* What is the highest bit-position of the three values? */
        for (highbit=0 ; val ; val>>=1, highbit++) ;

        /* If the highest position is > than the field size, scale it */
        if (highbit > size) *f = highbit - size ;
        else *f = 0 ;

        /* Scale the values down */
        *x = abs(ox) >> *f ;
        *y = abs(oy) >> *f ;
        *z = abs(oz) >> *f ;

        /* Make 'em negative if need be */
```

APPENDIX A

```
Nov 14 09:32 1991   move.c Page 29

        *x = (ox < 0) ? -*x : *x;
        *y = (oy < 0) ? -*y : *y;
        *z = (oz < 0) ? -*z : *z;
}
```

APPENDIX A

```
Nov 14 09:32 1991   print.c  Page 1


#include <string.h>
#include "controls.h"

/* Define target board. */
#define CDB      1           /* 0 - SDB, 1 - CDB or flippy card */

/* Define system-dependent constant parameters. */
#if CDB
#define CRTWIDE 332          /* width of screen                      */
#define CRTHIGH 218          /* height of screen                     */
#define RAD     181          /* viewport half diagonal length        */
#else
#define CRTWIDE 448          /* width of screen                      */
#define CRTHIGH 480          /* height of screen                     */
#define RAD     303          /* viewport half diagonal length        */
#endif

#define BLACK      0x0000
#define WHITE      0x4444

#define XWIDE 10
#define YHIGH 15

void printsd(x, y, s, d)
        int x, y ;
        char *s ;
        int d ;
{
        char string[60] ;
        char stringd[60] ;

        setxyorg(0, 0);
        setwindow(CRTWIDE, CRTHIGH, 0, 0);
        set_color0(BLACK);
        set_color1(WHITE);

        strcpy(string, s) ;

        ltoa((long) d, stringd) ;
        strcat(string, stringd) ;

        draw_string(x*XWIDE, y*YHIGH, string) ;
}


void message(x, y, s, d)
        int x, y ;
        char *s ;
        int d ;
{
/*
        printsd(x, y, s, d) ;
        debounce(CONTINUE) ;
        while (get_command() -- 0) ;
*/
}



                                APPENDIX A
```

165

```
Nov 14 09:32 1991   render.c Page 1


/*          (c) Copyright 1991, Texas Instruments Incorporated
 *-----------------------------------------------------------------------
 *
 *                        3D VRSys software
 *
 *     This file contains all functions to initialize the 340 graphics
 *  environment, and to draw the scene and other information to the
 *  screen.  Basically, most of the functions that draw anything are
 *  here.
 *
 *-----------------------------------------------------------------------
 * History:
 *      07/13/90...Original version written...................J. Courtney
 *      06/13/91...extensive modifications by CAC.............C. A. Crane
 *-----------------------------------------------------------------------
 */

#include "gspregs.h"      /* GSP register names */
#include "clipvals.h"     /* CLIPVALS viewport clipping parameters */
#include "vupoint.h"      /* VIEWPOINT orientation and position */
#include "define.h"       /* define misc. constants */

#define PAGEFLIP        1 /* 0-noflip, 1-flip */

/* Define target board. */
#define CDB       1              /* 0 - SDB, 1 - CDB or flippy card */

/* Define system-dependent constant parameters. */
#if CDB
#define CRTWIDE 332             /* width of screen                  */
#define CRTHIGH 218             /* height of screen                 */
#define RAD     181             /* viewport half diagonal length    */
#else
#define CRTWIDE 448             /* width of screen                  */
#define CRTHIGH 480             /* height of screen                 */
#define RAD     303             /* viewport half diagonal length    */
#endif

/* 3D viewport clipping parameters for window */
#define IPHT    72              /* height of lower panel            */
#define D       CRTWIDE         /* z plane of screen                */
#define N       4               /* z "near" or "hither" clipping plane */
                                /* N was 8, originally.. */
#define SX      (CRTWIDE/2) /* half width of 3D scene viewport       */
#define SY      ((CRTHIGH-IPHT)/2)  /* half height of 3D viewport    */
#define CX      SX              /* screen x coord. at viewport center */
#define CY      SY              /* screen y coord. at viewport center */
#define BUFSIZE 32              /* max. no. clipped polygon vertices  */

/* Define dimensions of lower panel and individual meters */
#define XCTR    (CRTWIDE/2-HSPACE/2)   /* x center of horizon meter  */
#define YCTR    (SY+CRTHIGH/2)         /* y center of horizon meter  */

/* Distance checking parameters for 3D objects */
#define RMIN    2               /* min. radius at which object is visible */
```

APPENDIX A

166

```
Nov 14 09:32 1991   render.c Page 2


#define RDOT    4               /* radius at which object is size of pixel*/
#define RNPC    128             /* radius at which NO preclipping needed  */

typedef enum { FIELDWIDTH - 1 } BIT;

extern unsigned short waitdraw;     /* video page flip flag */
extern short map_palet[];           /* color palette for 3D map */
extern short skycolor, earthcolor;  /* horizon colors */
extern short suncolor;              /* color of sun in sky */
extern char *rootnode;              /* root node of 3D object tree */

/* Globally accessible viewport clipping parameters */
long bufr[2][3*BUFSIZE];
CLIPVALS vpclip = {
        D,   N,   { SX, SY },   { CX, CY },
        { (D<<18)/SX, (D<<18)/SY },  { bufr[0], bufr[1] }, RAD
};
/* Globally accessible distance checking parameters for 3D objects */
short ztest[3] = {
        D / RMIN - 1,     /* kvis:  Is object too distant to be visible?  */
        D / RDOT - 1,     /* kdot:  Is object so distant it's just a dot? */
        D / RNPC - 1,     /* knpc:  Is object too small to need preclip?  */
};

short heap[16384];    /* storage for transform and display lists */

extern int score ;

extern VIEWPOINT view ;

/*************************************************************************
 *
 *  pixarray test code
 *
 */

extern short cacpal[] ;

/*************************************************************************
 *
 *  render():
 *
 */
void render(trigvals, collision)
        long *trigvals ;
        int collision ;
{
        extern int testval0 ;
        extern int testval1 ;
        extern int testval2 ;
        extern short *dbinterp();   /* 3D database interpreter function */
        short *p;                   /* display list pointer */
        int i ;

        /*
         * Clear lower panel..
```

APPENDIX A

```
Nov 14 09:32 1991   render.c Page 3


        */
        setxyorg(0, 0) ;
        setwindow(CRTWIDE, CRTHIGH, 0, 0) ;
        set_colorl(0);   /* border around panel */
        fill_rect(CRTWIDE, CRTHIGH-2*SY, 0, 2*SY);

        message(1, 14, "render ", 0) ;

        /* Construct display list for next frame. */
        p = dbinterp(rootnode, heap);
        xfrmlist(heap, p);
        setxyorg(0, 0);
        setwindow(2*SX, 2*SY, 0, 0);

#if PAGEFLIP
        while (pagebusy())      /* wait until drawing buffer available */
        ;
#endif

        /* Draw display list to screen. */
        horizonl(trigvals, earthcolor, skycolor);
        /* vegas_horizon(trigvals) ; */
        sun(&view, RSUN, suncolor);
        displist(p);

        /* If collision is in progress, simulate explosive impact. */
        if (collision) {
                set_colorl(suncolor);
                fillcircle((4 - collision)*(SX/4), SX, SY);
        }

        printsd(10, 11, "TIME: ", testval0) ;
/*      printsd(10, 12, "test1: ", testval1) ;
        printsd(10, 13, "test2: ", testval2) ;
*/
        printsd(1, 11, "x: ", view.xyz[0]>>8) ;
        printsd(1, 12, "y: ", view.xyz[1]>>8) ;
        printsd(1, 13, "z: ", view.xyz[2]>>8) ;

        /*
         * Uncomment this block to dislay the palet in the lower panel..
         */
/*      for (i=0 ; i<16 ; i++) {
                set_colorl(i * 0x1111);
                fillcircle(SX>>5, ((i*SX)>>4) + SX, CRTHIGH-(SX>>5));
        }
*/
#if PAGEFLIP
        pageflip();      /* schedule swap of draw and display buffers */
#endif
}


void init_graphics(trigvals)
        long *trigvals ;
```

APPENDIX A

```
Nov 14 09:32 1991   render.c Page 4

        int i, x ;

        /* Set up video timing, graphics environment and screen. */
        init_video(1) ;
#if CDB
        init_mode(2, 2, 1);
#else
        init_mode(6, 2, 0);
#endif
        init_grafix();
    init_vuport();
        install_isrv();
        init_text();
        clear_lores(0);

    view_params(&view, trigvals);

        for (i = 1; i >= 0; --i) {    /* Initialize frame buffers 0 and 1. */
                set_pages(i, i);

                /* Initialize view horizon at top of screen. */
                /* init_palette(0, 2*SY, map_palet); */
                init_palette(0, 2*SY, cacpal);
                /* vegas_horizon(trigvals) ; */
                horizonl(trigvals, earthcolor, skycolor) ;

                /* Initialize panel at bottom of screen. */
                setxyorg(0, 0) ;
                setwindow(CRTWIDE, CRTHIGH, 0, 0) ;
                init_palette(2*SY, CRTHIGH-2*SY, cacpal);
                set_colorl(0);   /* border around panel */
                fill_rect(CRTWIDE, CRTHIGH-2*SY, 0, 2*SY);

        }
}


/*-------------------------------------------------------------
 *
 *
 *
 *-------------------------------------------------------------
 */


/*-------------------------------------------------------------
 *
 *            Draw sun at 12:00 noon position in sky
 *
 * Clipping rectangle must be set to cockpit window limits prior to
 * calling this routine.
 *-------------------------------------------------------------
 */
#define UZMIN    1024

sun(view, radius, color)
```

APPENDIX A

```
Nov 14 09:32 1991   render.c Page 5


        VIEWPOINT *view;
        int radius;
        long color;
{

        long x, y, uz, vz, wz;

        if ((uz - view->w[2]>>15) > UZMIN) {
                vz - view->u[2] >> 15;
                wz - view->v[2] >> 15;
                x - vpclip.d * vz / uz;
                y - vpclip.d * wz / uz;
                if ((abs(x) < vpclip.scale[0] + radius)
                && (abs(y) < vpclip.scale[1] + radius)) {
                        set_color1(color);
                        fillcircle(radius, x+CX, y+CY);
                }
        }
}


/* Blends for the signs: aqua and gold */


#define HB_R 5 * 16
#define HB_G 4 * 16
#define HB_B 3 * 16
#define LB_R 14 * 16
#define LB_G 11 * 16
#define LB_B 8 * 16
#define S_R  10 * 16
#define S_G  13 * 16
#define S_B  15 * 16
#define LAST_LINE  2 * SY
#define STREETCOLOR_BLEND 0
#define BACKCOLOR_BLEND    15
#define BACKCOLOR          0xFFFF
#define INFINITY 1000000

vegas_horizon(trigvals)
        long *trigvals;
{

        char *s;
        int    horizon_level;
        long tan_pitch, horizon_offset;

        setxyorg(0, 0);
        setwindow(CRTWIDE, LAST_LINE, 0, 0);
        init_palette(0, 2*SY, cacpal);

        if (trigvals[2] -- 0) tan_pitch - INFINITY;
        else tan_pitch - fixdiv(trigvals[3]>>16,trigvals[2]>>16,16);

        horizon_offset - (D * tan_pitch) >> 16;
        if ((horizon_level - (SY + horizon_offset)) > LAST_LINE)
                horizon_level - LAST_LINE;
        else if (horizon_level < 0) horizon_level - 0;
```

APPENDIX A

```
Nov 14 09:32 1991   render.c Page 6


        if (horizon_level > 0)
                color_blend(BACKCOLOR_BLEND, 0, horizon_level,
                        0, 0, 14 * 16,
                        12 * 16, 4 * 16, 7 * 16);
        if (horizon_level < LAST_LINE) {
                color_blend(BACKCOLOR_BLEND, horizon_level + 1, LAST_LINE,
                        HB_R, HB_G, HB_B,
                        LB_R, LB_G, LB_B);
/*
                color_blend(STREETCOLOR_BLEND, horizon_level + 1, LAST_LINE,
                        30, 30, 30,
                        S_R, S_G, S_B);
*/
        }

        set_colorl(BACKCOLOR) ;
        fill_rect(CRTWIDE, -LAST_LINE, 0, 0);

}

/***************************************************************************
 *
 *   draw_stamp()
 *
 *   The arguments passed to draw stamp are:
 *    vptr:  pointer to a vertex list.  order of vertices: x0, y0, x1, y1
 *    vcount:  number of vertices (should be 2 for now)
 *    color:  the "color" of this stamp.  Should be used as an index
 *       into a table or some other similar scheme
 *
 *   NOTE:  The code below is only test code.  The Math/Graphics Library
 *    zoom_rect() function didn't do any bounds checking on the screen and
 *    also didn't handle transparency right, so for testing purposes I
 *    simply used a colored rectangle.  The two control points should be
 *    used to position and size bitmaps just as the colored rectangle is.
 *
 */
void draw_stamp(vptr, vcount, color)
        short *vptr ;
        char vcount ;
        short color ;
{
        int x0, y0, x1, y1, dist ;
        int pitch ;

        x0 = (*vptr) >> 2 ;
        y0 = (*(vptr + 1)) >> 2 ;
        x1 = (*(vptr + 2)) >> 2 ;
        y1 = (*(vptr + 3)) >> 2 ;

        dist = y0 - y1 ;
        if (dist < 0) dist = -dist ;

        /* TRANSPARENCY ENABLED */
        transp_off() ;
```

APPENDIX A

171

```
Nov 14 09:32 1991   render.c Page 7


        set_colorl(suncolor);

        fill_rect(dist, dist, x1-dist/2, y1) ;

        return ;
}
```

APPENDIX A

```
Nov 14 09:32 1991   scene.c Page 1



/*          (c) Copyright 1991, Texas Instruments Incorporated
 *------------------------------------------------------------
 *
 *                       3D VRSys software
 *
 *     Database manipulation main module.  move_scenes() cleans out
 *  old versions of moving objects, and calls various functions that
 *  increment their positions and reinsert them in the database.
 *
 *
 *
 *
 *
 *.
 */

#include <stdlib.h>
#include <string.h>
#include <math.h>
#include "vupoint.h"
#include "move.h"
#include "controls.h"
#include "define.h"

extern int testval0, testval1, testval2 ;


Addition sceneadd1 ;
Addition sceneadd2 ;

void init_scenes()
{
        sceneadd1.olist = NULL ;
        sceneadd1.oadd = NULL ;
        sceneadd1.nlist = NULL ;
        sceneadd1.nadd = NULL ;

        sceneadd2.olist = NULL ;
        sceneadd2.oadd = NULL ;
        sceneadd2.nlist = NULL ;
        sceneadd2.nadd = NULL ;

        init_scene0() ;
        init_scene1() ;
        init_bullet() ;

}


/* Move_scenes :  Updates the position of the MO's */
void move_scenes()
{
        void move_scene0() ;
        void move_scene1() ;
        void move_bullet() ;
```

APPENDIX A

```
ov 14 09:32 1991   scene.c Page 2


        /*
         *  Wipe out any temporary objects
         *   and nodes.  Additions must be
         *   killed in OPPOSITE order of which
         *   they are inserted!
         */
        AdditionKill(&sceneadd2) ;
        AdditionKill(&sceneadd1) ;

        /*
         *  Move any moving objects to
         *   their new positions.  (And
         *   possibly add them into the
         *   database.)
         */
        move_scene0() ;
        move_scene1() ;
        move_bullet() ;
}


/* Bbox_handler :  Reacts according to the bounding box violated */
bbox_handler(viewp, status)
        VIEWPOINT *viewp ;
        int status;

{

        int newx,newy;
        short rx,ry;
        switch(status) {

                case 3: /* Inside the Blue Cube.. */
                debounce(RESET) ;
                newx = ORIGX - MAZEHALFSIZE - (rand() % 50) - 10;
                newy = ORIGY + MAZEHALFSIZE + (rand() % 200) + 10;
                viewp->xyz[0] = newx << 8; /* init_system(viewp) ; */
                viewp->xyz[1] = newy << 8;
                /* init_graphics() ; */
/*              collide = 0; */
                break ;


                case 6: /* Hit a pyramid...*/
                debounce(RESET);
                rx = (int) rand() % 5;
                ry = (int) rand() % 5;
                if ((rx == 2) && (ry == 1)) ry = 0;
                if ((rx == 4) && (ry == 4)) rx = 3;
                newx = ORIGX - (MAZEHALFSIZE - WALLW - WALLL) +
                                (rx * 2 * (WALLW + WALLL));
                newy = ORIGY + (MAZEHALFSIZE - WALLW - WALLL) -
                                (rx * 2 * (WALLW + WALLL));
/*
                newx = ORIGX - MAZEHALFSIZE + (rx * 2 * (WALLW + WALLL))
                                        + (WALLW + WALLL);
```

APPENDIX A

174

```
nov 14 09:32 1991   scene.c Page 3

                newy = ORIGY + MAZEHALFSIZE - (ry * 2 * (WALLW + WALLL)) .
                                           - (WALLW + WALLL);
*/
                /* newx = -111;
                   newy = 325; */
                viewp->xyz[0] = newx << 8;
                viewp->xyz[1] = newy << 8;

                break;
        }
}
```

APPENDIX A

```
Nov 14 09:32 1991  scene0.c Page 1


#include <stdlib.h>
#include "move.h"

#include "vupoint.h"        /* VIEWPOINT orientation and position */
extern VIEWPOINT view ;
extern Addition sceneadd1 ; /* declared in scene.c */
extern Addition sceneadd2 ; /* declared in scene.c */

int bx=220 ;
int by=-220 ;

void init_scene0()
{
        extern Node *rootnode ;
}

void move_scene0()
{
        extern Node *rootnode ;
        extern Object *bluecube ;
        extern Object *stobj ;

        int index ;

        static int step = 7 ;

        static int bx = 220; /* 544 ; */
        static int by = -160; /* 512 ; */
        static int bdx = -7 ;
        static int bdy = 0;

        if (bx > 220) bdx = -7;
        if (bx < -220) bdx = 7;

        index = rand();

        bx += bdx ;
        by += bdy ;

        if (!AdditionInsert(&sceneadd2, rootnode, bluecube, bx, by, -16, DOCLIP)
/*      if (!AdditionInsert(&sceneadd2, rootnode, stobj, bx, by, 10, DOCLIP)) {
                bx -= bdx ;
                by -= bdy ;
                index = rand() % 4;
   /* (bx + by + view.xyz[0] + view.xyz[1] + view.xyz[2]) % 4 ; */
                if (index==0) { bdx = step ; bdy = 0 ; }
                if (index==1) { bdx = -step ; bdy = 0 ; }
                if (index==2) { bdx = 0 ; bdy = step ; }
                if (index==3) { bdx = 0 ; bdy = -step ; }
                AdditionInsert(&sceneadd2, rootnode,
                                bluecube, bx, by, -16, DOCLIP) ;

*               AdditionInsert(&sceneadd2, rootnode, stobj, bx, by, 10, DOCLIP)
        }
```

APPENDIX A

```
Nov 14 09:32 1991   scenel.c Page 1


#include <stdlib.h>
#include <math.h>
#include "vupoint.h"
#include "move.h"

#define PYRAMIDS 12

static Object *pyramids[PYRAMIDS];

/*****************************************************************
 *
 *  scenel..
 *
 *  This is a modification of some code written by J. Courtney.  Here's
 *  what we're doing.  The extern pointer *pyramid points to a pyramid
 *  in the database.  We make 12 copies of this pyramid, storing pointers
 *  to these copies in an array.  *BUT*, while we're copying, we rotate
 *  each one a little bit.  In effect, we're taking "snapshots" of the
 *  pyramid in different rotations.  So much for initialization.
 *
 *  When, during the course of execution, we wish to show a different
 *  rotation, we swing the pointer from copy to copy.  When the database
 *  is rendered, the new rotation will be displayed, giving the illusion
 *  of movement.
 *
 */
void init_scenel()
{
        extern Object *pyramid ;
        extern Object *pyramids[PYRAMIDS] ;
        void rotate_object_z() ;
        float angle ;
        int i ;

        angle = 3.1416 / (float)PYRAMIDS ;

        for (i=0; i<PYRAMIDS; i++) {
                pyramids[i] = ObjectCopy(pyramid) ;
                rotate_object_z(pyramids[i], -angle*i);
        }
}


void move_scenel()
{
        extern Object *pyramids[PYRAMIDS] ;
        extern Node *pyrnode ;
        extern Node *pyrnode2;

        static int index = -1 ;

        index++ ;
        index %= PYRAMIDS ;

        /* swing the pointer.. */
        pyrnode->rightchild = (Node *) pyramids[index] ;
```

APPENDIX A

```
Nov 14 09:32 1991   scenel.c Page 2

        pyrnode2->rightchild = (Node *) pyramids[index];
}
```

APPENDIX A

```
Nov 14 09:32 1991   xform.c Page 1


#include <stdlib.h>
#include <math.h>
#include "move.h"


void transform_object(object, m)
        Object* object;
        float m[4][4];
{

        int i;
        char* p;
        long x, y, z;
        long xx, yy, zz;


        for (i=0; i<object->points; i++) {
                p = (char*)&object->points + 2 + 4*i;
                scale2long(&x, &y, &z, p[0], p[1], p[2], p[3]);
                xx = x*m[0][0] + y*m[1][0] + z*m[2][0] + m[3][0];
                yy = x*m[0][1] + y*m[1][1] + z*m[2][1] + m[3][1];
                zz = x*m[0][2] + z*m[1][2] + z*m[2][3] + m[3][2];
                long2scale(xx, yy, zz, p+0, p+1, p+2, p+3, 7);
        }
}



void rotate_object_x(object, angle)
        Object* object;
        float angle;
{
        int i;
        char* p;
        long x, y, z;
        long xx, yy, zz;
        float cos_angle = cos(angle);
        float sin_angle = sin(angle);


        for (i=0; i<object->points; i++) {
                p = (char*)&object->points + 2 + 4*i;
                scale2long(&x, &y, &z, p[0], p[1], p[2], p[3]);
                xx = x;
                yy = rint(y*cos_angle - z*sin_angle);
                zz = rint(y*sin_angle + z*cos_angle);
                long2scale(xx, yy, zz, p+0, p+1, p+2, p+3, 7);
        }
}

void rotate_object_y(object, angle)
        Object* object;
        float angle;
{
        int i;
        char* p;
        long x, y, z;
        long xx, yy, zz;
```

APPENDIX A

```
Nov 14 09:32 1991   xform.c Page 2

        float cos_angle = cos(angle);
        float sin_angle = sin(angle);


        for (i=0; i<object->points; i++) {
                p = (char*)&object->points + 2 + 4*i;
                scale2long(&x, &y, &z, p[0], p[1], p[2], p[3]);
                xx = rint(x*cos_angle + z*sin_angle);
                yy = y;
                zz = rint(-x*sin_angle + z*cos_angle);
                long2scale(xx, yy, zz, p+0, p+1, p+2, p+3, 7);
        }
}

void rotate_object_z(object, angle)
        Object* object;
        float angle;
{
        int i;
        char* p;
        long x, y, z;
        long xx, yy, zz;
        float cos_angle = cos(angle);
        float sin_angle = sin(angle);


        for (i=0; i<object->points; i++) {
                p = (char*)&object->points + 2 + 4*i;
                scale2long(&x, &y, &z, p[0], p[1], p[2], p[3]);
                xx = rint(x*cos_angle - y*sin_angle);
                yy = rint(x*sin_angle + y*cos_angle);
                zz = z;
                long2scale(xx, yy, zz, p+0, p+1, p+2, p+3, 7);
        }
}


void translate_object(object, tx, ty, tz)
        Object* object;
        long tx, ty, tz;
{
        int i;
        char* p;
        long x, y, z;

        for (i=0; i<object->points; i++) {
                p = (char*)&object->points + 2 + 4*i;
                scale2long(&x, &y, &z, p[0], p[1], p[2], p[3]);
                long2scale(x+tx, y+ty, z+tz, p+0, p+1, p+2, p+3, 7);
        }
}


float* generate_identity(m)
        float m[4][4];
{
```

APPENDIX A
```

```
Nov 14 09:32 1991   xform.c Page 3

        int i;
        float* mm = (float*)m;

        for (i=0; i<16; i++)
        mm[i] = 0.0;

        m[0][0] = m[1][1] = m[2][2] = m[3][3] = 1.0;

        return((float*)m);
}


float* multiply_matrices(a, b, c)
        float a[4][4], b[4][4], c[4][4];
{
        int row, col, i;

        for (row=0; row<4; row++) {
                for (col=0; col<4; col++) {

                        c[row][col] = 0.0;

                        for (i=0; i<4; i++)
                        c[row][col] += a[row][i] * b[i][col];
                }
        }

        return((float*)c);
}
```

APPENDIX A

Nov 14 09:31 1991   clipvals.h Page 2

```
/*------------------------------------------------------------
 *               data structure for 3D clipping parameters
 *------------------------------------------------------------
 */
typedef struct {
    short d;                /* viewer's assumed distance from screen     */
    short znear;            /* +z value at "near" clipping plane         */
    short scale[2];         /* viewport width 2*Sx and height 2*Sy       */
    short center[2];        /* viewport center coordinates Cx and Cy     */
    long k[2];              /* clipping volume normalization factors     */
    long *buf[2];           /* pointers to buffers for intermediate vals */
    short rdiag;            /* viewport half diagonal length             */
} CLIPVALS;
```

APPENDIX A

182

```
Nov 14 09:31 1991   colors.h Page 1



/*-----------------------------------------------------------------
 *
 *     Define color codes to load into COLOR0 and COLOR1 registers.
 *
 *-----------------------------------------------------------------
 */

/* The following color names are valid for both digital video
 * output and analog output using the default color palette.
 */
#define BLACK        0x00000000
#define RED          0x11111111
#define GREEN        0x22222222
#define YELLOW       0x33333333
#define BLUE         0x44444444
#define MAGENTA      0x55555555
#define CYAN         0x66666666
#define WHITE        0x77777777
#define LTRED        0x99999999
#define LTGREEN      0xAAAAAAAA
#define LTYELLOW     0xBBBBBBBB
#define LTBLUE       0xCCCCCCCC
#define LTMAGENTA    0xDDDDDDDD
#define LTCYAN       0xEEEEEEEE
#define GRAY         0xFFFFFFFF

/* Arbitrary color codes */
#define CC0          0x00000000
#define CC1          0x11111111
#define CC2          0x22222222
#define CC3          0x33333333
#define CC4          0x44444444
#define CC5          0x55555555
#define CC6          0x66666666
#define CC7          0x77777777
#define CC8          0x88888888
#define CC9          0x99999999
#define CC10         0xAAAAAAAA
#define CC11         0xBBBBBBBB
#define CC12         0xCCCCCCCC
#define CC13         0xDDDDDDDD
#define CC14         0xEEEEEEEE
#define CC15         0xFFFFFFFF
```

APPENDIX A

```
Nov 14 09:31 1991   constant.h Page 1


/*----------------------------------------------------------------
 *
 * System constants
 *
 *----------------------------------------------------------------
 */

/* Define logical constants for true and false. */
#define TRUE                    1
#define FALSE                   0

/* Define valid and invalid flags corresp. to viewport indices. */
#define VALID                   0       /* valid */
#define NIL                    -1       /* not valid */

/* Define return codes for system error and no error. */
#define OK                      0       /* no error */
#define SYSERR                 -1       /* error */

/*----------------------------------------------------------------
 * Constants used to determine Silicon revision number
 *----------------------------------------------------------------*/

#define REV_ERROR   0x0000
#define REV_1PTO    0x0001
#define REV_2PT2    0x0002
/*----------------------------------------------------------------
 *   These should be updated when it is determined what the REV instruction
 *   is going to be returning.  This should also be done in gspregs.hdr
 *----------------------------------------------------------------*/
```

APPENDIX A

```
Nov 14 09:31 1991   controls.h Page 1


/*-----------------------------------------------------------------
 *                    Viewpoint orientation controls
 *   (Assign cmd bits.)
 *-----------------------------------------------------------------
*/
#define TURN_RIGHT  0              /* char - "/" */
#define TURN_LEFT   1              /* char - "," */

#define LOOK_UP     2              /* char - "." */
#define LOOK_DOWN   3              /* char - "L" */

#define MOVE_FORWARD 4             /* char - "X" */
#define MOVE_BACKWARD 5                /* char - "Z" */

#define JUMP           6            /* char - "J" */

#define FIRE           7                        /* char - "F" */

#define PAUSE        9             /* char - "P" */
#define RESET        10            /* char - "R" */

#define CUBELEFT      11
#define CUBERIGHT     12

#define MEMORY        13
#define CONTINUE      14

#define NUM_KEYS     15            /* number of commands implemented */
```

APPENDIX A

```
Nov 14 09:31 1991   define.h Page 1


/* Miscellaneous constants */
#define ONE      0x40000000  /* constant 1.0 in FIX30 format            */
#define ONE8     (1<<8)          /* constant 1.0 in FIX8 format              */
#define RSUN     (SX>>2)     /* radius of sun at noon position in sky  */
#define HW       16          /* half width of bouncing cube            */

#define GROUNDLEVEL -16       /* where is the ground                    */
#define ORIGX    0           /* world coords. of center of maze        */
#define ORIGY    0
#define MAZEHALFSIZE 228      /* half of the width of the square maze   */
#define WALLW    4           /* half the width of a wall/column        */
#define WALLL    28          /* half the length of a wall              */

#define MINALT   (5*N/4)     /* minimum altitude                       */
#define MAXSPEED (20<<8)     /* maximum airspeed                       */
#define MAXDYAW  (6<<8)      /* max. rate of yaw in FIX8 format         */
#define MAXDPCH  (6<<8)      /* max. rate of pitch in FIX8 format       */
#define MAXPCH   (90<<8)     /* max. absolute pitch in FIX8 format      */
#define ROTINC   (1<<8)      /* ??   deg in FIX8, angle increment       */

#define COSYAW   0
#define SINYAW   1
#define COSPITCH 2
#define SINPITCH 3
#define COSROLL  4
#define SINROLL  5
```

APPENDIX A

186

```
Nov 14 09:31 1991   glove.h  Page 1


/*            (c) Copyright 1988, Texas Instruments Incorporated
 *---------------------------------------------------------------
 *
 *
 *                 This header file contains definitions and declarations to
 *           use the Power Glove with the flippy board in the Virtual Reality
 *           helmet platform.
 */

#define PG_X        2
#define PG_Y        3
#define PG_Z        4
#define PG_ROT      5
#define PG_FLEX     6
#define PG_SWTCH    7

#define PG_FAILED  -1

/* Define flippy register positions.. */
#define REGISTER0 0xFFFFFB00 /* (compass) */
#define REGISTER1 0xFFFFFB10 /*   x        */
#define REGISTER2 0xFFFFFB20 /*   y        */
#define REGISTER3 0xFFFFFB30 /*   z        */
#define REGISTER4 0xFFFFFB40 /*   rot      */
#define REGISTER5 0xFFFFFB50 /*   flex     */
#define REGISTER6 0xFFFFFB60 /*   swtch    */

typedef struct {
        char x, y, z ;
        unsigned char rot, flex, swtch ;
        int failed ;
} GLOVE ;

void readglove() ;
void initglove() ;
```

APPENDIX A

```
Nov 14 09:31 1991   gspregs.h Page 12


/*----------------------------------------------------------------
 *
 * Define names of special B-file registers.
 *
 *----------------------------------------------------------------
 */
#define SADDR      0      /* register B0  */
#define SPTCH      1      /* register B1  */
#define DADDR      2      /* register B2  */
#define DPTCH      3      /* register B3  */
#define OFFSET     4      /* register B4  */
#define WSTART     5      /* register B5  */
#define WEND       6      /* register B6  */
#define DYDX       7      /* register B7  */
#define COLOR0     8      /* register B8  */
#define COLOR1     9      /* register B9  */

/*----------------------------------------------------------------
 *
 * Define base location of TMS34010's on-chip I/O register file.
 *
 *----------------------------------------------------------------
 */
#define IO_BASE    0xC0000000    /* address of 1st I/O register */

/*----------------------------------------------------------------
 *
 * Define names of I/O registers.
 *
 *----------------------------------------------------------------
 */
#define HESYNC    0xC0000000
#define HEBLNK    0xC0000010
#define HSBLNK    0xC0000020
#define HTOTAL    0xC0000030
#define VESYNC    0xC0000040
#define VEBLNK    0xC0000050
#define VSBLNK    0xC0000060
#define VTOTAL    0xC0000070
#define DPYCTL    0xC0000080
#define DPYSTRT   0xC0000090
#define DPYINT    0xC00000A0
#define CONTROL   0xC00000B0
#define HSTDATA   0xC00000C0
#define HSTADRL   0xC00000D0
#define HSTADRH   0xC00000E0
#define HSTCTLL   0xC00000F0
#define HSTCTLH   0xC0000100
#define INTENB    0xC0000110
#define INTPEND   0xC0000120
#define CONVSP    0xC0000130
#define CONVDP    0xC0000140
#define PSIZE     0xC0000150
#define PMASK     0xC0000160
                            /* I/O registers 23-26 are reserved */
```

APPENDIX A

188

```
Nov 14 09:31 1991   gspregs.h Page 2


#define DPYTAP      0xC00001B0
#define HCOUNT      0xC00001C0
#define VCOUNT      0xC00001D0
#define DPYADR      0xC00001E0
#define REFCNT      0xC00001F0
```

APPENDIX A

```
Nov 14 09:32 1991   move.h Page 1


#define max(a, b) (((a) >= (b)) ? (a) : (b))
#define min(a, b) (((a) <= (b)) ? (a) : (b))

#define make_signed(v, s) ( ( (1 << ((s)-1)) & (v)) ? ((-1<<(s)) | (v)) : (v))
#define Free(p) if (p) free(p)
#define rint(f) ((int)(f+0.5))

#define DOCLIP       1
#define DONTCLIP     0

#define MAXVERTS     64
#define INVISIBLE    0xFFF


/*
 *   Note: Nodes are always the same size
 */
typedef struct Node_struct {
        unsigned sphere    : 8 ;
        unsigned scale     : 5 ;
        unsigned type      : 3 ;
        unsigned dot_color : 16 ;
        struct Node_struct *leftchild ;
        char lx, ly, lz, lf ;
        struct Node_struct *rightchild ;
        char rx, ry, rz, rf ;
        unsigned plane_a   : 4 ;
        unsigned plane_b   : 4 ;
        unsigned plane_c   : 4 ;
        unsigned plane_d   : 4 ;
} Node;

typedef struct Nlist_type {
        Node *parent ;
        short side ;
        short childside ;
        long cx, cy, cz ;
        struct Nlist_type *next ;
} Nlist ;


/*
 *   Note: objects will be many different sizes,
 *    depending on the number of points in the
 *    in the object, the number of faces, and
 *    bounding box information..
 */
typedef struct {
        unsigned sphere    : 8 ;
        unsigned scale     : 5;
        unsigned type      : 3;
        unsigned dot_color : 16;
        short bb_disp ;
        short points ;
} Object;




                              APPENDIX A
```

```
Nov 14 09:32 1991   move.h Page 2


typedef struct Olist_type {
        Node *parent ;
        short side ;
        struct Olist_type *next ;
} Olist ;


typedef struct {
        Olist *olist ;
        Nlist *nlist ;
        Olist *oadd ;
        Nlist *nadd ;
} Addition ;

/*
 *  move.c function declarations..
 *
 */

void ObjectMoveCentroid() ;
Object *ObjectClip() ;
Object *ObjectCopy() ;
long ObjectSize() ;

short AdditionInsert() ;
void AdditionSet() ;
void AdditionClear() ;
void AdditionKill() ;
```

APPENDIX A

```
ov 14 09:32 1991   scancode.h Page 1

/***********************************************************/
/* SCANCODE.H - IBM KEYBOARD SCAN CODES                  */
/***********************************************************/

#define   SC_ESC      1
#define   SC_1        2
#define   SC_2        3
#define   SC_3        4
#define   SC_4        5
#define   SC_5        6
#define   SC_6        7
#define   SC_7        8
#define   SC_8        9
#define   SC_9        10
#define   SC_0        11
#define   SC_DASH     12
#define   SC_EQU      13
#define   SC_BS       14
#define   SC_TAB      15
#define   SC_Q        16
#define   SC_W        17
#define   SC_E        18
#define   SC_R        19
#define   SC_T        20
#define   SC_Y        21
#define   SC_U        22
#define   SC_I        23
#define   SC_O        24
#define   SC_P        25
#define   SC_LB       26
#define   SC_RB       27
#define   SC_CR       28
#define   SC_CTRL     29
#define   SC_A        30
#define   SC_S        31
#define   SC_D        32
#define   SC_F        33
#define   SC_G        34
#define   SC_H        35
#define   SC_J        36
#define   SC_K        37
#define   SC_L        38
#define   SC_SEMI     39
#define   SC_QUOTE    40
#define   SC_TILDE    41
#define   SC_LSHIFT   42
#define   SC_BSLASH   43
#define   SC_Z        44
#define   SC_X        45
#define   SC_C        46
#define   SC_V        47
#define   SC_B        48
#define   SC_N        49
#define   SC_M        50
#define   SC_COMMA    51
#define   SC_DOT      52
```

APPENDIX A

192

```
nov 14 09:32 1991   scancode.h Page 2

#define   SC_FSLASH   53
#define   SC_RSHIFT   54
#define   SC_PRTSCRN  55
#define   SC_ALT      56
#define   SC_SB       57
#define   SC_CAPS     58
#define   SC_F1       59
#define   SC_F2       60
#define   SC_F3       61
#define   SC_F4       62
#define   SC_F5       63
#define   SC_F6       64
#define   SC_F7       65
#define   SC_F8       66
#define   SC_F9       67
#define   SC_F10      68
#define   SC_NUM      69
#define   SC_SCROLL   70
#define   SC_HOME     71
#define   SC_UP       72
#define   SC_PGUP     73
#define   SC_MINUS    74
#define   SC_LT       75
#define   SC_KP5      76
#define   SC_RT       77
#define   SC_PLUS     78
#define   SC_END      79
#define   SC_DN       80
#define   SC_PGDN     81
#define   SC_INS      82
#define   SC_DEL      83
```

APPENDIX A

```
Nov 14 09:32 1991   vupoint.h Page 1


/*----------------------------------------------------------------
 *                Define viewpoint parameters
 *----------------------------------------------------------------
 */
typedef struct {
    long u[3];        /* view "right" vector      (fraction - 30 LSBs) */
    long v[3];        /* view "down" vector       (fraction - 30 LSBs) */
    long w[3];        /* viewplane normal vector  (fraction - 30 LSBs) */
    long xyz[3];      /* view reference point     (fraction -  8 LSBs) */
    long dxyz[3];     /* translation per frame    (fraction -  8 LSBs) */
} VIEWPOINT;

typedef struct {
    long csyaw, snyaw;   /* cosine, sine of yaw angle   (30-bit fract) */
    long cspch, snpch;   /* cosine, sine of pitch angle (30-bit fract) */
    long csrol, snrol;   /* cosine, sine of roll angle  (30-bit fract) */
} VIEWINFO;
```

APPENDIX A

```
Nov 14 09:33 1991  xfrmlist.asm Page 1

        .width    132
        .title    '3D transform list interpreter'

*
*-
*-
*-
* xfrmlist function
*
*   Interpret list of 3D objects to be transformed into viewing space,
*   clipped, and projected onto flat screen.  The input array is a list
*   of 3D objects to be transformed.  The output array is a list of
*   objects that have been transformed, projected onto the screen, and
*   are ready to be drawn.
*
*   The two arguments, p and q, are pointers to the start of the input
*   and output lists, respectively.  Each object specified in the input
*   list is either a polygon or a dot in 3D space.  Each object in the
*   output list is a polygon or a dot projected onto the screen.
*
*                   Input List Format
*
*   Argument p is a pointer to the input list, or transform list, which
*   is a list of polygons and dots to be transformed.  The specification
*   for each polygon or dot begins on an even 16-bit boundary in memory,
*   and the first item in each specification is a function code
*   indicating the type of graphics primitive.
*
*   The transform list is terminated by a function code of -1.
*
*   Two types of polygon may be specified in the input list:  "near" and
*   "far" polygons.  Near polygons must be preclipped; that is, they are
*   clipped to the viewport limits before being drawn.  Far polygons, on
*   the other hand, are postclipped; that is, they are clipped on a
*   line-by-line basis as they are drawn.  The division of polygons into
*   near and far types are for the purpose of computational efficiency.
*
*   Postclipping is used for small polygons.  Because preclipping
*   polygons involves some overhead, postclipping the smaller ones
*   avoids this overhead, allowing the GSP's built-in clipping hardware
*   to do the clipping automatically as each horizontal fill line is
*   drawn.
*
*   Larger polygons, however, are more efficiently dealt with by
*   preclipping, which cuts off parts of each polygon lying outside the
*   viewport which would otherwise consume considerable time during the
*   drawing phase.
*
*   Near and far polygons are specified in the tranform list by function
*   codes of 1 and 2, respectively.  The transform list specification
*   for a polygon is as follows:

                16-bit function code:       1 (near) or 2 (far)
                16-bit constant:            0
                32-bit FIX8 x centroid coord:  xv
                32-bit FIX8 y centroid coord:  yv
```

APPENDIX A

```
Nov 14 09:33 1991   xfrmlist.asm Page 2

*
*            32-bit FIX8 z centroid coord:   zv
*            32-bit pointer to model data:   obj
*
*     Parameters xv, yv and zv are the object's centroid coordinates in
*     viewing space.  Each is represented as a 32-bit fixed-point number
*     with 8 bits of fraction.  The obj parameter is a 32-bit pointer to
*     the object model database.  The database begins with a 16-bit count
*     indicating the number of 3D points to follow.  Each point is
*     specified as a 32-bit value containing 8-bit X, Y, Z and F fields.
*     The F field specifies the logarithm to the base 2 of the scaling
*     constant for the X, Y and Z values, and is restricted to the range 0
*     to 7.  The X, Y and Z values are restricted to the range -128 to
*     +127, and after being read from the database are scaled by being
*     shifted left by F bits:  x = X << F, y = Y << F, and z = Z << F.
*
*     A "dot" is a single pixel, and is specified in the transform list by
*     a function code of 0.  The transform list format specifying a dot is
*     as follows:
*
*            16-bit function code:      0
*            16-bit dot color:          color
*            16-bit x coordinate:       xs
*            16-bit y coordinate:       ys
*
*     The second item in the specification is a 16-bit value specifying
*     the dot color.  The last two items are the x and y coordinates of
*     the dot, specified as 16-bit integers.  Note that these are the x
*     and y coordinates of the dot on the screen; in other words they have
*     been transformed and projected onto the screen before being placed
*     into the transform list.
*
*                           Output List Format
*
*     Argument q is a pointer to the output list, or display list, which
*     is a list of polygons and dots to be drawn to the screen.  The
*     specification for each polygon or dot begins on an even 16-bit
*     boundary in memory, and the first item in each specification is a
*     function code indicating the type of graphics primitive.
*
*     The display list is terminated by a function code of -1.
*
*     A polygon is specified in the display list by a function code of 1.
*     The display list specification for a polygon is as follows:
*
*            8-bit function code:       1
*            8-bit vertex count:        nverts
*            16-bit polygon color:      color
*            16-bit x coordinate:       x0
*            16-bit y coordinate:       y0
*            16-bit x coordinate:       x1
*            16-bit y coordinate:       y1
*                                       :
*            16-bit x coordinate:       x[nverts-1]
*            16-bit y coordinate:       y[nverts-1]
*
*     The second item in the specification is the number of vertices in
```

APPENDIX A

```
*    the convex polygon.  The third item is the polygon color.  The
*    remainder of the specification is an array of x and y coordinate
*    pairs representing the positions of the vertices on the screen.
*    The first xy coordinate pair specifies the position of the topmost
*    vertex in the polygon, that is, the vertex having the minimum y
*    value.  The vertices are listed in clockwise order, assuming the
*    convention that x coordinates on the screen increase from left to
*    right, and y coordinates from top to bottom.  Coordinates are
*    specified as fixed point values with 2-bit fractions.
*
*    A "dot" is a single pixel, and is specified in the display list by a
*    function code of 0.  The display list format specifying a dot is as
*    follows:
*
*            8-bit function code:     0
*            8-bit constant:          0
*            16-bit polygon color:    color
*            16-bit x coordinate:     x0
*            16-bit y coordinate:     y0
*
*    The second item in the specification is a byte containing constant
*    0.  The third item is the dot color.  The last two items are the x
*    and y coordinates of the dot. Coordinates are specified as integers.
*
*    The implementation below depends on the majority of polygons being
*    "far" rather than "near".  The code that transforms "far" polygons
*    is compact enough to reside in the GSP's 256-byte instruction cache.
*    Only when a "near" polygon is encountered in the input list is this
*    code overwritten in the cache.  Note that the 250 bytes from label
*    "XFRMFAR1" to "XFRMNEAR" are preceded by a .align statement.
*
*    CAC note:  Cache misses will also occur when "stamp objects" are pro-
*    cessed.  In the case of consecutive far polygons, the entire cache
*    will remain valid.  The cache will now extend from "XFRMFAR1" to
*    "PUSHSTAMP".
*
*
*    Prior to interpreting the input list, the 3x3 rotation matrices for
*    "near" and "far" polygons are calculated from the viewpoint
*    orientation unit vectors, u, v and w.  The first 6 elements of each
*    matrix are stored in a a 24-word buffer allocated on the program
*    stack.  The last 3 elements are identical for both matrices, and
*    reside permanently in registers.
*--------------------------------------------------------------------------
*    Usage:  xfrmlist(p, q);
*
*    Stack parameters:
*        short *p;    /* pointer to input list to be transformed */
*        short *q;    /* pointer to output list to be drawn to screen */
*
*    Returned in A8:   32-bit pointer to end of output list
*
*    Registers altered:  A8
*--------------------------------------------------------------------------
*    Revision History:
*      12/12/88...Original version written..................Jerry Van Aken
```

APPENDIX A

```
Nov 14 09:33 1991   xfrmlist.asm  Page 4

*
*
*
*
*       DECLARE GLOBAL FUNCTION NAME
*
        .globl    _xfrmlist              ;global function entry point
*
*
*       DECLARE EXTERNAL SUBROUTINES
*
        .globl    _clippgon              ;clip 3D polygon and perspect
*
*
*       DECLARE EXTERNAL VARIABLES
*
        .globl    _view                  ;viewpoint parameters
        .globl    _vpclip                ;viewport clipping parameters
*
*
*       DEFINE CONSTANTS
*
; Offsets into CLIPPARMS structure "vpclip" (a global)
D        .set      0                     ;viewer's distance from screen
N        .set      1*16                  ;+z value at "near" clipping plane
SX       .set      2*16                  ;viewport half width
SY       .set      3*16                  ;viewport half height
CX       .set      4*16                  ;viewport center x coordinate
CY       .set      5*16                  ;viewport center y coordinate
K0       .set      6*16                  ;clip vol normalization x factor
K1       .set      8*16                  ;clip vol normalization y factor
BUF0     .set      10*16                 ;buffer 0 for intermediate values
BUF1     .set      12*16                 ;buffer 1 for intermediate values
; Offsets into VIEWPOINT structure (argument "viewpoint")
UX       .set      0                     ;+x unit vector in viewing space
VX       .set      1*96                  ;+y unit vector in viewing space
WX       .set      2*96                  ;+z unit vector in viewing space
XYZ      .set      3*96                  ;xyz coordinates in object space

; Symbolic A-file register names
TMP0     .set      A0                    ;temporary register 0
YXTOP    .set      A0                    ;xy coord's at top of polygon
TMP1     .set      A1                    ;temporary register 1
NTOP     .set      A1                    ;loop count at top of polygon
TMP2     .set      A2                    ;temporary register 2
PTOP     .set      A2                    ;pointer to top of polygon
TMP3     .set      A3                    ;temporary register 3
YX       .set      A3                    ;xy coord's at current vertex
TMP4     .set      A4                    ;temporary register 4
DIST     .set      A4                    ;viewer's distance from screen
XX       .set      A4                    ;clip vol normalization x factor
TMP5     .set      A5                    ;temporary register 5
NVRTS    .set      A5                    ;no. of vertices in polygon
TMP6     .set      A6                    ;temporary register 6
CYCX     .set      A6                    ;viewport center xy coord's
KY       .set      A6                    ;clip vol normalization y factor
```

APPENDIX A

198

```
Nov 14 09:33 1991   xfrmlist.asm Page 5

TMP7      .set    A7              ;temporary register 7
PTMP      .set    A7              ;temporary pointer register
QTMP      .set    A8              ;temporary pointer register
FZYX      .set    A8              ;database coord's, scale factor
CMD       .set    A9              ;function code from input list
OBJ       .set    A9              ;pointer to object model database
Y0X0      .set    A10             ;screen xy coord's at 1st vertex
ZV        .set    A10             ;centroid z coord in viewing space
Y1X1      .set    A11             ;screen xy coord's at last vertex
YV        .set    A11             ;centroid y coord in viewing space
Y2X2      .set    A12             ;screen xy coord's at 2nd vertex
XV        .set    A12             ;centroid x coord in viewing space
PCOLOR    .set    A12             ;polygon color
P         .set    A13             ;pointer to input transform list
STK       .set    A14             ;program stack pointer
; Symbolic B-file register names
M22       .set    B0              ;rotation matrix element m[2,2]
M21       .set    B1              ;rotation matrix element m[2,1]
M20       .set    B2              ;rotation matrix element m[2,0]
M12       .set    B3              ;rotation matrix element m[1,2]
M11       .set    B4              ;rotation matrix element m[1,1]
M10       .set    B5              ;rotation matrix element m[1,0]
M02       .set    B6              ;rotation matrix element m[0,2]
M01       .set    B7              ;rotation matrix element m[0,1]
M00       .set    B8              ;rotation matrix element m[0,0]
NPTS      .set    B9              ;no. of points defining 3D object
COUNT     .set    B10             ;loop counter
FMAT      .set    B11             ;pointer to "far" rotation matrix
S         .set    B12             ;base address of polygon xy list
T         .set    B13             ;base address of object xy list
U         .set    B14             ;pointer to output display list
*
*
*   ENTRY POINT
*
_xfrmlist:

; Save registers.
         MMTM     SP,A0,A1,A2,A3,A4,A5,A6,A7,A9,A10,A11,A12,A13
         MMTM     SP,B0,B1,B2,B3,B4,B5,B6,B7,B8,B9,B10,B11,B12,B13,B14
; Pop arguments p and q from program stack.
         MOVE     -*STK,P,1          ;get input pointer p
         MOVE     -*STK,QTMP,1       ;get input pointer q
         MOVE     QTMP,Q             ;save input pointer q

*------------------------------------------------------------
* Save rotation matrices for "near" and "far" objects in a temporary
* buffer allocated on program stack.  The first six of the nine 32-bit
* coefficients of the "far" matrix are stored in first 12 words of
* buffer; the first six coeff's of "near" matrix are stored in last 12
* words of buffer.  The last 3 coeff's reside permanently in registers.
*------------------------------------------------------------
         MOVI     _view,S            ;point to viewpoint orientation
         MOVE     S,PTMP             ;copy pointer
         MOVI     _vpclip+K0,QTMP    ;get ptr to scaling const's Kx, Ky
```

APPENDIX A

```
Nov 14 09:33 1991   xfrmlist.asm Page 29

; Save 3D rotation matrix for "far" objects in buffer on program stack.
          MMFM      S,M00,M01,M02,M10,M11,M12,M20,M21,M22 ;get U,V,W
          SRA       14,M00                ;convert M00 - Ux to FIX16
          SRA       14,M01                ;convert M01 - Uy to FIX16
          SRA       14,M02                ;convert M02 - Uz to FIX16
          SRA       14,M10                ;convert M10 - Vx to FIX16
          SRA       14,M11                ;convert M11 - Vy to FIX16
          SRA       14,M12                ;convert M12 - Vz to FIX16
          SRA       14,M20                ;convert M20 - Wx to FIX16
          SRA       14,M21                ;convert M21 - Wy to FIX16
          SRA       14,M22                ;convert M22 - Wz to FIX16
          ADDI      6*32,STK              ;create buffer for 9 32-bit values
          MOVE      STK,FMAT              ;copy pointer
          MMTM      FMAT,M00,M01,M02,M10,M11,M12 ;store first 6 coeff's

; Scale first row of 3x3 rotation matrix for "near" objects.
          MOVE      *QTMP+,TMP2,1         ;get dist/width ratio Kx (FIX18)
          MOVE      *PTMP+,TMP0,1         ;get viewpoint component Ux (FIX30)
          MPYS      TMP2,TMP0             ;M00 - Kx * Ux
          MOVE      TMP0,*STK+,1          ;store matrix coefficient M00 (FIX16)
          MOVE      *PTMP+,TMP0,1         ;get viewpoint component Uy (FIX30)
          MPYS      TMP2,TMP0             ;M01 - Kx * Uy
          MOVE      TMP0,*STK+,1          ;store matrix coefficient M01 (FIX16)
          MOVE      *PTMP+,TMP0,1         ;get viewpoint component Uz (FIX30)
          MPYS      TMP2,TMP0             ;M02 - Kx * Uz
          MOVE      TMP0,*STK+,1          ;store matrix coefficient M02 (FIX16)
; Scale second row of 3x3 rotation matrix for "near" objects.
; ---      MOVI      _vpclip+KY,Q          ;load pointer to Ky
          MOVE      *QTMP+,TMP2,1         ;get dist/height ratio Ky (FIX18)
          MOVE      *PTMP+,TMP0,1         ;get viewpoint component Vx (FIX30)
          MPYS      TMP2,TMP0             ;M10 - Ky * Vx
          MOVE      TMP0,*STK+,1          ;store matrix coefficient M10 (FIX16)
          MOVE      *PTMP+,TMP0,1         ;get viewpoint component Vy (FIX30)
          MPYS      TMP2,TMP0             ;M11 - Ky * Vy
          MOVE      TMP0,*STK+,1          ;store matrix coefficient M11 (FIX16)
          MOVE      *PTMP+,TMP0,1         ;get viewpoint component Vz (FIX30)
          MPYS      TMP2,TMP0             ;M12 - Ky * Vz
          MOVE      TMP0,*STK+,1          ;store matrix coefficient M12 (FIX16)


*-----------------------------------------------------------------
; Interpret first function code from input list.
*-----------------------------------------------------------------
FIRSTCMD:
          SETF      16,1,0                ;
          MOVE      *P+,CMD,0             ;input next 16-bit function code
          JRZ       PUSHDOT               ;if f.c. - 0, single dot
          DEC       CMD                   ;
          JRGT      XFRMFAR               ;if f.c. - 2, "far" polygon
          JRZ       XFRMNEAR              ;if f.c. - 1, "near" polygon
          JR        EXIT                  ;if f.c. - -1, exit interpreter


*-----------------------------------------------------------------
* Simply copy description of dot from input list to output list.
*-----------------------------------------------------------------



                         APPENDIX A
```

```
Nov 14 09:33 1991   xfrmlist.asm Page 2


PUSHDOT:

        SUBK      16,P                 ;back up to dot function code
        MOVE      Q,QTMP               ;copy output list pointer
        MOVE      *P+,*QTMP+,1         ;copy dot f.c. and color
        MOVE      *P+,*QTMP+,1         ;copy dot x and y coordinates
        MOVE      QTMP,Q               ;update output list pointer
        JR        FIRSTCMD             ;more objects in input list?


*-------------------------------------------------------------------
*              Transform "Far" (or Distant) Graphics Object
*-------------------------------------------------------------------
XFRMFAR:

        MOVE      @_vpclip+D,DIST,0    ;get d = viewer's dist. from screen
        SLL       2,DIST               ;convert d to FIX2 format
        MOVE      @_vpclip+CX,CYCX,1   ;get viewport center coord's Cx, Cy
        ADDXY     CYCX,CYCX            ;
        ADDXY     CYCX,CYCX            ;convert Cy and Cx to FIX2 format
; Get coefficients Mij of rotation matrix.
        MOVE      FMAT,T               ;copy ptr to "far" rot'n matrix
        MMFM      T,M00,M01,M02,M10,M11,M12 ;get first 6 coefficients


        .align                         ;begin cache-resident 256 bytes

; Jump here if DIST, CYCX and Mij coefficients in registers are still
; valid.  Read FACTOR and xyz centroid coordinates in viewing space.
XFRMFAR1:
        ADDK      16,P                 ;skip over constant 0
        MMFM      P,XV,YV,ZV,OBJ       ;get xv, yv, zv and pointer obj
; Transform 3D points expressed as displacements from object centroid.
; Displacement coordinates are restricted to 8 significant bits to
; permit faster multiplies (field size 1 = 8).
        MOVE      *OBJ+,TMP0,0         ;get no. of points to be transformed
        MOVE      TMP0,NPTS            ;NPTS = no. of points in object
        MOVE      STK,T                ;copy pointer to perspected xy's
        SETF      32,0,0               ;set up for 32-bit memory moves
FARLOOP:
        MOVE      *OBJ+,FZYX,0         ;get X, Y, Z and F (X in 8 LSBs)

        SETF      8,1,1                ;set up for 8-bit multiplies
        MOVE      M00,TMP1             ;get rotation matrix coeff. M00 (FIX16)
        MPYS      FZYX,TMP1            ;x * M00 (FIX16)

        MOVE      M10,TMP3             ;get rotation matrix coeff. M10 (FIX16)
        MPYS      FZYX,TMP3            ;x * M10 (FIX16)

        MOVE      M20,TMP5             ;get rotation matrix coeff. M20 (FIX16)
        MPYS      FZYX,TMP5            ;x * M20 (FIX16)

        SRL       8,FZYX               ;shift Y into 8 LSBs of multiplier
        MOVE      M01,TMP7             ;get rotation matrix coeff. M01 (FIX16)
        MPYS      FZYX,TMP7            ;y * M01 (FIX16)
        ADD       TMP7,TMP1            ;x * M00 + y * M01
```

APPENDIX A

Nov 14 09:33 1991   xfrmlist.asm   Page 8

```
        MOVE    M11,TMP7            ;get rotation matrix coeff. M11 (FIX16)
        MPYS    FZYX,TMP7          ;y * M11 (FIX16)
        ADD     TMP7,TMP3          ;x * M10 + y * M11

        MOVE    M21,TMP7           ;get rotation matrix coeff. M21 (FIX16)
        MPYS    FZYX,TMP7          ;y * M21 (FIX16)
        ALD     TMP7,TMP5          ;x * M20 + y * M21

        SRL     8,FZYX             ;shift Z into 8 LSBs of multiplier
        MOVE    M02,TMP7           ;get rotation matrix coeff. M02 (FIX16)
        MPYS    FZYX,TMP7          ;z * M02 (FIX16)
        ADD     TMP7,TMP1          ;x * M00 + y * M01 + z * M02 (FIX16)

        MOVE    M12,TMP7           ;get rotation matrix coeff. M12 (FIX16)
        MPYS    FZYX,TMP7          ;z * M12 (FIX16)
        ADD     TMP7,TMP3          ;x * M10 + y * M11 + z * M12 (FIX16)

        MOVE    M22,TMP7           ;get rotation matrix coeff. M22 (FIX16)
        MPYS    FZYX,TMP7          ;z * M22 (FIX16)
        ALD     TMP7,TMP5          ;x * M20 + y * M21 + z * M22 (FIX16)

        SRL     8,FZYX             ;shift log2(factor) into 8 LSBs
        SUBK    8,FZYX             ;combine with FIX8 scaling factor
        SRA     FZYX,TMP1          ;convert x*M00+y*M01+z*M02 to FIX8
        ALD     XV,TMP1            ;x' = xv+x*M00+y*M01+z*M02 (FIX8)

        SRA     FZYX,TMP3          ;convert x*M10+y*M11+z*M12 to FIX8
        ALD     YV,TMP3            ;y' = yv+x*M10+y*M11+z*M12 (FIX8)

        SRA     FZYX,TMP5          ;convert x*M20+y*M21+z*M22 to FIX8
        ALD     ZV,TMP5            ;z' = zv+x*M20+y*M21+z*M22 (FIX8)

        SETF    16,1,1             ;set up for 16-bit multiplies
        MOVE    TMP1,TMP0          ;copy x'
        MPYS    DIST,TMP0          ;d * x'
        DIVS    TMP5,TMP0          ;(d * x') / z' (FIX2 result)

        MOVE    TMP3,TMP2          ;copy y'
        MPYS    DIST,TMP2          ;d * y'
        DIVS    TMP5,TMP2          ;(d * y') / z' (FIX2 result)

        SLL     16,TMP2            ;
        MOVY    TMP2,TMP0          ;concatenate perspected x and y
        ADDXY   CYCX,TMP0          ;x"= d*x'/z'+Cx, y"= d*y'/z'+Cy
        MOVE    TMP0,*STK+,0       ;push integer x' and y' (FIX2)

        DSJ     NPTS,FARLOOP       ;more points to transform scale?
```

```
* ----------------------------------------------------------------------
* All points defining the object have been transformed and perspective
* projected onto screen.  Next, the description of each of the
* individual polygons in the object will be copied to the display list.
* ----------------------------------------------------------------------
;---    SETF    32,0,0             ;set up for 32-bit memory moves
;---    SETF    16,1,1             ;set up for 16-bit memory moves
```

APPENDIX A

```
Nov 14 09:33 1991   xfrmlist.asm Page 9

PUSH2D:
         MOVE      Q,QTMP                    ;copy output list pointer
         MOVE      *OBJ+,NVRTS,1             ;get no. of vertices in polygon
         JRZ       DONE2D                    ;jump if end of data encountered
         SLL       8,NVRTS                   ;NVRTS in 8 MSBs of word
         INC       NVRTS                     ;DRAWCODE-1 (polygon) in 8 LSBs
         MOVE      NVRTS,*QTMP+,1            ;copy DRAWCODE and NVRTS to output list
         SRL       8,NVRTS                   ;restore vertex count
         MOVE      *OBJ+,*QTMP+,1            ;copy COLOR code to output list

; begin CAC addition

         CMPI      2,NVRTS,W                            ;compare NVRTS to 2
         JRZ             FPUSHSTAMP                      ;if 2, push the

; end CAC addition

; Extract ordered list of vertices from list of transformed coordinates.
; Search xy coordinate list for topmost vertex (minimum y) in polygon.
         MOVI      03FFF0000h,YXTOP          ;initialize ymin - max y value
         MOVE      STK,S                     ;save base address of xy coord's
         MOVE      T,PTMP                    ;get base address of object xy's
         MOVE      NVRTS,COUNT               ;initialize loop counter
TOP2D:
         MOVE      *OBJ+,YX,1                ;get index of next vertex in face
         SLL       5,YX                      ;convert to 32-bit array offset
         ADD       PTMP,YX                   ;add base address of xy coord's
         MOVE      *YX,YX,0                  ;get x and y coordinates at vertex
         MOVE      YX,*STK+,0                ;push temporarily onto stack
         CMPXY     YX,YXTOP                  ;is y < ymin ?
         JRYZ      SKIP2D                    ;jump if y -- ymin
         MOVE      COUNT,NTOP                ;make copy of current loop count
         JRYN      SKIP2D                    ;jump if y > ymin
         MOVE      YX,YXTOP                  ;set ymin - y
         MOVE      STK,PTOP                  ;copy pointer (autoincremented)
SKIP2D:
         DSJ       COUNT,TOP2D               ;loop if more vertices
; Coordinates of topmost vertex in polygon have been found.
         CMP       NVRTS,NTOP                ;are all vertices at same y?
         JREQ      TRIV2D                    ;jump to trivial reject flat face
; Perform backface test.  If the 2 edges surrounding the first vertex
; are turned in the clockwise direction, the polygon is front facing.
         MOVE      YX,Y1X1                   ;get y1:x1 (last vertex in list)
         MOVE      S,PTMP                    ;point to first vertex in list
         MOVE      *PTMP+,Y0X0,0             ;get y0:x0 (first vertex in list)
         MOVE      *PTMP+,Y2X2,0             ;get y2:x2 (2nd vertex in list)
         SUBXY     Y1X1,Y0X0                 ;calculate y0-y1:x0-x1
         MOVE      Y0X0,TMP1                 ;copy y0-y1:x0-x1
         SRA       16,TMP1                   ;right justify y0-y1
         SUBXY     Y1X1,Y2X2                 ;calculate y2-y1:x2-x1
         MOVE      Y2X2,TMP3                 ;copy y2-y1:x2-x1
         SRA       16,TMP3                   ;right justify y2-y1
         MPYS      Y2X2,TMP1                 ;(y0-y1) * (x2-x1)
         MPYS      Y0X0,TMP3                 ;(y2-y1) * (x0-x1)
         SUB       TMP3,TMP1                 ;(y0-y1)*(x2-x1)-(y2-y1)*(x0-x1)
         JRNN      TRIV2D                    ;jump if sum >- 0 (is back face)
```

APPENDIX A

203

```
Nov 14 09:33 1991  xfrmlist.asm Page 10

; Copy list of vertex xy coord's, starting with topmost vertex in face.
        MOVE    YXTOP,*QTMP+,0      ;copy xy coord's at topmost vertex
        JR      COMP2D             ;
COPY2D:
        MOVE    *PTOP+,*QTMP+,0     ;copy xy coord's at next CW vertex
COMP2D:
        CMP     PTOP,STK            ;pointing past end of xy array?
        JRNE    OVER2D              ;jump if not past end of xy array
        MOVE    S,PTOP              ;else pointer - start of xy array
OVER2D:
        DSJ     NVRTS,COPY2D        ;copy all vertices in face
        MOVE    QTMP,Q              ;update output display list pointer
; Trivially reject flat or back-facing polygon.
TRIV2D:
        MOVE    S,STK               ;clean polygon xy coord's off stack
        JR      PUSH2D              ;extract next polygon from xy list
; Done with all faces of this object.  Ready to process next node in tree.
DONE2D:
        MOVE    T,STK               ;clean object xy coord's off stack

;--------------------------------------------------------------------
; Interpret next 16-bit function code from input list.
;--------------------------------------------------------------------

NEXTCMD1:
        SETF    16,1,0              ;set up for 16-bit memory moves
        SETF    32,0,1              ;set up for 32-bit memory moves
        MOVE    *P+,CMD,0           ;input next 16-bit function code
        JRZ     PUSHDOT1            ;if f.c. - 0, single dot
        DEC     CMD                ;
        JRGT    XFRMFAR1            ;if f.c. - 2, "far" polygon
        JRZ     XFRMNEAR           ;if f.c. - 1, "near" polygon
        JR      EXIT               ;if f.c. - -1, exit interpreter

;--------------------------------------------------------------------
* Simply copy description of dot from input list to output list.
;--------------------------------------------------------------------

PUSHDOT1:

        SUBK    16,P                ;back up to dot function code
        MOVE    Q,QTMP              ;copy output list pointer
        MOVE    *P+,*QTMP+,1        ;copy dot f.c. and color
        MOVE    *P+,*QTMP+,1        ;copy dot x and y coordinates
        MOVE    QTMP,Q              ;update output list pointer
        JR      NEXTCMD1            ;more objects in input list?


;--------------------------------------------------------------------
* CAC says: Copy the stamped object into the display list..
;--------------------------------------------------------------------


; begin CAC addition
FPUSHSTAMP:
        MOVE    T,PTMP              ;get base address of object xy's
        MOVE    NVRTS,COUNT         ;initialize loop counter (-2)
FTOPSTAMP:
        MOVE    *OBJ+,YX,1          ;get index of next vertex in face



                            APPENDIX A
```

204

```
        SLL     5,YX                ;convert to 32-bit array offset
        ADD     PTMP,YX             ;add base address of xy coord's
        MOVE    *YX,YX,0            ;get x and y coordinates at vertex
        MOVE    YX,*QTMP+,0         ;push coord's onto output list
        DSJ     COUNT,FTOPSTAMP      ;loop if more vertices

        MOVE    QTMP,Q              ;update output display list pointer

        JR      PUSH2D              ;jump back to PUSH2D. The next value
                                    ;in the object should be 0, and control
                                    ;should fall through to DONE2D and NEXTCML
; end CAC addition


*--------------------------------------------------------------------
*               Transform "Near" Graphics Object
*--------------------------------------------------------------------
XFRMNEAR:

        MOVE    *P(112),OBJ                 ;get pointer to object m
        MOVE    *OBJ,TMP0

; begin CAC addition

        CMPI    2,TMP0                      ;if number of points is
                                            ;  far c
        JRZ             DOFAR               ;change near obj

; end CAC addition

        MOVI    _vpclip+K0,PTMP     ;point to constant Kx
        MOVE    *PTMP+,KX,1         ;get scaling constant Kx (FIX18)
        SRA     2,KX                ;convert Kx to FIX16
        MOVE    *PTMP+,KY,1         ;get scaling constant Ky (FIX18)
        SRA     2,KY                ;convert Ky to FIX16
; Get "near" rotation matrix that has already been scaled to Kx and Ky.
        MOVI    6*32,T              ;get displacement to "near" matrix
        ADD     FMAT,T              ;point to matrix
        MMFM    T,M00,M01,M02,M10,M11,M12 ;FIX16 rotation coeff's

; Jump here if Kx, Ky and matrix elements m[i,j] already reside in
; registers.  Read polygon's parameters from input transform list.
XFRMNEAR1:
        ADDK    16,P                ;skip past constant 0
        MMFM    P,XV,YV,ZV,OBJ      ;get xv, yv, zv and pointer obj
; The object's centroid coordinates in viewing space, xv, yv and zv,
; are in FIX8 format.  Scale xv and yv to normalized clipping volume.
        MOVE    KX,TMP0             ;copy clip vol x normalize factor
        MPYS    XV,TMP0             ;xv * Kx (FIX8 * FIX16)
        MOVY    TMP1,TMP0           ;
        RL      16,TMP0             ;convert xv' = xv * Kx to FIX8
        MOVE    TMP0,XV             ;save xv'
        MOVE    KY,TMP2             ;copy clip vol y normalize factor
        MPYS    YV,TMP2             ;yv * Ky (FIX8 * FIX16)
        MOVY    TMP3,TMP2           ;
        RL      16,TMP2             ;convert yv' = yv * Ky to FIX8
```

APPENDIX A

```
Nov 14 09:33 1991   xfrmlist.asm Page 11

        MOVE     TMP2,YV                ;save yv'

; Database gives points of 3D object as xyz displacements from object's
; centroid coordinates, xv, yv and zv.  The xyz displacements are 8-bit
; values, X, Y and Z; they are accompanied by an 8-bit scaling factor,
; F, in the range 0 to 7.  All are packed into a single 32-bit longword.
        MOVE     STK,T                  ;keep pointer to transformed xyz's
        MOVE     *OBJ+,A8,0             ;get number of points to transform
        MOVE     A8,NPTS                ;NPTS - number of points in object
        SETF     8,1,1                  ;set field size for 8-bit multiplier
        SETF     32,0,0                 ;set up for 32-bit memory moves
NEARLOOP:
        MOVE     *OBJ+,FZYX,0           ;get X, Y, Z and F (X in 8 LSBs)

        MOVE     M00,TMP5               ;get rotation matrix coeff. M00 (FIX16)
        MPYS     FZYX,TMP5              ;x * M00 (FIX16)

        MOVE     M10,TMP3               ;get rotation matrix coeff. M10 (FIX16)
        MPYS     FZYX,TMP3              ;x * M10 (FIX16)

        MOVE     M20,TMP1               ;get rotation matrix coeff. M20 (FIX16)
        MPYS     FZYX,TMP1              ;x * M20 (FIX16)

        SRL      8,FZYX                 ;shift Y into 8 LSBs of multiplier
        MOVE     M01,TMP7               ;get rotation matrix coeff. M01 (FIX16)
        MPYS     FZYX,TMP7              ;y * M01 (FIX16)
        ADD      TMP7,TMP5              ;x * M00 + y * M01

        MOVE     M11,TMP7               ;get rotation matrix coeff. M11 (FIX16)
        MPYS     FZYX,TMP7              ;y * M11 (FIX16)
        ADD      TMP7,TMP3              ;x * M10 + y * M11

        MOVE     M21,TMP7               ;get rotation matrix coeff. M21 (FIX16)
        MPYS     FZYX,TMP7              ;y * M21 (FIX16)
        ADD      TMP7,TMP1              ;x * M20 + y * M21

        SRL      8,FZYX                 ;shift Z into 8 LSBs of multiplier
        MOVE     M02,TMP7               ;get rotation matrix coeff. M02 (FIX16)
        MPYS     FZYX,TMP7              ;z * M02 (FIX16)
        ADD      TMP7,TMP5              ;x * M00 + y * M01 + z * M02 (FIX16)

        MOVE     M12,TMP7               ;get rotation matrix coeff. M12 (FIX16)
        MPYS     FZYX,TMP7              ;z * M12 (FIX16)
        ADD      TMP7,TMP3              ;x * M10 + y * M11 + z * M12 (FIX16)

        MOVE     M22,TMP7               ;get rotation matrix coeff. M22 (FIX16)
        MPYS     FZYX,TMP7              ;z * M22 (FIX16)
        ADD      TMP7,TMP1              ;x * M20 + y * M21 + z * M22 (FIX16)

        SRL      8,FZYX                 ;shift log2(factor) into 8 LSBs
        SUBK     8,FZYX                 ;combine with FIX8 scaling factor
        SRA      FZYX,TMP5              ;convert x*M00+y*M01+z*M02 to FIX8
        ADD      XV,TMP5                ;x' - xv+x*M00+y*M01+z*M02 (FIX8)

        SRA      FZYX,TMP3              ;convert x*M10+y*M11+z*M12 to FIX8
        ADD      YV,TMP3                ;y' - yv+x*M10+y*M11+z*M12 (FIX8)
```

APPENDIX A

206

```
ɔv 14 09:33 1991   xfrmlist.asm Page 24

        SRA     FZYX,TMP1       ;convert x*M20+y*M21+z*M22 to FIX8
        ADD     ZV,TMP1         ;z' - zv+x*M20+y*M21+z*M22 (FIX8)

        MOVE    TMP5,*STK+,0    ;save x'
        MOVE    TMP3,*STK+,0    ;save y'
        MOVE    TMP1,*STK+,0    ;save z'
        DSJ     NPTS,NEARLOOP   ;more 3D points to transform?

*-----------------------------------------------------------------
* Append description of one or more polygons to output (display) list.
*-----------------------------------------------------------------
        SETF    32,0,1          ;set up for 32-bit memory moves
        SETF    16,1,0          ;set up for 16-bit memory moves
        MOVE    STK,S           ;save base address of xy array
; Get polygon vertex count and color.
PUSH3D:
        MOVE    *OBJ+,NVRTS,0   ;get no. of vertices in this face
        JRZ     DONE3D          ;jump if end of data encountered
        MOVE    *OBJ+,PCOLOR,0  ;get polygon COLOR code
; Allocate enough space on program stack to contain clipped xy array.
        MOVE    NVRTS,TMP1      ;leave room on stack for xy array
        ADDK    5,TMP1          ;clipping may add up to 5 vertices
        SLL     5,TMP1          ;convert to longword offset
        ADD     TMP1,STK        ;point past end of xy array
; Call _clippgon function to clip 3D polygon and project onto 2D screen.
        MOVE    STK,-*SP,1      ;push program stack pointer
        MOVE    S,PTMP          ;get pointer to xyz coord's
        MOVE    PTMP,*STK+,1    ;push arg xy (output coord's ptr)
        MOVE    OBJ,*STK+,1     ;push arg OBJ (input vertex ptr)
        MOVE    T,TMP0          ;get pointer to xyz coord's
        MOVE    TMP0,*STK+,1    ;push arg xyz (input coord's ptr)
        MOVE    NVRTS,*STK+,1   ;push argument NVRTS (vertex count)
        CALLA   _clippgon       ;clip 3D polygon to 2D screen
        SETF    16,1,0          ;set up for 16-bit memory moves
        SLL     4,NVRTS         ;convert vertex count to wd offset
        ADD     NVRTS,OBJ       ;advance pointer past vertex list
        MOVE    A8,NVRTS        ;copy vertex count for clipped polygon

; begin CAC addition
;
;       CMPI    2,NVRTS,W                       ;compare NVRTS to 2
;       JRZ             NPUSHSTAMP              ;if 2, push the
;
; end CAC addition

        SUBK    3,A8            ;make sure vertex count >- 3
        JRN     TRIV3D          ;jump if vertex count < 3
; Search xy coordinate list for topmost vertex (minimum y) in polygon.
        MOVI    03FFF0000h,YXTOP ;initialize ymin - max y value
        MOVE    NVRTS,COUNT     ;initialize loop counter
OP3D:
        MOVE    *PTMP+,YX,1     ;get x and y coordinates at vertex
        CMPXY   YX,YXTOP        ;is y < ymin ?
        JRYZ    SKIP3D          ;jump if y -- ymin
        MOVE    COUNT,NTOP      ;make copy of current loop count
```

APPENDIX A

```
Nov 14 09:33 1991   xfrmlist.asm Page 14


        JRYN     SKIP3D               ;jump if y > ymin
        MOVE     YX,YXTOP             ;set ymin = y
        MOVE     PTMP,PTOP            ;copy pointer (autoincremented)
SKIP3D:
        DSJ      COUNT,TOP3D          ;loop if more vertices

; Coordinates of topmost vertex in polygon have been found.
        CMP      NVRTS,NTOP           ;are all vertices at same y?
        JREQ     TRIV3D               ;jump to trivial reject flat face
; Append DRAWCODE, NVRTS and COLOR to output (display) list.
        MOVE     Q,QTMP               ;update display list pointer
        SLL      8,NVRTS              ;NVRTS in 8 LSBs of word
        INC      NVRTS                ;DRAWCODE=1 (polygon) in 8 LSBs
        MOVE     NVRTS,*QTMP+,0       ;append vertex count NVRTS to list
        SRL      8,NVRTS              ;right justify NVRTS
        MOVE     PCOLOR,*QTMP+,0      ;append polygon COLOR code to list
; Copy list of vertex xy coord's, starting with topmost vertex in face.
        MOVE     YXTOP,*QTMP+,1       ;copy xy coord's at first vertex
        JR       COMP3D               ;
COPY3D:
        MOVE     *PTOP+,*QTMP+,1      ;append xy coord pair to list
COMP3D:
        CMP      PTOP,PTMP            ;pointing past end of xy array?
        JRNE     OVER3D               ;jump if not past end of xy array
        MOVE     S,PTOP               ;else pointer = start of xy array
OVER3D:
        DSJ      NVRTS,COPY3D         ;loop through all vertices in face

        MOVE     QTMP,Q               ;update display list pointer
; Trivially reject flat or back-facing polygon.
TRIV3D:
        MOVE     S,STK                ;clean polygon xy list off stack
        JR       PUSH3D               ;extract next polygon from xyz list
; Done with all faces of this object.  Ready to process next node in tree.
DONE3D:
        MOVE     T,STK                ;clean object xyz list off stack



*-----------------------------------------------------------------------
; Interpret next 16-bit function code from input list.
*-----------------------------------------------------------------------

NEXTCMD2:
        MOVE     *P+,CMD,0            ;input next 16-bit function code
        JRZ      PUSHDOT2             ;if f.c. = 0, single dot
        DEC      CMD                  ;
        JRGT     XFRMFAR              ;if f.c. = 2, "far" polygon
        JRZ      XFRMNEAR1            ;if f.c. = 1, "near" polygon
        JR       EXIT                 ;if f.c. = -1, exit interpreter


*-----------------------------------------------------------------------
* CAC says: Copy the stamped object into the display list..
*-----------------------------------------------------------------------

; begin CAC addition
;NPUSHSTAMP:
```

APPENDIX A

```
Nov 14 09:33 1991   xfrmlist.asm Page 15

;             MOVE    NVRTS,COUNT                    ;initialize loop counter
;NTOPSTAMP:
;             MOVE    *PTMP+,YX,1                    ;get index of next verte
;             MOVE    YX,*QTMP+,0                    ;push coord's onto outpu
;             DSJ             COUNT,NTOPSTAMP         ;loop if more vertices
;
;             MOVE    S,STK                          ;clean polygon xy list d
;             MOVE    QTMP,Q                         ;update output display l
;
;             JR              PUSH3D                         ;jump back to PU
;
; end CAC addition

; begin CAC addition
DOFAR:
             MOVI    99,TMP0
             SUBK    16,P                   ;back up to function code
             MOVI    2,TMP0                 ;set to far object
             MOVE    TMP0, *P
             JR              FIRSTCMD               ;jump to retest functiou
; end CAC addition

*----------------------------------------------------------------------
* Simply copy description of dot from input list to output list.
*----------------------------------------------------------------------
PUSHDOT2:

        SUBK    16,P                   ;back up to dot function code
        MOVE    Q,QTMP                 ;copy output list pointer
        MOVE    *P+,*QTMP+,1           ;copy dot f.c. and color
        MOVE    *P+,*QTMP+,1           ;copy dot x and y coordinates
        MOVE    QTMP,Q                 ;update output list pointer
        JR      NEXTCMD2               ;more objects in input list?


*----------------------------------------------------------------------
*               Exit transform list interpreter
*----------------------------------------------------------------------
EXIT:

        MOVI    -1,COUNT               ;end-of-list function code - -1
        MOVE    COUNT,*Q+,0            ;append EOL f.c. to output list
        MOVE    Q,A8                   ;return ptr to end of output list
        MMFM    SP,B0,B1,B2,B3,B4,B5,B6,B7,B8,B9,B10,B11,B12,B13,B14
        MMFM    SP,A0,A1,A2,A3,A4,A5,A6,A7,A9,A10,A11,A12,A13
        MOVE    *SP(32),STK,1          ;update program stack pointer
        RETS    2                      ;

        .end
```

APPENDIX A

```
ov 14 09:33 1991  displist.asm Page 24

              .width    132
              .title    'display list interpreter'

*-
*-
*
*
* displist function
*
*   The displist function is a display list interpreter.  It can
*   interpret a display list specifying a series of polygons and dots
*   to be drawn to the screen.  The specification for each polygon or
*   dot begins on an even 32-bit boundary in memory, and the first item
*   in each specification is a function code indicating the type of
*   graphics primitive to be drawn.
*
*   A polygon is specified in the display list by a function code of 0.
*   The display list specification for a polygon is as follows:
*
*                   8-bit function code:     1
*                   8-bit vertex count:      nverts
*                   16-bit polygon color:    color
*                   16-bit x coordinate:     x0
*                   16-bit y coordinate:     y0
*                   16-bit x coordinate:     x1
*                   16-bit y coordinate:     y1
*
*                   16-bit x coordinate:     x[nverts-1]       :
*                   16-bit y coordinate:     y[nverts-1]
*
*   The second item in the specification is the number of vertices in
*   the convex polygon.  The third item is the polygon color.  The
*   remainder of the specification is an array of x and y coordinate
*   pairs representing the positions of the vertices on the screen.
*   The first xy coordinate pair specifies the position of the topmost
*   vertex in the polygon, that is, the vertex having the minimum y
*   value.  The vertices are listed in clockwise order, assuming the
*   convention that x coordinates on the screen increase from left to
*   right, and y coordinates from top to bottom. Coordinates are
*   specified as fixed point values with 2-bit fractions.
*
*   A "dot" is a single pixel, and is specified in the display list by a
*   function code of 1.  The display list format specifying a dot is as
*   follows:
*
*                   8-bit function code:     0
*                   8-bit constant:              0
*                   16-bit dot color:            color
*                   16-bit x coordinate:     x0
*                   16-bit y coordinate:     y0
*
*   The second item in the specification is a byte containing constant
*   0.  The third item is the dot color.  The last two items are the x
*   and y coordinates of the dot. Coordinates are specified as integers.
*
*   The display list is terminated by a function code of -1.
```

APPENDIX A

```
bv 14 09:33 1991  displist.asm Page 24

*--------------------------------------------------------------
*  Usage:  displist(p);
*
*  Description of stack arguments:
*    short *p;           /* pointer to start of display list */
*
*  Returned in register A8:  undefined
*
*  Registers altered:  A8
*
*
*
*
*-
;
;
;   DECLARE GLOBAL FUNCTION NAME
;
             .globl    _displist

             .globl    _draw_stamp            ;C draw stamp function, FILE:
;
;
;   DEFINE CONSTANTS
;
; begin CAC addition
INVISIBLE        .set    0FFFFh
; end CAC addition
YLINE    .set    A0                           ;y value at current scan line
NVERTS   .set    A0                           ;number of vertices in polygo
ATEMP    .set    A1                           ;A-file temporary register
X1REAL   .set    A2                           ;fixed-pt x1 at left side of
DX1      .set    A3                           ;change in x1 per unit step i
X2REAL   .set    A4                           ;fixed-pt x2 at right side of
DX2      .set    A5                           ;change in x2 per unit step i
XY1END   .set    A6                           ;x,y at end of edge on left si
XY2END   .set    A7                           ;x,y at end of edge on right s
H1       .set    A8                           ;height of edge on left side
H2       .set    A9                           ;height of edge on right side
P1       .set    A10                          ;pointer to next vertex on lef
P2       .set    A11                          ;pointer to next vertex on rig
P        .set    A12                          ;pointer to bottom of ptlist a
XYSTART  .set    A13                          ;starting vertex of current ed
STK      .set    A14                          ;C parameter stack pointer
XYORG    .set    B0                           ;viewport xy origin displaceme
COUNT    .set    B1                           ;loop counter
DADDR    .set    B2                           ;destination xy address for t
DYDX     .set    B7                           ;width and height of fill are
COLOR1   .set    B9                           ;fill color
BTEMP    .set    B14                          ;B-file temporary register
;
;
;   ENTRY POINT
;
_displist:
```

APPENDIX A

```
( v 14 09:33 1991  displist.asm Page 24

              SETF      32,0,0                          ;set up for 32-bit moves
; Save registers.
              MMTM      SP,A0,A1,A2,A3,A4,A5,A6,A7,A9,A10,A11,A12,A13
              MMTM      SP,B0,B1,B2,B9,B10,B11,B12,B13,B14
; Pop argument from program stack.
              MOVE      -*STK,P,0                       ;get pointer p

              .align

; Interpret next function code.
NEXT:
              SETF      8,1,1
              MOVE      *P+,ATEMP,1               ;get next module address
              JRZ       DOT                            ;if f.c. = 0, draw dots
              JRNN      POLYGON                  ;if f.c. = 1, draw polygon

*-------------------------------------------------------------------
*    Display list interpreter module:  exit display list interpreter
*-------------------------------------------------------------------

EXIT:

              MMFM      SP,B0,B1,B2,B9,B10,B11,B12,B13,B14
              MMFM      SP,A0,A1,A2,A3,A4,A5,A6,A7,A9,A10,A11,A12,A13
              SETF      32,0,1                      ;restore default field siz
              MOVE      *SP(32),STK,1        ;update program stack pointer
              RETS      2                                 ;

*--------------------------------------------------------------------
*               Display list interpreter module:   draw convex polygon
*--------------------------------------------------------------------

POLYGON:

              MOVE      *P+,P1,1                      ;get vertex count
              SETF      16,0,1                        ;set up for 16-bit moves
              MOVE      *P+,ATEMP,1             ;get polygon color
              MOVE      ATEMP,COLOR1           ;set fill color register
              MOVE      P,P2                            ;copy pointer to start o
              MOVE      P1,A6                          ;save vertex count in A6
              SLL       5,P1                            ;convert count to 32-bit
              ADD       P2,P1                        ;add base address of xy array
              MOVE      P1,P                            ;update display list poi

; begin CAC addition

              CMPI      INVISIBLE,ATEMP        ;is color INVISIBLE?
              JRZ       NEXT                            ;if so, don't dr
              CMPI      2,A6                          ;are there 2 vertices?
              JRZ       STAMP                          ;if so, draw a s
                                                        ;else do
; end CAC addition

              MOVE      *P2+,XY1END,0         ;get xy coord's at topmost vertex
              MOVE      XY1END,XY2END         ;left, right sides begin at top
; Find y value along pixel centers of topmost scan line to be filled.
```

APPENDIX A

```
Nov 14 09:33 1991   displist.asm  Page 246

            MOVE    XY1END,YLINE        ;copy initial y value
            SRA     16,YLINE           ;convert to FIX2 format
            ADDK    1,YLINE            ;round up by 1/2 - 1/4
            SRA     2,YLINE            ;truncate to integer
; Set fill height - 1 (polygon drawn as series of horizontal lines).
            MOVK    1,DYDX             ;
            SLL     16,DYDX            ;
; Initialize heights of edge segments on left and right sides.
            CLR     H1                 ;left edge height - 0
            CLR     H2                 ;right edge height - 0

; Main Loop:  Each iteration fills a trapezoidal region of the polygon.
; Calculate y value along pixel centers of next scan line to be filled.
LOOP1:
            SETF    4,1,1              ;set up for 4-bit multiplies
            SLL     2,YLINE            ;convert yline to FIX2
            ADDK    2,YLINE            ;y at pixel centers - yline
            SLL     16,YLINE           ;shift yline+1/2 into 16 MSB

; Have we reached the next vertex on the left side of the polygon?
            MOVE    H1,H1              ;check y distance to next vertex
            JRNZ    NOTYET1            ;jump if not yet at next ve
; Arrived at starting vertex for next edge.  Need to get ending vertex.
; Update pointer to point to next vertex (the ending vertex) in list.
WHILE1:
            CMP     P2,P1              ;compare pointers
            JRLT    NEXT               ;done if pointers pass e
            MOVE    XY1END,XYSTART     ;save start vertex coord's (xs,ys)
            MOVE    -*P1,XY1END,0      ;get end vertex coord's (xe,ye)
; If we have finally reached the bottom of the polygon, we are done.
            MOVE    XY1END,ATEMP       ;
            SUBXY   XYSTART,ATEMP      ;a - xe-xs, b - ye-ys
;---?   JRYN    NEXT                   ;done if ye < ys (reached bottom
; If edge is too short to reach to next scan line, go to next edge.
            MOVE    XY1END,H1          ;make copy of end vertex
            SUBXY   YLINE,H1           ;subtract y of next scan lin
            JRYN    WHILE1             ;too short—go to next edg
            SRL     16+2,H1            ;truncate to integer
            INC     H1                 ;no. scan lines covere
; Get edge's inverse slope:  deltax - change in x per unit step in y.
            MOVE    ATEMP,DX1          ;copy width a of edge
            SLL     16,DX1             ;a << 16
            SRL     16,ATEMP           ;right justify b (is positiv
            DIVS    ATEMP,DX1          ;deltax - (a << 16) / b
; Calculate initial fixed-point x where edge meets next scan line.
            MOVE    YLINE,X1REAL       ;
            SUBXY   XYSTART,X1REAL     ;(yline + 1/2 - ys) in 16 MSBs
            SRL     16,X1REAL          ;right justify fractional pa
            MOVE    DX1,ATEMP          ;copy deltax
            MPYS    X1REAL,ATEMP       ;(yline + 1/2 - ys) * deltax
            MOVE    XYSTART,X1REAL     ;
            SLL     16,X1REAL          ;left justify starting x val
            ADD     ATEMP,X1REAL       ;adjust starting x value
            SRA     2,X1REAL           ;integer part of x in 16 MS
            ADDI    07FFFh,X1REAL      ;add in rounding constant
NOTYET1:
```

APPENDIX A

```
; Have we reached the next vertex on the right side of the polygon?
                MOVE    H2,H2                   ;check y distance to next vertex
                JRNZ    NOTYET2                     ;jump if not yet at next ve
; Arrived at starting vertex for next edge.  Need to get ending vertex.
; Update pointer to point to next vertex (the ending vertex) in list.
WHILE2:
                CMP     P2,P1                   ;compare pointers
                JRLT    NEXT                        ;done if pointers pass e
                MOVE    XY2END,XYSTART          ;save start vertex coord's (xs,ys)
                MOVE    *P2+,XY2END,0           ;get end vertex coord's (xe,ye)
; If we have finally reached the bottom of the polygon, we are done.
                MOVE    XY2END,ATEMP            ;
                SUBXY   XYSTART,ATEMP          ;a = xe-xs, b = ye-ys
;---? JRYN      NEXT                            ;done if ye < ys (reached bottom
; If edge is too short to reach to next scan line, go to next edge.
                MOVE    XY2END,H2               ;make copy of end vertex
                SUBXY   YLINE,H2               ;subtract y of next scan lin
                JRYN    WHILE2                     ;too short--go to next edg
                SRL     16+2,H2                ;truncate to integer
                INC     H2                         ;no. scan lines covere
; Get edge's inverse slope:  deltax = change in x per unit step in y.
                MOVE    ATEMP,DX2              ;copy width a of edge
                SLL     16,DX2                ;a << 16
                SRL     16,ATEMP              ;right justify b (is positiv
                DIVS    ATEMP,DX2             ;deltax = (a << 16) / b
; Calculate initial fixed-point x where edge meets next scan line.
                MOVE    YLINE,X2REAL           ;
                SUBXY   XYSTART,X2REAL        ;(yline + 1/2 - ys) in 16 MSBs
                SRL     16,X2REAL             ;right justify fractional par
                MOVE    DX2,ATEMP             ;copy deltax
                MPYS    X2REAL,ATEMP          ;(yline + 1/2 - ys) * deltax
                MOVE    XYSTART,X2REAL         ;
                SLL     16,X2REAL             ;left justify starting x valu
                ADD     ATEMP,X2REAL         ;adjust starting x value
                SRA     2,X2REAL             ;integer part of x in 16 MSB
                ADDI    07FFFh,X2REAL        ;add in rounding constant
NOTYET2:


*----------------------------------------------------------------
; Determine height of next trapezoidal area to be filled.
                MOVE    H1,ATEMP               ;copy height of left edge se
                CMP     H1,H2                 ;compare with right edge height
                JRNN    OKAY                      ;jump if left edge short
                MOVE    H2,ATEMP               ;right edge is shorter
OKAY:
                SUB     ATEMP,H1               ;h1 -- count
                SUB     ATEMP,H2               ;h2 -- count
                MOVE    ATEMP,COUNT           ;initial loop count = trap. hei
                SRA     16+2,YLINE             ;right justify yline integer p

*----------------------------------------------------------------
; Inner loop:  Fill trapezoidal area of specified height.
IFILL:
                MOVE    X2REAL,ATEMP           ;copy x coord. along right side
                SUBXY   X1REAL,ATEMP          ;fill width = int(x2) - int(x1)
```

APPENDIX A

```
 nov 14 09:33 1991  displist.asm  Page 6

        JRC     NEXT                    ;jump if width < 0
        SRL     16,ATEMP                ;move width into 16 LSBs
        MOVE    ATEMP,BTEMP             ;copy to B-file
        MOVX    BTEMP,DYDX              ;move width into 16 LSBs of DY
        MOVY    X1REAL,YLINE            ;concat. int(x1) with scan line
        MOVE    YLINE,DADDR             ;copy to dest'n address registe
        RL          16,DADDR            ;move x1 to LSBs, yl
        FILL    XY                      ;fill one horizontal l
        ADD     DX1,X1REAL              ;increment fixed-point x1
        ADD     DX2,X2REAL              ;increment fixed-point x2
        INC     YLINE                   ;increment integer scan line y
        DSJ     COUNT,TFILL             ;loop 'til bottom of trapezoid
; Done filling current trapezoidal region of polygon.  Are there more?
        JRUC    LOOP1                   ;go get next trapezoid to fill


*--------------------------------------------------------------
*               Display list interpreter module:  draw a dot
*--------------------------------------------------------------
DOT:

        ADDK    8,P                     ;increment pointer
        SETF    16,0,1                  ;set up for 16-bit data mo
        MOVE    *P+,ATEMP,1             ;get dot color
        MOVE    *P+,P1,0                ;get xy coord's of next dot
        PIXT    ATEMP,*P1.XY            ;draw the dot
        JRUC    NEXT                    ;interpret next function


; begin CAC addition
*--------------------------------------------------------------
*               Display list interpreter module:  draw a stamp
*
*  Field 0: 32-bits
*  Field 1: 16-bits
*--------------------------------------------------------------
STAMP:

        SETF    32,0,1                  ;set up for 32-bit moves
                                        ;  field

        MOVE    STK, -*SP, 1            ;push program stack pointer on s
        MOVE    ATEMP,*STK+,1           ;push "color" on STK
        MOVE    A6,*STK+,1              ;push vertex count on ST
        MOVE    P2,*STK+,1              ;push start address of v
        CALLA   _draw_stamp             ;call the C stamp drawin
                                        ;  FILE:
        SETF    32,0,0                  ;set up for 32-bit moves
                                        ;  unkno

        JR              NEXT            ;interpret next

; end CAC addition

        .end
```

APPENDIX A

```
Nov 14 09:32 1991  clip.asm Page 1

***************************************************
*       GSP C COMPILER,    Version 3.20          *
***************************************************
FP      .set    A13
STK     .set    A14
        .file   "clip.c"
        .file   "\flippy\gsptools\stdlib.h"

        .stag   .0fake,64
        .member _quot,0,4,8,32
        .member _rem,32,4,8,32
        .eos
        .globl  _atof
        .globl  _atoi
        .globl  _atol
        .globl  _strtod
        .globl  _strtol
        .globl  _strtoul
        .globl  _rand
        .globl  _srand
        .globl  _calloc
        .globl  _malloc
        .globl  _realloc
        .globl  _free
        .globl  _abort
        .globl  _atexit
        .globl  _exit
        .globl  _abs
        .globl  _labs
        .globl  _div
        .globl  _ldiv
        .globl  _qsort
        .globl  _bsearch
        .file   "clip.c"
        .file   "\flippy\gsptools\string.h"
        .globl  _strcpy
        .globl  _strncpy
        .globl  _strcat
        .globl  _strncat
        .globl  _strchr
        .globl  _strrchr
        .globl  _strcmp
        .globl  _strncmp
        .globl  _strlen
        .globl  _strcoll
        .globl  _strxfrm
        .globl  _strpbrk
        .globl  _strspn
        .globl  _strcspn
        .globl  _strstr
        .globl  _strtok
        .globl  _strerror
        .globl  _memcpy
        .globl  _movmem
        .globl  _memmove
        .globl  _memcmp
```

APPENDIX A

```
Nov 14 09:32 1991  clip.asm Page 2

        .globl   _memchr
        .globl   _memset
        .file    "clip.c"
        .file    "\flippy\gsptools\math.h"
        .globl   _frexp
        .globl   _ldexp
        .globl   _modf
        .globl   _exp
        .globl   _log
        .globl   _log10
        .globl   _pow
        .globl   _sqrt
        .globl   _floor
        .globl   _ceil
        .globl   _fmod
        .globl   _fabs
        .globl   _sin
        .globl   _cos
        .globl   _tan
        .globl   _sinh
        .globl   _cosh
        .globl   _tanh
        .globl   _asin
        .globl   _acos
        .globl   _atan
        .globl   _atan2
        .file    "clip.c"
        .file    "db.h"                   :

        .stag    .1fake,64
        .member  _ptr,0,24,8,32,_Node_struct
        .member  _x,32,2,8,8
        .member  _y,40,2,8,8
        .member  _z,48,2,8,8
        .member  _f,56,2,8,8
        .eos

        .stag    _Node_struct,176
        .member  _sphere,0,2,8,8
        .member  _scale,8,14,18,5
        .member  _type,13,14,18,3
        .member  _dot_color,16,14,18,16
        .member  _left,32,8,8,64,.1fake
        .member  _right,96,8,8,64,.1fake
        .member  _plane_a,160,14,18,4
        .member  _plane_b,164,14,18,4
        .member  _plane_c,168,14,18,4
        .member  _plane_d,172,14,18,4
        .eos

        .stag    _Parent_list_struct,64
        .member  _ptr,0,88,8,32,_Node_struct
        .member  _next,32,24,8,32,_Parent_list_struct
        .eos

        .stag    _Child_list_struct,64
```

APPENDIX A

```
Nov 14 09:32 1991   clip.asm Page 3


        .member _ptr,0,24,8,32,.1fake
        .member _next,32,24,8,32,_Child_list_struct
        .eos

        .stag   .2fake,64
        .member _sphere,0,2,8,8
        .member _scale,8,14,18,5
        .member _type,13,14,18,3
        .member _dot_color,16,14,18,16
        .member _bb_disp,32,3,8,16
        .member _points,48,3,8,16
        .eos
        .file   "clip.c"

        .sym    _clip_object,_clip_object,104,2,0,.2fake
        .globl  _clip_object

        .func   50
**************************************************
* FUNCTION DEF : _clip_object
**************************************************
_clip_object:
        MMTM    SP,A7,A9,All,FP
        MOVE    STK,FP
        ADDI    224,STK
        .sym    _object,-32,24,9,32,.2fake
        .sym    _x,-64,4,9,32
        .sym    _y,-96,4,9,32
        .sym    _z,-128,4,9,32
        .sym    _a,-160,4,9,32
        .sym    _b,-192,4,9,32
        .sym    _c,-224,4,9,32
        .sym    _d,-256,4,9,32
        .globl  _copy_object
        .sym    _vertices,0,4,1,32
        .sym    _vertexlist,32,18,1,32
        .sym    _i,9,4,4,32
        .sym    _reverseflag,64,4,1,32
        .sym    _countclips,96,4,1,32
        .sym    _cobject,128,24,1,32,.2fake
        .sym    _offset,160,4,1,32
        .sym    _vertex,192,4,1,32
        .line   10
        CLRS    All
        MOVE    All,*FP(64),1
        .line   11
        MOVE    All,*FP(96),1
        .line   27
        MOVE    STK,-*SP,1
        MOVE    *FP(-32),*STK+,1
        CALLA   _copy_object
        MOVE    A8,*FP(128),1
        .line   29
        SETF    16,1
        MOVE    *A8(48),A7
        MOVE    A7,*FP,1
```

APPENDIX A

218

```
        .line   30
        ADDI    64,A8
        MOVE    A8,*FP(32),1
        .line   39
        MOVE    *FP(-160),A7,1
        JRZ     L1
        MOVE    *FP(-192),A7,1
        JRNZ    L1
        MOVE    *FP(-224),A7,1
        JRNZ    L1
        .line   40
        MOVE    *FP(-256),A7,1
        NEG     A7
        MOVE    *FP(-160),A11,1
        DIVS    A11,A7
        MOVE    *FP(-64),A11,1
        SUB     A11,A7
        MOVE    A7,*FP(160),1
        .line   41
        CLRS    A7
        MOVE    A7,*FP(192),1
        .line   42
        MOVE    *FP(-160),A11,1
        JRGE    L1
        MOVK    1,A11
        MOVE    A11,*FP(64),1
L1:
        .line   46
        MOVE    *FP(-160),A11,1
        JRNZ    L3
        MOVE    *FP(-192),A7,1
        JRZ     L3
        MOVE    *FP(-224),A7,1
        JRNZ    L3
        .line   47
        MOVE    *FP(-256),A7,1
        NEG     A7
        MOVE    *FP(-192),A11,1
        DIVS    A11,A7
        MOVE    *FP(-96),A11,1
        SUB     A11,A7
        MOVE    A7,*FP(160),1
        .line   48
        MOVK    1,A7
        MOVE    A7,*FP(192),1
        .line   49
        MOVE    *FP(-192),A11,1
        JRGE    L3
        MOVE    A7,*FP(64),1
L3:
        .line   53
        MOVE    *FP(-160),A11,1
        JRNZ    L5
        MOVE    *FP(-192),A7,1
        JRNZ    L5
        MOVE    *FP(-224),A7,1
```

APPENDIX A

```
        JRZ      L5
        .line    54
        MOVE     *FP(-256),A7,1
        NEG      A7
        MOVE     *FP(-224),A11,1
        DIVS     A11,A7
        MOVE     *FP(-128),A11,1
        SUB      A11,A7
        MOVE     A7,*FP(160),1
        .line    55
        MOVK     2,A7
        MOVE     A7,*FP(192),1
        .line    56
        MOVE     *FP(-224),A11,1
        JRGE     L5
        MOVK     1,A11
        MOVE     A11,*FP(64),1
L5:
        .line    59
        MOVE     *FP(64),A11,1
        JRNZ     L7
        .line    60
        CLRS     A9
        MOVE     *FP,A7,1
        CMP      A7,A9
        JRGE     L12
L10:
        .line    61
        MOVE     A9,A11
        SLL      2,A11
        MOVE     *FP(192),A7,1
        ADD      A7,A11
        SLL      3,A11
        MOVE     *FP(32),A7,1
        ADD      A7,A11
        MOVB     *A11,A11
        MOVE     *FP(160),A7,1
        CMP      A7,A11
        JRGE     L11
        .line    62
        MOVE     A9,A11
        SLL      2,A11
        MOVE     *FP(192),A7,1
        ADD      A7,A11
        SLL      3,A11
        MOVB     *FP(32),A7,1
        ADD      A7,A11
        MOVB     *FP(160),*A11(0)
        .line    63
        MOVE     *FP(96),A11,1
        ADDK     1,A11
        MOVE     A11,*FP(96),1
L11:
        .line    60
        ADDK     1,A9
        MOVE     *FP,A11,1
```

APPENDIX A

220

```
Nov 14 09:32 1991   clip.asm Page 6

          CMP     A11,A9
          JRLT    L10
          .line   67
          JR      L12
L7:
          .line   68
          CLRS    A9
          MOVE    *FP,A7,1
          CMP     A7,A9
          JRGE    L12
L15:
          .line   69
          MOVE    A9,A11
          SLL     2,A11
          MOVE    *FP(192),A7,1
          ADD     A7,A11
          SLL     3,A11
          MOVE    *FP(32),A7,1
          ADD     A7,A11
          MOVB    *A11,A11
          MOVE    *FP(160),A7,1
          CMP     A7,A11
          JRLE    L16
          .line   70
          MOVE    A9,A11
          SLL     2,A11
          MOVE    *FP(192),A7,1
          ADD     A7,A11
          SLL     3,A11
          MOVE    *FP(32),A7,1
          ADD     A7,A11
          MOVB    *FP(160),*A11(0)
          .line   71
          MOVE    *FP(96),A11,1
          ADDK    1,A11
          MOVE    A11,*FP(96),1
L16:
          .line   68
          ADDK    1,A9
          MOVE    *FP,A11,1
          CMP     A11,A9
          JRLT    L15
L12:
          .line   76
          MOVE    *FP(96),A11,1
          MOVE    *FP,A7,1
          CMP     A7,A11
          JRNZ    L17
          CLRS    A8
          JR      EPI0_1
L17:
          .line   77
          MOVE    A11,A8
          JRLE    L18
          MOVE    *FP(128),A8,1
          JR      EPI0_1
```

APPENDIX A

221

```
nov 14 09:32 1991  clip.asm Page 7

__8:
        .line   78
        MOVE    *FP(-32),A8,1
EPI0_1:
        MOVE    *SP(160),STK,1
        MMFM    SP,A7,A9,A11,FP
        RETS    2

        .endfunc        128,4

        .sym    _copy_object,_copy_object,104,2,0,.2fake
        .globl  _copy_object

        .func   145
********************************************************
* FUNCTION DEF : _copy_object
********************************************************
_copy_object:
        MMTM    SP,A11,FP
        MOVE    STK,FP
        ADDI    64,STK
        .sym    _object,-32,24,9,32,.2fake
        .globl  _sizeof_object
        .sym    _size,0,4,1,32
        .sym    _newobject,32,24,1,32,.2fake
        .line   8
        MOVE    STK,-*SP,1
        MOVE    *FP(-32),*STK+,1
        CALLA   _sizeof_object
        MOVE    A8,*FP,1
        .line   9
        MOVE    STK,-*SP,1
        MOVE    A8,*STK+,1
        CALLA   _malloc
        MOVE    A8,*FP(32),1
        MOVE    A8,A8
        JRNZ    L19
        MOVE    STK,-*SP,1
        MOVK    1,A11
        MOVE    A11,*STK+,1
        CALLA   _exit
L19:
        .line   10
        MOVE    STK,-*SP,1
        MOVE    *FP(0),*STK+,1
        MOVE    *FP(-32),*STK+,1
        MOVE    *FP(32),*STK+,1
        CALLA   _memcpy
        .line   12
        MOVE    *FP(32),A8,1
PI0_2:
        MOVE    *SP(96),STK,1
        MMFM    SP,A11,FP
        RETS    2

        .endfunc        157,2
```

APPENDIX A

222

```
        .sym     _sizeof_object,_sizeof_object,36,2,0
        .globl   _sizeof_object

        .func    164
************************************************************
* FUNCTION DEF : _sizeof_object
************************************************************
_sizeof_object:
        MMTM     SP,A9,A11,FP
        MOVE     STK,FP
        ADDI     144,STK
        .sym     _ob,-32,24,9,32,.2fake
        .sym     _points,0,3,1,16
        .sym     _ptr,16,19,1,32
        .sym     _base,48,4,1,32
        .sym     _size,80,4,1,32
        .sym     _inc,112,4,1,32
        .line    11
        MOVE     *FP(-32),A11,1
        SETF     16,1
        MOVE     *A11(32),A11
        JRNZ     L20
        .line    14
        MOVE     *FP(-32),A11,1
        MOVE     *A11(48),*FP(0)
        .line    16
        MOVE     *FP,A9
        SLL      5,A9
        ADD      A11,A9
        ADDI     64,A9
        MOVE     A9,*FP(16),1
        .line    18
        SUB      A11,A9
        SRA      3,A9
        MOVE     A9,*FP(48),1
        .line    24
        CLRS     A9
        MOVE     A9,*FP(80),1
        .line    25
        MOVE     *FP(16),A11,1
        MOVE     *A11,A11
        JRZ      L21
L23:
        .line    26
        MOVE     *FP(16),A11,1
        MOVE     *A11,A9
        SLL      1,A9
        ADDK     4,A9
        MOVE     A9,*FP(112),1
        .line    27
        MOVE     *FP(80),A11,1
        ADD      A9,A11
        MOVE     A11,*FP(80),1
        .line    28
        SLL      3,A9
```

APPENDIX A

```
Nov 14 09:32 1991  clip.asm Page 8


        .sym    _sizeof_object,_sizeof_object,36,2,0
        .globl  _sizeof_object

        .func   164
**********************************************************
* FUNCTION DEF : _sizeof_object
**********************************************************
_sizeof_object:
        MMTM    SP,A9,A11,FP
        MOVE    STK,FP
        ADDI    144,STK
        .sym    _ob,-32,24,9,32,.2fake
        .sym    _points,0,3,1,16
        .sym    _ptr,16,19,1,32
        .sym    _base,48,4,1,32
        .sym    _size,80,4,1,32
        .sym    _inc,112,4,1,32
        .line   11
        MOVE    *FP(-32),A11,1
        SETF    16,1
        MOVE    *A11(32),A11
        JRNZ    L20
        .line   14
        MOVE    *FP(-32),A11,1
        MOVE    *A11(48),*FP(0)
        .line   16
        MOVE    *FP,A9
        SLL     5,A9
        ADD     A11,A9
        ADDI    64,A9
        MOVE    A9,*FP(16),1
        .line   18
        SUB     A11,A9
        SRA     3,A9
        MOVE    A9,*FP(48),1
        .line   24
        CLRS    A9
        MOVE    A9,*FP(80),1
        .line   25
        MOVE    *FP(16),A11,1
        MOVE    *A11,A11
        JRZ     L21
L23:
        .line   26
        MOVE    *FP(16),A11,1
        MOVE    *A11,A9
        SLL     1,A9
        ADDK    4,A9
        MOVE    A9,*FP(112),1
        .line   27
        MOVE    *FP(80),A11,1
        ADD     A9,A11
        MOVE    A11,*FP(80),1
        .line   28
        SLL     3,A9
```

APPENDIX A

```
        MOVE    *FP(16),A11,1
        ADD     A11,A9
        MOVE    A9,*FP(16),1
        .line   25
        MOVE    *A9,A11
        JRNZ    L23
L21:
        .line   31
        MOVE    *FP(48),A11,1
        MOVE    *FP(80),A8,1
        ADD     A11,A8
        ADDK    2,A8
        JR      EPIO_3
L20:
        .line   42
        MOVE    *FP(-32),A11,1
        MOVE    *A11(32),A9
        SLL     4,A9
        ADD     A11,A9
        ADDK    32,A9
        MOVE    A9,*FP(16),1
        .line   44
        SUB     A11,A9
        SRA     3,A9
        MOVE    A9,*FP(48),1
        .line   48
        CLRS    A9
        MOVE    A9,*FP(80),1
        .line   49
        MOVE    *FP(16),A11,1
        MOVE    *A11,A11
        JRZ     L24
L26
        line    50
        MOVE    *FP(80),A11,1
        ADDK    12,A11
        MOVE    A11,*FP(80),1
        .line   51
        MOVE    *FP(16),A9,1
        ADDI    96,A9
        MOVE    A9,*FP(16),1
        .line   49
        MOVE    *A9,A9
        JRNZ    L26
L24:
        .line   54
        MOVE    *FP(48),A11,1
        MOVE    *FP(80),A8,1
        ADD     A11,A8
        ADDK    2,A8
EPIO_3:
        MOVE    *SP(128),STK,1
        MMFM    SP,A9,A11,FP
        RETS    2

        .endfunc        219,3
```

APPENDIX A

```
14 09:32 1991   clip.asm Page 10

      .end
```

APPENDIX A

226

## Claims

1. A method of modeling the relative position and movement of objects in a virtual reality environment, comprising the steps of:

   representing graphically a first and a second object in a virtual reality environment on a graphic display;
   determining a first partitioning plane between said first and second objects;
   determining a second partitioning plane between said first and second objects in response to either of said first or second object moving across said first partitioning plane; and
   representing graphically on said graphical display movement of said first and second objects within said virtual reality environment by selectively obscuring said first and second objects according to the relative position of said first and second objects in said virtual reality environment to the predetermined observation point.

2. The method of claim 1, further comprising the step of permitting a plurality of viewers to perceive being in said virtual reality environment and viewing from within the environment the relative position and movement of each other in said virtual reality environment.

3. The method of claim 2, further comprising the steps of containing data describing the virtual reality environment in a master database and updating said master database with data describing the relative movement of said objects.

4. The method of claim 2 or claim 3, further comprising the steps of generating a terminal node associated with each of said objects, an intermediate node associated with said second partitioning plane, and a root node associated with said first partitioning plane.

5. The method of claim 4, wherein said terminal node and intermediate node generating step further comprises the steps of forming an intermediate node in response to at least one of said objects crossing said first partitioning plane, said associating said intermediate node with said second partitioning plane.

*FIG. 1*

*FIG. 2*

HELMET BOARD

36

59 MAIN BOARD

20

58

92

PROCESSOR
FOR
RENDERING

SERIAL

IN     OUT

36  42

38  44

50

52

85

PROCESSOR
76

78

MEMORY
80

87

84

GAME
CARTRIDGE

86

96

94

SERIAL I/O
GLOVE/JOYSTICK

VIDEO OUT TO
HELMET DISPLAY

*FIG. 3*

230

252

246

248

240   242

244

254

Two players have left
marking pylons at the
end of this hall. Should you
pick them up and move them,
or leave one of your own to
mark your path?

*FIG. 20*

FIG. 4

EP 0 961 233 A2

FIG. 5a

FIG. 5b

FIG. 6a

FIG. 6b

FIG. 7a

EP 0 961 233 A2

235

EP 0 961 233 A2

FIG. 7b

BASIC SOFTWARE FLOWCHART
MAIN PROCESSOR

ON POWER UP: DOWNLOAD MAIN PROCESSOR
CODE FROM ROM CARTRIDGE. DOWNLOAD
HELMET PROCESSOR CODE FROM CARTRIDGE ⟞152

(APPLICATION DEPENDENT) DOWNLOAD 3-D
SCENERY DATABASE FROM CARTRIDGE ⟞154

MAIN LOOP ⟞156

FOR EACH ACTIVE HELMET: READ INPUT ⟞158

FOR EACH INPUT READ:

• UPDATE VIEWING PARAMETERS
• UPDATE POSITION IN DATABASE ⟞160

UPDATE POSITIONS OF AUTONOMOUS OBJECTS
IN DATABASE ⟞162

COPY DATABASE TO IDLE HELMET BUFFERS.
SEND SWITCH ⟞164

FIG. 8

BASIC SOFTWARE FLOWCHART
HELMET PROCESSOR

ON POWERUP: RECEIVE CODE
FROM MAIN PROCESSOR ⟞166

INITIALIZE GRAPHICS ENVIRONMENT ⟞168

RENDER ACTIVE DATABASE BUFFER ⟞170

SWITCH RECEIVED
FROM MAIN
PROCESSOR ? ⟞172

NO

YES

SWITCH ACTIVE & IDLE
DATABASE BUFFERS ⟞174

FIG. 9

EP 0 961 233 A2

## FIG. 10 THE DATABASE: A TYPICAL EXAMPLE 3-D BINARY PARTITIONED DATABASE

204a 202 200

208a 206a 210 204 208

OBJ 1 210a 212a

OBJ 2 OBJ 3 212 206

DATABASE REPRESENTATION: GRAPHICAL REPRESENTATION: (OVERHEAD VIEW)

- ● = INTERMEDIATE NODE. GIVES PARTITONING PLANE
- ● = TERMINAL NODE: INFO ON GRAPHICAL OBJECT

→ = PARTITIONING PLANE
□$_n$ = GRAPHICAL OBJECT

### MOVING OBJECTS AND THE DATABASE

TYPE 1: CONSTRAINED

IF AN OBJECT REMAINS WITHIN IT'S PARTITION, THE OFFSET TO THE OBJECT'S CENTROID MAY BE CHANGED. NO MODIFICATION TO THE DATABASE IS NEEDED.

## FIG. 11

BEFORE: 204a 210 216 204

208a

210a 210

208

AFTER: 204a

210a 210

208a 218 220 208

TYPE 2: PLANE-CROSSING

THE OBJECTS MAY MOVE WITHIN AND BETWEEN EMPTY PARTITIONS. THEY MAY NOT ENTER OCCUPIED PARTITIONS.

## FIG. 12

BEFORE: 204a 210 216 200 222

210a 210 218 224

206a 208a 208 204 206

X 224a 204 208

AFTER: 204a 208a

210a X 206a 210

208a 224a 208

TYPE 3: FREE OBJECTS

THE OBJECTS MAY MOVE ANYWHERE
THERE ISN'T ALREADY AN OBJECT,
CREATING NEW PLANES AS NECESSARY.

*FIG. 13*

*FIG. 14*

*FIG. 15*

PAD MODE: 00 = NO PADDING OF BOUNDING BOX
10 = POSITIVE PADDING
11 = NEGATIVE PADDING
01 = UNDEFINED

TEST MODE: 00 = RETURN STATUS VALUE UNCONDITIONALLY
10 = IF INSIDE BOUNDING BOX, RETURN STATUS
VALUE; ELSE CONTINUE TO NEXT TEST
11 = IF OUTSIDE BOUNDING BOX, RETURN STATUS
VALUE; ELSE CONTINUE TO NEXT TEST
01 = UNDEFINED

*FIG. 16*

| 31 | 24 | 23 | 16 | 15 | 8 | 7 | 0 |
|---|---|---|---|---|---|---|---|
| F | | Z | | Y | | X | |

*FIG. 17*

| 15 | 12 | 11 | 8 | 7 | 4 | 3 | 0 |
|---|---|---|---|---|---|---|---|
| D | | C | | B | | A | |

*FIG. 18*

*FIG. 19*

230

GRACE

234 ⊞ MASHER    232 ▨ OBELISK    236 ▯ DOOR